(19) Europäisches Patentamt
European Patent Office
Office européen des brevets

(11) **EP 3 730 570 B1**

(12) **EUROPEAN PATENT SPECIFICATION**

(45) Date of publication and mention
of the grant of the patent:
**04.12.2024  Bulletin 2024/49**

(21) Application number: **18890623.4**

(22) Date of filing: **17.12.2018**

(51) International Patent Classification (IPC):
**C09K 5/04** *(2006.01)*      **F25B 1/00** *(2006.01)*

(52) Cooperative Patent Classification (CPC):
**C09K 5/045; C10M 171/02; F24F 1/0063;
F24F 1/0067; F24F 1/24; F24F 3/052; F24F 5/00;
F24F 11/65; F24F 11/88; F24F 13/30; F24H 4/02;
F25B 1/00; F25B 5/04; F25B 7/00; F25B 13/00;**

(Cont.)

(86) International application number:
**PCT/JP2018/046434**

(87) International publication number:
**WO 2019/124329 (27.06.2019 Gazette 2019/26)**

(54) **REFRIGERANT CYCLING DEVICE**

KÜHLMITTELKREISLAUFVORRICHTUNG

DISPOSITIF DE CYCLAGE DE FLUIDE FRIGORIGÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.12.2017   JP 2017242183
18.12.2017   JP 2017242185
18.12.2017   JP 2017242187
18.12.2017   JP 2017242186
05.10.2018   PCT/JP2018/037483
17.10.2018   PCT/JP2018/038746
17.10.2018   PCT/JP2018/038749
17.10.2018   PCT/JP2018/038748
17.10.2018   PCT/JP2018/038747**

(43) Date of publication of application:
**28.10.2020   Bulletin 2020/44**

(73) Proprietor: **DAIKIN INDUSTRIES, LTD.
Osaka-Shi, Osaka 530-0001 (JP)**

(72) Inventors:
• **KUMAKURA, Eiji**
**Osaka-shi**
**Osaka 530-8323 (JP)**
• **YAMADA, Takuro**
**Osaka-shi**
**Osaka 530-8323 (JP)**
• **YOSHIMI, Atsushi**
**Osaka-shi**
**Osaka 530-8323 (JP)**
• **IWATA, Ikuhiro**
**Osaka-shi**
**Osaka 530-8323 (JP)**
• **ITANO, Mitsushi**
**Osaka-shi**
**Osaka 530-8323 (JP)**
• **KARUBE, Daisuke**
**Osaka-shi**
**Osaka 530-8323 (JP)**
• **YOTSUMOTO, Yuuki**
**Osaka-shi**
**Osaka 530-8323 (JP)**
• **TAKAHASHI, Kazuhiro**
**Osaka-shi**
**Osaka 530-8323 (JP)**
• **TAKAKUWA, Tatsuya**
**Osaka-shi**
**Osaka 530-8323 (JP)**
• **KOMATSU, Yuzo**
**Osaka-shi**
**Osaka 530-8323 (JP)**
• **OHKUBO, Shun**
**Osaka-shi**
**Osaka 530-8323 (JP)**

(74) Representative: **Hoffmann Eitle**
**Patent- und Rechtsanwälte PartmbB**
**Arabellastraße 30**
**81925 München (DE)**

(56) References cited:
    **WO-A1-2015/115252**    **WO-A1-2015/141678**
    **WO-A1-2015/186557**    **WO-A1-2015/186670**
    **JP-A- 2000 161 805**    **JP-A- 2002 318 028**
    **JP-A- 2011 202 738**    **JP-A- 2015 229 767**
    **US-A1- 2016 333 243**    **US-A1- 2017 002 245**
    **US-A1- 2017 058 173**    **US-A1- 2017 058 174**

(52) Cooperative Patent Classification (CPC): (Cont.)
    **F25B 29/00; F25B 39/00; F25B 41/34; F25B 49/02;**
    **H02K 1/22; H02K 1/27; H02K 9/08; H02K 17/16;**
    C09K 2205/126; C09K 2205/22; C09K 2205/40;
    Y02B 30/70; Y02P 20/10

**Description**

**TECHNICAL FIELD**

The present invention relates to a refrigeration cycle apparatus.

**BACKGROUND ART**

R410A has been often used as a refrigerant in refrigeration cycle apparatuses of the related art.

However, due to a relatively high global warming potential of R410A and increasing concern about global warming, conversion to a refrigerant that has a relatively low global warming potential is proceeding. For example, JP 2014-129543 A proposes a refrigerant that has a low global warming potential and that is substitutable for R410A.

Further examples of previously known refrigeration cycle apparatuses are derivable from JP 2015 229 767 A, US 2017/058173 A1, US 2017/058174 A1, US 2016/333243 A1, as well as US 2017/002245 A1, which forms the basis for the two-part form of independent claim 1.

**SUMMARY OF THE INVENTION**

<Technical Problem>

However, configurations of refrigerant circuits that realize highly efficient operation by using such a refrigerant having a low global warming potential have not been fully proposed.

<Solution to Problem>

The above technical problem is solved by means of a refrigeration cycle apparatus according to claim 1. Distinct embodiments are derivable from the dependent claims.

A refrigeration cycle apparatus according to a first aspect of the present invention includes a refrigerant circuit including a compressor, a heat source-side heat exchanger, an expansion mechanism, and a usage-side heat exchanger. In the refrigerant circuit, a refrigerant containing at least 1,2-difluoroethylene (HFO-1132 (E)) is sealed. At least during a predetermined operation, in at least one of the heat source-side heat exchanger and the usage-side heat exchanger, a flow of the refrigerant and a flow of a heating medium that exchanges heat with the refrigerant are counter flows.

The refrigeration cycle apparatus according to the first aspect realizes highly efficient operation effectively utilizing a heat exchanger, by using the refrigerant that contains 1,2-difluoroethylene (HFO-1132 (E)) and that has a low global warming potential.

Further, in the refrigeration cycle apparatus according to the first aspect of the present invention, the refrigerant comprises HFO-1132(E), R32, and R1234yf,
wherein
when the mass% of HFO-1132(E), R32, and R1234yf based on their sum in the refrigerant is respectively represented by x, y and z, coordinates (x,y,z) in a ternary composition diagram in which the sum of HFO-1132(E), R32, and R1234yf is 100 mass% are within the range of a figure surrounded by line segments ON, NU, and UO that connect the following 3 points:

> point O (22.6, 36.8, 40.6),
> point N (27.7, 18.2, 54.1), and
> point U (3.9, 36.7, 59.4),
> or on these line segments;

>> the line segment ON is represented by coordinates $(0.0072y^2-0.6701y+37.512, y, -0.0072y^2-0.3299y+62.488)$;
>> the line segment NU is represented by coordinates $(0.0083y^2-1.7403y+56.635, y, -0.0083y^2+0.7403y+43.365)$; and
>> the line segment UO is a straight line.

The refrigerant comprises HFO-1132(E), R32, and R1234yf in a total amount of 99.5 mass% or more based on the entire refrigerant.

In this refrigeration cycle apparatus, highly efficient operation can also be achieved when a refrigerant having a sufficiently low GWP, a refrigeration capacity (may also be referred to as a cooling capacity or a capacity) equal to those of R410A and classified with lower flammability (Class 2L) in the standard of The American Society of Heating, Refrigerating and Air-Conditioning Engineers (ASHRAE) is used.

A refrigeration cycle apparatus according to a second aspect of the present invention is the refrigeration cycle apparatus of the first aspect, and, during an operation of the refrigeration cycle apparatus using the heat source-side heat exchanger as an evaporator, in the heat source-side heat exchanger, a flow of the refrigerant and a flow of a heating medium that exchanges heat with the refrigerant are counter flows.

A refrigeration cycle apparatus according to a third aspect of the present invention is the refrigeration cycle apparatus of the first aspect or the second aspect, and, during an operation of the refrigeration cycle apparatus using the heat source-side heat exchanger as a condenser, in the heat source-side heat exchanger, a flow of the refrigerant and a flow of a heating medium that exchanges heat with the refrigerant are counter flows.

Here, even when a refrigerant is used, with which a temperature difference between the refrigerant and the heating medium is difficult to be generated on an exit side of the condenser due to influence of temperature glide, the temperature difference is relatively easily ensured from an entrance to the exit of the condenser, and efficient operation of the refrigeration cycle apparatus can be realized.

A refrigeration cycle apparatus according to a fourth aspect of the present invention is the refrigeration cycle apparatus of any one of the first to third aspects, and, during an operation of the refrigeration cycle apparatus using the usage-side heat exchanger as an evaporator, in the usage-side heat exchanger, a flow of the refrigerant and a flow of a heating medium that exchanges heat with the refrigerant are counter flows.

A refrigeration cycle apparatus according to a fifth aspect of the present invention is the refrigeration cycle apparatus of any one of the first to fourth aspects, and, during an operation of the refrigeration cycle apparatus using the usage-side heat exchanger as a condenser, in the usage-side heat exchanger, a flow of the refrigerant and a flow of a heating medium that exchanges heat with the refrigerant are counter flows.

A refrigeration cycle apparatus according to a sixth aspect of the present invention is the refrigeration cycle apparatus of any one of the first to fifth aspects, and the heating medium is air.

A refrigeration cycle apparatus according to a seventh aspect of the present invention is the refrigeration cycle apparatus of any one of the first to fifth aspects, and the heating medium is a liquid.

**BRIEF DESCRIPTION OF THE DRAWINGS**

[Fig. 1] Fig. 1 is a schematic view of an instrument used for a flammability test.

[Fig. 2] Fig. 2 is a diagram showing points A to T and line segments that connect these points in a ternary composition diagram in which the sum of HFO-1132(E), HFO-1123, and R1234yf is 100 mass%.

[Fig. 3] Fig. 3 is a diagram showing points A to C, D', G, I, J, and K', and line segments that connect these points to each other in a ternary composition diagram in which the sum of HFO-1132(E), HFO-1123, and R1234yf is (100-a) mass%.

[Fig. 4] Fig. 4 is a diagram showing points A to C, D', G, I, J, and K', and line segments that connect these points to each other in a ternary composition diagram in which the sum of HFO-1132(E), HFO-1123, and R1234yf is 92.9 mass%(the content of R32 is 7.1 mass%).

[Fig. 5] Fig. 5 is a diagram showing points A to C, D', G, I, J, K', and W, and line segments that connect these points to each other in a ternary composition diagram in which the sum of HFO-1132(E), HFO-1123, and R1234yf is 88.9 mass% (the content of R32 is 11.1 mass%).

[Fig. 6] Fig. 6 is a diagram showing points A, B, G, I, J, K', and W, and line segments that connect these points to each other in a ternary composition diagram in which the sum of HFO-1132(E), HFO-1123, and R1234yf is 85.5 mass% (the content of R32 is 14.5 mass%).

[Fig. 7] Fig. 7 is a diagram showing points A, B, G, I, J, K', and W, and line segments that connect these points to each other in a ternary composition diagram in which the sum of HFO-1132(E), HFO-1123, and R1234yf is 81.8 mass% (the content of R32 is 18.2 mass%).

[Fig. 8] Fig. 8 is a diagram showing points A, B, G, I, J, K', and W, and line segments that connect these points to each other in a ternary composition diagram in which the sum of HFO-1132(E), HFO-1123, and R1234yf is 78.1 mass% (the content of R32 is 21.9 mass%).

[Fig. 9] Fig. 9 is a diagram showing points A, B, G, I, J, K', and W, and line segments that connect these points to each other in a ternary composition diagram in which the sum of HFO-1132(E), HFO-1123, and R1234yf is 73.3 mass% (the content of R32 is 26.7 mass%).

[Fig. 10] Fig. 10 is a diagram showing points A, B, G, I, J, K', and W, and line segments that connect these points to each other in a ternary composition diagram in which the sum of HFO-1132(E), HFO-1123, and R1234yf is 70.7 mass% (the content of R32 is 29.3 mass%).

[Fig. 11] Fig. 11 is a diagram showing points A, B, G, I, J, K', and W, and line segments that connect these points to each other in a ternary composition diagram in which the sum of HFO-1132(E), HFO-1123, and R1234yfis 63.3 mass% (the content of R32 is 36.7 mass%).
[Fig. 12] Fig. 12 is a diagram showing points A, B, G, I, J, K', and W, and line segments that connect these points to each other in a ternary composition diagram in which the sum of HFO-1132(E), HFO-1123, and R1234yfis 55.9 mass% (the content of R32 is 44.1 mass%).
[Fig. 13] Fig. 13 is a diagram showing points A, B, G, I, J, K', and W, and line segments that connect these points to each other in a ternary composition diagram in which the sum of HFO-1132(E), HFO-1123, and R1234yfis 52.2 mass% (the content of R32 is 47.8 mass%).
[Fig. 14] Fig. 14 is a view showing points A to C, E, G, and I to W; and line segments that connect points A to C, E, G, and I to W in a ternary composition diagram in which the sum of HFO-1132(E), R32, and R1234yfis 100 mass%.

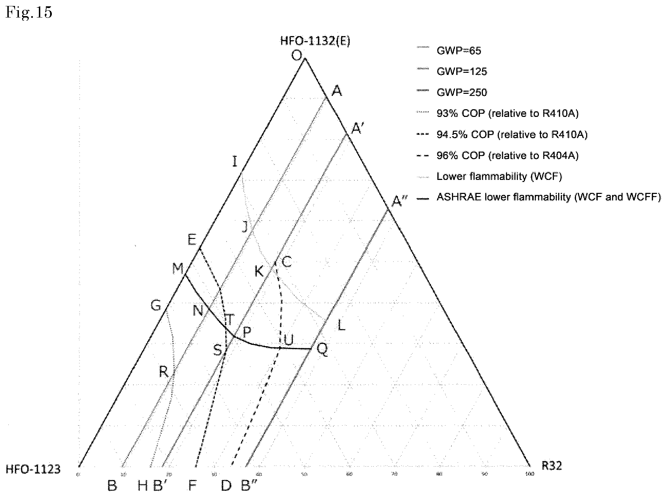

[Fig. 15] Fig. 15 is a view showing points A to U; and line segments that connect the points in a ternary composition diagram in which the sum of HFO-1132(E), HFO-1123, and R32 is 100 mass%.
[Fig. 16] Fig. 16 is a schematic view of an example of a counter-flow-type heat exchanger.
[Fig. 17] Fig. 17 a schematic view of another example of a counter-flow-type heat exchanger; (a) is a plan view and (b) is a perspective view.
[Fig. 18] Fig. 18 is a schematic structural diagram of a form of a configuration of a refrigerant circuit in a refrigeration cycle apparatus according to a first embodiment of the present disclosure.
[Fig. 19] Fig. 19 is a schematic structural diagram of a modification of the refrigerant circuit of Fig. 18.
[Fig. 20] Fig. 20 is a schematic structural diagram of a modification of the refrigerant circuit of Fig. 19.
[Fig. 21] Fig. 21 is a schematic structural diagram of a modification of the refrigerant circuit of Fig. 19.
[Fig. 22] Fig. 22 is a schematic structural diagram of a configuration of a refrigerant circuit of an air conditioning apparatus as an example of a refrigeration cycle apparatus according to a second embodiment of the present disclosure.
[Fig. 23] Fig. 23 is a schematic control block structural diagram of the air conditioning apparatus of Fig. 22.
[Fig. 24] Fig. 24 is a schematic structural diagram of a configuration of a refrigerant circuit of an air conditioning apparatus as an example of a refrigeration cycle apparatus according to a third embodiment of the present disclosure.
[Fig. 25] Fig. 25 is a schematic control block structural diagram of the air conditioning apparatus of Fig. 24.

## DESCRIPTION OF EMBODIMENTS

(1) Definition of Terms

In the present specification, the term "refrigerant" includes at least compounds that are specified in ISO 817 (International Organization for Standardization), and that are given a refrigerant number (ASHRAE number) representing the type of refrigerant with "R" at the beginning; and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC). Non-fluorocarbon compounds include propane (R290), propylene (R1270), butane (R600), isobutane (R600a), carbon dioxide (R744), ammonia (R717), and the like.
In the present specification, the phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. In the present specification, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration oil-containing working fluid" so as to distinguish it from the "refrigerant composition."
In the present specification, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.
The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

In the present specification, the term "refrigerating machine" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

In the present specification, a refrigerant having a "WCF lower flammability" means that the most flammable composition (worst case of formulation for flammability: WCF) has a burning velocity of 10 cm/s or less according to the US ANSEASHRAE Standard 34-2013. Further, in the present specification, a refrigerant having "ASHRAE lower flammability" means that the burning velocity of WCF is 10 cm/s or less, that the most flammable fraction composition (worst case of fractionation for flammability: WCFF), which is specified by performing a leakage test during storage, shipping, or use based on ANSI/ASHRAE 34-2013 using WCF, has a burning velocity of 10 cm/s or less, and that flammability classification according to the US ANSI/ASHRAE Standard 34-2013 is determined to classified as be "Class 2L."

In the present specification, a refrigerant having an "RCL of x% or more" means that the refrigerant has a refrigerant concentration limit (RCL), calculated in accordance with the US ANSI/ASHRAE Standard 34-2013, of x% or more. RCL refers to a concentration limit in the air in consideration of safety factors. RCL is an index for reducing the risk of acute toxicity, suffocation, and flammability in a closed space where humans are present. RCL is determined in accordance with the ASHRAE Standard. More specifically, RCL is the lowest concentration among the acute toxicity exposure limit (ATEL), the oxygen deprivation limit (ODL), and the flammable concentration limit (FCL), which are respectively calculated in accordance with sections 7.1.1, 7.1.2, and 7.1.3 of the ASHRAE Standard.

In the present specification, temperature glide refers to an absolute value of the difference between the initial temperature and the end temperature in the phase change process of a composition containing the refrigerant of the present disclosure in the heat exchanger of a refrigerant system.

(2) Refrigerant

(2-1) Refrigerant Component

Any one of various refrigerants such as refrigerant A, refrigerant B, refrigerant C, refrigerant D, and refrigerant E, details of these refrigerant are to be mentioned later, can be used as the refrigerant.

(2-2) Use of refrigerant

The refrigerant according to the present disclosure can be preferably used as a working fluid in a refrigerating machine.

The composition according to the present disclosure is suitable for use as an alternative refrigerant for HFC refrigerant such as R410A, R407C and R404 etc, or HCFC refrigerant such as R22 etc.

(3) Refrigerant Composition

The refrigerant composition according to the present disclosure comprises at least the refrigerant according to the present disclosure, and can be used for the same use as the refrigerant according to the present disclosure. Moreover, the refrigerant composition according to the present disclosure can be further mixed with at least a refrigeration oil to thereby obtain a working fluid for a refrigerating machine.

The refrigerant composition according to the present disclosure further comprises at least one other component in addition to the refrigerant according to the present disclosure. The refrigerant composition according to the present disclosure may comprise at least one of the following other components, if necessary. As described above, when the refrigerant composition according to the present disclosure is used as a working fluid in a refrigerating machine, it is generally used as a mixture with at least a refrigeration oil. Therefore, it is preferable that the refrigerant composition according to the present disclosure does not substantially comprise a refrigeration oil. Specifically, in the refrigerant composition according to the present disclosure, the content of the refrigeration oil based on the entire refrigerant composition is preferably 0 to 1 mass%, and more preferably 0 to 0.1 mass%.

(3-1) Water

The refrigerant composition according to the present disclosure may contain a small amount of water. The water content of the refrigerant composition is preferably 0.1 mass% or less based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

(3-2) Tracer

A tracer is added to the refrigerant composition according to the present disclosure at a detectable concentration such that when the refrigerant composition has been diluted, contaminated, or undergone other changes, the tracer can trace the changes.

The refrigerant composition according to the present disclosure may comprise a single tracer, or two or more tracers.

The tracer is not limited, and can be suitably selected from commonly used tracers. Preferably, a compound that cannot be an impurity inevitably mixed in the refrigerant of the present disclosure is selected as the tracer.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide ($N_2O$). The tracer is particularly preferably a hydrofluorocarbon, a hydrochlorofluorocarbon, a chlorofluorocarbon, a fluorocarbon, a hydrochlorocarbon, a fluorocarbon, or a fluoroether.

The following compounds are preferable as the tracer.

FC-14 (tetrafluoromethane, $CF_4$)
HCC-40 (chloromethane, $CH_3Cl$)
HFC-23 (trifluoromethane, $CHF_3$)
HFC-41 (fluoromethane, $CH_3Cl$)
HFC-125 (pentafluoroethane, $CF_3CHF_2$)
HFC-134a (1,1,1,2-tetrafluoroethane, $CF_3CH_2F$)
HFC-134 (1,1,2,2-tetrafluoroethane, $CHF_2CHF_2$)
HFC-143a (1,1,1-trifluoroethane, $CF_3CH_3$)
HFC-143 (1,1,2-trifluoroethane, $CHF_2CH_2F$)
HFC-152a (1,1-difluoroethane, $CHF_2CH_3$)
HFC-152 (1,2-difluoroethane, $CH_2FCH_2F$)
HFC-161 (fluoroethane, $CH_3CH_2F$)
HFC-245fa (1,1,1,3,3-pentafluoropropane, $CF_3CH_2CHF_2$)
HFC-236fa (1,1,1,3,3,3-hexafluoropropane, $CF_3CH_2CF_3$)
HFC-236ea (1,1,1,2,3,3-hexafluoropropane, $CF_3CHFCHF_2$)
HFC-227ea (1, 1, 1,2,3,3,3-heptafluoropropane, $CF_3CHFCF_3$)
HCFC-22 (chlorodifluoromethane, $CHClF_2$)
HCFC-31 (chlorofluoromethane, $CH_2ClF$)
CFC-1113 (chlorotrifluoroethylene, $CF_2=CClF$)
HFE-125 (trifluoromethyl-difluoromethyl ether, $CF_3OCHF_2$)
HFE-134a (trifluoromethyl-fluoromethyl ether, $CF_3OCH_2F$)
HFE-143a (trifluoromethyl-methyl ether, $CF_3OCH_3$)
HFE-227ea (trifluoromethyl-tetrafluoroethyl ether, $CF_3OCHFCF_3$)
HFE-236fa (trifluoromethyl-trifluoroethyl ether, $CF_3OCH_2CF_3$)

The tracer compound may be present in the refrigerant composition at a total concentration of about 10 parts per million (ppm) to about 1000 ppm. Preferably, the tracer compound is present in the refrigerant composition at a total concentration of about 30 ppm to about 500 ppm, and most preferably, the tracer compound is present at a total concentration of about 50 ppm to about 300 ppm.

(3-3) Ultraviolet Fluorescent Dye

The refrigerant composition according to the present disclosure may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

(3-4) Stabilizer

The refrigerant composition according to the present disclosure may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3-pentafluoropropylamine and diphenylamine.

Examples of stabilizers also include butylhydroxyxylene and benzotriazole.

The content of the stabilizer is not limited. Generally, the content of the stabilizer is preferably 0.01 to 5 mass%, and more preferably 0.05 to 2 mass%, based on the entire refrigerant.

(3-5) Polymerization Inhibitor

The refrigerant composition according to the present disclosure may comprise a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is not limited. Generally, the content of the polymerization inhibitor is preferably 0.01 to 5 mass%, and more preferably 0.05 to 2 mass%, based on the entire refrigerant.

(4) Refrigeration Oil-Containing Working Fluid

The refrigeration oil-containing working fluid according to the present disclosure comprises at least the refrigerant or refrigerant composition according to the present disclosure and a refrigeration oil, for use as a working fluid in a refrigerating machine. Specifically, the refrigeration oil-containing working fluid according to the present disclosure is obtained by mixing a refrigeration oil used in a compressor of a refrigerating machine with the refrigerant or the refrigerant composition. The refrigeration oil-containing working fluid generally comprises 10 to 50 mass% of refrigeration oil.

(4-1) Refrigeration Oil

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from the group consisting of polyalkylene glycols (PAG), polyol esters (POE), and polyvinyl ethers (PVE).

The refrigeration oil may further contain additives in addition to the base oil. The additive may be at least one member selected from the group consisting of antioxidants, extreme-pressure agents, acid scavengers, oxygen scavengers, copper deactivators, rust inhibitors, oil agents, and antifoaming agents.

A refrigeration oil with a kinematic viscosity of 5 to 400 mm2/s (5 to 400 cSt) at 40°C is preferable from the standpoint of lubrication.

The refrigeration oil-containing working fluid according to the present disclosure may further optionally contain at least one additive. Examples of additives include compatibilizing agents described below.

(4-2) Compatibilizing Agent

The refrigeration oil-containing working fluid according to the present disclosure may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

(5) Various Refrigerants

Hereinafter, the refrigerants A to E, which are the refrigerants used in the present embodiment, will be described in detail.

In addition, each description of the following refrigerant A, refrigerant B, refrigerant C, refrigerant D, and refrigerant E is each independent. The alphabet which shows a point or a line segment, the number of an Examples, and the number of a comparative examples are all independent of each other among the refrigerant A, the refrigerant B, the refrigerant C, the refrigerant D, and the refrigerant E. For example, the first embodiment of the refrigerant A and the first embodiment of the refrigerant B are different embodiment from each other.

(5-1) Refrigerant A

The refrigerant A according to the present disclosure is a mixed refrigerant comprising trans-1,2-difluoroethylene (HFO-1132(E)), trifluoroethylene (HFO-1123), and 2,3,3,3-tetrafluoro-1-propene (R1234yf).

The refrigerant A according to the present disclosure has various properties that are desirable as an R410A-alternative refrigerant, i.e., a refrigerating capacity and a coefficient of performance that are equivalent to those of R410A, and a sufficiently low GWP.

The refrigerant A according to the present disclosure is a composition comprising HFO-1132(E) and R1234yf, and optionally further comprising HFO-1123, and may further satisfy the following requirements. This refrigerant also has various properties desirable as an alternative refrigerant for R410A; i.e., it has a refrigerating capacity and a coefficient of performance that are equivalent to those of R410A, and a sufficiently low GWP.

Requirements

Preferable refrigerant A is as follows:
When the mass% of HFO-1132(E), HFO-1123, and R1234yf based on their sum in the refrigerant is respectively represented by x, y, and z, coordinates (x,y,z) in a ternary composition diagram in which the sum of HFO-1132(E), HFO-1123, and R1234yf is 100 mass% are within the range of a figure surrounded by line segments AA', A'B, BD, DC', C'C, CO, and OAthat connect the following 7 points:

> point A (68.6, 0.0, 31.4),
> point A' (30.6, 30.0, 39.4),
> point B (0.0, 58.7, 41.3),
> point D (0.0, 80.4, 19.6),
> point C' (19.5, 70.5, 10.0),
> point C (32.9, 67.1, 0.0), and
> point O (100.0, 0.0, 0.0),
> or on the above line segments (excluding the points on the line CO);

> the line segment AA' is represented by coordinates $(x, 0.0016x^2-0.9473x+57.497, -0.0016x^2-0.0527x+42.503)$,
> the line segment A'B is represented by coordinates $(x, 0.0029x^2-1.0268x+58.7, -0.0029x^2+0.0268x+41.3$,
> the line segment DC' is represented by coordinates $(x, 0.0082x^2-0.6671x+80.4, -0.0082x^2-0.3329x+19.6)$,
> the line segment C'C is represented by coordinates $(x, 0.0067x^2-0.6034x+79.729, -0.0067x^2-0.3966x+20.271)$, and
> the line segments BD, CO, and OA are straight lines.

When the requirements above are satisfied, the refrigerant according to the present disclosure has a refrigerating capacity ratio of 85% or more relative to that of R410A, and a COP of 92.5% or more relative to that of R410A.

When the mass% of HFO-1132(E), HFO-1123, and R1234yf, based on their sum in the refrigerant A according to the present disclosure is respectively represented by x, y, and z, the refrigerant is preferably a refrigerant wherein coordinates (x,y,z) in a ternary composition diagram in which the sum of HFO-1132(E), HFO-1123, and R1234yf is 100 mass% are within a figure surrounded by line segments GI, IA, AA', A'B, BD, DC', C'C, and CG that connect the following 8 points:

> point G (72.0, 28.0, 0.0),
> point I (72.0, 0.0, 28.0),
> point A (68.6, 0.0, 31.4),
> point A' (30.6, 30.0, 39.4),

point B (0.0, 58.7, 41.3),
point D (0.0, 80.4, 19.6),
point C' (19.5, 70.5, 10.0), and
point C (32.9, 67.1, 0.0),
or on the above line segments (excluding the points on the line segment CG);

the line segment AA' is represented by coordinates $(x, 0.0016x^2-0.9473x+57.497, -0.0016x^2-0.0527x+42.503)$,
the line segment A'B is represented by coordinates $(x, 0.0029x^2-1.0268x+58.7, -0.0029x^2+0.0268x+41.3)$,
the line segment DC' is represented by coordinates $(x, 0.0082x^2-0.6671x+80.4, -0.0082x^2-0.3329x+19.6)$,
the line segment C'C is represented by coordinates $(x, 0.0067x^2-0.6034x+79.729, -0.0067x^2-0.3966x+20.271)$, and
the line segments GI, IA, BD, and CG are straight lines.

When the requirements above are satisfied, the refrigerant A according to the present disclosure has a refrigerating capacity ratio of 85% or more relative to that of R410A, and a COP of 92.5% or more relative to that of R410A; furthermore, the refrigerant A has a WCF lower flammability according to the ASHRAE Standard (the WCF composition has a burning velocity of 10 cm/s or less).

When the mass% of HFO-1132(E), HFO-1123, and R1234yf based on their sum in the refrigerant according to the present disclosure is respectively represented by x, y, and z, the refrigerant is preferably a refrigerant wherein coordinates (x,y,z) in a ternary composition diagram in which the sum of HFO-1132(E), HFO-1123, and R1234yf is 100 mass% are within the range of a figure surrounded by line segments JP, PN, NK, KA', A'B, BD, DC', C'C, and CJ that connect the following 9 points:

point J (47.1, 52.9, 0.0),
point P (55.8, 42.0, 2.2),
point N (68.6, 16.3, 15.1),
point K (61.3, 5.4, 33.3),
point A' (30.6, 30.0, 39.4),
point B (0.0, 58.7, 41.3),
point D (0.0, 80.4, 19.6),
point C' (19.5, 70.5, 10.0), and
point C (32.9, 67.1, 0.0),
or on the above line segments (excluding the points on the line segment CJ);

the line segment PN is represented by coordinates $(x, -0.1135x^2+12.112x-280.43, 0.1135x^2-13.112x+380.43)$,
the line segment NK is represented by coordinates $(x, 0.2421x^2-29.955x+931.91, -0.2421x^2+28.955x-831.91)$,
the line segment KA' is represented by coordinates $(x, 0.0016x^2-0.9473x+57.497, -0.0016x^2-0.0527x+42.503)$,
the line segment A'B is represented by coordinates $(x, 0.0029x^2-1.0268x+58.7, -0.0029x^2+0.0268x+41.3)$,
the line segment DC' is represented by coordinates $(x, 0.0082x^2-0.6671x+80.4, -0.0082x^2-0.3329x+19.6)$,
the line segment C'C is represented by coordinates $(x, 0.0067x^2-0.6034x+79.729, -0.0067x^2-0.3966x+20.271)$, and
the line segments JP, BD, and CG are straight lines.

When the requirements above are satisfied, the refrigerant A according to the present disclosure has a refrigerating capacity ratio of 85% or more relative to that of R410A, and a COP of 92.5% or more relative to that of R410A; furthermore, the refrigerant exhibits a lower flammability (Class 2L) according to the ASHRAE Standard (the WCF composition and the WCFF composition have a burning velocity of 10 cm/s or less).

When the mass% of HFO-1132(E), HFO-1123, and R1234yf based on their sum in the refrigerant according to the present disclosure is respectively represented by x, y, and z, the refrigerant is preferably a refrigerant wherein coordinates (x,y,z) in a ternary composition diagram in which the sum of HFO-1132(E), HFO-1123, and R1234yf is 100 mass% are within the range of a figure surrounded by line segments JP, PL, LM, MA', A'B, BD, DC', C'C, and CJ that connect the following 9 points:

point J (47.1, 52.9, 0.0),
point P (55.8, 42.0, 2.2),
point L (63.1, 31.9, 5.0),
point M (60.3, 6.2, 33.5),
point A' (30.6, 30.0, 39.4),

point B (0.0, 58.7, 41.3),
point D (0.0, 80.4, 19.6),
point C' (19.5, 70.5, 10.0), and
point (32.9, 67.1, 0.0),
or on the above line segments (excluding the points on the line segment CJ);

the line segment PL is represented by coordinates (x, $-0.1135x^2+12.112x-280.43$, $0.1135x^2-13.112x+380.43$),
the line segment MA' is represented by coordinates (x, $0.0016x^2-0.9473+57.497$, $-0.0016x^2-0.0527x+42.503$),
the line segment A'B is represented by coordinates (x, $0.0029x^2-1.0268x+58.7$, $-0.0029x^2+0.0268x+41.3$),
the line segment DC' is represented by coordinates (x, $0.0082x^2-0.6671x+80.4$, $-0.0082x^2-0.3329x+19.6$),
the line segment C'C is represented by coordinates (x, $0.0067x^2-0.6034x+79.729$, $-0.0067x^2-0.3966x+20.271$), and
the line segments JP, LM, BD, and CG are straight lines.

When the requirements above are satisfied, the refrigerant according to the present disclosure has a refrigerating capacity ratio of 85% or more relative to that of R410A, and a COP of 92.5% or more relative to that of R410A; furthermore, the refrigerant has an RCL of 40 g/m$^3$ or more.

When the mass% of HFO-1132(E), HFO-1123, and R1234yf based on their sum in the refrigerant A according to the present disclosure is respectively represented by x, y, and z, the refrigerant is preferably a refrigerant wherein coordinates (x,y,z) in a ternary composition diagram in which the sum of HFO-1132(E), HFO-1123, and R1234yf is 100 mass% are within the range of a figure surrounded by line segments PL, LM, MA', A'B, BF, FT, and TP that connect the following 7 points:

point P (55.8, 42.0, 2.2),
point L (63.1, 31.9, 5.0),
point M (60.3, 6.2, 33.5),
point A' (30.6, 30.0, 39.4),
point B (0.0, 58.7, 41.3),
point F (0.0, 61.8, 38.2), and
point T (35.8, 44.9, 19.3),
or on the above line segments (excluding the points on the line segment BF);

the line segment PL is represented by coordinates (x, $-0.1135x^2+12.112x-280.43$, $0.1135x^2-13.112x+380.43$),
the line segment MA' is represented by coordinates (x, $0.0016x^2-0.9473+57.497$, $-0.0016x^2-0.0527x+42.503$),
the line segment A'B is represented by coordinates (x, $0.0029x^2-1.0268x+58.7$, $-0.0029x^2+0.0268x+41.3$),
the line segment FT is represented by coordinates (x, $0.0078x^2-0.7501x+61.8$, $-0.0078x^2-0.2499x+38.2$),
the line segment TP is represented by coordinates (x, $0.0067x^2-0.7607x+63.525$, $-0.0067x^2-0.2393x+36.475$), and
the line segments LM and BF are straight lines.

When the requirements above are satisfied, the refrigerant according to the present disclosure has a refrigerating capacity ratio of 85% or more relative to that of R410A, and a COP of 95% or more relative to that of R410A; furthermore, the refrigerant has an RCL of 40 g/m$^3$ or more.

The refrigerant A according to the present disclosure is preferably a refrigerant wherein when the mass% of HFO-1132(E), HFO-1123, and R1234yf based on their sum in the refrigerant is respectively represented by x, y, and z, coordinates (x,y,z) in a ternary composition diagram in which the sum of HFO-1132(E), HFO-1123, and R1234yf is 100 mass% are within the range of a figure surrounded by line segments PL, LQ, QR, and RP that connect the following 4 points:

point P (55.8, 42.0, 2.2),
point L (63.1, 31.9, 5.0),
point Q (62.8, 29.6, 7.6), and
point R (49.8, 42.3, 7.9),
or on the above line segments;

the line segment PL is represented by coordinates (x, $-0.1135x^2+12.112x-280.43$, $0.1135x^2-13.112x+380.43$),
the line segment RP is represented by coordinates (x, $0.0067x^2-0.7607x+63.525$, $-0.0067x^2-0.2393x+36.475$), and

the line segments LQ and QR are straight lines.

When the requirements above are satisfied, the refrigerant according to the present disclosure has a COP of 95% or more relative to that of R410A, and an RCL of 40 g/m$^3$ or more, furthermore, the refrigerant has a condensation temperature glide of 1°C or less.

The refrigerant A according to the present disclosure is preferably a refrigerant wherein when the mass% of HFO-1132(E), HFO-1123, and R1234yf based on their sum in the refrigerant is respectively represented by x, y, and z, coordinates (x,y,z) in a ternary composition diagram in which the sum of HFO-1132(E), HFO-1123, and R1234yf is 100 mass% are within the range of a figure surrounded by line segments SM, MA', A'B, BF, FT, and TS that connect the following 6 points:

point S (62.6, 28.3, 9.1),
point M (60.3, 6.2, 33.5),
point A'(30.6, 30.0, 39.4),
point B (0.0, 58.7, 41.3),
point F (0.0, 61.8, 38.2), and
point T (35.8, 44.9, 19.3),
or on the above line segments,

the line segment MA' is represented by coordinates (x, 0.0016x$^2$-0.9473x+57.497, -0.0016x$^2$-0.0527x+42.503),
the line segment A'B is represented by coordinates (x, 0.0029x$^2$-1.0268x+58.7, -0.0029x$^2$+0.0268x+41.3),
the line segment FT is represented by coordinates (x, 0.0078x$^2$-0.7501x+61.8, -0.0078x$^2$-0.2499x+38.2),
the line segment TS is represented by coordinates (x, 0.0017x$^2$-0.7869x+70.888, -0.0017x$^2$-0.2131x+29.112), and
the line segments SM and BF are straight lines.

When the requirements above are satisfied, the refrigerant according to the present disclosure has a refrigerating capacity ratio of 85% or more relative to that of R410A, a COP of 95% or more relative to that of R410A, and an RCL of 40 g/m$^3$ or more furthermore, the refrigerant has a discharge pressure of 105% or more relative to that of R410A.

The refrigerant A according to the present disclosure is preferably a refrigerant wherein when the mass% of HFO-1132(E), HFO-1123, and R1234yf based on their sum in the refrigerant is respectively represented by x, y, and z, coordinates (x,y,z) in a ternary composition diagram in which the sum of HFO-1132(E), HFO-1123, and R1234yf is 100 mass% are within the range of a figure surrounded by line segments Od, dg, gh, and hO that connect the following 4 points:

point d (87.6, 0.0, 12.4),
point g (18.2, 55.1, 26.7),
point h (56.7, 43.3, 0.0), and
point o (100.0, 0.0, 0.0),
or on the line segments Od, dg, gh, and hO (excluding the points O and h);

the line segment dg is represented by coordinates (0.0047y$^2$-1.5177y+87.598, y, -0.0047y$^2$+0.5177y+12.402),
the line segment gh is represented by coordinates (-0.0134z$^2$-1.0825z+56.692, 0.0134z$^2$+0.0825z+43.308, z), and
the line segments hO and Od are straight lines.

When the requirements above are satisfied, the refrigerant according to the present disclosure has a refrigerating capacity ratio of 92.5% or more relative to that of R410A, and a COP ratio of 92.5% or more relative to that of R410A.

The refrigerant A according to the present disclosure is preferably a refrigerant wherein

when the mass% of HFO-1132(E), HFO-1123, and R1234yf, based on their sum is respectively represented by x, y, and z, coordinates (x,y,z) in a ternary composition diagram in which the sum of HFO-1132(E), HFO-1123, and R1234yf is 100 mass% are within the range of a figure surrounded by line segments lg, gh, hi, and il that connect the following 4 points:

point 1 (72.5, 10.2, 17.3),
point g (18.2, 55.1, 26.7),
point h (56.7, 43.3, 0.0), and
point i (72.5, 27.5, 0.0) or

on the line segments lg, gh, and il (excluding the points h and i);

the line segment lg is represented by coordinates $(0.0047y^2-1.5177y+87.598, y, -0.0047y^2+0.5177y+12.402)$,
the line gh is represented by coordinates $(-0.0134z^2-1.0825z+56.692, 0.0134z^2+0.0825z+43.308, z)$, and
the line segments hi and il are straight lines.

When the requirements above are satisfied, the refrigerant according to the present disclosure has a refrigerating capacity ratio of 92.5% or more relative to that of R410A, and a COP ratio of 92.5% or more relative to that of R410A; furthermore, the refrigerant has a lower flammability (Class 2L) according to the ASHRAE Standard.

The refrigerant A according to the present disclosure is preferably a refrigerant wherein

when the mass% of HFO-1132(E), HFO-1123, and R1234yf based on their sum is respectively represented by x, y, and z, coordinates (x,y,z) in a ternary composition diagram in which the sum of HFO-1132(E), HFO-1123, and R1234yf is 100 mass% are within the range of a figure surrounded by line segments Od, de, ef, and fO that connect the following 4 points:

point d (87.6, 0.0, 12.4),
point e (31.1, 42.9, 26.0),
point f (65.5, 34.5, 0.0), and
point O (100.0, 0.0, 0.0),
or on the line segments Od, de, and ef (excluding the points O and f);

the line segment de is represented by coordinates $(0.0047y^2-1.5177y+87.598, y, -0.0047y^2+0.5177y+12.402)$,
the line segment ef is represented by coordinates $(-0.0064z^2-1.1565z+65.501, 0.0064z^2+0.1565z+34.499, z)$, and
the line segments fO and Od are straight lines.

When the requirements above are satisfied, the refrigerant according to the present disclosure has a refrigerating capacity ratio of 93.5% or more relative to that of R410A, and a COP ratio of 93.5% or more relative to that of R410A.

The refrigerant A according to the present disclosure is preferably a refrigerant wherein

when the mass% of HFO-1132(E), HFO-1123, and R1234yf based on their sum is respectively represented by x, y, and z,
coordinates (x,y,z) in a ternary composition diagram in which the sum of HFO-1132(E), HFO-1123, and R1234yf is 100 mass% are within the range of a figure surrounded by line segments le, ef, fi, and il that connect the following 4 points:

point 1 (72.5, 10.2, 17.3),
point e (31.1, 42.9, 26.0),
point f (65.5, 34.5, 0.0), and
point i (72.5, 27.5, 0.0),
or on the line segments le, ef, and il (excluding the points f and i);

the line segment le is represented by coordinates $(0.0047y^2-1.5177y+87.598, y, -0.0047y^2+0.5177y+12.402)$,
the line segment ef is represented by coordinates $(-0.0134z^2-1.0825z+56.692, 0.0134z^2+0.0825z+43.308, z)$, and
the line segments fi and il are straight lines.

When the requirements above are satisfied, the refrigerant according to the present disclosure has a refrigerating capacity ratio of 93.5% or more relative to that of R410A, and a COP ratio of 93.5% or more relative to that of R410A; furthermore, the refrigerant has a lower flammability (Class 2L) according to the ASHRAE Standard.

The refrigerant A according to the present disclosure is preferably a refrigerant wherein

when the mass% of HFO-1132(E), HFO-1123, and R1234yf based on their sum is respectively represented by x, y, and z,
coordinates (x,y,z) in a ternary composition diagram in which the sum of HFO-1132(E), HFO-1123, and R1234yf is 100 mass% are within the range of a figure surrounded by line segments Oa, ab, bc, and cO that connect the following 4 points:

point a (93.4, 0.0, 6.6),

point b (55.6, 26.6, 17.8),
point c (77.6, 22.4, 0.0), and
point O (100.0, 0.0, 0.0),
or on the line segments Oa, ab, and bc (excluding the points O and c);

the line segment ab is represented by coordinates $(0.0052y^2-1.5588y+93.385, y, -0.0052y^2+0.5588y+6.615)$,
the line segment bc is represented by coordinates $(-0.0032z^2-1.1791z+77.593, 0.0032z^2+0.1791z+22.407, z)$, and
the line segments cO and Oa are straight lines.

When the requirements above are satisfied, the refrigerant according to the present disclosure has a refrigerating capacity ratio of 95% or more relative to that of R410A, and a COP ratio of 95% or more relative to that of R410A.

The refrigerant A according to the present disclosure is preferably a refrigerant wherein

when the mass% of HFO-1132(E), HFO-1123, and R1234yf based on their sum is respectively represented by x, y, and z,
coordinates (x,y,z) in a ternary composition diagram in which the sum of HFO-1132(E), HFO-1123, and R1234yf is 100 mass% are within the range of a figure surrounded by line segments kb, bj, and jk that connect the following 3 points:

point k (72.5, 14.1, 13.4),
point b (55.6, 26.6, 17.8), and
point j (72.5, 23.2, 4.3),
or on the line segments kb, bj, and jk;

the line segment kb is represented by coordinates $(0.0052y^2-1.5588y+93.385, y, and -0.0052y^2+0.5588y+6.615)$,
the line segment bj is represented by coordinates $(-0.0032z^2-1.1791z+77.593, 0.0032z^2+0.1791z+22.407, z)$, and
the line segment jk is a straight line.

When the requirements above are satisfied, the refrigerant according to the present disclosure has a refrigerating capacity ratio of 95% or more relative to that of R410A, and a COP ratio of 95% or more relative to that of R410A; furthermore, the refrigerant has a lower flammability (Class 2L) according to the ASHRAE Standard.

The refrigerant according to the present disclosure may further comprise other additional refrigerants in addition to HFO-1132(E), HFO-1123, and R1234yf, as long as the above properties and effects are not impaired. In this respect, the refrigerant according to the present disclosure preferably comprises HFO-1132(E), HFO-1123, and R1234yf in a total amount of 99.5 mass% or more, more preferably 99.75 mass% or more, and still more preferably 99.9 mass% or more, based on the entire refrigerant.

The refrigerant according to the present disclosure may comprise HFO-1132(E), HFO-1123, and R1234yf in a total amount of 99.5 mass% or more, 99.75 mass% or more, or 99.9 mass% or more, based on the entire refrigerant.

Additional refrigerants are not particularly limited and can be widely selected. The mixed refrigerant may contain one additional refrigerant, or two or more additional refrigerants.

(Examples of Refrigerant A)

The present disclosure is described in more detail below with reference to Examples of refrigerant A. However, refrigerant A is not limited to the Examples.

The GWP of R1234yf and a composition consisting of a mixed refrigerant R410A (R32 = 50%/R125 = 50%) was evaluated based on the values stated in the Intergovernmental Panel on Climate Change (IPCC), fourth report. The GWP of HFO-1132(E), which was not stated therein, was assumed to be 1 from HFO-1132a (GWP = 1 or less) and HFO-1123 (GWP = 0.3, described in WO 2015/141678 A1). The refrigerating capacity of R410A and compositions each comprising a mixture of HFO-1132(E), HFO-1123, and R1234yf was determined by performing theoretical refrigeration cycle calculations for the mixed refrigerants using the National Institute of Science and Technology (NIST) and Reference Fluid Thermodynamic and Transport Properties Database (Refprop 9.0) under the following conditions.

Further, the RCL of the mixture was calculated with the LFL of HFO-1132(E) being 4.7 vol.%, the LFL of HFO-1123 being 10 vol.%, and the LFL of R1234yf being 6.2 vol.%, in accordance with the ASHRAE Standard 34-2013.

Evaporating temperature: 5°C
Condensation temperature: 45°C
Degree of superheating: 5 K

Degree of subcooling: 5 K
Compressor efficiency: 70%
Tables 1 to 34 show these values together with the GWP of each mixed refrigerant.

Table 1

| Item | Unit | Comp. Ex. 1 | Comp. Ex. 2 | Comp. Ex. 3 | Example 1 | Example 2 | Example 3 | Comp. Ex. 4 |
|------|------|-------------|-------------|-------------|-----------|-----------|-----------|-------------|
| | | | O | A | | A' | | B |
| HFO-1132(E) | mass% | R410A | 100.0 | 68.6 | 49.0 | 30.6 | 14.1 | 0.0 |
| HFO-1123 | mass% | | 0.0 | 0.0 | 14.9 | 30.0 | 44.8 | 58.7 |
| R1234yf | mass% | | 0.0 | 31.4 | 36.1 | 39.4 | 41.1 | 41.3 |
| GWP | - | 2088 | 1 | 2 | 2 | 2 | 2 | 2 |
| COP ratio | % (relative to 410A) | 100 | 99.7 | 100.0 | 98.6 | 97.3 | 96.3 | 95.5 |
| Refrigerating capacity ratio | % (relative to 410A) | 100 | 98.3 | 85.0 | 85.0 | 85.0 | 85.0 | 85.0 |
| Condensation glide | °C | 0.1 | 0.00 | 1.98 | 3.36 | 4.46 | 5.15 | 5.35 |
| Discharge pressure | % (relative to 410A) | 100.0 | 99.3 | 87.1 | 88.9 | 90.6 | 92.1 | 93.2 |
| RCL | g/m$^3$ | - | 30.7 | 37.5 | 44.0 | 52.7 | 64.0 | 78.6 |

Table 2

| Item | Unit | Comp. Ex. 5 C | Example 4 | Example 5 C' | Example 6 | Comp. Ex. 6 D | Comp. Ex. 7 E | Example 7 E' | Comp. Ex. 8 F |
|---|---|---|---|---|---|---|---|---|---|
| HFO-1132(E) | mass% | 32.9 | 26.6 | 19.5 | 10.9 | 0.0 | 58.0 | 23.4 | 0.0 |
| HFO-1123 | mass% | 67.1 | 68.4 | 70.5 | 74.1 | 80.4 | 42.0 | 48.5 | 61.8 |
| R1234yf | mass% | 0.0 | 5.0 | 10.0 | 15.0 | 19.6 | 0.0 | 28.1 | 38.2 |
| GWP | - | 1 | 1 | 1 | 1 | 2 | 1 | 2 | 2 |
| COP ratio | % (relative to 410A) | 92.5 | 92.5 | 92.5 | 92.5 | 92.5 | 95.0 | 95.0 | 95.0 |
| Refrigerating capacity ratio | % (relative to 410A) | 107.4 | 105.2 | 102.9 | 100.5 | 97.9 | 105.0 | 92.5 | 86.9 |
| Condensation glide | °C | 0.16 | 0.52 | 0.94 | 1.42 | 1.90 | 0.42 | 3.16 | 4.80 |
| Discharge pressure | % (relative to 410A) | 119.5 | 117.4 | 115.3 | 113.0 | 115.9 | 112.7 | 101.0 | 95.8 |
| RCL | g/m$^3$ | 53.5 | 57.1 | 62.0 | 69.1 | 81.3 | 41.9 | 46.3 | 79.0 |

Table 3

| Item | Unit | Comp. Ex. 9 | Example 8 | Example 9 | Example 10 | Example 11 | Example 12 |
|------|------|------|------|------|------|------|------|
|      |      | J | P | L | N | N' | K |
| HFO-1132(E) | mass% | 47.1 | 55.8 | 63.1 | 68.6 | 65.0 | 61.3 |
| HFO-1123 | mass% | 52.9 | 42.0 | 31.9 | 16.3 | 7.7 | 5.4 |
| R1234yf | mass% | 0.0 | 2.2 | 5.0 | 15.1 | 27.3 | 33.3 |
| GWP | - | 1 | 1 | 1 | 1 | 2 | 2 |
| COP ratio | % (relative to 410A) | 93.8 | 95.0 | 96.1 | 97.9 | 99.1 | 99.5 |
| Refrigerating capacity ratio | % (relative to 410A) | 106.2 | 104.1 | 101.6 | 95.0 | 88.2 | 85.0 |
| Condensation glide | °C | 0.31 | 0.57 | 0.81 | 1.41 | 2.11 | 2.51 |
| Discharge pressure | % (relative to 410A) | 115.8 | 111.9 | 107.8 | 99.0 | 91.2 | 87.7 |
| RCL | g/m³ | 46.2 | 42.6 | 40.0 | 38.0 | 38.7 | 39.7 |

Table 4

| Item | Unit | Example 13 | Example 14 | Example 15 | Example 16 | Example 17 | Example 18 | Example 19 |
|------|------|------|------|------|------|------|------|------|
|      |      | L | M | Q | R | S | S' | T |
| HFO-1132(E) | mass% | 63.1 | 60.3 | 62.8 | 49.8 | 62.6 | 50.0 | 35.8 |
| HFO-1123 | mass% | 31.9 | 6.2 | 29.6 | 42.3 | 28.3 | 35.8 | 44.9 |
| R1234yf | mass% | 5.0 | 33.5 | 7.6 | 7.9 | 9.1 | 14.2 | 19.3 |
| GWP | - | 1 | 2 | 1 | 1 | 1 | 1 | 2 |
| COP ratio | % (relative to 410A) | 96.1 | 99.4 | 96.4 | 95.0 | 96.6 | 95.8 | 95.0 |
| Refrigerating capacity ratio | % (relative to 410A) | 101.6 | 85.0 | 100.2 | 101.7 | 99.4 | 98.1 | 96.7 |
| Condensation glide | °C | 0.81 | 2.58 | 1.00 | 1.00 | 1.10 | 1.55 | 2.07 |
| Discharge pressure | % (relative to 410A) | 107.8 | 87.9 | 106.0 | 109.6 | 105.0 | 105.0 | 105.0 |
| RCL | g/m³ | 40.0 | 40.0 | 40.0 | 44.8 | 40.0 | 44.4 | 50.8 |

Table 5

| Item | Unit | Comp. Ex. 10 | Example 20 | Example 21 |
|------|------|------|------|------|
| | | G | H | I |
| HFO-1132(E) | mass% | 72.0 | 72.0 | 72.0 |
| HFO-1123 | mass% | 28.0 | 14.0 | 0.0 |
| R1234yf | mass% | 0.0 | 14.0 | 28.0 |
| GWP | - | 1 | 1 | 2 |
| COP ratio | % (relative to 410A) | 96.6 | 98.2 | 99.9 |
| Refrigerating capacity ratio | % (relative to 410A) | 103.1 | 95.1 | 86.6 |
| Condensation glide | °C | 0.46 | 1.27 | 1.71 |
| Discharge pressure | % (relative to 410A) | 108.4 | 98.7 | 88.6 |
| RCL | $g/m^3$ | 37.4 | 37.0 | 36.6 |

Table 6

| Item | Unit | Comp. Ex. 11 | Comp. Ex. 12 | Example 22 | Example 23 | Example 24 | Example 25 | Example 26 | Comp. Ex. 13 |
|---|---|---|---|---|---|---|---|---|---|
| HFO-1132(E) | mass% | 10.0 | 20.0 | 30.0 | 40.0 | 50.0 | 60.0 | 70.0 | 80.0 |
| HFO-1123 | mass% | 85.0 | 75.0 | 65.0 | 55.0 | 45.0 | 35.0 | 25.0 | 15.0 |
| R1234yf | mass% | 5.0 | 5.0 | 5.0 | 5.0 | 5.0 | 5.0 | 5.0 | 5.0 |
| GWP | - | 1 | 1 | 1 | 1 | 1 | 1 | 1 | 1 |
| COP ratio | % (relative to 410A) | 91.4 | 92.0 | 92.8 | 93.7 | 94.7 | 95.8 | 96.9 | 98.0 |
| Refrigerating capacity ratio | % (relative to 410A) | 105.7 | 105.5 | 105.0 | 104.3 | 103.3 | 102.0 | 100.6 | 99.1 |
| Condensation glide | °C | 0.40 | 0.46 | 0.55 | 0.66 | 0.75 | 0.80 | 0.79 | 0.67 |
| Discharge pressure | % (relative to 410A) | 120.1 | 118.7 | 116.7 | 114.3 | 111.6 | 108.7 | 105.6 | 102.5 |
| RCL | g/m$^3$ | 71.0 | 61.9 | 54.9 | 49.3 | 44.8 | 41.0 | 37.8 | 35.1 |

Table 7

| Item | Unit | Comp. Ex. 14 | Example 27 | Example 28 | Example 29 | Example 30 | Example 31 | Example 32 | Comp. Ex. 15 |
|---|---|---|---|---|---|---|---|---|---|
| HFO-1132(E) | mass% | 10.0 | 20.0 | 30.0 | 40.0 | 50.0 | 60.0 | 70.0 | 80.0 |
| HFO-1123 | mass% | 80.0 | 70.0 | 60.0 | 50.0 | 40.0 | 30.0 | 20.0 | 10.0 |
| R1234yf | mass% | 10.0 | 10.0 | 10.0 | 10.0 | 10.0 | 10.0 | 10.0 | 10.0 |
| GWP | - | 1 | 1 | 1 | 1 | 1 | 1 | 1 | 1 |
| COP ratio | % (relative to 410A) | 91.9 | 92.5 | 93.3 | 94.3 | 95.3 | 96.4 | 97.5 | 98.6 |
| Refrigerating capacity ratio | % (relative to 410A) | 103.2 | 102.9 | 102.4 | 101.5 | 100.5 | 99.2 | 97.8 | 96.2 |
| Condensation glide | °C | 0.87 | 0.94 | 1.03 | 1.12 | 1.18 | 1.18 | 1.09 | 0.88 |
| Discharge pressure | % (relative to 410A) | 116.7 | 115.2 | 113.2 | 110.8 | 108.1 | 105.2 | 102.1 | 99.0 |
| RCL | g/m$^3$ | 70.5 | 61.6 | 54.6 | 49.1 | 44.6 | 40.8 | 37.7 | 35.0 |

Table 8

| Item | Unit | Comp. Ex. 16 | Example 33 | Example 34 | Example 35 | Example 36 | Example 37 | Example 38 | Comp. Ex. 17 |
|---|---|---|---|---|---|---|---|---|---|
| HFO-1132(E) | mass% | 10.0 | 20.0 | 30.0 | 40.0 | 50.0 | 60.0 | 70.0 | 80.0 |
| HFO-1123 | mass% | 75.0 | 65.0 | 55.0 | 45.0 | 35.0 | 25.0 | 15.0 | 5.0 |
| R1234yf | mass% | 15.0 | 15.0 | 15.0 | 15.0 | 15.0 | 15.0 | 15.0 | 15.0 |
| GWP | - | 1 | 1 | 1 | 1 | 1 | 1 | 1 | 1 |
| COP ratio | % (relative to 410A) | 92.4 | 93.1 | 93.9 | 94.8 | 95.9 | 97.0 | 98.1 | 99.2 |
| Refrigerating capacity ratio | % (relative to 410A) | 100.5 | 100.2 | 99.6 | 98.7 | 97.7 | 96.4 | 94.9 | 93.2 |
| Condensation glide | °C | 1.41 | 1.49 | 1.56 | 1.62 | 1.63 | 1.55 | 1.37 | 1.05 |
| Discharge pressure | % (relative to 410A) | 113.1 | 111.6 | 109.6 | 107.2 | 104.5 | 101.6 | 98.6 | 95.5 |
| RCL | g/m$^3$ | 70.0 | 61.2 | 54.4 | 48.9 | 44.4 | 40.7 | 37.5 | 34.8 |

Table 9

| Item | Unit | Example 39 | Example 40 | Example 41 | Example 42 | Example 43 | Example 44 | Example 45 |
|---|---|---|---|---|---|---|---|---|
| HFO-1132(E) | mass% | 10.0 | 20.0 | 30.0 | 40.0 | 50.0 | 60.0 | 70.0 |
| HFO-1123 | mass% | 70.0 | 60.0 | 50.0 | 40.0 | 30.0 | 20.0 | 10.0 |
| R1234yf | mass% | 20.0 | 20.0 | 20.0 | 20.0 | 20.0 | 20.0 | 20.0 |
| GWP | - | 2 | 2 | 2 | 2 | 2 | 2 | 2 |
| COP ratio | % (relative to 410A) | 93.0 | 93.7 | 94.5 | 95.5 | 96.5 | 97.6 | 98.7 |
| Refrigerating capacity ratio | % (relative to 410A) | 97.7 | 97.4 | 96.8 | 95.9 | 94.7 | 93.4 | 91.9 |
| Condensation glide | °C | 2.03 | 2.09 | 2.13 | 2.14 | 2.07 | 1.91 | 1.61 |
| Discharge pressure | % (relative to 410A) | 109.4 | 107.9 | 105.9 | 103.5 | 100.8 | 98.0 | 95.0 |
| RCL | g/m$^3$ | 69.6 | 60.9 | 54.1 | 48.7 | 44.2 | 40.5 | 37.4 |

Table 10

| Item | Unit | Example 46 | Example 47 | Example 48 | Example 49 | Example 50 | Example 51 | Example 52 |
|---|---|---|---|---|---|---|---|---|
| HFO-1132(E) | mass% | 10.0 | 20.0 | 30.0 | 40.0 | 50.0 | 60.0 | 70.0 |
| HFO-1123 | mass% | 65.0 | 55.0 | 45.0 | 35.0 | 25.0 | 15.0 | 5.0 |
| R1234yf | mass% | 25.0 | 25.0 | 25.0 | 25.0 | 25.0 | 25.0 | 25.0 |
| GWP | - | 2 | 2 | 2 | 2 | 2 | 2 | 2 |
| COP ratio | % (relative to 410A) | 93.6 | 94.3 | 95.2 | 96.1 | 97.2 | 98.2 | 99.3 |
| Refrigerating capacity ratio | % (relative to 410A) | 94.8 | 94.5 | 93.8 | 92.9 | 91.8 | 90.4 | 88.8 |
| Condensation glide | °C | 2.71 | 2.74 | 2.73 | 2.66 | 2.50 | 2.22 | 1.78 |
| Discharge pressure | % (relative to 41 0A) | 105.5 | 104.0 | 102.1 | 99.7 | 97.1 | 94.3 | 91.4 |
| RCL | g/m$^3$ | 69.1 | 60.5 | 53.8 | 48.4 | 44.0 | 40.4 | 37.3 |

Table 11

| Item | Unit | Example 53 | Example 54 | Example 55 | Example 56 | Example 57 | Example 58 |
|---|---|---|---|---|---|---|---|
| HFO-1132(E) | mass% | 10.0 | 20.0 | 30.0 | 40.0 | 50.0 | 60.0 |

(continued)

| Item | Unit | Example 53 | Example 54 | Example 55 | Example 56 | Example 57 | Example 58 |
|---|---|---|---|---|---|---|---|
| HFO-1123 | mass% | 60.0 | 50.0 | 40.0 | 30.0 | 20.0 | 10.0 |
| R1234yf | mass% | 30.0 | 30.0 | 30.0 | 30.0 | 30.0 | 30.0 |
| GWP | - | 2 | 2 | 2 | 2 | 2 | 2 |
| COP ratio | % (relative to 410A) | 94.3 | 95.0 | 95.9 | 96.8 | 97.8 | 98.9 |
| Refrigerating capacity ratio | % (relative to 410A) | 91.9 | 91.5 | 90.8 | 89.9 | 88.7 | 87.3 |
| Condensation glide | °C | 3.46 | 3.43 | 3.35 | 3.18 | 2.90 | 2.47 |
| Discharge pressure | % (relative to 410A) | 101.6 | 100.1 | 98.2 | 95.9 | 93.3 | 90.6 |
| RCL | g/m$^3$ | 68.7 | 60.2 | 53.5 | 48.2 | 43.9 | 40.2 |

Table 12

| Item | Unit | Example 59 | Example 60 | Example 61 | Example 62 | Example 63 | Comp. Ex. 18 |
|---|---|---|---|---|---|---|---|
| HFO-1132(E) | mass% | 10.0 | 20.0 | 30.0 | 40.0 | 50.0 | 60.0 |
| HFO-1123 | mass% | 55.0 | 45.0 | 35.0 | 25.0 | 15.0 | 5.0 |
| R1234yf | mass% | 35.0 | 35.0 | 35.0 | 35.0 | 35.0 | 35.0 |
| GWP | - | 2 | 2 | 2 | 2 | 2 | 2 |
| COP ratio | % (relative to 410A) | 95.0 | 95.8 | 96.6 | 97.5 | 98.5 | 99.6 |
| Refrigerating capacity ratio | % (relative to 410A) | 88.9 | 88.5 | 87.8 | 86.8 | 85.6 | 84.1 |
| Condensation glide | °C | 4.24 | 4.15 | 3.96 | 3.67 | 3.24 | 2.64 |
| Discharge pressure | % (relative to 410A) | 97.6 | 96.1 | 94.2 | 92.0 | 89.5 | 86.8 |
| RCL | g/m$^3$ | 68.2 | 59.8 | 53.2 | 48.0 | 43.7 | 40.1 |

Table 13

| Item | Unit | Example 64 | Example 65 | Comp. Ex. 19 | Comp. Ex. 20 | Comp. Ex. 21 |
|---|---|---|---|---|---|---|
| HFO-1132(E) | mass% | 10.0 | 20.0 | 30.0 | 40.0 | 50.0 |
| HFO-1123 | mass% | 50.0 | 40.0 | 30.0 | 20.0 | 10.0 |
| R1234yf | mass% | 40.0 | 40.0 | 40.0 | 40.0 | 40.0 |
| GWP | - | 2 | 2 | 2 | 2 | 2 |
| COP ratio | % (relative to 410A) | 95.9 | 96.6 | 97.4 | 98.3 | 99.2 |

(continued)

| Item | Unit | Example 64 | Example 65 | Comp. Ex. 19 | Comp. Ex. 20 | Comp. Ex. 21 |
|---|---|---|---|---|---|---|
| Refrigerating capacity ratio | % (relative to 410A) | 85.8 | 85.4 | 84.7 | 83.6 | 82.4 |
| Condensation glide | °C | 5.05 | 4.85 | 4.55 | 4.10 | 3.50 |
| Discharge pressure | % (relative to 410A) | 93.5 | 92.1 | 90.3 | 88.1 | 85.6 |
| RCL | g/m$^3$ | 67.8 | 59.5 | 53.0 | 47.8 | 43.5 |

Table 14

| Item | Unit | Example 66 | Example 67 | Example 68 | Example 69 | Example 70 | Example 71 | Example 72 | Example 73 |
|---|---|---|---|---|---|---|---|---|---|
| HFO-1132(E) | mass% | 54.0 | 56.0 | 58.0 | 62.0 | 52.0 | 54.0 | 56.0 | 58.0 |
| HFO-1123 | mass% | 41.0 | 39.0 | 37.0 | 33.0 | 41.0 | 39.0 | 37.0 | 35.0 |
| R1234yf | mass% | 5.0 | 5.0 | 5.0 | 5.0 | 7.0 | 7.0 | 7.0 | 7.0 |
| GWP | - | 1 | 1 | 1 | 1 | 1 | 1 | 1 | 1 |
| COP ratio | % (relative to 410A) | 95.1 | 95.3 | 95.6 | 96.0 | 95.1 | 95.4 | 95.6 | 95.8 |
| Refrigerating capacity ratio | % (relative to 410A) | 102.8 | 102.6 | 102.3 | 101.8 | 101.9 | 101.7 | 101.5 | 101.2 |
| Condensation glide | °C | 0.78 | 0.79 | 0.80 | 0.81 | 0.93 | 0.94 | 0.95 | 0.95 |
| Discharge pressure | % (relative to 410A) | 110.5 | 109.9 | 109.3 | 108.1 | 109.7 | 109.1 | 108.5 | 107.9 |
| RCL | g/m³ | 43.2 | 42.4 | 41.7 | 40.3 | 43.9 | 43.1 | 42.4 | 41.6 |

Table 15

| Item | Unit | Example 74 | Example 75 | Example 76 | Example 77 | Example 78 | Example 79 | Example 80 | Example 81 |
|---|---|---|---|---|---|---|---|---|---|
| HFO-1132(E) | mass% | 60.0 | 62.0 | 61.0 | 58.0 | 60.0 | 62.0 | 52.0 | 54.0 |
| HFO-1123 | mass% | 33.0 | 31.0 | 29.0 | 30.0 | 28.0 | 26.0 | 34.0 | 32.0 |
| R1234yf | mass% | 7.0 | 7.0 | 10.0 | 12.0 | 12.0 | 12.0 | 14.0 | 14.0 |
| GWP | - | 1 | 1 | 1 | 1 | 1 | 1 | 1 | 1 |
| COP ratio | % (relative to 410A) | 96.0 | 96.2 | 96.5 | 96.4 | 96.6 | 96.8 | 96.0 | 96.2 |
| Refrigerating capacity ratio | % (relative to 410A) | 100.9 | 100.7 | 99.1 | 98.4 | 98.1 | 97.8 | 98.0 | 97.7 |
| Condensation glide | °C | 0.95 | 0.95 | 1.18 | 1.34 | 1.33 | 1.32 | 1.53 | 1.53 |
| Discharge pressure | % (relative to 410A) | 107.3 | 106.7 | 104.9 | 104.4 | 103.8 | 103.2 | 104.7 | 104.1 |
| RCL | $g/m^3$ | 40.9 | 40.3 | 40.5 | 41.5 | 40.8 | 40.1 | 43.6 | 42.9 |

Table 16

| Item | Unit | Example 82 | Example 83 | Example 84 | Example 85 | Example 86 | Example 87 | Example 88 | Example 89 |
|---|---|---|---|---|---|---|---|---|---|
| HFO-1132(E) | mass% | 56.0 | 58.0 | 60.0 | 48.0 | 50.0 | 52.0 | 54.0 | 56.0 |
| HFO-1123 | mass% | 30.0 | 28.0 | 26.0 | 36.0 | 34.0 | 32.0 | 30.0 | 28.0 |
| R1234yf | mass% | 14.0 | 14.0 | 14.0 | 16.0 | 16.0 | 16.0 | 16.0 | 16.0 |
| GWP | - | 1 | 1 | 1 | 1 | 1 | 1 | 1 | 1 |
| COP ratio | % (relative to 410A) | 96.4 | 96.6 | 96.9 | 95.8 | 96.0 | 96.2 | 96.4 | 96.7 |
| Refrigerating capacity ratio | % (relative to 410A) | 97.5 | 97.2 | 96.9 | 97.3 | 97.1 | 96.8 | 96.6 | 96.3 |
| Condensation glide | °C | 1.51 | 1.50 | 1.48 | 1.72 | 1.72 | 1.71 | 1.69 | 1.67 |
| Discharge pressure | % (relative to 410A) | 103.5 | 102.9 | 102.3 | 104.3 | 103.8 | 103.2 | 102.7 | 102.1 |
| RCL | g/m$^3$ | 42.1 | 41.4 | 40.7 | 45.2 | 44.4 | 43.6 | 42.8 | 42.1 |

Table 17

| Item | Unit | Example 90 | Example 91 | Example 92 | Example 93 | Example 94 | Example 95 | Example 96 | Example 97 |
|---|---|---|---|---|---|---|---|---|---|
| HFO-1132(E) | mass% | 58.0 | 60.0 | 42.0 | 44.0 | 46.0 | 48.0 | 50.0 | 52.0 |
| HFO-1123 | mass% | 26.0 | 24.0 | 40.0 | 38.0 | 36.0 | 34.0 | 32.0 | 30.0 |
| R1234yf | mass% | 16.0 | 16.0 | 18.0 | 18.0 | 18.0 | 18.0 | 18.0 | 18.0 |
| GWP | - | 1 | 1 | 2 | 2 | 2 | 2 | 2 | 2 |
| COP ratio | % (relative to 410A) | 96.9 | 97.1 | 95.4 | 95.6 | 95.8 | 96.0 | 96.3 | 96.5 |
| Refrigerating capacity ratio | % (relative to 410A) | 96.1 | 95.8 | 96.8 | 96.6 | 96.4 | 96.2 | 95.9 | 95.7 |
| Condensation glide | °C | 1.65 | 1.63 | 1.93 | 1.92 | 1.92 | 1.91 | 1.89 | 1.88 |
| Discharge pressure | % (relative to 410A) | 101.5 | 100.9 | 104.5 | 103.9 | 103.4 | 102.9 | 102.3 | 101.8 |
| RCL | g/m³ | 41.4 | 40.7 | 47.8 | 46.9 | 46.0 | 45.1 | 44.3 | 43.5 |

Table 18

| Item | Unit | Example 98 | Example 99 | Example 100 | Example 101 | Example 102 | Example 103 | Example 104 | Example 105 |
|---|---|---|---|---|---|---|---|---|---|
| HFO-1132(E) | mass% | 54.0 | 56.0 | 58.0 | 60.0 | 36.0 | 38.0 | 42.0 | 44.0 |
| HFO-1123 | mass% | 28.0 | 26.0 | 24.0 | 22.0 | 44.0 | 42.0 | 38.0 | 36.0 |
| R1234yf | mass% | 18.0 | 18.0 | 18.0 | 18.0 | 20.0 | 20.0 | 20.0 | 20.0 |
| GWP | - | 2 | 2 | 2 | 2 | 2 | 2 | 2 | 2 |
| COP ratio | % (relative to 410A) | 96.7 | 96.9 | 97.1 | 97.3 | 95.1 | 95.3 | 95.7 | 95.9 |
| Refrigerating capacity ratio | % (relative to 410A) | 95.4 | 95.2 | 94.9 | 94.6 | 96.3 | 96.1 | 95.7 | 95.4 |
| Condensation glide | °C | 1.86 | 1.83 | 1.80 | 1.77 | 2.14 | 2.14 | 2.13 | 2.12 |
| Discharge pressure | % (relative to 410A) | 101.2 | 100.6 | 100.0 | 99.5 | 104.5 | 104.0 | 103.0 | 102.5 |
| RCL | g/m$^3$ | 42.7 | 42.0 | 41.3 | 40.6 | 50.7 | 49.7 | 47.7 | 46.8 |

Table 19

| Item | Unit | Example 106 | Example 107 | Example 108 | Example 109 | Example 110 | Example 111 | Example 112 | Example 113 |
|---|---|---|---|---|---|---|---|---|---|
| HFO-1132(E) | mass% | 46.0 | 48.0 | 52.0 | 54.0 | 56.0 | 58.0 | 34.0 | 36.0 |
| HFO-1123 | mass% | 34.0 | 32.0 | 28.0 | 26.0 | 24.0 | 22.0 | 44.0 | 42.0 |
| R1234yf | mass% | 20.0 | 20.0 | 20.0 | 20.0 | 20.0 | 20.0 | 22.0 | 22.0 |
| GWP | - | 2 | 2 | 2 | 2 | 2 | 2 | 2 | 2 |
| COP ratio | % (relative to 410A) | 96.1 | 96.3 | 96.7 | 96.9 | 97.2 | 97.4 | 95.1 | 95.3 |
| Refrigerating capacity ratio | % (relative to 410A) | 95.2 | 95.0 | 94.5 | 94.2 | 94.0 | 93.7 | 95.3 | 95.1 |
| Condensation glide | °C | 2.11 | 2.09 | 2.05 | 2.02 | 1.99 | 1.95 | 2.37 | 2.36 |
| Discharge pressure | % (relative to 410A) | 101.9 | 101.4 | 100.3 | 99.7 | 99.2 | 98.6 | 103.4 | 103.0 |
| RCL | g/m$^3$ | 45.9 | 45.0 | 43.4 | 42.7 | 41.9 | 41.2 | 51.7 | 50.6 |

Table 20

| Item | Unit | Example 114 | Example 115 | Example 116 | Example 117 | Example 118 | Example 119 | Example 120 | Example 121 |
|---|---|---|---|---|---|---|---|---|---|
| HFO-1132(E) | mass% | 38.0 | 40.0 | 42.0 | 44.0 | 46.0 | 48.0 | 50.0 | 52.0 |
| HFO-1123 | mass% | 40.0 | 38.0 | 36.0 | 34.0 | 32.0 | 30.0 | 28.0 | 26.0 |
| R1234yf | mass% | 22.0 | 22.0 | 22.0 | 22.0 | 22.0 | 22.0 | 22.0 | 22.0 |
| GWP | - | 2 | 2 | 2 | 2 | 2 | 2 | 2 | 2 |
| COP ratio | % (relative to 410A) | 95.5 | 95.7 | 95.9 | 96.1 | 96.4 | 96.6 | 96.8 | 97.0 |
| Refrigerating capacity ratio | % (relative to 410A) | 94.9 | 94.7 | 94.5 | 94.3 | 94.0 | 93.8 | 93.6 | 93.3 |
| Condensation glide | °C | 2.36 | 2.35 | 2.33 | 2.32 | 2.30 | 2.27 | 2.25 | 2.21 |
| Discharge pressure | % (relative to 410A) | 102.5 | 102.0 | 101.5 | 101.0 | 100.4 | 99.9 | 99.4 | 98.8 |
| RCL | g/m³ | 49.6 | 48.6 | 47.6 | 46.7 | 45.8 | 45.0 | 44.1 | 43.4 |

Table 21

| Item | Unit | Example 122 | Example 123 | Example 124 | Example 125 | Example 126 | Example 127 | Example 128 | Example 129 |
|------|------|-------------|-------------|-------------|-------------|-------------|-------------|-------------|-------------|
| HFO-1132(E) | mass% | 54.0 | 56.0 | 58.0 | 60.0 | 32.0 | 34.0 | 36.0 | 38.0 |
| HFO-1123 | mass% | 24.0 | 22.0 | 20.0 | 18.0 | 44.0 | 42.0 | 40.0 | 38.0 |
| R1234yf | mass% | 22.0 | 22.0 | 22.0 | 22.0 | 24.0 | 24.0 | 24.0 | 24.0 |
| GWP | - | 2 | 2 | 2 | 2 | 2 | 2 | 2 | 2 |
| COP ratio | % (relative to 410A) | 97.2 | 97.4 | 97.6 | 97.9 | 95.2 | 95.4 | 95.6 | 95.8 |
| Refrigerating capacity ratio | % (relative to 410A) | 93.0 | 92.8 | 92.5 | 92.2 | 94.3 | 94.1 | 93.9 | 93.7 |
| Condensation glide | °C | 2.18 | 2.14 | 2.09 | 2.04 | 2.61 | 2.60 | 2.59 | 2.58 |
| Discharge pressure | % (relative to 410A) | 98.2 | 97.7 | 97.1 | 96.5 | 102.4 | 101.9 | 101.5 | 101.0 |
| RCL | g/m$^3$ | 42.6 | 41.9 | 41.2 | 40.5 | 52.7 | 51.6 | 50.5 | 49.5 |

Table 22

| Item | Unit | Example 130 | Example 131 | Example 132 | Example 133 | Example 134 | Example 135 | Example 136 | Example 137 |
|---|---|---|---|---|---|---|---|---|---|
| HFO-1132(E) | mass% | 40.0 | 42.0 | 44.0 | 46.0 | 48.0 | 50.0 | 52.0 | 54.0 |
| HFO-1123 | mass% | 36.0 | 34.0 | 32.0 | 30.0 | 28.0 | 26.0 | 24.0 | 22.0 |
| R1234yf | mass% | 24.0 | 24.0 | 24.0 | 24.0 | 24.0 | 24.0 | 24.0 | 24.0 |
| GWP | - | 2 | 2 | 2 | 2 | 2 | 2 | 2 | 2 |
| COP ratio | % (relative to 410A) | 96.0 | 96.2 | 96.4 | 96.6 | 96.8 | 97.0 | 97.2 | 97.5 |
| Refrigerating capacity ratio | % (relative to 410A) | 93.5 | 93.3 | 93.1 | 92.8 | 92.6 | 92.4 | 92.1 | 91.8 |
| Condensation glide | °C | 2.56 | 2.54 | 2.51 | 2.49 | 2.45 | 2.42 | 2.38 | 2.33 |
| Discharge pressure | % (relative to 410A) | 100.5 | 100.0 | 99.5 | 98.9 | 98.4 | 97.9 | 97.3 | 96.8 |
| RCL | g/m³ | 48.5 | 47.5 | 46.6 | 45.7 | 44.9 | 44.1 | 43.3 | 42.5 |

Table 23

| Item | Unit | Example 138 | Example 139 | Example 140 | Example 141 | Example 142 | Example 143 | Example 144 | Example 145 |
|---|---|---|---|---|---|---|---|---|---|
| HFO-1132(E) | mass% | 56.0 | 58.0 | 60.0 | 30.0 | 32.0 | 34.0 | 36.0 | 38.0 |
| HFO-1123 | mass% | 20.0 | 18.0 | 16.0 | 44.0 | 42.0 | 40.0 | 38.0 | 36.0 |
| R1234yf | mass% | 24.0 | 24.0 | 24.0 | 26.0 | 26.0 | 26.0 | 26.0 | 26.0 |
| GWP | - | 2 | 2 | 2 | 2 | 2 | 2 | 2 | 2 |
| COP ratio | % (relative to 410A) | 97.7 | 97.9 | 98.1 | 95.3 | 95.5 | 95.7 | 95.9 | 96.1 |
| Refrigerating capacity ratio | % (relative to 410A) | 91.6 | 91.3 | 91.0 | 93.2 | 93.1 | 92.9 | 92.7 | 92.5 |
| Condensation glide | °C | 2.28 | 2.22 | 2.16 | 2.86 | 2.85 | 2.83 | 2.81 | 2.79 |
| Discharge pressure | % (relative to 410A) | 96.2 | 95.6 | 95.1 | 101.3 | 100.8 | 100.4 | 99.9 | 99.4 |
| RCL | g/m$^3$ | 41.8 | 41.1 | 40.4 | 53.7 | 52.6 | 51.5 | 50.4 | 49.4 |

34

Table 24

| Item | Unit | Example 146 | Example 147 | Example 148 | Example 149 | Example 150 | Example 151 | Example 152 | Example 153 |
|---|---|---|---|---|---|---|---|---|---|
| HFO-1132(E) | mass% | 40.0 | 42.0 | 44.0 | 46.0 | 48.0 | 50.0 | 52.0 | 54.0 |
| HFO-1123 | mass% | 34.0 | 32.0 | 30.0 | 28.0 | 26.0 | 24.0 | 22.0 | 20.0 |
| R1234yf | mass% | 26.0 | 26.0 | 26.0 | 26.0 | 26.0 | 26.0 | 26.0 | 26.0 |
| GWP | - | 2 | 2 | 2 | 2 | 2 | 2 | 2 | 2 |
| COP ratio | % (relative to 410A) | 96.3 | 96.5 | 96.7 | 96.9 | 97.1 | 97.3 | 97.5 | 97.7 |
| Refrigerating capacity ratio | % (relative to 410A) | 92.3 | 92.1 | 91.9 | 91.6 | 91.4 | 91.2 | 90.9 | 90.6 |
| Condensation glide | °C | 2.77 | 2.74 | 2.71 | 2.67 | 2.63 | 2.59 | 2.53 | 2.48 |
| Discharge pressure | % (relative to 410A) | 99.0 | 98.5 | 97.9 | 97.4 | 96.9 | 96.4 | 95.8 | 95.3 |
| RCL | g/m$^3$ | 48.4 | 47.4 | 46.5 | 45.7 | 44.8 | 44.0 | 43.2 | 42.5 |

Table 25

| Item | Unit | Example 154 | Example 155 | Example 156 | Example 157 | Example 158 | Example 159 | Example 160 | Example 161 |
|---|---|---|---|---|---|---|---|---|---|
| HFO-1132(E) | mass% | 56.0 | 58.0 | 60.0 | 30.0 | 32.0 | 34.0 | 36.0 | 38.0 |
| HFO-1123 | mass% | 18.0 | 16.0 | 14.0 | 42.0 | 40.0 | 38.0 | 36.0 | 34.0 |
| R1234yf | mass% | 26.0 | 26.0 | 26.0 | 28.0 | 28.0 | 28.0 | 28.0 | 28.0 |
| GWP | - | 2 | 2 | 2 | 2 | 2 | 2 | 2 | 2 |
| COP ratio | % (relative to 410A) | 97.9 | 98.2 | 98.4 | 95.6 | 95.8 | 96.0 | 96.2 | 96.3 |
| Refrigerating capacity ratio | % (relative to 410A) | 90.3 | 90.1 | 89.8 | 92.1 | 91.9 | 91.7 | 91.5 | 91.3 |
| Condensation glide | °C | 2.42 | 2.35 | 2.27 | 3.10 | 3.09 | 3.06 | 3.04 | 3.01 |
| Discharge pressure | % (relative to 410A) | 94.7 | 94.1 | 93.6 | 99.7 | 99.3 | 98.8 | 98.4 | 97.9 |
| RCL | g/m$^3$ | 41.7 | 41.0 | 40.3 | 53.6 | 52.5 | 51.4 | 50.3 | 49.3 |

Table 26

| Item | Unit | Example 162 | Example 163 | Example 164 | Example 165 | Example 166 | Example 167 | Example 168 | Example 169 |
|---|---|---|---|---|---|---|---|---|---|
| HFO-1132(E) | mass% | 40.0 | 42.0 | 44.0 | 46.0 | 48.0 | 50.0 | 52.0 | 54.0 |
| HFO-1123 | mass% | 32.0 | 30.0 | 28.0 | 26.0 | 24.0 | 22.0 | 20.0 | 18.0 |
| R1234yf | mass% | 28.0 | 28.0 | 28.0 | 28.0 | 28.0 | 28.0 | 28.0 | 28.0 |
| GWP | - | 2 | 2 | 2 | 2 | 2 | 2 | 2 | 2 |
| COP ratio | % (relative to 410A) | 96.5 | 96.7 | 96.9 | 97.2 | 97.4 | 97.6 | 97.8 | 98.0 |
| Refrigerating capacity ratio | % (relative to 410A) | 91.1 | 90.9 | 90.7 | 90.4 | 90.2 | 89.9 | 89.7 | 89.4 |
| Condensation glide | °C | 2.98 | 2.94 | 2.90 | 2.85 | 2.80 | 2.75 | 2.68 | 2.62 |
| Discharge pressure | % (relative to 410A) | 97.4 | 96.9 | 96.4 | 95.9 | 95.4 | 94.9 | 94.3 | 93.8 |
| RCL | g/m³ | 48.3 | 47.4 | 46.4 | 45.6 | 44.7 | 43.9 | 43.1 | 42.4 |

Table 27

| Item | Unit | Example 170 | Example 171 | Example 172 | Example 173 | Example 174 | Example 175 | Example 176 | Example 177 |
|---|---|---|---|---|---|---|---|---|---|
| HFO-1132(E) | mass% | 56.0 | 58.0 | 60.0 | 32.0 | 34.0 | 36.0 | 38.0 | 42.0 |
| HFO-1123 | mass% | 16.0 | 14.0 | 12.0 | 38.0 | 36.0 | 34.0 | 32.0 | 28.0 |
| R1234yf | mass% | 28.0 | 28.0 | 28.0 | 30.0 | 30.0 | 30.0 | 30.0 | 30.0 |
| GWP | - | 2 | 2 | 2 | 2 | 2 | 2 | 2 | 2 |
| COP ratio | % (relative to 410A) | 98.2 | 98.4 | 98.6 | 96.1 | 96.2 | 96.4 | 96.6 | 97.0 |
| Refrigerating capacity ratio | % (relative to 410A) | 89.1 | 88.8 | 88.5 | 90.7 | 90.5 | 90.3 | 90.1 | 89.7 |
| Condensation glide | °C | 2.54 | 2.46 | 2.38 | 3.32 | 3.30 | 3.26 | 3.22 | 3.14 |
| Discharge pressure | % (relative to 410A) | 93.2 | 92.6 | 92.1 | 97.7 | 97.3 | 96.8 | 96.4 | 95.4 |
| RCL | g/m³ | 41.7 | 41.0 | 40.3 | 52.4 | 51.3 | 50.2 | 49.2 | 47.3 |

Table 28

| Item | Unit | Example 178 | Example 179 | Example 180 | Example 181 | Example 182 | Example 183 | Example 184 | Example 185 |
|---|---|---|---|---|---|---|---|---|---|
| HFO-1132(E) | mass% | 44.0 | 46.0 | 48.0 | 50.0 | 52.0 | 54.0 | 56.0 | 58.0 |
| HFO-1123 | mass% | 26.0 | 24.0 | 22.0 | 20.0 | 18.0 | 16.0 | 14.0 | 12.0 |
| R1234yf | mass% | 30.0 | 30.0 | 30.0 | 30.0 | 30.0 | 30.0 | 30.0 | 30.0 |
| GWP | - | 2 | 2 | 2 | 2 | 2 | 2 | 2 | 2 |
| COP ratio | % (relative to 410A) | 97.2 | 97.4 | 97.6 | 97.8 | 98.0 | 98.3 | 98.5 | 98.7 |
| Refrigerating capacity ratio | % (relative to 410A) | 89.4 | 89.2 | 89.0 | 88.7 | 88.4 | 88.2 | 87.9 | 87.6 |
| Condensation glide | °C | 3.08 | 3.03 | 2.97 | 2.90 | 2.83 | 2.75 | 2.66 | 2.57 |
| Discharge pressure | % (relative to 410A) | 94.9 | 94.4 | 93.9 | 93.3 | 92.8 | 92.3 | 91.7 | 91.1 |
| RCL | g/m$^3$ | 46.4 | 45.5 | 44.7 | 43.9 | 43.1 | 42.3 | 41.6 | 40.9 |

Table 29

| Item | Unit | Example 186 | Example 187 | Example 188 | Example 189 | Example 190 | Example 191 | Example 192 | Example 193 |
|---|---|---|---|---|---|---|---|---|---|
| HFO-1132(E) | mass% | 30.0 | 32.0 | 34.0 | 36.0 | 38.0 | 40.0 | 42.0 | 44.0 |
| HFO-1123 | mass% | 38.0 | 36.0 | 34.0 | 32.0 | 30.0 | 28.0 | 26.0 | 24.0 |
| R1234yf | mass% | 32.0 | 32.0 | 32.0 | 32.0 | 32.0 | 32.0 | 32.0 | 32.0 |
| GWP | - | 2 | 2 | 2 | 2 | 2 | 2 | 2 | 2 |
| COP ratio | % (relative to 410A) | 96.2 | 96.3 | 96.5 | 96.7 | 96.9 | 97.1 | 97.3 | 97.5 |
| Refrigerating capacity ratio | % (relative to 410A) | 89.6 | 89.5 | 89.3 | 89.1 | 88.9 | 88.7 | 88.4 | 88.2 |
| Condensation glide | °C | 3.60 | 3.56 | 3.52 | 3.48 | 3.43 | 3.38 | 3.33 | 3.26 |
| Discharge pressure | % (relative to 410A) | 96.6 | 96.2 | 95.7 | 95.3 | 94.8 | 94.3 | 93.9 | 93.4 |
| RCL | g/m$^3$ | 53.4 | 52.3 | 51.2 | 50.1 | 49.1 | 48.1 | 47.2 | 46.3 |

Table 30

| Item | Unit | Example 194 | Example 195 | Example 196 | Example 197 | Example 198 | Example 199 | Example 200 | Example 201 |
|---|---|---|---|---|---|---|---|---|---|
| HFO-1132(E) | mass% | 46.0 | 48.0 | 50.0 | 52.0 | 54.0 | 56.0 | 58.0 | 60.0 |
| HFO-1123 | mass% | 22.0 | 20.0 | 18.0 | 16.0 | 14.0 | 12.0 | 10.0 | 8.0 |
| R1234yf | mass% | 32.0 | 32.0 | 32.0 | 32.0 | 32.0 | 32.0 | 32.0 | 32.0 |
| GWP | - | 2 | 2 | 2 | 2 | 2 | 2 | 2 | 2 |
| COP ratio | % (relative to 410A) | 97.7 | 97.9 | 98.1 | 98.3 | 98.5 | 98.7 | 98.9 | 99.2 |
| Refrigerating capacity ratio | % (relative to 410A) | 88.0 | 87.7 | 87.5 | 87.2 | 86.9 | 86.6 | 86.3 | 86.0 |
| Condensation glide | °C | 3.20 | 3.12 | 3.04 | 2.96 | 2.87 | 2.77 | 2.66 | 2.55 |
| Discharge pressure | % (relative to 410A) | 92.8 | 92.3 | 91.8 | 91.3 | 90.7 | 90.2 | 89.6 | 89.1 |
| RCL | g/m³ | 45.4 | 44.6 | 43.8 | 43.0 | 42.3 | 41.5 | 40.8 | 40.2 |

Table 31

| Item | Unit | Example 202 | Example 203 | Example 204 | Example 205 | Example 206 | Example 207 | Example 208 | Example 209 |
|---|---|---|---|---|---|---|---|---|---|
| HFO-1132(E) | mass% | 30.0 | 32.0 | 34.0 | 36.0 | 38.0 | 40.0 | 42.0 | 44.0 |
| HFO-1123 | mass% | 36.0 | 34.0 | 32.0 | 30.0 | 28.0 | 26.0 | 24.0 | 22.0 |
| R1234yf | mass% | 34.0 | 34.0 | 34.0 | 34.0 | 34.0 | 34.0 | 34.0 | 34.0 |
| GWP | - | 2 | 2 | 2 | 2 | 2 | 2 | 2 | 2 |
| COP ratio | % (relative to 410A) | 96.5 | 96.6 | 96.8 | 97.0 | 97.2 | 97.4 | 97.6 | 97.8 |
| Refrigerating capacity ratio | % (relative to 410A) | 88.4 | 88.2 | 88.0 | 87.8 | 87.6 | 87.4 | 87.2 | 87.0 |
| Condensation glide | °C | 3.84 | 3.80 | 3.75 | 3.70 | 3.64 | 3.58 | 3.51 | 3.43 |
| Discharge pressure | % (relative to 410A) | 95.0 | 94.6 | 94.2 | 93.7 | 93.3 | 92.8 | 92.3 | 91.8 |
| RCL | g/m$^3$ | 53.3 | 52.2 | 51.1 | 50.0 | 49.0 | 48.0 | 47.1 | 46.2 |

Table 32

| Item | Unit | Example 210 | Example 211 | Example 212 | Example 213 | Example 214 | Example 215 | Example 216 | Example 217 |
|---|---|---|---|---|---|---|---|---|---|
| HFO-1132(E) | mass% | 46.0 | 48.0 | 50.0 | 52.0 | 54.0 | 30.0 | 32.0 | 34.0 |
| HFO-1123 | mass% | 20.0 | 18.0 | 16.0 | 14.0 | 12.0 | 34.0 | 32.0 | 30.0 |
| R1234yf | mass% | 34.0 | 34.0 | 34.0 | 34.0 | 34.0 | 36.0 | 36.0 | 36.0 |
| GWP | - | 2 | 2 | 2 | 2 | 2 | 2 | 2 | 2 |
| COP ratio | % (relative to 410A) | 98.0 | 98.2 | 98.4 | 98.6 | 98.8 | 96.8 | 96.9 | 97.1 |
| Refrigerating capacity ratio | % (relative to 410A) | 86.7 | 86.5 | 86.2 | 85.9 | 85.6 | 87.2 | 87.0 | 86.8 |
| Condensation glide | °C | 3.36 | 3.27 | 3.18 | 3.08 | 2.97 | 4.08 | 4.03 | 3.97 |
| Discharge pressure | % (relative to 410A) | 91.3 | 90.8 | 90.3 | 89.7 | 89.2 | 93.4 | 93.0 | 92.6 |
| RCL | g/m$^3$ | 45.3 | 44.5 | 43.7 | 42.9 | 42.2 | 53.2 | 52.1 | 51.0 |

Table 33

| Item | Unit | Example 218 | Example 219 | Example 220 | Example 221 | Example 222 | Example 223 | Example 224 | Example 225 |
|---|---|---|---|---|---|---|---|---|---|
| HFO-1132(E) | mass% | 36.0 | 38.0 | 40.0 | 42.0 | 44.0 | 46.0 | 30.0 | 32.0 |
| HFO-1123 | mass% | 28.0 | 26.0 | 24.0 | 22.0 | 20.0 | 18.0 | 32.0 | 30.0 |
| R1234yf | mass% | 36.0 | 36.0 | 36.0 | 36.0 | 36.0 | 36.0 | 38.0 | 38.0 |
| GWP | - | 2 | 2 | 2 | 2 | 2 | 2 | 2 | 2 |
| COP ratio | % (relative to 410A) | 97.3 | 97.5 | 97.7 | 97.9 | 98.1 | 98.3 | 97.1 | 97.2 |
| Refrigerating capacity ratio | % (relative to 410A) | 86.6 | 86.4 | 86.2 | 85.9 | 85.7 | 85.5 | 85.9 | 85.7 |
| Condensation glide | °C | 3.91 | 3.84 | 3.76 | 3.68 | 3.60 | 3.50 | 4.32 | 4.25 |
| Discharge pressure | % (relative to 410A) | 92.1 | 91.7 | 91.2 | 90.7 | 90.3 | 89.8 | 91.9 | 91.4 |
| RCL | g/m$^3$ | 49.9 | 48.9 | 47.9 | 47.0 | 46.1 | 45.3 | 53.1 | 52.0 |

Table 34

| Item | Unit | Example 226 | Example 227 |
|---|---|---|---|
| HFO-1132(E) | mass% | 34.0 | 36.0 |
| HFO-1123 | mass% | 28.0 | 26.0 |
| R1234yf | mass% | 38.0 | 38.0 |
| GWP | - | 2 | 2 |
| COP ratio | % (relative to 410A) | 97.4 | 97.6 |
| Refrigerating capacity ratio | % (relative to 410A) | 85.6 | 85.3 |
| Condensation glide | °C | 4.18 | 4.11 |
| Discharge pressure | % (relative to 410A) | 91.0 | 90.6 |
| RCL | g/m$^3$ | 50.9 | 49.8 |

These results indicate that under the condition that the mass% of HFO-1132(E), HFO-1123, and R1234yf based on their sum is respectively represented by x, y, and z, when coordinates (x,y,z) in a ternary composition diagram in which the sum of HFO-1132(E), HFO-1123, and R1234yf is 100 mass% are within the range of a figure surrounded by line segments AA', A'B, BD, DC', C'C, CO, and OA that connect the following 7 points:

point A (68.6, 0.0, 31.4),
point A'(30.6, 30.0, 39.4),
point B (0.0, 58.7, 41.3),
point D (0.0, 80.4, 19.6),
point C' (19.5, 70.5, 10.0),
point C (32.9, 67.1, 0.0), and
point O (100.0, 0.0, 0.0),
or on the above line segments (excluding the points on the line segment CO);
the line segment AA' is represented by coordinates (x, $0.0016x^2-0.9473x+57.497$, $-0.0016x^2-0.0527x+42.503$),
the line segment A'B is represented by coordinates (x, $0.0029x^2-1.0268x+58.7$, $-0.0029x^2+0.0268x+41.3$,
the line segment DC' is represented by coordinates (x, $0.0082x^2-0.6671x+80.4$, $-0.0082x^2-0.3329x+19.6$),
the line segment C'C is represented by coordinates (x, $0.0067x^2-0.6034x+79.729$, $-0.0067x^2-0.3966x+20.271$), and
the line segments BD, CO, and OA are straight lines,
the refrigerant has a refrigerating capacity ratio of 85% or morthe refrigerant has a refrigerating capacity ratio of 85% or more relative to that of R410A, and a COP of 92.5% or more relative to that of R410A.

The point on the line segment AA' was determined by obtaining an approximate curve connecting point A, Example 1, and point A' by the least square method.
The point on the line segment A'B was determined by obtaining an approximate curve connecting point A', Example 3, and point B by the least square method.
The point on the line segment DC' was determined by obtaining an approximate curve connecting point D, Example 6, and point C' by the least square method.
The point on the line segment C'C was determined by obtaining an approximate curve connecting point C', Example 4, and point C by the least square method.
Likewise, the results indicate that when coordinates (x,y,z) are within the range of a figure surrounded by line segments AA', A'B, BF, FT, TE, EO, and OA that connect the following 7 points:

point A (68.6, 0.0, 31.4),
point A' (30.6, 30.0, 39.4),
point B (0.0, 58.7, 41.3),
point F (0.0, 61.8, 38.2),
point T (35.8, 44.9, 19.3),
point E (58.0, 42.0, 0.0) and
point O (100.0, 0.0, 0.0),
or on the above line segments (excluding the points on the line EO);

the line segment AA' is represented by coordinates (x, $0.0016x^2$-0.9473x+57.497, $-0.0016x^2$-0.0527x+42.503),
the line segment A'B is represented by coordinates (x, $0.0029x^2$-1.0268x+58.7, $-0.0029x^2$+0.0268x+41.3),
the line segment FT is represented by coordinates (x, $0.0078x^2$-0.7501x+61.8, $-0.0078x^2$-0.2499x+38.2), and
the line segment TE is represented by coordinates (x, $0.0067x^2$-0.7607x+63.525, $-0.0067x^2$-0.2393x+36.475), and
the line segments BF, FO, and OA are straight lines,
the refrigerant has a refrigerating capacity ratio of 85% or more relative to that of R410A, and a COP of 95% or more relative to that of R410A.

The point on the line segment FT was determined by obtaining an approximate curve connecting three points, i.e., points T, E', and F, by the least square method.

The point on the line segment TE was determined by obtaining an approximate curve connecting three points, i.e., points E, R, and T, by the least square method.

The results in Tables 1 to 34 clearly indicate that in a ternary composition diagram of the mixed refrigerant of HFO-1132(E), HFO-1123, and R1234yf in which the sum of these components is 100 mass%, a line segment connecting a point (0.0, 100.0, 0.0) and a point (0.0, 0.0, 100.0) is the base, the point (0.0, 100.0, 0.0) is on the left side, and the point (0.0, 0.0, 100.0) is on the right side, when coordinates (x,y,z) are on or below the line segment LM connecting point L (63.1, 31.9, 5.0) and point M (60.3, 6.2, 33.5), the refrigerant has an RCL of 40 g/m$^3$ or more.

The results in Tables 1 to 34 clearly indicate that in a ternary composition diagram of the mixed refrigerant of HFO-1132(E), HFO-1123 and R1234yf in which their sum is 100 mass%, a line segment connecting a point (0.0, 100.0, 0.0) and a point (0.0, 0.0, 100.0) is the base, the point (0.0, 100.0, 0.0) is on the left side, and the point (0.0, 0.0, 100.0) is on the right side, when coordinates (x,y,z) are on the line segment QR connecting point Q (62.8, 29.6, 7.6) and point R (49.8, 42.3, 7.9) or on the left side of the line segment, the refrigerant has a temperature glide of 1°C or less.

The results in Tables 1 to 34 clearly indicate that in a ternary composition diagram of the mixed refrigerant of HFO-1132(E), HFO-1123, and R1234yf in which their sum is 100 mass%, a line segment connecting a point (0.0, 100.0, 0.0) and a point (0.0, 0.0, 100.0) is the base, the point (0.0, 100.0, 0.0) is on the left side, and the point (0.0, 0.0, 100.0) is on the right side, when coordinates (x,y,z) are on the line segment ST connecting point S (62.6, 28.3, 9.1) and point T (35.8, 44.9, 19.3) or on the right side of the line segment, the refrigerant has a discharge pressure of 105% or less relative to that of 410A.

In these compositions, R1234yf contributes to reducing flammability, and suppressing deterioration of polymerization etc. Therefore, the composition preferably contains R1234yf.

Further, the burning velocity of these mixed refrigerants whose mixed formulations were adjusted to WCF concentrations was measured according to the ANSI/ASHRAE Standard 34-2013. Compositions having a burning velocity of 10 cm/s or less were determined to be classified as "Class 2L (lower flammability)."

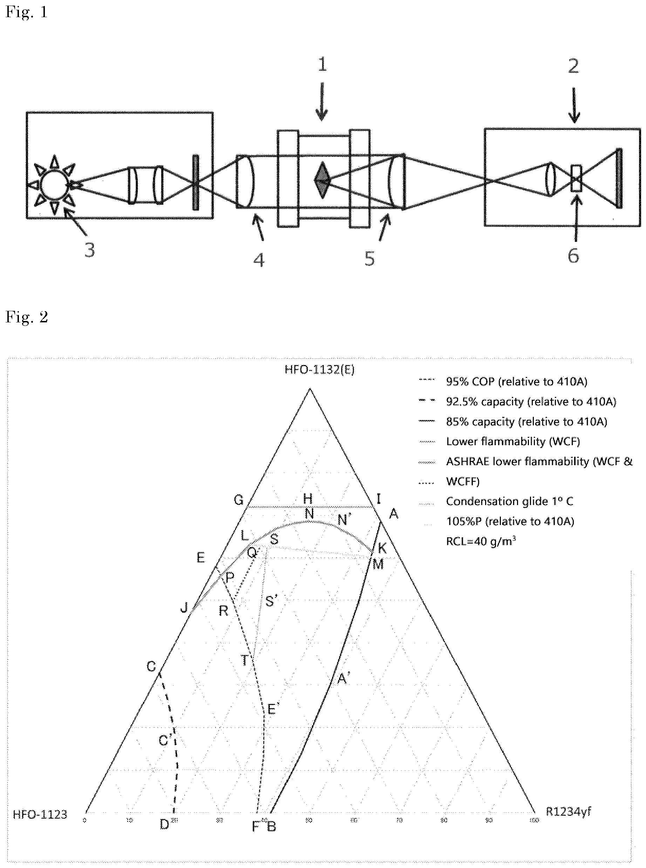

A burning velocity test was performed using the apparatus shown in Fig. 1 in the following manner. In Fig. 1, reference numeral 901 refers to a sample cell, 902 refers to a high-speed camera, 903 refers to a xenon lamp, 904 refers to a collimating lens, 905 refers to a collimating lens, and 906 refers to a ring filter. First, the mixed refrigerants used had a purity of 99.5% or more, and were degassed by repeating a cycle of freezing, pumping, and thawing until no traces of air were observed on the vacuum gauge. The burning velocity was measured by the closed method. The initial temperature was ambient temperature. Ignition was performed by generating an electric spark between the electrodes in the center of a sample cell. The duration of the discharge was 1.0 to 9.9 ms, and the ignition energy was typically about 0.1 to 1.0 J. The spread of the flame was visualized using schlieren photographs. A cylindrical container (inner diameter: 155 mm, length: 198 mm) equipped with two light transmission acrylic windows was used as the sample cell, and a xenon lamp was used as the light source. Schlieren images of the flame were recorded by a high-speed digital video camera at a frame rate of 600 fps and stored on a PC.

Each WCFF concentration was obtained by using the WCF concentration as the initial concentration and performing a leak simulation using NIST Standard Reference Database REFLEAK Version 4.0.

Tables 35 and 36 show the results.

Table 35

| Item | | Unit | G | H | I |
|---|---|---|---|---|---|
| WCF | HFO-1132(E) | mass% | 72.0 | 72.0 | 72.0 |
| | HFO-1123 | mass% | 28.0 | 9.6 | 0.0 |
| | R1234yf | mass% | 0.0 | 18.4 | 28.0 |
| Burning velocity (WCF) | | cm/s | 10 | 10 | 10 |

Table 36

| Item | | Unit | J | P | L | N | N' | K |
|---|---|---|---|---|---|---|---|---|
| WCF | HFO-1132 (E) | mass% | 47.1 | 55.8 | 63.1 | 68.6 | 65.0 | 61.3 |
| | HFO-1123 | mass% | 52.9 | 42.0 | 31.9 | 16.3 | 7.7 | 5.4 |
| | R1234yf | mass% | 0.0 | 2.2 | 5.0 | 15.1 | 27.3 | 33.3 |
| Leak condition that results in WCFF | | | Storage/ Shipping -40°C, 92% release, liquid phase side | Storage/ Shipping -40°C, 90% release, liquid phase side | Storage/ Shipping -40°C, 90% release, gas phase side | Storage/ Shipping -40°C, 66% release, gas phase side | Storage/ Shipping -40°C, 12% release, gas phase side | Storage/ Shipping, -40°C, 0% release, gas phase side |
| WCFF | HFO-1132 (E) | mass% | 72.0 | 72.0 | 72.0 | 72.0 | 72.0 | 72.0 |
| | HFO-1123 | mass% | 28.0 | 17.8 | 17.4 | 13.6 | 12.3 | 9.8 |
| | R1234yf | mass% | 0.0 | 10.2 | 10.6 | 14.4 | 15.7 | 18.2 |
| Burning velocity (WCF) | | cm/s | 8 or less | 8 or less | 8 or less | 9 | 9 | 8 or less |
| Burning velocity (WCFF) | | cm/s | 10 | 10 | 10 | 10 | 10 | 10 |

The results in Table 35 clearly indicate that when a mixed refrigerant of HFO-1132(E), HFO-1123, and R1234yf contains HFO-1132(E) in a proportion of 72.0 mass% or less based on their sum, the refrigerant can be determined to have a WCF lower flammability.

The results in Tables 36 clearly indicate that in a ternary composition diagram of a mixed refrigerant of HFO-1132(E), HFO-1123, and R1234yf in which their sum is 100 mass%, and a line segment connecting a point (0.0, 100.0, 0.0) and a point (0.0, 0.0, 100.0) is the base, when coordinates (x,y,z) are on or below the line segments JP, PN, and NK connecting the following 6 points:

point J (47.1, 52.9, 0.0),
point P (55.8, 42.0, 2.2),
point L (63.1,31.9,5.0)
point N (68.6, 16.3, 15.1)
point N' (65.0, 7.7, 27.3) and
point K (61.3, 5.4, 33.3),
the refrigerant can be determined to have a WCF lower flammability, and a WCFF lower flammability.
In the diagram, the line segment PN is represented by coordinates $(x, -0.1135x^2+12.112x-280.43, 0.1135x^2-13.112x+380.43)$,
and the line segment NK is represented by coordinates $(x, 0.2421x^2-29.955x+931.91, -0.2421x^2+28.955x-831.91)$.

The point on the line segment PN was determined by obtaining an approximate curve connecting three points, i.e., points P, L, and N, by the least square method.

The point on the line segment NK was determined by obtaining an approximate curve connecting three points, i.e., points N, N', and K, by the least square method.

(5-2) Refrigerant B

The refrigerant B according to the present disclosure is

a mixed refrigerant comprising trans- 1,2-difluoroethylene (HFO-1132(E)) and trifluoroethylene (HFO-1123) in a total amount of 99.5 mass% or more based on the entire refrigerant, and the refrigerant comprising 62.0 mass% to 72.0 mass% or 45.1 mass% to 47.1 mass% of HFO-1132(E) based on the entire refrigerant, or

a mixed refrigerant comprising HFO-1132(E) and HFO-1123 in a total amount of 99.5 mass% or more based on the entire refrigerant, and the refrigerant comprising 45.1 mass% to 47.1 mass% of HFO-1132(E) based on the entire refrigerant..

The refrigerant B according to the present disclosure has various properties that are desirable as an R410A-alternative refrigerant, i.e., (1) a coefficient of performance equivalent to that of R410A, (2) a refrigerating capacity equivalent to that of R410A, (3) a sufficiently low GWP, and (4) a lower flammability (Class 2L) according to the ASHRAE standard.

When the refrigerant B according to the present disclosure is a mixed refrigerant comprising 72.0 mass% or less of HFO-1132(E), it has WCF lower flammability. When the refrigerant B according to the present disclosure is a composition comprising 47.1% or less of HFO-1132(E), it has WCF lower flammability and WCFF lower flammability, and is determined to be "Class 2L," which is a lower flammable refrigerant according to the ASHRAE standard, and which is further easier to handle.

When the refrigerant B according to the present disclosure comprises 62.0 mass% or more of HFO-1132(E), it becomes superior with a coefficient of performance of 95% or more relative to that of R410A, the polymerization reaction of HFO-1132(E) and/or HFO-1123 is further suppressed, and the stability is further improved. When the refrigerant B according to the present disclosure comprises 45.1 mass% or more of HFO-1132(E), it becomes superior with a coefficient of performance of 93% or more relative to that of R410A, the polymerization reaction of HFO-1132(E) and/or HFO-1123 is further suppressed, and the stability is further improved.

The refrigerant B according to the present disclosure may further comprise other additional refrigerants in addition to HFO-1132(E) and HFO-1123, as long as the above properties and effects are not impaired. In this respect, the refrigerant according to the present disclosure preferably comprises HFO-1132(E) and HFO-1123 in a total amount of 99.75 mass% or more, and more preferably 99.9 mass% or more, based on the entire refrigerant.

Such additional refrigerants are not limited, and can be selected from a wide range of refrigerants. The mixed refrigerant may comprise a single additional refrigerant, or two or more additional refrigerants.

(Examples of Refrigerant B)

The present disclosure is described in more detail below with reference to Examples of refrigerant B. However, the refrigerant B is not limited to the Examples.

Mixed refrigerants were prepared by mixing HFO-1132(E) and HFO-1123 at mass% based on their sum shown in Tables 37 and 38.

The GWP of compositions each comprising a mixture of R410A (R32 = 50%/R125 = 50%) was evaluated based on the values stated in the Intergovernmental Panel on Climate Change (IPCC), fourth report. The GWP of HFO-1132(E), which was not stated therein, was assumed to be 1 from HFO-1132a (GWP = 1 or less) and HFO-1123 (GWP = 0.3, described in WO 2015/141678 A1). The refrigerating capacity of compositions each comprising R410A and a mixture of HFO-1132(E) and HFO-1123 was determined by performing theoretical refrigeration cycle calculations for the mixed refrigerants using the National Institute of Science and Technology (NIST) and Reference Fluid Thermodynamic and Transport Properties Database (Refprop 9.0) under the following conditions.

Evaporating temperature: 5°C
Condensation temperature: 45°C
Superheating temperature: 5 K
Subcooling temperature: 5 K
Compressor efficiency: 70%

The composition of each mixture was defined as WCF. A leak simulation was performed using NIST Standard Reference Data Base Refleak Version 4.0 under the conditions of Equipment, Storage, Shipping, Leak, and Recharge according to the ASHRAE Standard 34-2013. The most flammable fraction was defined as WCFF.

Tables 1 and 2 show GWP, COP, and refrigerating capacity, which were calculated based on these results. The COP and refrigerating capacity are ratios relative to R410A.

The coefficient of performance (COP) was determined by the following formula.

$$COP = (\text{refrigerating capacity or heating capacity})/\text{power consumption}$$

For the flammability, the burning velocity was measured according to the ANSI/ASHRAE Standard 34-2013. Both WCF and WCFF having a burning velocity of 10 cm/s or less were determined to be "Class 2L (lower flammability)."

A burning velocity test was performed using the apparatus shown in Fig. 1 in the following manner. First, the mixed refrigerants used had a purity of 99.5% or more, and were degassed by repeating a cycle of freezing, pumping, and thawing until no traces of air were observed on the vacuum gauge. The burning velocity was measured by the closed method. The initial temperature was ambient temperature. Ignition was performed by generating an electric spark between the electrodes in the center of a sample cell. The duration of the discharge was 1.0 to 9.9 ms, and the ignition energy was typically about 0.1 to 1.0 J. The spread of the flame was visualized using schlieren photographs. A cylindrical container (inner diameter: 155 mm, length: 198 mm) equipped with two light transmission acrylic windows was used as the sample cell, and a xenon lamp was used as the light source. Schlieren images of the flame were recorded by a high-speed digital video camera at a frame rate of 600 fps and stored on a PC.

Table 37

| Item | Unit | Comparative Example 1 | Comparative Example 2 | Comparative Example 3 | Example 1 | Example 2 | Example 3 | Example 4 | Example 5 | Comparative Example 4 |
|---|---|---|---|---|---|---|---|---|---|---|
| | | R410A | HFO-1132E | | | | | | | |
| HFO-1132E (WCF) | mass% | - | 100 | 80 | 72 | 70 | 68 | 65 | 62 | 60 |
| HFO-1123 (WCF) | mass% | | 0 | 20 | 28 | 30 | 32 | 35 | 38 | 40 |
| GWP | - | 2088 | 1 | 1 | 1 | 1 | 1 | 1 | 1 | 1 |
| COP ratio | % (relative to R410A) | 100 | 99.7 | 97.5 | 96.6 | 96.3 | 96.1 | 95.8 | 95.4 | 95.2 |
| Refrigerating capacity ratio | % (relative to R410A) | 100 | 98.3 | 101.9 | 103.1 | 103.4 | 103.8 | 104.1 | 104.5 | 104.8 |
| Discharge pressure | Mpa | 2.73 | 2.71 | 2.89 | 2.96 | 2.98 | 3.00 | 3.02 | 3.04 | 3.06 |
| Burning velocity (WCF) | cm/sec | Non-flammable | 20 | 13 | 10 | 9 | 9 | 8 | 8 or less | 8 or less |

Table 38

| Item | Unit | Comparative Example 5 | Comparative Example 6 | Example 7 | Example 8 | Example 9 | Comparative Example 7 | Comparative Example 8 | Comparative Example 9 | Comparative Example 10 HFO-1123 |
|------|------|------|------|------|------|------|------|------|------|------|
| HFO-1132E (WCF) | mass% | 50 | 48 | 47.1 | 46.1 | 45.1 | 43 | 40 | 25 | 0 |
| HFO-1123 (WCF) | mass% | 50 | 52 | 52.9 | 53.9 | 54.9 | 57 | 60 | 75 | 100 |
| GWP | - | 1 | 1 | 1 | 1 | 1 | 1 | 1 | 1 | 1 |
| COP ratio | % (relative to R410A) | 94.1 | 93.9 | 93.8 | 93.7 | 93.6 | 93.4 | 93.1 | 91.9 | 90.6 |
| Refrigerating capacity ratio | % (relative to R410A) | 105.9 | 106.1 | 106.2 | 106.3 | 106.4 | 106.6 | 106.9 | 107.9 | 108.0 |
| Discharge pressure | Mpa | 3.14 | 3.16 | 3.16 | 3.17 | 3.18 | 3.20 | 3.21 | 3.31 | 3.39 |
| Leakage test conditions (WCFF) | | Storage/ Shipping -40°C, 92% release, liquid phase side | Storage/ Shipping -40°C, 92% release, liquid phase side | Storage/ Shipping -40°C, 92% release, liquid phase side | Storage/ Shipping -40°C, 92% release, liquid phase side | Storage/ Shipping -40°C, 92% release, liquid phase side | Storage/ Shipping -40°C, 92% release, liquid phase side | Storage/ Shipping -40°C, 92% release, liquid phase side | Storage/ Shipping -40°C, 90% release, liquid phase side | - |
| HFO-1132E (WCFF) | mass% | 74 | 73 | 72 | 71 | 70 | 67 | 63 | 38 | - |
| HFO-1123 (WCFF) | mass% | 26 | 27 | 28 | 29 | 30 | 33 | 37 | 62 | |

(continued)

| Item | Unit | Comparative Example 5 | Comparative Example 6 | Example 7 | Example 8 | Example 9 | Comparative Example 7 | Comparative Example 8 | Comparative Example 9 | Comparative Example 10 HFO-1123 |
|---|---|---|---|---|---|---|---|---|---|---|
| Burning velocity (WCF) | cm/sec | 8 or less | 8 or less | 8 or less | 8 or less | 8 or less | 8 or less | 8 or less | 8 or less | |
| Burning velocity (WCFF) | cm/sec | 11 | 10.5 | 10.0 | 9.5 | 9.5 | 8.5 | 8 or less | 8 or less | 5 |
| ASHRAE flammability classification | | 2 | 2 | 2L | 2L | 2L | 2L | 2L | 2L | 2L |

The compositions each comprising 62.0 mass% to 72.0 mass% of HFO-1132(E) based on the entire composition are stable while having a low GWP (GWP = 1), and they ensure WCF lower flammability. Further, surprisingly, they can ensure performance equivalent to that of R410A. Moreover, compositions each comprising 45.1 mass% to 47.1 mass% of HFO-1132(E) based on the entire composition are stable while having a low GWP (GWP = 1), and they ensure WCFF lower flammability. Further, surprisingly, they can ensure performance equivalent to that of R410A.

(5-3) Refrigerant C

The refrigerant C according to the present disclosure is a composition comprising trans- 1,2-difluoroethylene (HFO-1132(E)), trifluoroethylene (HFO-1123), 2,3,3,3-tetrafluoro-1-propene (R1234yf), and difluoromethane (R32), and satisfies the following requirements. The refrigerant C according to the present disclosure has various properties that are desirable as an alternative refrigerant for R410A; i.e. it has a coefficient of performance and a refrigerating capacity that are equivalent to those of R410A, and a sufficiently low GWP.

Requirements

Preferable refrigerant C is as follows:
When the mass% of HFO-1132(E), HFO-1123, R1234yf, and R32 based on their sum is respectively represented by x, y, z, and a,

if $0<a\leq11.1$, coordinates (x,y,z) in a ternary composition diagram in which the sum of HFO-1132(E), HFO-1123, and R1234yf is (100-a) mass% are within the range of a figure surrounded by straight lines GI, IA, AB, BD', D'C, and CG that connect the following 6 points:

point G $(0.026a^2-1.7478a+72.0, -0.026a^2+0.7478a+28.0, 0.0)$,
point I $(0.026a^2-1.7478a+72.0, 0.0, -0.026a^2+0.7478a+28.0)$,
point A $(0.0134a^2-1.9681a+68.6, 0.0, -0.0134a^2+0.9681a+31.4)$,
point B $(0.0, 0.0144a^2-1.6377a+58.7, -0.0144a^2+0.6377a+41.3)$,
point D' $(0.0, 0.0224a^2+0.968a+75.4, -0.0224a^2-1.968a+24.6)$, and
point C $(-0.2304a^2-0.4062a+32.9, 0.2304a^2-0.5938a+67.1, 0.0)$,
or on the straight lines GI, AB, and D'C (excluding point G, point I, point A, point B, point D', and point C);

if $11.1<a\leq18.2$, coordinates (x,y,z) in the ternary composition diagram are within the range of a figure surrounded by straight lines GI, IA, AB, BW, and WG that connect the following 5 points:

point G $(0.02a^2-1.6013a+71.105, -0.02a^2+0.6013a+28.895, 0.0)$,
point I $(0.02a^2-1.6013a+71.105, 0.0, -0.02a^2+0.6013a+28.895)$,
point A $(0.0112a^2-1.9337a+68.484, 0.0, -0.0112a^2+0.9337a+31.516)$,
point B $(0.0, 0.0075a^2-1.5156a+58.199, -0.0075a^2+0.5156a+41.801)$ and
point W $(0.0, 100.0-a, 0.0)$,
or on the straight lines GI and AB (excluding point G, point I, point A, point B, and point W);

if $18.2<a\leq26.7$, coordinates (x,y,z) in the ternary composition diagram are within the range of a figure surrounded by straight lines GI, IA, AB, BW, and WG that connect the following 5 points:

point G $(0.0135a^2-1.4068a+69.727, -0.0135a^2+0.4068a+30.273, 0.0)$,
point I $(0.0135a^2-1.4068a+69.727, 0.0, -0.0135a^2+0.4068a+30.273)$,
point A $(0.0107a^2-1.9142a+68.305, 0.0, -0.0107a^2+0.9142a+31.695)$,
point B $(0.0, 0.009a^2-1.6045a+59.318, -0.009a^2+0.6045a+40.682)$ and
point W $(0.0, 100.0-a, 0.0)$,
or on the straight lines GI and AB (excluding point G, point I, point A, point B, and point W);

if $26.7<a\leq36.7$, coordinates (x,y,z) in the ternary composition diagram are within the range of a figure surrounded by straight lines GI, IA, AB, BW, and WG that connect the following 5 points:

point G $(0.0111a^2-1.3152a+68.986, -0.0111a^2+0.3152a+31.014, 0.0)$,
point I $(0.0111a^2-1.3152a+68.986, 0.0, -0.0111a^2+0.3152a+31.014)$,
point A $(0.0103a^2-1.9225a+68.793, 0.0, -0.0103a^2+0.9225a+31.207)$,

point B (0.0, $0.0046a^2$-1.41a+57.286, $-0.0046a^2$+0.41a+42.714) and
point W (0.0, 100.0-a, 0.0),
or on the straight lines GI and AB (excluding point G, point I, point A, point B, and point W); and

if 36.7<a≤46.7, coordinates (x,y,z) in the ternary composition diagram are within the range of a figure surrounded by straight lines GI, IA, AB, BW, and WG that connect the following 5 points:

point G ($0.0061a^2$-0.9918a+63.902, $-0.0061a^2$-0.0082a+36.098, 0.0),
point I ($0.0061a^2$-0.9918a+63.902, 0.0, $-0.0061a^2$-0.0082a+36.098),
point A ($0.0085a^2$-1.8102a+67.1, 0.0, $-0.0085a^2$+0.8102a+32.9),
point B (0.0, $0.0012a^2$-1.1659a+52.95, $-0.0012a^2$+0.1659a+47.05) and
point W (0.0, 100.0-a, 0.0),
or on the straight lines GI and AB (excluding point G, point I, point A, point B, and point W). When the refrigerant according to the present disclosure satisfies the above requirements, it has a refrigerating capacity ratio of 85% or more relative to that of R410A, and a COP ratio of 92.5% or more relative to that of R410A, and further ensures a WCF lower flammability.

The refrigerant C according to the present disclosure is preferably a refrigerant wherein

when the mass% of HFO-1132(E), HFO-1123, and R1234yf based on their sum is respectively represented by x, y, and z,
if 0<a≤11.1, coordinates (x,y,z) in a ternary composition diagram in which the sum of HFO-1132(E), HFO-1123, and R1234yf is (100-a) mass% are within the range of a figure surrounded by straight lines JK', K'B, BD', D'C, and CJ that connect the following 5 points:

point J ($0.0049a^2$-0.9645a+47.1, $-0.0049a^2$-0.0355a+52.9, 0.0),
point K' ($0.0514a^2$-2.4353a+61.7, $-0.0323a^2$+0.4122a+5.9, $-0.0191a^2$+1.0231a+32.4),
point B (0.0, $0.0144a^2$-1.6377a+58.7, $-0.0144a^2$+0.6377a+41.3),
point D' (0.0, $0.0224a^2$+0.968a+75.4, $-0.0224a^2$-1.968a+24.6), and
point C ($-0.2304a^2$-0.4062a+32.9, $0.2304a^2$-0.5938a+67.1, 0.0),
or on the straight lines JK', K'B, and D'C (excluding point J, point B, point D', and point C);

if 11.1<a≤18.2, coordinates (x,y,z) in the ternary composition diagram are within the range of a figure surrounded by straight lines JK', K'B, BW, and WJ that connect the following 4 points:

point J ($0.0243a^2$-1.4161a+49.725, $-0.0243a^2$+0.4161a+50.275, 0.0),
point K'($0.0341a^2$-2.1977a+61.187, $-0.0236a^2$+0.34a+5.636, $-0.0105a^2$+0.8577a+33.177),
point B (0.0, $0.0075a^2$-1.5156a+58.199, $-0.0075a^2$+0.5156a+41.801) and
point W (0.0, 100.0-a, 0.0),
or on the straight lines JK' and K'B (excluding point J, point B, and point W);

if 18.2<a≤26.7, coordinates (x,y,z) in the ternary composition diagram are within the range of a figure surrounded by straight lines JK', K'B, BW, and WJ that connect the following 4 points:

point J ($0.0246a^2$-1.4476a+50.184, $-0.0246a^2$+0.4476a+49.816, 0.0),
point K' ($0.0196a^2$-1.7863a+58.515, $-0.0079a^2$-0.1136a+8.702, $-0.0117a^2$+0.8999a+32.783),
point B (0.0, $0.009a^2$-1.6045a+59.318, $-0.009a^2$+0.6045a+40.682) and
point W (0.0, 100.0-a, 0.0),
or on the straight lines JK' and K'B (excluding point J, point B, and point W);

if 26.7<a≤36.7, coordinates (x,y,z) in the ternary composition diagram are within the range of a figure surrounded by straight lines JK', K'A, AB, BW, and WJ that connect the following 5 points:

point J ($0.0183a^2$-1.1399a+46.493, $-0.0183a^2$+0.1399a+53.507, 0.0),
point K' ($-0.0051a^2$+0.0929a+25.95, 0.0, $0.0051a^2$-1.0929a+74.05),
point A ($0.0103a^2$-1.9225a+68.793, 0.0, $-0.0103a^2$+0.9225a+31.207),
point B (0.0, $0.0046a^2$-1.41a+57.286, $-0.0046a^2$+0.41a+42.714) and
point W (0.0, 100.0-a, 0.0),

or on the straight lines JK', K' A, and AB (excluding point J, point B, and point W); and

if $36.7 < a \le 46.7$, coordinates (x,y,z) in the ternary composition diagram are within the range of a figure surrounded by straight lines JK', K'A, AB, BW, and WJ that connect the following 5 points:

point J ($-0.0134a^2+1.0956a+7.13$, $0.0134a^2-2.0956a+92.87$, 0.0),
point K' ($-1.892a+29.443$, 0.0, $0.892a+70.557$),
point A ($0.0085a^2-1.8102a+67.1$, 0.0, $-0.0085a^2+0.8102a+32.9$),
point B (0.0, $0.0012a^2-1.1659a+52.95$, $-0.0012a^2+0.1659a+47.05$) and
point W (0.0, 100.0-a, 0.0),
or on the straight lines JK', K' A, and AB (excluding point J, point B, and point W). When the refrigerant according to the present disclosure satisfies the above requirements, it has a refrigerating capacity ratio of 85% or more relative to that of R410A, and a COP ratio of 92.5% or more relative to that of R410A. Additionally, the refrigerant has a WCF lower flammability and a WCFF lower flammability, and is classified as "Class 2L," which is a lower flammable refrigerant according to the ASHRAE standard.

When the refrigerant C according to the present disclosure further contains R32 in addition to HFO-1132 (E), HFO-1123, and R1234yf, the refrigerant may be a refrigerant wherein when the mass% of HFO-1132(E), HFO-1123, R1234yf, and R32 based on their sum is respectively represented by x, y, z, and a,

if $0 < a \le 10.0$, coordinates (x,y,z) in a ternary composition diagram in which the sum of HFO-1132(E), HFO-1123, and R1234yf is (100-a) mass% are within the range of a figure surrounded by straight lines that connect the following 4 points:

point a ($0.02a^2-2.46a+93.4$, 0, $-0.02a^2+2.46a+6.6$),
point b' ($-0.008a^2-1.38a+56$, $0.018a^2-0.53a+26.3$, $-0.01a^2+1.91a+17.7$),
point c ($-0.016a^2+1.02a+77.6$, $0.016a^2-1.02a+22.4$, 0), and
point o (100.0-a, 0.0, 0.0)
or on the straight lines oa, ab', and b'c (excluding point o and point c);

if $10.0 < a \le 16.5$, coordinates (x,y,z) in the ternary composition diagram are within the range of a figure surrounded by straight lines that connect the following 4 points: point a ($0.0244a^2-2.5695a+94.056$, 0, $-0.0244a^2+2.5695a+5.944$),

point b' ($0.1161a^2-1.9959a+59.749$, $0.014a^2-0.3399a+24.8$, $-0.1301a^2+2.3358a+15.451$),
point c ($-0.0161a^2+1.02a+77.6$, $0.0161a^2-1.02a+22.4$, 0), and
point o (100.0-a, 0.0, 0.0),
or on the straight lines oa, ab', and b'c (excluding point o and point c); or

if $16.5 < a \le 21.8$, coordinates (x,y,z) in the ternary composition diagram are within the range of a figure surrounded by straight lines that connect the following 4 points: point a ($0.0161a^2-2.3535a+92.742$, 0, $-0.0161a^2+2.3535a+7.258$),

point b' ($-0.0435a^2-0.0435a+50.406$, $0.0304a^2+1.8991a-0.0661$, $0.0739a^2-1.8556a+49.6601$),
point c ($-0.0161a^2+0.9959a+77.851$, $0.0161a^2-0.9959a+22.149$, 0), and
point o (100.0-a, 0.0, 0.0),
or on the straight lines oa, ab', and b'c (excluding point o and point c). Note that when point b in the ternary composition diagram is defined as a point where a refrigerating capacity ratio of 95% relative to that of R410A and a COP ratio of 95% relative to that of R410A are both achieved, point b' is the intersection of straight line ab and an approximate line formed by connecting the points where the COP ratio relative to that of R410A is 95%. When the refrigerant according to the present disclosure meets the above requirements, the refrigerant has a refrigerating capacity ratio of 95% or more relative to that of R410A, and a COP ratio of 95% or more relative to that of R410A.

The refrigerant C according to the present disclosure may further comprise other additional refrigerants in addition to HFO-1132(E), HFO-1123, R1234yf, and R32 as long as the above properties and effects are not impaired. In this respect, the refrigerant according to the present disclosure preferably comprises HFO-1132(E), HFO-1123, R1234yf, and R32 in a total amount of 99.5 mass% or more, more preferably 99.75 mass% or more, and still more preferably 99.9 mass% or more, based on the entire refrigerant.

The refrigerant C according to the present disclosure may comprise HFO-1132(E), HFO-1123, R1234yf, and R32 in a total amount of 99.5 mass% or more, 99.75 mass% or more, or 99.9 mass% or more, based on the entire refrigerant.

Additional refrigerants are not particularly limited and can be widely selected. The mixed refrigerant may contain one additional refrigerant, or two or more additional refrigerants.

(Examples of Refrigerant C)

The present disclosure is described in more detail below with reference to Examples of refrigerant C. However, the refrigerant C is not limited to the Examples.

Mixed refrigerants were prepared by mixing HFO-1132(E), HFO-1123, R1234yf, and R32 at mass% based on their sum shown in Tables 39 to 96.

The GWP of compositions each comprising a mixture of R410A (R32 = 50%/R125 = 50%) was evaluated based on the values stated in the Intergovernmental Panel on Climate Change (IPCC), fourth report. The GWP of HFO-1132(E), which was not stated therein, was assumed to be 1 from HFO-1132a (GWP = 1 or less) and HFO-1123 (GWP = 0.3, described in WO 2015/141678 A1). The refrigerating capacity of compositions each comprising R410A and a mixture of HFO-1132(E) and HFO-1123 was determined by performing theoretical refrigeration cycle calculations for the mixed refrigerants using the National Institute of Science and Technology (NIST) and Reference Fluid Thermodynamic and Transport Properties Database (Refprop 9.0) under the following conditions.

For each of these mixed refrigerants, the COP ratio and the refrigerating capacity ratio relative to those of R410 were obtained. Calculation was conducted under the following conditions.

Evaporating temperature: 5°C
Condensation temperature: 45°C
Superheating temperature: 5 K
Subcooling temperature: 5 K
Compressor efficiency: 70%
Tables 39 to 96 show the resulting values together with the GWP of each mixed refrigerant. The COP and refrigerating capacity are ratios relative to R410A.

The coefficient of performance (COP) was determined by the following formula. COP = (refrigerating capacity or heating capacity)/power consumption

Table 39

| Item | Unit | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Ex. 1 |
|---|---|---|---|---|---|---|---|---|---|---|
| | | | A | B | C | D' | G | I | J | K' |
| HFO-1132(E) | Mass% | R410A | 68.6 | 0.0 | 32.9 | 0.0 | 72.0 | 72.0 | 47.1 | 61.7 |
| HFO-1123 | Mass% | | 0.0 | 58.7 | 67.1 | 75.4 | 28.0 | 0.0 | 52.9 | 5.9 |
| R1234yf | Mass% | | 31.4 | 41.3 | 0.0 | 24.6 | 0.0 | 28.0 | 0.0 | 32.4 |
| R32 | Mass% | | 0.0 | 0.0 | 0.0 | 0.0 | 0.0 | 0.0 | 0.0 | 0.0 |
| GWP | - | 2088 | 2 | 2 | 1 | 2 | 1 | 2 | 1 | 2 |
| COP ratio | % (relative to R410A) | 100 | 100.0 | 95.5 | 92.5 | 93.1 | 96.6 | 99.9 | 93.8 | 99.4 |
| Refrigerating capacity ratio | % (relative to R410A) | 100 | 85.0 | 85.0 | 107.4 | 95.0 | 103.1 | 86.6 | 106.2 | 85.5 |

Table 40

| Item | Unit | Comp. Ex. 9 | Comp. Ex. 10 | Comp. Ex. 11 | Comp. Ex. 12 | Comp. Ex. 13 | Comp. Ex. 14 | Comp. Ex. 15 | Ex. 2 |
|---|---|---|---|---|---|---|---|---|---|
| | | A | B | C | D' | G | I | J | K' |
| HFO-1132(E) | Mass% | 55.3 | 0.0 | 18.4 | 0.0 | 60.9 | 60.9 | 40.5 | 47.0 |
| HFO-1123 | Mass% | 0.0 | 47.8 | 74.5 | 83.4 | 32.0 | 0.0 | 52.4 | 7.2 |
| R1234yf | Mass% | 37.6 | 45.1 | 0.0 | 9.5 | 0.0 | 32.0 | 0.0 | 38.7 |
| R32 | Mass% | 7.1 | 7.1 | 7.1 | 7.1 | 7.1 | 7.1 | 7.1 | 7.1 |
| GWP | - | 50 | 50 | 49 | 49 | 49 | 50 | 49 | 50 |
| COP ratio | % (relative to R410A) | 99.8 | 96.9 | 92.5 | 92.5 | 95.9 | 99.6 | 94.0 | 99.2 |
| Refrigerating capacity ratio | % (relative to R41 OA) | 85.0 | 85.0 | 110.5 | 106.0 | 106.5 | 87.7 | 108.9 | 85.5 |

Table 41

| Item | Unit | Comp. Ex. 16 | Comp. Ex. 17 | Comp. Ex. 18 | Comp. Ex. 19 | Comp. Ex. 20 | Comp. Ex. 21 | Ex. 3 |
|---|---|---|---|---|---|---|---|---|
| | | A | B | C=D' | G | I | J | K' |
| HFO-1132(E) | Mass% | 48.4 | 0.0 | 0.0 | 55.8 | 55.8 | 37.0 | 41.0 |
| HFO-1123 | Mass% | 0.0 | 42.3 | 88.9 | 33.1 | 0.0 | 51.9 | 6.5 |
| R1234yf | Mass% | 40.5 | 46.6 | 0.0 | 0.0 | 33.1 | 0.0 | 41.4 |
| R32 | Mass% | 11.1 | 11.1 | 11.1 | 11.1 | 11.1 | 11.1 | 11.1 |
| GWP | - | 77 | 77 | 76 | 76 | 77 | 76 | 77 |
| COP ratio | % (relative to R410A) | 99.8 | 97.6 | 92.5 | 95.8 | 99.5 | 94.2 | 99.3 |
| Refrigerating capacity ratio | % (relative to R41A) | 85.0 | 85.0 | 112.0 | 108.0 | 88.6 | 110.2 | 85.4 |

Table 42

| Item | Unit | Comp. Ex. 22 | Comp. Ex. 23 | Comp. Ex. 24 | Comp. Ex. 25 | Comp. Ex. 26 | Ex. 4 |
|---|---|---|---|---|---|---|---|
| | | A | B | G | I | J | K' |
| HFO-1132(E) | Mass% | 42.8 | 0.0 | 52.1 | 52.1 | 34.3 | 36.5 |
| HFO-1123 | Mass% | 0.0 | 37.8 | 33.4 | 0.0 | 51.2 | 5.6 |
| R1234yf | Mass% | 42.7 | 47.7 | 0.0 | 33.4 | 0.0 | 43.4 |
| R32 | Mass% | 14.5 | 14.5 | 14.5 | 14.5 | 14.5 | 14.5 |
| GWP | - | 100 | 100 | 99 | 100 | 99 | 100 |
| COP ratio | % (relative to R410A) | 99.9 | 98.1 | 95.8 | 99.5 | 94.4 | 99.5 |
| Refrigerating capacity ratio | % (relative to R410A) | 85.0 | 85.0 | 109.1 | 89.6 | 111.1 | 85.3 |

Table 43

| Item | Unit | Comp. Ex. 27 | Comp. Ex. 28 | Comp. Ex. 29 | Comp. Ex. 30 | Comp. Ex. 31 | Ex. 5 |
|---|---|---|---|---|---|---|---|
| | | A | B | G | I | J | K' |
| HFO-1132(E) | Mass% | 37.0 | 0.0 | 48.6 | 48.6 | 32.0 | 32.5 |
| HFO-1123 | Mass% | 0.0 | 33.1 | 33.2 | 0.0 | 49.8 | 4.0 |
| R1234yf | Mass% | 44.8 | 48.7 | 0.0 | 33.2 | 0.0 | 45.3 |
| R32 | Mass% | 18.2 | 18.2 | 18.2 | 18.2 | 18.2 | 18.2 |
| GWP | - | 125 | 125 | 124 | 125 | 124 | 125 |
| COP ratio | % (relative to R410A) | 100.0 | 98.6 | 95.9 | 99.4 | 94.7 | 99.8 |
| Refrigerating capacity ratio | % (relative to R410A) | 85.0 | 85.0 | 110.1 | 90.8 | 111.9 | 85.2 |

Table 44

| Item | Unit | Comp. Ex. 32 | Comp. Ex. 33 | Comp. Ex. 34 | Comp. Ex. 35 | Comp. Ex. 36 | Ex. 6 |
|---|---|---|---|---|---|---|---|
| | | A | B | G | I | J | K' |
| HFO-1132(E) | Mass% | 31.5 | 0.0 | 45.4 | 45.4 | 30.3 | 28.8 |
| HFO-1123 | Mass% | 0.0 | 28.5 | 32.7 | 0.0 | 47.8 | 2.4 |
| R1234yf | Mass% | 46.6 | 49.6 | 0.0 | 32.7 | 0.0 | 46.9 |
| R32 | Mass% | 21.9 | 21.9 | 21.9 | 21.9 | 21.9 | 21.9 |
| GWP | - | 150 | 150 | 149 | 150 | 149 | 150 |
| COP ratio | % (relative to R410A) | 100.2 | 99.1 | 96.0 | 99.4 | 95.1 | 100.0 |
| Refrigerating capacity ratio | % (relative to R410A) | 85.0 | 85.0 | 111.0 | 92.1 | 112.6 | 85.1 |

Table 45

| Item | Unit | Comp. Ex. 37 | Comp. Ex. 38 | Comp. Ex. 39 | Comp. Ex. 40 | Comp. Ex. 41 | Comp. Ex. 42 |
|---|---|---|---|---|---|---|---|
| | | A | B | G | I | J | K' |
| HFO-1132(E) | Mass% | 24.8 | 0.0 | 41.8 | 41.8 | 29.1 | 24.8 |
| HFO-1123 | Mass% | 0.0 | 22.9 | 31.5 | 0.0 | 44.2 | 0.0 |
| R1234yf | Mass% | 48.5 | 50.4 | 0.0 | 31.5 | 0.0 | 48.5 |
| R32 | Mass% | 26.7 | 26.7 | 26.7 | 26.7 | 26.7 | 26.7 |
| GWP | - | 182 | 182 | 181 | 182 | 181 | 182 |
| COP ratio | % (relative to R410A) | 100.4 | 99.8 | 96.3 | 99.4 | 95.6 | 100.4 |
| Refrigerating capacity ratio | % (relative to R410A) | 85.0 | 85.0 | 111.9 | 93.8 | 113.2 | 85.0 |

Table 46

| Item | Unit | Comp. Ex. 43 | Comp. Ex. 44 | Comp. Ex. 45 | Comp. Ex. 46 | Comp. Ex. 47 | Comp. Ex. 48 |
|---|---|---|---|---|---|---|---|
| | | A | B | G | I | J | K' |
| HFO-1132(E) | Mass% | 21.3 | 0.0 | 40.0 | 40.0 | 28.8 | 24.3 |
| HFO-1123 | Mass% | 0.0 | 19.9 | 30.7 | 0.0 | 41.9 | 0.0 |
| R1234yf | Mass% | 49.4 | 50.8 | 0.0 | 30.7 | 0.0 | 46.4 |
| R32 | Mass% | 29.3 | 29.3 | 29.3 | 29.3 | 29.3 | 29.3 |
| GWP | - | 200 | 200 | 198 | 199 | 198 | 200 |
| COP ratio | % (relative to R410A) | 100.6 | 100.1 | 96.6 | 99.5 | 96.1 | 100.4 |
| Refrigerating capacity ratio | % (relative to R410A) | 85.0 | 85.0 | 112.4 | 94.8 | 113.6 | 86.7 |

Table47

| Item | Unit | Comp. Ex. 49 | Comp. Ex. 50 | Comp. Ex. 51 | Comp. Ex. 52 | Comp. Ex. 53 | Comp. Ex. 54 |
|---|---|---|---|---|---|---|---|
| | | A | B | G | I | J | K' |
| HFO-1132(E) | Mass% | 12.1 | 0.0 | 35.7 | 35.7 | 29.3 | 22.5 |
| HFO-1123 | Mass% | 0.0 | 11.7 | 27.6 | 0.0 | 34.0 | 0.0 |
| R1234yf | Mass% | 51.2 | 51.6 | 0.0 | 27.6 | 0.0 | 40.8 |
| R32 | Mass% | 36.7 | 36.7 | 36.7 | 36.7 | 36.7 | 36.7 |
| GWP | - | 250 | 250 | 248 | 249 | 248 | 250 |
| COP ratio | % (relative to R410A) | 101.2 | 101.0 | 96.4 | 99.6 | 97.0 | 100.4 |
| Refrigerating capacity ratio | % (relative to R410A) | 85.0 | 85.0 | 113.2 | 97.6 | 113.9 | 90.9 |

Table 48

| Item | Unit | Comp. Ex. 55 | Comp. Ex. 56 | Comp. Ex. 57 | Comp. Ex. 58 | Comp. Ex. 59 | Comp. Ex. 60 |
|---|---|---|---|---|---|---|---|
| | | A | B | G | I | J | K' |
| HFO-1132(E) | Mass% | 3.8 | 0.0 | 32.0 | 32.0 | 29.4 | 21.1 |
| HFO-1123 | Mass% | 0.0 | 3.9 | 23.9 | 0.0 | 26.5 | 0.0 |
| R1234yf | Mass% | 52.1 | 52.0 | 0.0 | 23.9 | 0.0 | 34.8 |
| R32 | Mass% | 44.1 | 44.1 | 44.1 | 44.1 | 44.1 | 44.1 |
| GWP | - | 300 | 300 | 298 | 299 | 298 | 299 |
| COP ratio | % (relative to R410A) | 101.8 | 101.8 | 97.9 | 99.8 | 97.8 | 100.5 |
| Refrigerating capacity ratio | % (relative to R410A) | 85.0 | 85.0 | 113.7 | 100.4 | 113.9 | 94.9 |

Table 49

| Item | Unit | Comp. Ex. 61 | Comp. Ex. 62 | Comp. Ex. 63 | Comp. Ex. 64 | Comp. Ex. 65 |
|---|---|---|---|---|---|---|
| | | A=B | G | I | J | K' |
| HFO-1132(E) | Mass% | 0.0 | 30.4 | 30.4 | 28.9 | 20.4 |
| HFO-1123 | Mass% | 0.0 | 21.8 | 0.0 | 23.3 | 0.0 |
| R1234yf | Mass% | 52.2 | 0.0 | 21.8 | 0.0 | 31.8 |
| R32 | Mass% | 47.8 | 47.8 | 47.8 | 47.8 | 47.8 |
| GWP | - | 325 | 323 | 324 | 323 | 324 |
| COP ratio | % (relative to R410A) | 102.1 | 98.2 | 100.0 | 98.2 | 100.6 |
| Refrigerating capacity ratio | % (relative to R410A) | 85.0 | 113.8 | 101.8 | 113.9 | 96.8 |

Table 50

| Item | Unit | Comp. Ex. 66 | Ex. 7 | Ex. 8 | Ex. 9 | Ex. 10 | Ex. 11 | Ex. 12 | Ex. 13 |
|---|---|---|---|---|---|---|---|---|---|
| HFO-1132(E) | Mass% | 5.0 | 10.0 | 15.0 | 20.0 | 25.0 | 30.0 | 35.0 | 40.0 |
| HFO-1123 | Mass% | 82.9 | 77.9 | 72.9 | 67.9 | 62.9 | 57.9 | 52.9 | 47.9 |
| R1234yf | Mass% | 5.0 | 5.0 | 5.0 | 5.0 | 5.0 | 5.0 | 5.0 | 5.0 |
| R32 | Mass% | 7.1 | 7.1 | 7.1 | 7.1 | 7.1 | 7.1 | 7.1 | 7.1 |
| GWP | - | 49 | 49 | 49 | 49 | 49 | 49 | 49 | 49 |
| COP ratio | % (relative to R410A) | 92.4 | 92.6 | 92.8 | 93.1 | 93.4 | 93.7 | 94.1 | 94.5 |
| Refrigerating capacity ratio | % (relative to R410A) | 108.4 | 108.3 | 108.2 | 107.9 | 107.6 | 107.2 | 106.8 | 106.3 |

Table 51

| Item | Unit | Ex. 14 | Ex. 15 | Ex. 16 | Ex. 17 | Comp. Ex. 67 | Ex. 18 | Ex. 19 | Ex. 20 |
|---|---|---|---|---|---|---|---|---|---|
| HFO-1132(E) | Mass% | 45.0 | 50.0 | 55.0 | 60.0 | 65.0 | 10.0 | 15.0 | 20.0 |
| HFO-1123 | Mass% | 42.9 | 37.9 | 32.9 | 27.9 | 22.9 | 72.9 | 67.9 | 62.9 |
| R1234yf | Mass% | 5.0 | 5.0 | 5.0 | 5.0 | 5.0 | 10.0 | 10.0 | 10.0 |
| R32 | Mass% | 7.1 | 7.1 | 7.1 | 7.1 | 7.1 | 7.1 | 7.1 | 7.1 |
| GWP | - | 49 | 49 | 49 | 49 | 49 | 49 | 49 | 49 |
| COP ratio | % (relative to R410A) | 95.0 | 95.4 | 95.9 | 96.4 | 96.9 | 93.0 | 93.3 | 93.6 |
| Refrigerating capacity ratio | % (relative to R410A) | 105.8 | 105.2 | 104.5 | 103.9 | 103.1 | 105.7 | 105.5 | 105.2 |

Table 52

| Item | Unit | Ex. 21 | Ex. 22 | Ex. 23 | Ex. 24 | Ex. 25 | Ex. 26 | Ex. 27 | Ex. 28 |
|---|---|---|---|---|---|---|---|---|---|
| HFO-1132(E) | Mass% | 25.0 | 30.0 | 35.0 | 40.0 | 45.0 | 50.0 | 55.0 | 60.0 |
| HFO-1123 | Mass% | 57.9 | 52.9 | 47.9 | 42.9 | 37.9 | 32.9 | 27.9 | 22.9 |
| R1234yf | Mass% | 10.0 | 10.0 | 10.0 | 10.0 | 10.0 | 10.0 | 10.0 | 10.0 |
| R32 | Mass% | 7.1 | 7.1 | 7.1 | 7.1 | 7.1 | 7.1 | 7.1 | 7.1 |
| GWP | - | 49 | 49 | 49 | 49 | 49 | 49 | 49 | 49 |
| COP ratio | % (relative to R410A) | 93.9 | 94.2 | 94.6 | 95.0 | 95.5 | 96.0 | 96.4 | 96.9 |
| Refrigerating capacity ratio | % (relative to R410A) | 104.9 | 104.5 | 104.1 | 103.6 | 103.0 | 102.4 | 101.7 | 101.0 |

Table 53

| Item | Unit | Comp. Ex. 68 | Ex. 29 | Ex. 30 | Ex. 31 | Ex. 32 | Ex. 33 | Ex. 34 | Ex. 35 |
|---|---|---|---|---|---|---|---|---|---|
| HFO-1132(E) | Mass% | 65.0 | 10.0 | 15.0 | 20.0 | 25.0 | 30.0 | 35.0 | 40.0 |
| HFO-1123 | Mass% | 17.9 | 67.9 | 62.9 | 57.9 | 52.9 | 47.9 | 42.9 | 37.9 |
| R1234yf | Mass% | 10.0 | 15.0 | 15.0 | 15.0 | 15.0 | 15.0 | 15.0 | 15.0 |
| R32 | Mass% | 7.1 | 7.1 | 7.1 | 7.1 | 7.1 | 7.1 | 7.1 | 7.1 |
| GWP | - | 49 | 49 | 49 | 49 | 49 | 49 | 49 | 49 |
| COP ratio | % (relative to R410A) | 97.4 | 93.5 | 93.8 | 94.1 | 94.4 | 94.8 | 95.2 | 95.6 |
| Refrigerating capacity ratio | % (relative to R410A) | 100.3 | 102.9 | 102.7 | 102.5 | 102.1 | 101.7 | 101.2 | 100.7 |

Table 54

| Item | Unit | Ex. 36 | Ex. 37 | Ex. 38 | Ex. 39 | Comp. Ex. 69 | Ex. 40 | Ex. 41 | Ex. 42 |
|---|---|---|---|---|---|---|---|---|---|
| HFO-1132(E) | Mass% | 45.0 | 50.0 | 55.0 | 60.0 | 65.0 | 10.0 | 15.0 | 20.0 |
| HFO-1123 | Mass% | 32.9 | 27.9 | 22.9 | 17.9 | 12.9 | 62.9 | 57.9 | 52.9 |
| R1234yf | Mass% | 15.0 | 15.0 | 15.0 | 15.0 | 15.0 | 20.0 | 20.0 | 20.0 |
| R32 | Mass% | 7.1 | 7.1 | 7.1 | 7.1 | 7.1 | 7.1 | 7.1 | 7.1 |
| GWP | - | 49 | 49 | 49 | 49 | 49 | 49 | 49 | 49 |
| COP ratio | % (relative to R410A) | 96.0 | 96.5 | 97.0 | 97.5 | 98.0 | 94.0 | 94.3 | 94.6 |
| Refrigerating capacity ratio | % (relative to R410A) | 100.1 | 99.5 | 98.9 | 98.1 | 97.4 | 100.1 | 99.9 | 99.6 |

Table 55

| Item | Unit | Ex. 43 | Ex. 44 | Ex. 45 | Ex. 46 | Ex. 47 | Ex. 48 | Ex. 49 | Ex. 50 |
|---|---|---|---|---|---|---|---|---|---|
| HFO-1132(E) | Mass% | 25.0 | 30.0 | 35.0 | 40.0 | 45.0 | 50.0 | 55.0 | 60.0 |

(continued)

| Item | Unit | Ex. 43 | Ex. 44 | Ex. 45 | Ex. 46 | Ex. 47 | Ex. 48 | Ex. 49 | Ex. 50 |
|---|---|---|---|---|---|---|---|---|---|
| HFO-1123 | Mass% | 47.9 | 42.9 | 37.9 | 32.9 | 27.9 | 22.9 | 17.9 | 12.9 |
| R1234yf | Mass% | 20.0 | 20.0 | 20.0 | 20.0 | 20.0 | 20.0 | 20.0 | 20.0 |
| R32 | Mass% | 7.1 | 7.1 | 7.1 | 7.1 | 7.1 | 7.1 | 7.1 | 7.1 |
| GWP | - | 49 | 49 | 49 | 49 | 49 | 49 | 49 | 49 |
| COP ratio | % (relative to R410A) | 95.0 | 95.3 | 95.7 | 96.2 | 96.6 | 97.1 | 97.6 | 98.1 |
| Refrigerating capacity ratio | % (relative to R410A) | 99.2 | 98.8 | 98.3 | 97.8 | 97.2 | 96.6 | 95.9 | 95.2 |

Table 56

| Item | Unit | Comp. Ex. 70 | Ex. 51 | Ex. 52 | Ex. 53 | Ex. 54 | Ex. 55 | Ex. 56 | Ex. 57 |
|---|---|---|---|---|---|---|---|---|---|
| HFO-1132(E) | Mass% | 65.0 | 10.0 | 15.0 | 20.0 | 25.0 | 30.0 | 35.0 | 40.0 |
| HFO-1123 | Mass% | 7.9 | 57.9 | 52.9 | 47.9 | 42.9 | 37.9 | 32.9 | 27.9 |
| R1234yf | Mass% | 20.0 | 25.0 | 25.0 | 25.0 | 25.0 | 25.0 | 25.0 | 25.0 |
| R32 | Mass% | 7.1 | 7.1 | 7.1 | 7.1 | 7.1 | 7.1 | 7.1 | 7.1 |
| GWP | - | 49 | 50 | 50 | 50 | 50 | 50 | 50 | 50 |
| COP ratio | % (relative to R410A) | 98.6 | 94.6 | 94.9 | 95.2 | 95.5 | 95.9 | 96.3 | 96.8 |
| Refrigerating capacity ratio | % (relative to R410A) | 94.4 | 97.1 | 96.9 | 96.7 | 96.3 | 95.9 | 95.4 | 94.8 |

Table 57

| Item | Unit | Ex. 58 | Ex. 59 | Ex. 60 | Ex. 61 | Comp. Ex. 71 | Ex. 62 | Ex. 63 | Ex. 64 |
|---|---|---|---|---|---|---|---|---|---|
| HFO-1132(E) | Mass% | 45.0 | 50.0 | 55.0 | 60.0 | 65.0 | 10.0 | 15.0 | 20.0 |
| HFO-1123 | Mass% | 7.1 | 7.1 | 7.1 | 7.1 | 7.1 | 7.1 | 7.1 | 7.1 |
| R1234yf | Mass% | 25.0 | 25.0 | 25.0 | 25.0 | 25.0 | 30.0 | 30.0 | 30.0 |
| R32 | Mass% | 7.1 | 7.1 | 7.1 | 7.1 | 7.1 | 7.1 | 7.1 | 7.1 |
| GWP | - | 50 | 50 | 50 | 50 | 50 | 50 | 50 | 50 |
| COP ratio | % (relative to R410A) | 97.2 | 97.7 | 98.2 | 98.7 | 99.2 | 95.2 | 95.5 | 95.8 |
| Refrigerating capacity ratio | % (relative to R41OA) | 94.2 | 93.6 | 92.9 | 92.2 | 91.4 | 94.2 | 93.9 | 93.7 |

Table 58

| Item | Unit | Ex. 65 | Ex. 66 | Ex. 67 | Ex. 68 | Ex. 69 | Ex. 70 | Ex. 71 | Ex. 72 |
|---|---|---|---|---|---|---|---|---|---|
| HFO-1132(E) | Mass% | 25.0 | 30.0 | 35.0 | 40.0 | 45.0 | 50.0 | 55.0 | 60.0 |
| HFO-1123 | Mass% | 37.9 | 32.9 | 27.9 | 22.9 | 17.9 | 12.9 | 7.9 | 2.9 |

(continued)

| Item | Unit | Ex. 65 | Ex. 66 | Ex. 67 | Ex. 68 | Ex. 69 | Ex. 70 | Ex. 71 | Ex. 72 |
|---|---|---|---|---|---|---|---|---|---|
| R1234yf | Mass% | 30.0 | 30.0 | 30.0 | 30.0 | 30.0 | 30.0 | 30.0 | 30.0 |
| R32 | Mass% | 7.1 | 7.1 | 7.1 | 7.1 | 7.1 | 7.1 | 7.1 | 7.1 |
| GWP | - | 50 | 50 | 50 | 50 | 50 | 50 | 50 | 50 |
| COP ratio | % (relative to R410A) | 96.2 | 96.6 | 97.0 | 97.4 | 97.9 | 98.3 | 98.8 | 99.3 |
| Refrigerating capacity ratio | % (relative to R41 OA) | 93.3 | 92.9 | 92.4 | 91.8 | 91.2 | 90.5 | 89.8 | 89.1 |

Table 59

| Item | Unit | Ex. 73 | Ex. 74 | Ex. 75 | Ex. 76 | Ex. 77 | Ex. 78 | Ex. 79 | Ex. 80 |
|---|---|---|---|---|---|---|---|---|---|
| HFO-1132(E) | Mass% | 10.0 | 15.0 | 20.0 | 25.0 | 30.0 | 35.0 | 40.0 | 45.0 |
| HFO-1123 | Mass% | 47.9 | 42.9 | 37.9 | 32.9 | 27.9 | 22.9 | 17.9 | 12.9 |
| R1234yf | Mass% | 35.0 | 35.0 | 35.0 | 35.0 | 35.0 | 35.0 | 35.0 | 35.0 |
| R32 | Mass% | 7.1 | 7.1 | 7.1 | 7.1 | 7.1 | 7.1 | 7.1 | 7.1 |
| GWP | - | 50 | 50 | 50 | 50 | 50 | 50 | 50 | 50 |
| COP ratio | % (relative to R410A) | 95.9 | 96.2 | 96.5 | 96.9 | 97.2 | 97.7 | 98.1 | 98.5 |
| Refrigerating capacity ratio | % (relative to R41 OA) | 91.1 | 90.9 | 90.6 | 90.2 | 89.8 | 89.3 | 88.7 | 88.1 |

Table 60

| Item | Unit | Ex. 81 | Ex. 82 | Ex. 83 | Ex. 84 | Ex. 85 | Ex. 86 | Ex. 87 | Ex. 88 |
|---|---|---|---|---|---|---|---|---|---|
| HFO-1132(E) | Mass% | 50.0 | 55.0 | 10.0 | 15.0 | 20.0 | 25.0 | 30.0 | 35.0 |
| HFO-1123 | Mass% | 7.9 | 2.9 | 42.9 | 37.9 | 32.9 | 27.9 | 22.9 | 17.9 |
| R1234yf | Mass% | 35.0 | 35.0 | 40.0 | 40.0 | 40.0 | 40.0 | 40.0 | 40.0 |
| R32 | Mass% | 7.1 | 7.1 | 7.1 | 7.1 | 7.1 | 7.1 | 7.1 | 7.1 |
| GWP | - | 50 | 50 | 50 | 50 | 50 | 50 | 50 | 50 |
| COP ratio | % (relative to R410A) | 99.0 | 99.4 | 96.6 | 96.9 | 97.2 | 97.6 | 98.0 | 98.4 |
| Refrigerating capacity ratio | % (relative to R41A) | 87.4 | 86.7 | 88.0 | 87.8 | 87.5 | 87.1 | 86.6 | 86.1 |

Table 61

| Item | Unit | Comp. Ex. 72 | Comp. Ex. 73 | Comp. Ex. 74 | Comp. Ex. 75 | Comp. Ex. 76 | Comp. Ex. 77 | Comp. Ex. 78 | Comp. Ex. 79 |
|---|---|---|---|---|---|---|---|---|---|
| HFO-1132(E) | Mass% | 40.0 | 45.0 | 50.0 | 10.0 | 15.0 | 20.0 | 25.0 | 30.0 |
| HFO-1123 | Mass% | 12.9 | 7.9 | 2.9 | 37.9 | 32.9 | 27.9 | 22.9 | 17.9 |
| R1234yf | Mass% | 40.0 | 40.0 | 40.0 | 45.0 | 45.0 | 45.0 | 45.0 | 45.0 |
| R32 | Mass% | 7.1 | 7.1 | 7.1 | 7.1 | 7.1 | 7.1 | 7.1 | 7.1 |

(continued)

| Item | Unit | Comp. Ex. 72 | Comp. Ex. 73 | Comp. Ex. 74 | Comp. Ex. 75 | Comp. Ex. 76 | Comp. Ex. 77 | Comp. Ex. 78 | Comp. Ex. 79 |
|---|---|---|---|---|---|---|---|---|---|
| GWP | - | 50 | 50 | 50 | 50 | 50 | 50 | 50 | 50 |
| COP ratio | % (relative to R410A) | 98.8 | 99.2 | 99.6 | 97.4 | 97.7 | 98.0 | 98.3 | 98.7 |
| Refrigerating capacity ratio | % (relative to R410A) | 85.5 | 84.9 | 84.2 | 84.9 | 84.6 | 84.3 | 83.9 | 83.5 |

Table 62

| Item | Unit | Comp. Ex. 80 | Comp. Ex. 81 | Comp. Ex. 82 |
|---|---|---|---|---|
| HFO-1132(E) | Mass% | 35.0 | 40.0 | 45.0 |
| HFO-1123 | Mass% | 12.9 | 7.9 | 2.9 |
| R1234yf | Mass% | 45.0 | 45.0 | 45.0 |
| R32 | Mass% | 7.1 | 7.1 | 7.1 |
| GWP | - | 50 | 50 | 50 |
| COP ratio | % (relative to R410A) | 99.1 | 99.5 | 99.9 |
| Refrigerating capacity ratio | % (relative to R410A) | 82.9 | 82.3 | 81.7 |

Table 63

| Item | Unit | Ex. 89 | Ex. 90 | Ex. 91 | Ex. 92 | Ex. 93 | Ex. 94 | Ex. 95 | Ex. 96 |
|---|---|---|---|---|---|---|---|---|---|
| HFO-1132(E) | Mass% | 10.0 | 15.0 | 20.0 | 25.0 | 30.0 | 35.0 | 40.0 | 45.0 |
| HFO-1123 | Mass% | 70.5 | 65.5 | 60.5 | 55.5 | 50.5 | 45.5 | 40.5 | 35.5 |
| R1234yf | Mass% | 5.0 | 5.0 | 5.0 | 5.0 | 5.0 | 5.0 | 5.0 | 5.0 |
| R32 | Mass% | 14.5 | 14.5 | 14.5 | 14.5 | 14.5 | 14.5 | 14.5 | 14.5 |
| GWP | - | 99 | 99 | 99 | 99 | 99 | 99 | 99 | 99 |
| COP ratio | % (relative to R410A) | 93.7 | 93.9 | 94.1 | 94.4 | 94.7 | 95.0 | 95.4 | 95.8 |
| Refrigerating capacity ratio | % (relative to R41A) | 110.2 | 110.0 | 109.7 | 109.3 | 108.9 | 108.4 | 107.9 | 107.3 |

Table 64

| Item | Unit | Ex. 97 | Comp. Ex. 83 | Ex. 98 | Ex. 99 | Ex. 100 | Ex. 101 | Ex. 102 | Ex. 103 |
|---|---|---|---|---|---|---|---|---|---|
| HFO-1132(E) | Mass% | 50.0 | 55.0 | 10.0 | 15.0 | 20.0 | 25.0 | 30.0 | 35.0 |
| HFO-1123 | Mass% | 30.5 | 25.5 | 65.5 | 60.5 | 55.5 | 50.5 | 45.5 | 40.5 |
| R1234yf | Mass% | 5.0 | 5.0 | 10.0 | 10.0 | 10.0 | 10.0 | 10.0 | 10.0 |
| R32 | Mass% | 14.5 | 14.5 | 14.5 | 14.5 | 14.5 | 14.5 | 14.5 | 14.5 |

(continued)

| Item | Unit | Ex. 97 | Comp. Ex. 83 | Ex. 98 | Ex. 99 | Ex. 100 | Ex. 101 | Ex. 102 | Ex. 103 |
|---|---|---|---|---|---|---|---|---|---|
| GWP | - | 99 | 99 | 99 | 99 | 99 | 99 | 99 | 99 |
| COP ratio | % (relative to R410A) | 96.2 | 96.6 | 94.2 | 94.4 | 94.6 | 94.9 | 95.2 | 95.5 |
| Refrigerating capacity ratio | % (relative to R410A) | 106.6 | 106.0 | 107.5 | 107.3 | 107.0 | 106.6 | 106.1 | 105.6 |

Table 65

| Item | Unit | Ex. 104 | Ex. 105 | Ex. 106 | Comp. Ex. 84 | Ex. 107 | Ex. 108 | Ex. 109 | Ex. 110 |
|---|---|---|---|---|---|---|---|---|---|
| HFO-1132(E) | Mass% | 40.0 | 45.0 | 50.0 | 55.0 | 10.0 | 15.0 | 20.0 | 25.0 |
| HFO-1123 | Mass% | 35.5 | 30.5 | 25.5 | 20.5 | 60.5 | 55.5 | 50.5 | 45.5 |
| R1234yf | Mass% | 10.0 | 10.0 | 10.0 | 10.0 | 15.0 | 15.0 | 15.0 | 15.0 |
| R32 | Mass% | 14.5 | 14.5 | 14.5 | 14.5 | 14.5 | 14.5 | 14.5 | 14.5 |
| GWP | - | 99 | 99 | 99 | 99 | 99 | 99 | 99 | 99 |
| COP ratio | % (relative to R410A) | 95.9 | 96.3 | 96.7 | 97.1 | 94.6 | 94.8 | 95.1 | 95.4 |
| Refrigerating capacity ratio | % (relative to R410A) | 105.1 | 104.5 | 103.8 | 103.1 | 104.7 | 104.5 | 104.1 | 103.7 |

Table 66

| Item | Unit | Ex. 111 | Ex. 112 | Ex. 113 | Ex. 114 | Ex. 115 | Comp. Ex. 85 | Ex. 116 | Ex. 117 |
|---|---|---|---|---|---|---|---|---|---|
| HFO-1132(E) | Mass% | 30.0 | 35.0 | 40.0 | 45.0 | 50.0 | 55.0 | 10.0 | 15.0 |
| HFO-1123 | Mass% | 40.5 | 35.5 | 30.5 | 25.5 | 20.5 | 15.5 | 55.5 | 50.5 |
| R1234yf | Mass% | 15.0 | 15.0 | 15.0 | 15.0 | 15.0 | 15.0 | 20.0 | 20.0 |
| R32 | Mass% | 14.5 | 14.5 | 14.5 | 14.5 | 14.5 | 14.5 | 14.5 | 14.5 |
| GWP | - | 99 | 99 | 99 | 99 | 99 | 99 | 99 | 99 |
| COP ratio | % (relative to R410A) | 95.7 | 96.0 | 96.4 | 96.8 | 97.2 | 97.6 | 95.1 | 95.3 |
| Refrigerating capacity ratio | % (relative to R410A) | 103.3 | 102.8 | 102.2 | 101.6 | 101.0 | 100.3 | 101.8 | 101.6 |

Table 67

| Item | Unit | Ex. 118 | Ex. 119 | Ex. 120 | Ex. 121 | Ex. 122 | Ex. 123 | Ex. 124 | Comp. Ex. 86 |
|---|---|---|---|---|---|---|---|---|---|
| HFO-1132(E) | Mass% | 20.0 | 25.0 | 30.0 | 35.0 | 40.0 | 45.0 | 50.0 | 55.0 |
| HFO-1123 | Mass% | 45.5 | 40.5 | 35.5 | 30.5 | 25.5 | 20.5 | 15.5 | 10.5 |
| R1234yf | Mass% | 20.0 | 20.0 | 20.0 | 20.0 | 20.0 | 20.0 | 20.0 | 20.0 |
| R32 | Mass% | 14.5 | 14.5 | 14.5 | 14.5 | 14.5 | 14.5 | 14.5 | 14.5 |

(continued)

| Item | Unit | Ex. 118 | Ex. 119 | Ex. 120 | Ex. 121 | Ex. 122 | Ex. 123 | Ex. 124 | Comp. Ex. 86 |
|---|---|---|---|---|---|---|---|---|---|
| GWP | - | 99 | 99 | 99 | 99 | 99 | 99 | 99 | 99 |
| COP ratio | % (relative to R410A) | 95.6 | 95.9 | 96.2 | 96.5 | 96.9 | 97.3 | 97.7 | 98.2 |
| Refrigerating capacity ratio | % (relative to R410A) | 101.2 | 100.8 | 100.4 | 99.9 | 99.3 | 98.7 | 98.0 | 97.3 |

Table 68

| Item | Unit | Ex. 125 | Ex. 126 | Ex. 127 | Ex. 128 | Ex. 129 | Ex. 130 | Ex. 131 | Ex. 132 |
|---|---|---|---|---|---|---|---|---|---|
| HFO-1132(E) | Mass% | 10.0 | 15.0 | 20.0 | 25.0 | 30.0 | 35.0 | 40.0 | 45.0 |
| HFO-1123 | Mass% | 50.5 | 45.5 | 40.5 | 35.5 | 30.5 | 25.5 | 20.5 | 15.5 |
| R1234yf | Mass% | 25.0 | 25.0 | 25.0 | 25.0 | 25.0 | 25.0 | 25.0 | 25.0 |
| R32 | Mass% | 14.5 | 14.5 | 14.5 | 14.5 | 14.5 | 14.5 | 14.5 | 14.5 |
| GWP | - | 99 | 99 | 99 | 99 | 99 | 99 | 99 | 99 |
| COP ratio | % (relative to R410A) | 95.6 | 95.9 | 96.1 | 96.4 | 96.7 | 97.1 | 97.5 | 97.9 |
| Refrigerating capacity ratio | % (relative to R410A) | 98.9 | 98.6 | 98.3 | 97.9 | 97.4 | 96.9 | 96.3 | 95.7 |

Table 69

| Item | Unit | Ex. 133 | Comp. Ex. 87 | Ex. 134 | Ex. 135 | Ex. 136 | Ex. 137 | Ex. 138 | Ex. 139 |
|---|---|---|---|---|---|---|---|---|---|
| HFO-1132(E) | Mass% | 50.0 | 55.0 | 10.0 | 15.0 | 20.0 | 25.0 | 30.0 | 35.0 |
| HFO-1123 | Mass% | 10.5 | 5.5 | 45.5 | 40.5 | 35.5 | 30.5 | 25.5 | 20.5 |
| R1234yf | Mass% | 25.0 | 25.0 | 30.0 | 30.0 | 30.0 | 30.0 | 30.0 | 30.0 |
| R32 | Mass% | 14.5 | 14.5 | 14.5 | 14.5 | 14.5 | 14.5 | 14.5 | 14.5 |
| GWP | - | 99 | 99 | 100 | 100 | 100 | 100 | 100 | 100 |
| COP ratio | % (relative to R410A) | 98.3 | 98.7 | 96.2 | 96.4 | 96.7 | 97.0 | 97.3 | 97.7 |
| Refrigerating capacity ratio | % (relative to R410A) | 95.0 | 94.3 | 95.8 | 95.6 | 95.2 | 94.8 | 94.4 | 93.8 |

Table 70

| Item | Unit | Ex. 140 | Ex. 141 | Ex. 142 | Ex. 143 | Ex. 144 | Ex. 145 | Ex. 146 | Ex. 147 |
|---|---|---|---|---|---|---|---|---|---|
| HFO-1132(E) | Mass% | 40.0 | 45.0 | 50.0 | 10.0 | 15.0 | 20.0 | 25.0 | 30.0 |
| HFO-1123 | Mass% | 15.5 | 10.5 | 5.5 | 40.5 | 35.5 | 30.5 | 25.5 | 20.5 |
| R1234yf | Mass% | 30.0 | 30.0 | 30.0 | 35.0 | 35.0 | 35.0 | 35.0 | 35.0 |
| R32 | Mass% | 14.5 | 14.5 | 14.5 | 14.5 | 14.5 | 14.5 | 14.5 | 14.5 |

(continued)

| Item | Unit | Ex. 140 | Ex. 141 | Ex. 142 | Ex. 143 | Ex. 144 | Ex. 145 | Ex. 146 | Ex. 147 |
|---|---|---|---|---|---|---|---|---|---|
| GWP | - | 100 | 100 | 100 | 100 | 100 | 100 | 100 | 100 |
| COP ratio | % (relative to R410A) | 98.1 | 98.5 | 98.9 | 96.8 | 97.0 | 97.3 | 97.6 | 97.9 |
| Refrigerating capacity ratio | % (relative to R410A) | 93.3 | 92.6 | 92.0 | 92.8 | 92.5 | 92.2 | 91.8 | 91.3 |

Table 71

| Item | Unit | Ex. 148 | Ex. 149 | Ex. 150 | Ex. 151 | Ex. 152 | Ex. 153 | Ex. 154 | Ex. 155 |
|---|---|---|---|---|---|---|---|---|---|
| HFO-1132(E) | Mass% | 35.0 | 40.0 | 45.0 | 10.0 | 15.0 | 20.0 | 25.0 | 30.0 |
| HFO-1123 | Mass% | 15.5 | 10.5 | 5.5 | 35.5 | 30.5 | 25.5 | 20.5 | 15.5 |
| R1234yf | Mass% | 35.0 | 35.0 | 35.0 | 40.0 | 40.0 | 40.0 | 40.0 | 40.0 |
| R32 | Mass% | 14.5 | 14.5 | 14.5 | 14.5 | 14.5 | 14.5 | 14.5 | 14.5 |
| GWP | - | 100 | 100 | 100 | 100 | 100 | 100 | 100 | 100 |
| COP ratio | % (relative to R410A) | 98.3 | 98.7 | 99.1 | 97.4 | 97.7 | 98.0 | 98.3 | 98.6 |
| Refrigerating capacity ratio | % (relative to R410A) | 90.8 | 90.2 | 89.6 | 89.6 | 89.4 | 89.0 | 88.6 | 88.2 |

Table 72

| Item | Unit | Ex. 156 | Ex. 157 | Ex. 158 | Ex. 159 | Ex. 160 | Comp. Ex. 88 | Comp. Ex. 89 | Comp. Ex. 90 |
|---|---|---|---|---|---|---|---|---|---|
| HFO-1132(E) | Mass% | 35.0 | 40.0 | 10.0 | 15.0 | 20.0 | 25.0 | 30.0 | 35.0 |
| HFO-1123 | Mass% | 10.5 | 5.5 | 30.5 | 25.5 | 20.5 | 15.5 | 10.5 | 5.5 |
| R1234yf | Mass% | 40.0 | 40.0 | 45.0 | 45.0 | 45.0 | 45.0 | 45.0 | 45.0 |
| R32 | Mass% | 14.5 | 14.5 | 14.5 | 14.5 | 14.5 | 14.5 | 14.5 | 14.5 |
| GWP | - | 100 | 100 | 100 | 100 | 100 | 100 | 100 | 100 |
| COP ratio | % (relative to R410A) | 98.9 | 99.3 | 98.1 | 98.4 | 98.7 | 98.9 | 99.3 | 99.6 |
| Refrigerating capacity ratio | % (relative to R410A) | 87.6 | 87.1 | 86.5 | 86.2 | 85.9 | 85.5 | 85.0 | 84.5 |

Table 73

| Item | Unit | Comp. Ex. 91 | Comp. Ex. 92 | Comp. Ex. 93 | Comp. Ex. 94 | Comp. Ex. 95 |
|---|---|---|---|---|---|---|
| HFO-1132(E) | Mass% | 10.0 | 15.0 | 20.0 | 25.0 | 30.0 |
| HFO-1123 | Mass% | 25.5 | 20.5 | 15.5 | 10.5 | 5.5 |
| R1234yf | Mass% | 50.0 | 50.0 | 50.0 | 50.0 | 50.0 |
| R32 | Mass% | 14.5 | 14.5 | 14.5 | 14.5 | 14.5 |

(continued)

| Item | Unit | Comp. Ex. 91 | Comp. Ex. 92 | Comp. Ex. 93 | Comp. Ex. 94 | Comp. Ex. 95 |
|------|------|------|------|------|------|------|
| GWP | - | 100 | 100 | 100 | 100 | 100 |
| COP ratio | % (relative to R410A) | 98.9 | 99.1 | 99.4 | 99.7 | 100.0 |
| Refrigerating capacity ratio | % (relative to R410A) | 83.3 | 83.0 | 82.7 | 82.2 | 81.8 |

Table 74

| Item | Unit | Ex. 161 | Ex. 162 | Ex. 163 | Ex. 164 | Ex. 165 | Ex. 166 | Ex. 167 | Ex. 168 |
|------|------|------|------|------|------|------|------|------|------|
| HFO-1132(E) | Mass% | 10.0 | 15.0 | 20.0 | 25.0 | 30.0 | 35.0 | 40.0 | 45.0 |
| HFO-1123 | Mass% | 63.1 | 58.1 | 53.1 | 48.1 | 43.1 | 38.1 | 33.1 | 28.1 |
| R1234yf | Mass% | 5.0 | 5.0 | 5.0 | 5.0 | 5.0 | 5.0 | 5.0 | 5.0 |
| R32 | Mass% | 21.9 | 21.9 | 21.9 | 21.9 | 21.9 | 21.9 | 21.9 | 21.9 |
| GWP | - | 149 | 149 | 149 | 149 | 149 | 149 | 149 | 149 |
| COP ratio | % (relative to R410A) | 94.8 | 95.0 | 95.2 | 95.4 | 95.7 | 95.9 | 96.2 | 96.6 |
| Refrigerating capacity ratio | % (relative to R410A) | 111.5 | 111.2 | 110.9 | 110.5 | 110.0 | 109.5 | 108.9 | 108.3 |

Table 75

| Item | Unit | Comp. Ex. 96 | Ex. 169 | Ex. 170 | Ex. 171 | Ex. 172 | Ex. 173 | Ex. 174 | Ex. 175 |
|------|------|------|------|------|------|------|------|------|------|
| HFO-1132(E) | Mass% | 50.0 | 10.0 | 15.0 | 20.0 | 25.0 | 30.0 | 35.0 | 40.0 |
| HFO-1123 | Mass% | 23.1 | 58.1 | 53.1 | 48.1 | 43.1 | 38.1 | 33.1 | 28.1 |
| R1234yf | Mass% | 5.0 | 10.0 | 10.0 | 10.0 | 10.0 | 10.0 | 10.0 | 10.0 |
| R32 | Mass% | 21.9 | 21.9 | 21.9 | 21.9 | 21.9 | 21.9 | 21.9 | 21.9 |
| GWP | - | 149 | 149 | 149 | 149 | 149 | 149 | 149 | 149 |
| COP ratio | % (relative to R410A) | 96.9 | 95.3 | 95.4 | 95.6 | 95.8 | 96.1 | 96.4 | 96.7 |
| Refrigerating capacity ratio | % (relative to R410A) | 107.7 | 108.7 | 108.5 | 108.1 | 107.7 | 107.2 | 106.7 | 106.1 |

Table 76

| Item | Unit | Ex. 176 | Comp. Ex. 97 | Ex. 177 | Ex. 178 | Ex. 179 | Ex. 180 | Ex. 181 | Ex. 182 |
|------|------|------|------|------|------|------|------|------|------|
| HFO-1132(E) | Mass% | 45.0 | 50.0 | 10.0 | 15.0 | 20.0 | 25.0 | 30.0 | 35.0 |
| HFO-1123 | Mass% | 23.1 | 18.1 | 53.1 | 48.1 | 43.1 | 38.1 | 33.1 | 28.1 |
| R1234yf | Mass% | 10.0 | 10.0 | 15.0 | 15.0 | 15.0 | 15.0 | 15.0 | 15.0 |
| R32 | Mass% | 21.9 | 21.9 | 21.9 | 21.9 | 21.9 | 21.9 | 21.9 | 21.9 |

(continued)

| Item | Unit | Ex. 176 | Comp. Ex. 97 | Ex. 177 | Ex. 178 | Ex. 179 | Ex. 180 | Ex. 181 | Ex. 182 |
|---|---|---|---|---|---|---|---|---|---|
| GWP | - | 149 | 149 | 149 | 149 | 149 | 149 | 149 | 149 |
| COP ratio | % (relative to R410A) | 97.0 | 97.4 | 95.7 | 95.9 | 96.1 | 96.3 | 96.6 | 96.9 |
| Refrigerating capacity ratio | % (relative to R410A) | 105.5 | 104.9 | 105.9 | 105.6 | 105.3 | 104.8 | 104.4 | 103.8 |

Table 77

| Item | Unit | Ex. 183 | Ex. 184 | Comp. Ex. 98 | Ex. 185 | Ex. 186 | Ex. 187 | Ex. 188 | Ex. 189 |
|---|---|---|---|---|---|---|---|---|---|
| HFO-1132(E) | Mass% | 40.0 | 45.0 | 50.0 | 10.0 | 15.0 | 20.0 | 25.0 | 30.0 |
| HFO-1123 | Mass% | 23.1 | 18.1 | 13.1 | 48.1 | 43.1 | 38.1 | 33.1 | 28.1 |
| R1234yf | Mass% | 15.0 | 15.0 | 15.0 | 20.0 | 20.0 | 20.0 | 20.0 | 20.0 |
| R32 | Mass% | 21.9 | 21.9 | 21.9 | 21.9 | 21.9 | 21.9 | 21.9 | 21.9 |
| GWP | - | 149 | 149 | 149 | 149 | 149 | 149 | 149 | 149 |
| COP ratio | % (relative to R410A) | 97.2 | 97.5 | 97.9 | 96.1 | 96.3 | 96.5 | 96.8 | 97.1 |
| Refrigerating capacity ratio | % (relative to R410A) | 103.3 | 102.6 | 102.0 | 103.0 | 102.7 | 102.3 | 101.9 | 101.4 |

Table 78

| Item | Unit | Ex. 190 | Ex. 191 | Ex. 192 | Comp. Ex. 99 | Ex. 193 | Ex. 194 | Ex. 195 | Ex. 196 |
|---|---|---|---|---|---|---|---|---|---|
| HFO-1132(E) | Mass% | 35.0 | 40.0 | 45.0 | 50.0 | 10.0 | 15.0 | 20.0 | 25.0 |
| HFO-1123 | Mass% | 23.1 | 18.1 | 13.1 | 8.1 | 43.1 | 38.1 | 33.1 | 28.1 |
| R1234yf | Mass% | 20.0 | 20.0 | 20.0 | 20.0 | 25.0 | 25.0 | 25.0 | 25.0 |
| R32 | Mass% | 21.9 | 21.9 | 21.9 | 21.9 | 21.9 | 21.9 | 21.9 | 21.9 |
| GWP | - | 149 | 149 | 149 | 149 | 149 | 149 | 149 | 149 |
| COP ratio | % (relative to R410A) | 97.4 | 97.7 | 98.0 | 98.4 | 96.6 | 96.8 | 97.0 | 97.3 |
| Refrigerating capacity ratio | % (relative to R410A) | 100.9 | 100.3 | 99.7 | 99.1 | 100.0 | 99.7 | 99.4 | 98.9 |

Table 79

| Item | Unit | Ex. 197 | Ex. 198 | Ex. 199 | Ex. 200 | Comp. Ex. 100 | Ex. 201 | Ex. 202 | Ex. 203 |
|---|---|---|---|---|---|---|---|---|---|
| HFO-1132(E) | Mass% | 30.0 | 35.0 | 40.0 | 45.0 | 50.0 | 10.0 | 15.0 | 20.0 |
| HFO-1123 | Mass% | 23.1 | 18.1 | 13.1 | 8.1 | 3.1 | 38.1 | 33.1 | 28.1 |
| R1234yf | Mass% | 25.0 | 25.0 | 25.0 | 25.0 | 25.0 | 30.0 | 30.0 | 30.0 |
| R32 | Mass% | 21.9 | 21.9 | 21.9 | 21.9 | 21.9 | 21.9 | 21.9 | 21.9 |

(continued)

| Item | Unit | Ex. 197 | Ex. 198 | Ex. 199 | Ex. 200 | Comp. Ex. 100 | Ex. 201 | Ex. 202 | Ex. 203 |
|---|---|---|---|---|---|---|---|---|---|
| GWP | - | 149 | 149 | 149 | 149 | 149 | 150 | 150 | 150 |
| COP ratio | % (relative to R410A) | 97.6 | 97.9 | 98.2 | 98.5 | 98.9 | 97.1 | 97.3 | 97.6 |
| Refrigerating capacity ratio | % (relative to R410A) | 98.5 | 97.9 | 97.4 | 96.8 | 96.1 | 97.0 | 96.7 | 96.3 |

Table 80

| Item | Unit | Ex. 204 | Ex. 205 | Ex. 206 | Ex. 207 | Ex. 208 | Ex. 209 | Ex. 210 | Ex. 211 |
|---|---|---|---|---|---|---|---|---|---|
| HFO-1132(E) | Mass% | 25.0 | 30.0 | 35.0 | 40.0 | 45.0 | 10.0 | 15.0 | 20.0 |
| HFO-1123 | Mass% | 23.1 | 18.1 | 13.1 | 8.1 | 3.1 | 33.1 | 28.1 | 23.1 |
| R1234yf | Mass% | 30.0 | 30.0 | 30.0 | 30.0 | 30.0 | 35.0 | 35.0 | 35.0 |
| R32 | Mass% | 21.9 | 21.9 | 21.9 | 21.9 | 21.9 | 21.9 | 21.9 | 21.9 |
| GWP | - | 150 | 150 | 150 | 150 | 150 | 150 | 150 | 150 |
| COP ratio | % (relative to R410A) | 97.8 | 98.1 | 98.4 | 98.7 | 99.1 | 97.7 | 97.9 | 98.1 |
| Refrigerating capacity ratio | % (relative to R410A) | 95.9 | 95.4 | 94.9 | 94.4 | 93.8 | 93.9 | 93.6 | 93.3 |

Table 81

| Item | Unit | Ex. 212 | Ex. 213 | Ex. 214 | Ex. 215 | Ex. 216 | Ex. 217 | Ex. 218 | Ex. 219 |
|---|---|---|---|---|---|---|---|---|---|
| HFO-1132(E) | Mass% | 25.0 | 30.0 | 35.0 | 40.0 | 10.0 | 15.0 | 20.0 | 25.0 |
| HFO-1123 | Mass% | 18.1 | 13.1 | 8.1 | 3.1 | 28.1 | 23.1 | 18.1 | 13.1 |
| R1234yf | Mass% | 35.0 | 35.0 | 35.0 | 35.0 | 40.0 | 40.0 | 40.0 | 40.0 |
| R32 | Mass% | 21.9 | 21.9 | 21.9 | 21.9 | 21.9 | 21.9 | 21.9 | 21.9 |
| GWP | - | 150 | 150 | 150 | 150 | 150 | 150 | 150 | 150 |
| COP ratio | % (relative to R410A) | 98.4 | 98.7 | 99.0 | 99.3 | 98.3 | 98.5 | 98.7 | 99.0 |
| Refrigerating capacity ratio | % (relative to R410A) | 92.9 | 92.4 | 91.9 | 91.3 | 90.8 | 90.5 | 90.2 | 89.7 |

Table 82

| Item | Unit | Ex. 220 | Ex. 221 | Ex. 222 | Ex. 223 | Ex. 224 | Ex. 225 | Ex. 226 | Comp. Ex. 101 |
|---|---|---|---|---|---|---|---|---|---|
| HFO-1132(E) | Mass% | 30.0 | 35.0 | 10.0 | 15.0 | 20.0 | 25.0 | 30.0 | 10.0 |
| HFO-1123 | Mass% | 8.1 | 3.1 | 23.1 | 18.1 | 13.1 | 8.1 | 3.1 | 18.1 |
| R1234yf | Mass% | 40.0 | 40.0 | 45.0 | 45.0 | 45.0 | 45.0 | 45.0 | 50.0 |
| R32 | Mass% | 21.9 | 21.9 | 21.9 | 21.9 | 21.9 | 21.9 | 21.9 | 21.9 |

(continued)

| Item | Unit | Ex. 220 | Ex. 221 | Ex. 222 | Ex. 223 | Ex. 224 | Ex. 225 | Ex. 226 | Comp. Ex. 101 |
|---|---|---|---|---|---|---|---|---|---|
| GWP | - | 150 | 150 | 150 | 150 | 150 | 150 | 150 | 150 |
| COP ratio | % (relative to R410A) | 99.3 | 99.6 | 98.9 | 99.1 | 99.3 | 99.6 | 99.9 | 99.6 |
| Refrigerating capacity ratio | % (relative to R410A) | 89.3 | 88.8 | 87.6 | 87.3 | 87.0 | 86.6 | 86.2 | 84.4 |

Table 83

| Item | Unit | Comp. Ex. 102 | Comp. Ex. 103 | Comp. Ex. 104 |
|---|---|---|---|---|
| HFO-1132(E) | Mass% | 15.0 | 20.0 | 25.0 |
| HFO-1123 | Mass% | 13.1 | 8.1 | 3.1 |
| R1234yf | Mass% | 50.0 | 50.0 | 50.0 |
| R32 | Mass% | 21.9 | 21.9 | 21.9 |
| GWP | - | 150 | 150 | 150 |
| COP ratio | % (relative to R410A) | 99.8 | 100.0 | 100.2 |
| Refrigerating capacity ratio | % (relative to R410A) | 84.1 | 83.8 | 83.4 |

Table 84

| Item | Unit | Ex. 227 | Ex. 228 | Ex. 229 | Ex. 230 | Ex. 231 | Ex. 232 | Ex. 233 | Comp. Ex. 105 |
|---|---|---|---|---|---|---|---|---|---|
| HFO-1132(E) | Mass% | 10.0 | 15.0 | 20.0 | 25.0 | 30.0 | 35.0 | 40.0 | 45.0 |
| HFO-1123 | Mass% | 55.7 | 50.7 | 45.7 | 40.7 | 35.7 | 30.7 | 25.7 | 20.7 |
| R1234yf | Mass% | 5.0 | 5.0 | 5.0 | 5.0 | 5.0 | 5.0 | 5.0 | 5.0 |
| R32 | Mass% | 29.3 | 29.3 | 29.3 | 29.3 | 29.3 | 29.3 | 29.3 | 29.3 |
| GWP | - | 199 | 199 | 199 | 199 | 199 | 199 | 199 | 199 |
| COP ratio | % (relative to R410A) | 95.9 | 96.0 | 96.2 | 96.3 | 96.6 | 96.8 | 97.1 | 97.3 |
| Refrigerating capacity ratio | % (relative to R410A) | 112.2 | 111.9 | 111.6 | 111.2 | 110.7 | 110.2 | 109.6 | 109.0 |

Table 85

| Item | Unit | Ex. 234 | Ex. 235 | Ex. 236 | Ex. 237 | Ex. 238 | Ex. 239 | Ex. 240 | Comp. Ex. 106 |
|---|---|---|---|---|---|---|---|---|---|
| HFO-1132(E) | Mass% | 10.0 | 15.0 | 20.0 | 25.0 | 30.0 | 35.0 | 40.0 | 45.0 |
| HFO-1123 | Mass% | 50.7 | 45.7 | 40.7 | 35.7 | 30.7 | 25.7 | 20.7 | 15.7 |
| R1234yf | Mass% | 10.0 | 10.0 | 10.0 | 10.0 | 10.0 | 10.0 | 10.0 | 10.0 |
| R32 | Mass% | 29.3 | 29.3 | 29.3 | 29.3 | 29.3 | 29.3 | 29.3 | 29.3 |
| GWP | - | 199 | 199 | 199 | 199 | 199 | 199 | 199 | 199 |

(continued)

| Item | Unit | Ex. 234 | Ex. 235 | Ex. 236 | Ex. 237 | Ex. 238 | Ex. 239 | Ex. 240 | Comp. Ex. 106 |
|---|---|---|---|---|---|---|---|---|---|
| COP ratio | % (relative to R410A) | 96.3 | 96.4 | 96.6 | 96.8 | 97.0 | 97.2 | 97.5 | 97.8 |
| Refrigerating capacity ratio | % (relative to R410A) | 109.4 | 109.2 | 108.8 | 108.4 | 107.9 | 107.4 | 106.8 | 106.2 |

Table 86

| Item | Unit | Ex. 241 | Ex. 242 | Ex. 243 | Ex. 244 | Ex. 245 | Ex. 246 | Ex. 247 | Comp. Ex. 107 |
|---|---|---|---|---|---|---|---|---|---|
| HFO-1132(E) | Mass% | 10.0 | 15.0 | 20.0 | 25.0 | 30.0 | 35.0 | 40.0 | 45.0 |
| HFO-1123 | Mass% | 45.7 | 40.7 | 35.7 | 30.7 | 25.7 | 20.7 | 15.7 | 10.7 |
| R1234yf | Mass% | 15.0 | 15.0 | 15.0 | 15.0 | 15.0 | 15.0 | 15.0 | 15.0 |
| R32 | Mass% | 29.3 | 29.3 | 29.3 | 29.3 | 29.3 | 29.3 | 29.3 | 29.3 |
| GWP | - | 199 | 199 | 199 | 199 | 199 | 199 | 199 | 199 |
| COP ratio | % (relative to R410A) | 96.7 | 96.8 | 97.0 | 97.2 | 97.4 | 97.7 | 97.9 | 98.2 |
| Refrigerating capacity ratio | % (relative to R410A) | 106.6 | 106.3 | 106.0 | 105.5 | 105.1 | 104.5 | 104.0 | 103.4 |

Table 87

| Item | Unit | Ex. 248 | Ex. 249 | Ex. 250 | Ex. 251 | Ex. 252 | Ex. 253 | Ex. 254 | Comp. Ex. 108 |
|---|---|---|---|---|---|---|---|---|---|
| HFO-1132(E) | Mass% | 10.0 | 15.0 | 20.0 | 25.0 | 30.0 | 35.0 | 40.0 | 45.0 |
| HFO-1123 | Mass% | 40.7 | 35.7 | 30.7 | 25.7 | 20.7 | 15.7 | 10.7 | 5.7 |
| R1234yf | Mass% | 20.0 | 20.0 | 20.0 | 20.0 | 20.0 | 20.0 | 20.0 | 20.0 |
| R32 | Mass% | 29.3 | 29.3 | 29.3 | 29.3 | 29.3 | 29.3 | 29.3 | 29.3 |
| GWP | - | 199 | 199 | 199 | 199 | 199 | 199 | 199 | 199 |
| COP ratio | % (relative to R410A) | 97.1 | 97.3 | 97.5 | 97.7 | 97.9 | 98.1 | 98.4 | 98.7 |
| Refrigerating capacity ratio | % (relative to R410A) | 103.7 | 103.4 | 103.0 | 102.6 | 102.2 | 101.6 | 101.1 | 100.5 |

Table 88

| Item | Unit | Ex. 255 | Ex. 256 | Ex. 257 | Ex. 258 | Ex. 259 | Ex. 260 | Ex. 261 | Ex. 262 |
|---|---|---|---|---|---|---|---|---|---|
| HFO-1132(E) | Mass% | 10.0 | 15.0 | 20.0 | 25.0 | 30.0 | 35.0 | 40.0 | 10.0 |
| HFO-1123 | Mass% | 35.7 | 30.7 | 25.7 | 20.7 | 15.7 | 10.7 | 5.7 | 30.7 |
| R1234yf | Mass% | 25.0 | 25.0 | 25.0 | 25.0 | 25.0 | 25.0 | 25.0 | 30.0 |
| R32 | Mass% | 29.3 | 29.3 | 29.3 | 29.3 | 29.3 | 29.3 | 29.3 | 29.3 |
| GWP | - | 199 | 199 | 199 | 199 | 199 | 199 | 199 | 199 |

(continued)

| Item | Unit | Ex. 255 | Ex. 256 | Ex. 257 | Ex. 258 | Ex. 259 | Ex. 260 | Ex. 261 | Ex. 262 |
|---|---|---|---|---|---|---|---|---|---|
| COP ratio | % (relative to R410A) | 97.6 | 97.7 | 97.9 | 98.1 | 98.4 | 98.6 | 98.9 | 98.1 |
| Refrigerating capacity ratio | % (relative to R410A) | 100.7 | 100.4 | 100.1 | 99.7 | 99.2 | 98.7 | 98.2 | 97.7 |

Table 89

| Item | Unit | Ex. 263 | Ex. 264 | Ex. 265 | Ex. 266 | Ex. 267 | Ex. 268 | Ex. 269 | Ex. 270 |
|---|---|---|---|---|---|---|---|---|---|
| HFO-1132(E) | Mass% | 15.0 | 20.0 | 25.0 | 30.0 | 35.0 | 10.0 | 15.0 | 20.0 |
| HFO-1123 | Mass% | 25.7 | 20.7 | 15.7 | 10.7 | 5.7 | 25.7 | 20.7 | 15.7 |
| R1234yf | Mass% | 30.0 | 30.0 | 30.0 | 30.0 | 30.0 | 35.0 | 35.0 | 35.0 |
| R32 | Mass% | 29.3 | 29.3 | 29.3 | 29.3 | 29.3 | 29.3 | 29.3 | 29.3 |
| GWP | - | 199 | 199 | 199 | 199 | 199 | 200 | 200 | 200 |
| COP ratio | % (relative to R410A) | 98.2 | 98.4 | 98.6 | 98.9 | 99.1 | 98.6 | 98.7 | 98.9 |
| Refrigerating capacity ratio | % (relative to R410A) | 97.4 | 97.1 | 96.7 | 96.2 | 95.7 | 94.7 | 94.4 | 94.0 |

Table 90

| Item | Unit | Ex. 271 | Ex. 272 | Ex. 273 | Ex. 274 | Ex. 275 | Ex. 276 | Ex. 277 | Ex. 278 |
|---|---|---|---|---|---|---|---|---|---|
| HFO-1132(E) | Mass% | 25.0 | 30.0 | 10.0 | 15.0 | 20.0 | 25.0 | 10.0 | 15.0 |
| HFO-1123 | Mass% | 10.7 | 5.7 | 20.7 | 15.7 | 10.7 | 5.7 | 15.7 | 10.7 |
| R1234yf | Mass% | 35.0 | 35.0 | 40.0 | 40.0 | 40.0 | 40.0 | 45.0 | 45.0 |
| R32 | Mass% | 29.3 | 29.3 | 29.3 | 29.3 | 29.3 | 29.3 | 29.3 | 29.3 |
| GWP | - | 200 | 200 | 200 | 200 | 200 | 200 | 200 | 200 |
| COP ratio | % (relative to R410A) | 99.2 | 99.4 | 99.1 | 99.3 | 99.5 | 99.7 | 99.7 | 99.8 |
| Refrigerating capacity ratio | % (relative to R410A) | 93.6 | 93.2 | 91.5 | 91.3 | 90.9 | 90.6 | 88.4 | 88.1 |

Table 91

| Item | Unit | Ex. 279 | Ex. 280 | Comp. Ex. 109 | Comp. Ex. 110 |
|---|---|---|---|---|---|
| HFO-1132(E) | Mass% | 20.0 | 10.0 | 15.0 | 10.0 |
| HFO-1123 | Mass% | 5.7 | 10.7 | 5.7 | 5.7 |
| R1234yf | Mass% | 45.0 | 50.0 | 50.0 | 55.0 |
| R32 | Mass% | 29.3 | 29.3 | 29.3 | 29.3 |
| GWP | - | 200 | 200 | 200 | 200 |

(continued)

| Item | Unit | Ex. 279 | Ex. 280 | Comp. Ex. 109 | Comp. Ex. 110 |
|---|---|---|---|---|---|
| COP ratio | % (relative to R410A) | 100.0 | 100.3 | 100.4 | 100.9 |
| Refrigerating capacity ratio | % (relative to R410A) | 87.8 | 85.2 | 85.0 | 82.0 |

Table 92

| Item | Unit | Ex. 281 | Ex. 282 | Ex. 283 | Ex. 284 | Ex. 285 | Comp. Ex. 111 | Ex. 286 | Ex. 287 |
|---|---|---|---|---|---|---|---|---|---|
| HFO-1132(E) | Mass% | 10.0 | 15.0 | 20.0 | 25.0 | 30.0 | 35.0 | 10.0 | 15.0 |
| HFO-1123 | Mass% | 40.9 | 35.9 | 30.9 | 25.9 | 20.9 | 15.9 | 35.9 | 30.9 |
| R1234yf | Mass% | 5.0 | 5.0 | 5.0 | 5.0 | 5.0 | 5.0 | 10.0 | 10.0 |
| R32 | Mass% | 44.1 | 44.1 | 44.1 | 44.1 | 44.1 | 44.1 | 44.1 | 44.1 |
| GWP | - | 298 | 298 | 298 | 298 | 298 | 298 | 299 | 299 |
| COP ratio | % (relative to R410A) | 97.8 | 97.9 | 97.9 | 98.1 | 98.2 | 98.4 | 98.2 | 98.2 |
| Refrigerating capacity ratio | % (relative to R410A) | 112.5 | 112.3 | 111.9 | 111.6 | 111.2 | 110.7 | 109.8 | 109.5 |

Table 93

| Item | Unit | Ex. 288 | Ex. 289 | Ex. 290 | Comp. Ex. 112 | Ex. 291 | Ex. 292 | Ex. 293 | Ex. 294 |
|---|---|---|---|---|---|---|---|---|---|
| HFO-1132(E) | Mass% | 20.0 | 25.0 | 30.0 | 35.0 | 10.0 | 15.0 | 20.0 | 25.0 |
| HFO-1123 | Mass% | 25.9 | 20.9 | 15.9 | 10.9 | 30.9 | 25.9 | 20.9 | 15.9 |
| R1234yf | Mass% | 10.0 | 10.0 | 10.0 | 10.0 | 15.0 | 15.0 | 15.0 | 15.0 |
| R32 | Mass% | 44.1 | 44.1 | 44.1 | 44.1 | 44.1 | 44.1 | 44.1 | 44.1 |
| GWP | - | 299 | 299 | 299 | 299 | 299 | 299 | 299 | 299 |
| COP ratio | % (relative to R410A) | 98.3 | 98.5 | 98.6 | 98.8 | 98.6 | 98.6 | 98.7 | 98.9 |
| Refrigerating capacity ratio | % (relative to R410A) | 109.2 | 108.8 | 108.4 | 108.0 | 107.0 | 106.7 | 106.4 | 106.0 |

Table 94

| Item | Unit | Ex. 295 | Comp. Ex. 113 | Ex. 296 | Ex. 297 | Ex. 298 | Ex. 299 | Ex. 300 | Ex. 301 |
|---|---|---|---|---|---|---|---|---|---|
| HFO-1132(E) | Mass% | 30.0 | 35.0 | 10.0 | 15.0 | 20.0 | 25.0 | 30.0 | 10.0 |
| HFO-1123 | Mass% | 10.9 | 5.9 | 25.9 | 20.9 | 15.9 | 10.9 | 5.9 | 20.9 |
| R1234yf | Mass% | 15.0 | 15.0 | 20.0 | 20.0 | 20.0 | 20.0 | 20.0 | 25.0 |
| R32 | Mass% | 44.1 | 44.1 | 44.1 | 44.1 | 44.1 | 44.1 | 44.1 | 44.1 |
| GWP | - | 299 | 299 | 299 | 299 | 299 | 299 | 299 | 299 |
| COP ratio | % (relative to R410A) | 99.0 | 99.2 | 99.0 | 99.0 | 99.2 | 99.3 | 99.4 | 99.4 |

(continued)

| Item | Unit | Ex. 295 | Comp. Ex. 113 | Ex. 296 | Ex. 297 | Ex. 298 | Ex. 299 | Ex. 300 | Ex. 301 |
|---|---|---|---|---|---|---|---|---|---|
| Refrigerating capacity ratio | % (relative to R410A) | 105.6 | 105.2 | 104.1 | 103.9 | 103.6 | 103.2 | 102.8 | 101.2 |

Table 95

| Item | Unit | Ex. 302 | Ex. 303 | Ex. 304 | Ex. 305 | Ex. 306 | Ex. 307 | Ex. 308 | Ex. 309 |
|---|---|---|---|---|---|---|---|---|---|
| HFO-1132(E) | Mass% | 15.0 | 20.0 | 25.0 | 10.0 | 15.0 | 20.0 | 10.0 | 15.0 |
| HFO-1123 | Mass% | 15.9 | 10.9 | 5.9 | 15.9 | 10.9 | 5.9 | 10.9 | 5.9 |
| R1234yf | Mass% | 25.0 | 25.0 | 25.0 | 30.0 | 30.0 | 30.0 | 35.0 | 35.0 |
| R32 | Mass% | 44.1 | 44.1 | 44.1 | 44.1 | 44.1 | 44.1 | 44.1 | 44.1 |
| GWP | - | 299 | 299 | 299 | 299 | 299 | 299 | 299 | 299 |
| COP ratio | % (relative to R410A) | 99.5 | 99.6 | 99.7 | 99.8 | 99.9 | 100.0 | 100.3 | 100.4 |
| Refrigerating capacity ratio | % (relative to R410A) | 101.0 | 100.7 | 100.3 | 98.3 | 98.0 | 97.8 | 95.3 | 95.1 |

Table 96

| Item | Unit | Ex. 400 |
|---|---|---|
| HFO-1132(E) | Mass% | 10.0 |
| HFO-1123 | Mass% | 5.9 |
| R1234yf | Mass% | 40.0 |
| R32 | Mass% | 44.1 |
| GWP | - | 299 |
| COP ratio | % (relative to R410A) | 100.7 |
| Refrigerating capacity ratio | % (relative to R410A) | 92.3 |

The above results indicate that the refrigerating capacity ratio relative to R410A is 85% or more in the following cases:

When the mass% of HFO-1132(E), HFO-1123, R1234yf, and R32 based on their sum is respectively represented by x, y, z, and a, in a ternary composition diagram in which the sum of HFO-1132(E), HFO-1123, and R1234yf is (100-a) mass%, a straight line connecting a point (0.0, 100.0-a, 0.0) and a point (0.0, 0.0, 100.0-a) is the base, and the point (0.0, 100.0-a, 0.0) is on the left side, if $0<a\leq11.1$, coordinates (x,y,z) in the ternary composition diagram are on, or on the left side of, a straight line AB that connects point A $(0.0134a^2-1.9681a+68.6, 0.0, -0.0134a^2+0.9681a+31.4)$ and point B $(0.0, 0.0144a^2-1.6377a+58.7, -0.0144a^2+0.6377a+41.3)$;

if $11.1<a\leq18.2$, coordinates (x,y,z) in the ternary composition diagram are on, or on the left side of, a straight line AB that connects point A $(0.0112a^2-1.9337a+68.484, 0.0, -0.0112a^2+0.9337a+31.516)$ and point B $(0.0, 0.0075a^2-1.5156a+58.199, -0.0075a^2+0.5156a+41.801)$;

if $18.2a<a\leq26.7$, coordinates (x,y,z) in the ternary composition diagram are on, or on the left side of, a straight line AB that connects point A $(0.0107a^2-1.9142a+68.305, 0.0, -0.0107a^2+0.9142a+31.695)$ and point B $(0.0, 0.009a^2-1.6045a+59.318, -0.009a^2+0.6045a+40.682)$;

if $26.7<a\leq36.7$, coordinates (x,y,z) in the ternary composition diagram are on, or on the left side of, a straight line AB that connects point A $(0.0103a^2-1.9225a+68.793, 0.0, -0.0103a^2+0.9225a+31.207)$ and point B $(0.0, 0.0046a^2-$

76

1.41a+57.286, - 0.0046a$^2$+0.41a+42.714); and

if 36.7<a≤46.7, coordinates (x,y,z) in the ternary composition diagram are on, or on the left side of, a straight line AB that connects point A (0.0085a$^2$-1.8102a+67.1, 0.0, - 0.0085a$^2$+0.8102a+32.9) and point B (0.0, 0.0012a$^2$-1.1659a+52.95, - 0.0012a$^2$+0.1659a+47.05).

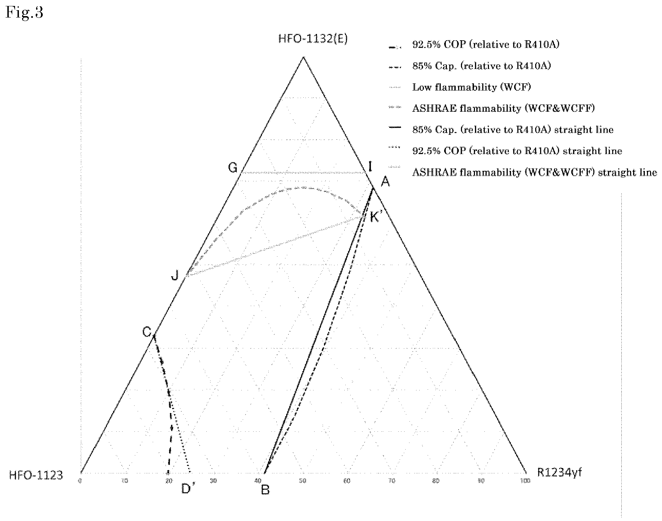

Actual points having a refrigerating capacity ratio of 85% or more form a curved line that connects point A and point B in Fig 3, and that extends toward the 1234yf side. Accordingly, when coordinates are on, or on the left side of, the straight line AB, the refrigerating capacity ratio relative to R410A is 85% or more.

Similarly, it was also found that in the ternary composition diagram, if 0<a≤11.1, when coordinates (x,y,z) are on, or on the left side of, a straight line D'C that connects point D' (0.0, 0.0224a$^2$+0.968a+75.4, -0.0224a$^2$-1.968a+24.6) and point C (-0.2304a$^2$-0.4062a+32.9, 0.2304a$^2$-0.5938a+67.1, 0.0); or if 11.1<a≤46.7, when coordinates are in the entire region, the COP ratio relative to that of R410A is 92.5% or more.

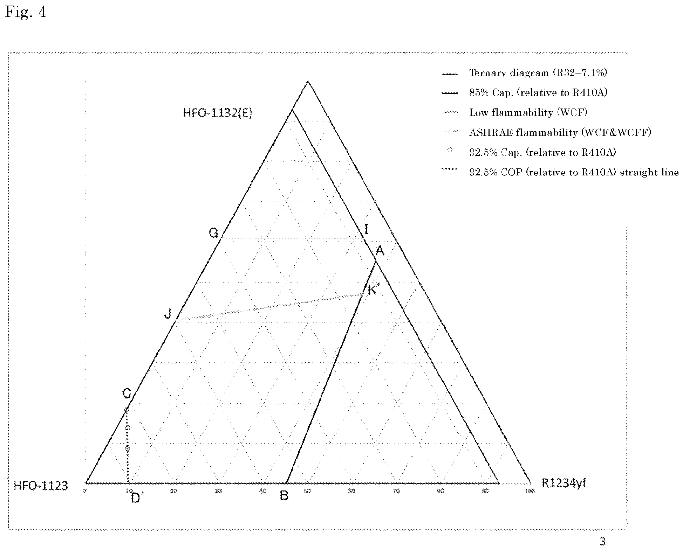

In Fig. 3, the COP ratio of 92.5% or more forms a curved line CD. In Fig. 3, an approximate line formed by connecting three points: point C (32.9, 67.1, 0.0) and points (26.6, 68.4, 5) (19.5, 70.5, 10) where the COP ratio is 92.5% when the concentration of R1234yf is 5 mass% and 10 mass was obtained, and a straight line that connects point C and point D' (0, 75.4, 24.6), which is the intersection of the approximate line and a point where the concentration of HFO-1132(E) is 0.0 mass% was defined as a line segment D'C. In Fig. 4, point D'(0, 83.4, 9.5) was similarly obtained from an approximate curve formed by connecting point C (18.4, 74.5, 0) and points (13.9, 76.5, 2.5) (8.7, 79.2, 5) where the COP ratio is 92.5%, and a straight line that connects point C and point D' was defined as the straight line D'C.

The composition of each mixture was defined as WCF. A leak simulation was performed using NIST Standard Reference Database REFLEAK Version 4.0 under the conditions of Equipment, Storage, Shipping, Leak, and Recharge according to the ASHRAE Standard 34-2013. The most flammable fraction was defined as WCFF.

For the flammability, the burning velocity was measured according to the ANSI/ASHRAE Standard 34-2013. Both WCF and WCFF having a burning velocity of 10 cm/s or less were determined to be classified as "Class 2L (lower flammability)."

A burning velocity test was performed using the apparatus shown in Fig. 1 in the following manner. First, the mixed refrigerants used had a purity of 99.5% or more, and were degassed by repeating a cycle of freezing, pumping, and thawing until no traces of air were observed on the vacuum gauge. The burning velocity was measured by the closed method. The initial temperature was ambient temperature. Ignition was performed by generating an electric spark between the electrodes in the center of a sample cell. The duration of the discharge was 1.0 to 9.9 ms, and the ignition energy was typically about 0.1 to 1.0 J. The spread of the flame was visualized using schlieren photographs. A cylindrical container (inner diameter: 155 mm, length: 198 mm) equipped with two light transmission acrylic windows was used as the sample cell, and a xenon lamp was used as the light source. Schlieren images of the flame were recorded by a high-speed digital video camera at a frame rate of 600 fps and stored on a PC.

The results are shown in Tables 97 to 104.

Table 97

| Item | | | Comp. Ex. 6 | Comp. Ex. 13 | Comp. Ex. 19 | Comp. Ex. 24 | Comp. Ex. 29 | Comp. Ex. 34 |
|---|---|---|---|---|---|---|---|---|
| WCF | HFO-1132(E) | Mass% | 72.0 | 60.9 | 55.8 | 52.1 | 48.6 | 45.4 |
| | HFO-1123 | Mass% | 28.0 | 32.0 | 33.1 | 33.4 | 33.2 | 32.7 |
| | R1234yf | Mass% | 0.0 | 0.0 | 0.0 | 0 | 0 | 0 |
| | R32 | Mass% | 0.0 | 7.1 | 11.1 | 14.5 | 18.2 | 21.9 |
| Burning velocity (WCF) | | cm/s | 10 | 10 | 10 | 10 | 10 | 10 |

Table 98

| Item | | | Comp. Ex. 39 | Comp. Ex. 45 | Comp. Ex. 51 | Comp. Ex. 57 | Comp. Ex. 62 |
|---|---|---|---|---|---|---|---|
| WCF | HFO-1132 (E) | Mass% | 41.8 | 40 | 35.7 | 32 | 30.4 |
| | HFO-1123 | Mass% | 31.5 | 30.7 | 23.6 | 23.9 | 21.8 |
| | R1234yf | Mass% | 0 | 0 | 0 | 0 | 0 |
| | R32 | Mass% | 26.7 | 29.3 | 36.7 | 44.1 | 47.8 |
| Burning velocity (WCF) | | cm/s | 10 | 10 | 10 | 10 | 10 |

Table 99

| Item | | | Comp. Ex. 7 | Comp. Ex. 14 | Comp. Ex. 20 | Comp. Ex. 25 | Comp. Ex. 30 | Comp. Ex. 35 |
|---|---|---|---|---|---|---|---|---|
| WCF | HFO-1132(E) | Mass% | 72.0 | 60.9 | 55.8 | 52.1 | 48.6 | 45.4 |
| | HFO-1123 | Mass% | 0.0 | 0.0 | 0.0 | 0 | 0 | 0 |
| | R1234yf | Mass% | 28.0 | 32.0 | 33.1 | 33.4 | 33.2 | 32.7 |
| | R32 | Mass% | 0.0 | 7.1 | 11.1 | 14.5 | 18.2 | 21.9 |
| Burning velocity (WCF) | | cm/s | 10 | 10 | 10 | 10 | 10 | 10 |

Table 100

| Item | | | Comp. Ex. 40 | Comp. Ex. 46 | Comp. Ex. 52 | Comp. Ex. 58 | Comp. Ex. 63 |
|---|---|---|---|---|---|---|---|
| WCF | HFO-1132 (E) | Mass% | 41.8 | 40 | 35.7 | 32 | 30.4 |
| | HFO-1123 | Mass% | 0 | 0 | 0 | 0 | 0 |
| | R1234yf | Mass% | 31.5 | 30.7 | 23.6 | 23.9 | 21.8 |
| | R32 | Mass% | 26.7 | 29.3 | 36.7 | 44.1 | 47.8 |
| Burning velocity (WCF) | | cm/s | 10 | 10 | 10 | 10 | 10 |

Table 101

| Item | | | Comp. Ex. 8 | Comp. Ex. 15 | Comp. Ex. 21 | Comp. Ex. 26 | Comp. Ex. 31 | Comp. Ex. 36 |
|---|---|---|---|---|---|---|---|---|
| WCF | HFO-1132 (E) | Mass% | 47.1 | 40.5 | 37.0 | 34.3 | 32.0 | 30.3 |
| | HFO-1123 | Mass% | 52.9 | 52.4 | 51.9 | 51.2 | 49.8 | 47.8 |
| | R1234yf | Mass% | 0.0 | 0.0 | 0.0 | 0.0 | 0.0 | 0.0 |
| | R32 | Mass% | 0.0 | 7.1 | 11.1 | 14.5 | 18.2 | 21.9 |

(continued)

| Item | | | Comp. Ex. 8 | Comp. Ex. 15 | Comp. Ex. 21 | Comp. Ex. 26 | Comp. Ex. 31 | Comp. Ex. 36 |
|---|---|---|---|---|---|---|---|---|
| Leak condition that results in WCFF | | | Storage/ Ship ping -40°C, 92% release, liquid phase side | Storage/ Ship ping -40°C, 92% release, liquid phase side | Storage/ Ship ping -40°C, 92% release, liquid phase side | Storage/ Ship ping -40°C, 92% release, liquid phase side | Storage/ Ship ping -40°C, 92% release, liquid phase side | Storage/ Ship ping -40°C, 92% release, liquid phase side |
| WCFF | HFO-1132 (E) | Mass% | 72.0 | 62.4 | 56.2 | 50.6 | 45.1 | 40.0 |
| | HFO-1123 | Mass% | 28.0 | 31.6 | 33.0 | 33.4 | 32.5 | 30.5 |
| | R1234yf | Mass% | 0.0 | 0.0 | 0.0 | 20.4 | 0.0 | 0.0 |
| | R32 | Mass% | 0.0 | 50.9 | 10.8 | 16.0 | 22.4 | 29.5 |
| Burning velocity (WCF) | | cm/s | 8 or less | 8 or less | 8 or less | 8 or less | 8 or less | 8 or less |
| Burning velocity (WCFF) | | cm/s | 10 | 10 | 10 | 10 | 10 | 10 |

Table 102

| Item | | | Comp. Ex. 41 | Comp. Ex. 47 | Comp. Ex. 53 | Comp. Ex. 59 | Comp. Ex. 64 |
|---|---|---|---|---|---|---|---|
| WCF | HFO-1132(E) | Mass % | 29.1 | 28.8 | 29.3 | 29.4 | 28.9 |
| | HFO-1123 | Mass % | 44.2 | 41.9 | 34.0 | 26.5 | 23.3 |
| | R1234yf | Mass % | 0.0 | 0.0 | 0.0 | 0.0 | 0.0 |
| | R32 | Mass % | 26.7 | 29.3 | 36.7 | 44.1 | 47.8 |
| Leak condition that results in WCFF | | | Storage/ Shippi ng -40°C, 92% release, liquid phase side | Storage/ Shippi ng -40°C, 92% release, liquid phase side | Storage/ Shippi ng -40°C, 92% release, liquid phase side | Storage/ Shippi ng -40°C, 90% release, gas phase side | Storage/ Shippi ng -40°C, 86% release, gas phase side |
| WCFF | HFO-1132(E) | Mass % | 34.6 | 32.2 | 27.7 | 28.3 | 27.5 |
| | HFO-1123 | Mass % | 26.5 | 23.9 | 17.5 | 18.2 | 16.7 |
| | R1234yf | Mass % | 0.0 | 0.0 | 0.0 | 0.0 | 0.0 |
| | R32 | Mass % | 38.9 | 43.9 | 54.8 | 53.5 | 55.8 |
| Burning velocity (WCF) | | cm/s | 8 or less | 8 or less | 8.3 | 9.3 | 9.6 |

(continued)

| Item | | Comp. Ex. 41 | Comp. Ex. 47 | Comp. Ex. 53 | Comp. Ex. 59 | Comp. Ex. 64 |
|---|---|---|---|---|---|---|
| Burning velocity (WCFF) | cm/s | 10 | 10 | 10 | 10 | 10 |

Table 103

| Item | | | Comp. Ex. 9 | Comp. Ex. 16 | Comp. Ex. 22 | Comp. Ex. 27 | Comp. Ex. 32 | Comp. Ex. 37 |
|---|---|---|---|---|---|---|---|---|
| WCF | HFO-1132(E) | Mass % | 61.7 | 47.0 | 41.0 | 36.5 | 32.5 | 28.8 |
| | HFO-1123 | Mass % | 5.9 | 7.2 | 6.5 | 5.6 | 4.0 | 2.4 |
| | R1234yf | Mass % | 32.4 | 38.7 | 41.4 | 43.4 | 45.3 | 46.9 |
| | R32 | Mass % | 0.0 | 7.1 | 11.1 | 14.5 | 18.2 | 21.9 |
| Leak condition that results in WCFF | | | Storage/ Shipping -40°C, 0% release, gas phase side | Storage/ Shipping -40°C, 0% release, gas phase side | Storage/ Shipping -40°C, 0% release, gas phase side | Storage/ Shipping -40°C, 92% release, liquid phase side | Storage/ Shipping -40°C, 0% release, gas phase side | Storage/ Shipping -40°C, 0% release, gas phase side |
| WCFF | HFO-1132(E) | Mass % | 72.0 | 56.2 | 50.4 | 46.0 | 42.4 | 39.1 |
| | HFO-1123 | Mass % | 10.5 | 12.6 | 11.4 | 10.1 | 7.4 | 4.4 |
| | R1234yf | Mass % | 17.5 | 20.4 | 21.8 | 22.9 | 24.3 | 25.7 |
| | R32 | Mass % | 0.0 | 10.8 | 16.3 | 21.0 | 25.9 | 30.8 |
| Burning velocity (WCF) | | cm/s | 8 or less | 8 or less | 8 or less | 8 or less | 8 or less | 8 or less |
| Burning velocity (WCFF) | | cm/s | 10 | 10 | 10 | 10 | 10 | 10 |

Table 104

| Item | | | Comp. Ex. 42 | Comp. Ex. 48 | Comp. Ex. 54 | Comp. Ex. 60 | Comp. Ex. 65 |
|---|---|---|---|---|---|---|---|
| WCF | HFO-1132(E) | Mass % | 24.8 | 24.3 | 22.5 | 21.1 | 20.4 |
| | HFO-1123 | Mass % | 0.0 | 0.0 | 0.0 | 0.0 | 0.0 |
| | R1234yf | Mass % | 48.5 | 46.4 | 40.8 | 34.8 | 31.8 |
| | R32 | Mass % | 26.7 | 29.3 | 36.7 | 44.1 | 47.8 |

(continued)

| Item | | | Comp. Ex. 42 | Comp. Ex. 48 | Comp. Ex. 54 | Comp. Ex. 60 | Comp. Ex. 65 |
|---|---|---|---|---|---|---|---|
| Leak condition that results in WCFF | | | Storage/ Shippin 9 -40°C, 0% release, gas phase side | Storage/ Shippin 9 -40°C, 0% release, gas phase side | Storage/ Shippin 9 -40°C, 0% release, gas phase side | Storage/ Shippin 9 -40°C, 0% release, gas phase side | Storage/ Shippin 9 -40°C, 0% release, gas phase side |
| WCFF | HFO-1132(E) | Mass % | 35.3 | 34.3 | 31.3 | 29.1 | 28.1 |
| | HFO-1123 | Mass % | 0.0 | 0.0 | 0.0 | 0.0 | 0.0 |
| | R1234yf | Mass % | 27.4 | 26.2 | 23.1 | 19.8 | 18.2 |
| | R32 | Mass % | 37.3 | 39.6 | 45.6 | 51.1 | 53.7 |
| Burning velocity (WCF) | | cm/s | 8 or less | 8 or less | 8 or less | 8 or less | 8 or less |
| Burning velocity (WCFF) | | cm/s | 10 | 10 | 10 | 10 | 10 |

The results in Tables 97 to 100 indicate that the refrigerant has a WCF lower flammability in the following cases: When the mass% of HFO-1132(E), HFO-1123, R1234yf, and R32 based on their sum in the mixed refrigerant of HFO-1132(E), HFO-1123, R1234yf, and R32 is respectively represented by x, y, z, and a, coordinates (x,y,z) in a ternary composition diagram in which the sum of HFO-1132(E), HFO-1123, and R1234yf is (100-a) mass% and a straight line connecting a point (0.0, 100.0-a, 0.0) and a point (0.0, 0.0, 100.0-a) is the base, if 0<a≤11.1, coordinates (x,y,z) in the ternary composition diagram are on or below a straight line GI that connects point G ($0.026a^2-1.7478a+72.0$, $-0.026a^2+0.7478a+28.0$, 0.0) and point I ($0.026a^2-1.7478a+72.0$, 0.0, $-0.026a^2+0.7478a+28.0$);
if 11.1<a≤18.2, coordinates (x,y,z) in the ternary composition diagram are on or below a straight line GI that connects point G ($0.02a^2-1.6013a+71.105$, $-0.02a^2+0.6013a+28.895$, 0.0) and point I ($0.02a^2-1.6013a+71.105$, 0.0, $-0.02a^2+0.6013a+28.895$); if 18.2<a≤26.7, coordinates (x,y,z) in the ternary composition diagram are on or below a straight line GI that connects point G ($0.0135a^2-1.4068a+69.727$, $-0.0135a^2+0.4068a+30.273$, 0.0) and point I ($0.0135a^2-1.4068a+69.727$, 0.0, $-0.0135a^2+0.4068a+30.273$); if 26.7<a≤36.7, coordinates (x,y,z) in the ternary composition diagram are on or below a straight line GI that connects point G ($0.0111a^2-1.3152a+68.986$, $-0.0111a^2+0.3152a+31.014$, 0.0) and point I ($0.0111a^2-1.3152a+68.986$, 0.0, $-0.0111a^2+0.3152a+31.014$); and if 36.7<a≤46.7, coordinates (x,y,z) in the ternary composition diagram are on or below a straight line GI that connects point G ($0.0061a^2-0.9918a+63.902$, $-0.0061a^2-0.0082a+36.098$,0.0) and point I ($0.0061a^2-0.9918a+63.902$, 0.0, $-0.0061a^2-0.0082a+36.098$).
Three points corresponding to point G (Table 105) and point I (Table 106) were individually obtained in each of the following five ranges by calculation, and their approximate expressions were obtained.

Table 105

| Item | 11.1≥R32>0 | | | 18.2≥R32≥11.1 | | | 26.7≤R32≥18.2 | | |
|---|---|---|---|---|---|---|---|---|---|
| R32 | 0 | 7.1 | 11.1 | 11.1 | 14.5 | 18.2 | 18.2 | 21.9 | 26.7 |
| HFO-1132(E) | 72.0 | 60.9 | 55.8 | 55.8 | 52.1 | 48.6 | 48.6 | 45.4 | 41.8 |
| HFO-1123 | 28.0 | 32.0 | 33.1 | 33.1 | 33.4 | 33.2 | 33.2 | 32.7 | 31.5 |
| R1234yf | 0 | 0 | 0 | 0 | 0 | 0 | 0 | 0 | 0 |
| R32 | a | | | a | | | a | | |
| HFO-1132(E) Approximate expression | $0.026a^2-1.7478a+72.0$ | | | $0.02a^2-1.6013a+71.105$ | | | $0.0135a^2-1.4068a+69.727$ | | |

(continued)

| Item | 11.1≥R32>0 | 18.2≥R32≥11.1 | 26.7≤R32≥18.2 |
|---|---|---|---|
| HFO-1123 Approximate expression | $-0.026a^2+0..7478a+28.0$ | $-0.02a^2+0..6013a+28.895$ | $-0.0135a^2+0.4068a+30.273$ |
| R1234yf Approximate expression | 0 | 0 | 0 |

| Item | 36.7≥R32≥26.7 | | | 46.7≥R32≥36.7 | | |
|---|---|---|---|---|---|---|
| R32 | 26.7 | 29.3 | 36.7 | 36.7 | 44.1 | 47.8 |
| HFO-1132(E) | 41.8 | 40.0 | 35.7 | 35.7 | 32.0 | 30.4 |
| HFO-1123 | 31.5 | 30.7 | 27.6 | 27.6 | 23.9 | 21.8 |
| R1234yf | 0 | 0 | 0 | 0 | 0 | 0 |
| R32 | a | | | a | | |
| HFO-1132(E) Approximate expression | $0.0111a2-1.3152a+68.986$ | | | $0.0061a^2-0.9918a+63.902$ | | |
| HFO-1123 Approximate expression | $-0.0111a2+0.3152a+31.014$ | | | $-0.0061a^2-0.0082a+36.098$ | | |
| R1234yf Approximate expression | 0 | | | 0 | | |

Table 106

| Item | 11.1≥R32>0 | | | 18.2≥R32≥11.1 | | | 26.7≤R32≥18.2 | | |
|---|---|---|---|---|---|---|---|---|---|
| R32 | 0 | 7.1 | 11.1 | 11.1 | 14.5 | 18.2 | 18.2 | 21.9 | 26.7 |
| HFO-1132(E) | 72.0 | 60.9 | 55.8 | 55.8 | 52.1 | 48.6 | 48.6 | 45.4 | 41.8 |
| HFO-1123 | 0 | 0 | 0 | 0 | 0 | 0 | 0 | 0 | 0 |
| R1 234yf | 28.0 | 32.0 | 33.1 | 33.1 | 33.4 | 33.2 | 33.2 | 32.7 | 31.5 |
| R32 | a | | | a | | | a | | |
| HFO-1132(E) Approximate expression | $0.026a^2-1.7478a+72.0$ | | | $0.02a^2-1.6013a+71.105$ | | | $0.0135a^2-1.4068a+69.727$ | | |
| HFO-1123 Approximate expression | 0 | | | 0 | | | 0 | | |
| R1234yf Approximate expression | $-0.026a^2+0.7478a+28.0$ | | | $-0.02a^2+0.6013a+28.895$ | | | $-0.0135a^2+0.4068a+30.273$ | | |

| Item | 36.7≥R32≥26.7 | | | 46.7≥R32≥36.7 | | |
|---|---|---|---|---|---|---|
| R32 | 26.7 | 29.3 | 36.7 | 36.7 | 44.1 | 47.8 |
| HFO-1132(E) | 41.8 | 40.0 | 35.7 | 35.7 | 32.0 | 30.4 |
| HFO-1123 | 0 | 0 | 0 | 0 | 0 | 0 |
| R1 234yf | 31.5 | 30.7 | 23.6 | 23.6 | 23.5 | 21.8 |
| R32 | x | | | x | | |
| HFO-1132(E) Approximate expression | $0.0111a^2 - 1.3152a + 68.986$ | | | $0.0061a^2 - 0.9918a + 63.902$ | | |
| HFO-1123 Approximate expression | 0 | | | 0 | | |
| R1234yf Approximate expression | $-0.0111a^2 + 0.3152a + 31.014$ | | | $-0.0061a^2 - 0.0082a + 36.098$ | | |

The results in Tables 101 to 104 indicate that the refrigerant is determined to have a WCFF lower flammability, and the flammability classification according to the ASHRAE Standard is "2L (flammability)" in the following cases: When the mass% of HFO-1132(E), HFO-1123, R1234yf, and R32 based on their sum in the mixed refrigerant of HFO-1132(E), HFO-1123, R1234yf, and R32 is respectively represented by x, y, z, and a, in a ternary composition diagram in which the sum of HFO-1132(E), HFO-1123, and R1234yf is (100-a) mass% and a straight line connecting a point (0.0, 100.0-a, 0.0) and a point (0.0, 0.0, 100.0-a) is the base, if $0<a\leq11.1$, coordinates (x,y,z) in the ternary composition diagram are on or below a straight line JK' that connects point J ($0.0049a^2 - 0.9645a + 47.1$, $-0.0049a^2 - 0.0355a + 52.9$, 0.0) and point K'($0.0514a^2 - 2.4353a + 61.7$, $-0.0323a^2 + 0.4122a + 5.9$, $-0.0191a^2 + 1.0231a + 32.4$); if $11.1<a\leq18.2$, coordinates are on a straight line JK' that connects point J ($0.0243a^2 - 1.4161a + 49.725$, $-0.0243a^2 + 0.4161a + 50.275$, 0.0) and point K'($0.0341a^2 - 2.1977a + 61.187$, $-0.0236a^2 + 0.34a + 5.636$, $-0.0105a^2 + 0.8577a + 33.177$); if $18.2<a\leq26.7$, coordinates are on or below a straight line JK' that connects point J ($0.0246a^2 - 1.4476a + 50.184$, $-0.0246a^2 + 0.4476a + 49.816$, 0.0) and point K' ($0.0196a^2 - 1.7863a + 58.515$, $-0.0079a^2 - 0.1136a + 8.702$, $-0.0117a^2 + 0.8999a + 32.783$); if $26.7<a\leq36.7$, coordinates are on or below a straight line JK' that connects point J ($0.0183a^2 - 1.1399a + 46.493$, $-0.0183a^2 + 0.1399a + 53.507$, 0.0) and point K' ($-0.0051a^2 + 0.0929a + 25.95$, 0.0, $0.0051a^2 - 1.0929a + 74.05$); and if $36.7<a\leq46.7$, coordinates are on or below a straight line JK' that connects point J ($-0.0134a^2 + 1.0956a + 7.13$, $0.0134a^2 - 2.0956a + 92.87$, 0.0) and point K'($-1.892a + 29.443$, 0.0, $0.892a + 70.557$).

Actual points having a WCFF lower flammability form a curved line that connects point J and point K' (on the straight line AB) in Fig. 3 and extends toward the HFO-1132(E) side. Accordingly, when coordinates are on or below the straight line JK', WCFF lower flammability is achieved.

Three points corresponding to point J (Table 107) and point K' (Table 108) were individually obtained in each of the following five ranges by calculation, and their approximate expressions were obtained.

Table 107

| Item | 11.1≥R32>0 | | | 18.2≥R32≥11.1 | | | 26.7≤R32≥18.2 | | |
|---|---|---|---|---|---|---|---|---|---|
| R32 | 0 | 7.1 | 11.1 | 11.1 | 14.5 | 18.2 | 18.2 | 21.9 | 26.7 |
| HFO-1132(E) | 47.1 | 40.5 | 37 | 37.0 | 34.3 | 32.0 | 32.0 | 30.3 | 29.1 |
| HFO-1123 | 52.9 | 52.4 | 51.9 | 51.9 | 51.2 | 49.8 | 49.8 | 47.8 | 44.2 |
| R1234yf | 0 | 0 | 0 | 0 | 0 | 0 | 0 | 0 | 0 |
| R32 | a | | | a | | | a | | |
| HFO-1132(E) Approximate expression | $0.0049a^2-0.9645a+47.1$ | | | $0.0243a^2-1.4161a+49.725$ | | | $0.0246a^2-1.4476a+50.184$ | | |
| HFO-1123 Approximate expression | $-0.0049a^2-0.0355a+52.9$ | | | $-0.0243a^2+0.4161a+50.275$ | | | $-0.0246a^2+0.4476a+49.816$ | | |
| R1234yf Approximate expression | 0 | | | 0 | | | 0 | | |

| Item | 36.7≥R32≥26.7 | | | 47.8≥R32≥36.7 | | |
|---|---|---|---|---|---|---|
| R32 | 26.7 | 29.3 | 36.7 | 36.7 | 44.1 | 47.8 |
| HFO-1132(E) | 29.1 | 28.8 | 29.3 | 29.3 | 29.4 | 28.9 |
| HFO-1123 | 44.2 | 41.9 | 34.0 | 34.0 | 26.5 | 23.3 |
| R1234yf | 0 | 0 | 0 | 0 | 0 | 0 |
| R32 | a | | | a | | |
| HFO-1132(E) Approximate expression | $0.0183a^2-1.1399a+46.493$ | | | $-0.0134a^2+1.0956a+7.13$ | | |
| HFO-1123 Approximate expression | $-0.0183a^2+0.1399a+53.507$ | | | $0.0134a^2-2.0956a+92.87$ | | |
| R1234yf Approximate expression | 0 | | | 0 | | |

Table 108

| Item | 11.1≥R32>0 | | | 18.2≥R32≥11.1 | | | 26.7≥R32≥18.2 | | |
|---|---|---|---|---|---|---|---|---|---|
| R32 | 0 | 7.1 | 11.1 | 11.1 | 14.5 | 18.2 | 18.2 | 21.9 | 26.7 |
| HFO-1132(E) | 61.7 | 47.0 | 41.0 | 41.0 | 36.5 | 32.5 | 32.5 | 28.8 | 24.8 |
| HFO-1123 | 5.9 | 7.2 | 6.5 | 6.5 | 5.6 | 4.0 | 4.0 | 2.4 | 0 |
| R1234yf | 32.4 | 38.7 | 41.4 | 41.4 | 43.4 | 45.3 | 45.3 | 46.9 | 48.5 |
| R32 | x | | | x | | | X | | |
| HFO-1132(E) Approximate expression | $0.0514a^2-2.4353a+61.7$ | | | $0.0341a^2-2.1977a+61.187$ | | | $0.0196a^2-1.7863a+58.515$ | | |
| HFO-1123 Approximate expression | $-0.0323a^2+0.4122a+5.9$ | | | $-0.0236a^2+0.34a+5.636$ | | | $-0.0079a^2-0.1136a+8.702$ | | |
| R1234yf Approximate expression | $-0.0191a^2+1.0231a+32.4$ | | | $-0.0105a^2+0.8577a+33.177$ | | | $-0.0117a^2+0.8999a+32.783$ | | |

| Item | 36.7≥R32≥26.7 | | | 46.7≥R32≥36.7 | | |
|---|---|---|---|---|---|---|
| R32 | 26.7 | 29.3 | 36.7 | 36.7 | 44.1 | 47.8 |
| HFO-1132(E) | 24.8 | 24.3 | 22.5 | 22.5 | 21.1 | 20.4 |
| HFO-1123 | 0 | 0 | 0 | 0 | 0 | 0 |
| R1234yf | 48.5 | 46.4 | 40.8 | 40.8 | 34.8 | 31.8 |
| R32 | x | | | x | | |
| HFO-1132(E) Approximate expression | $-0.0051a^2+0.0929a+25.95$ | | | $-1.892a+29.443$ | | |
| HFO-1123 Approximate expression | 0 | | | 0 | | |
| R1234yf Approximate expression | $0.0051a^2-1.0929a+74.05$ | | | $0.892a + 70.557$ | | |

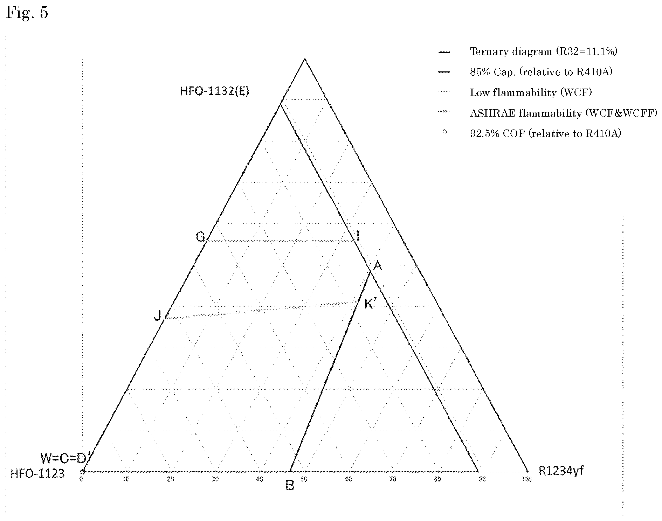

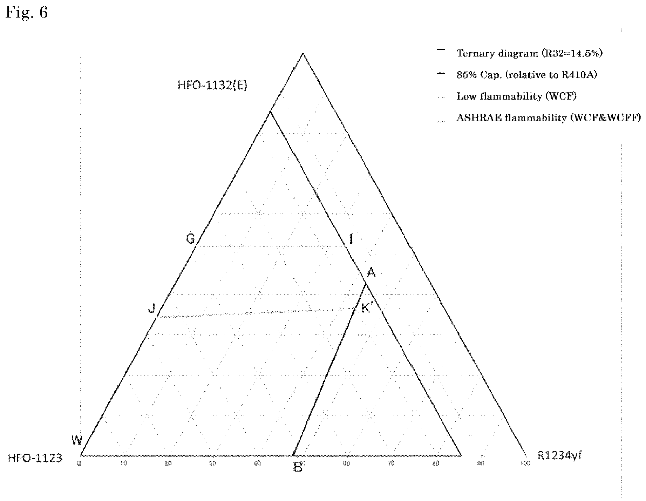

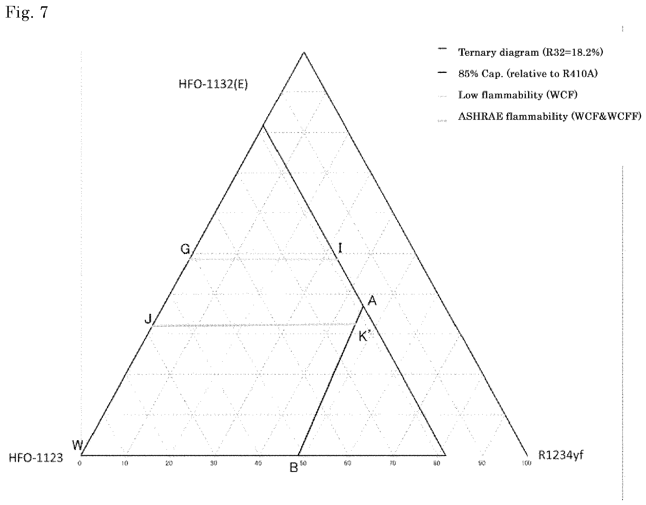

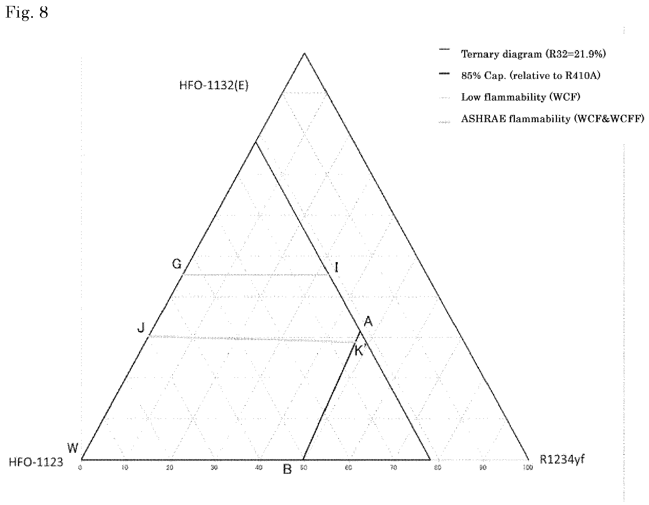

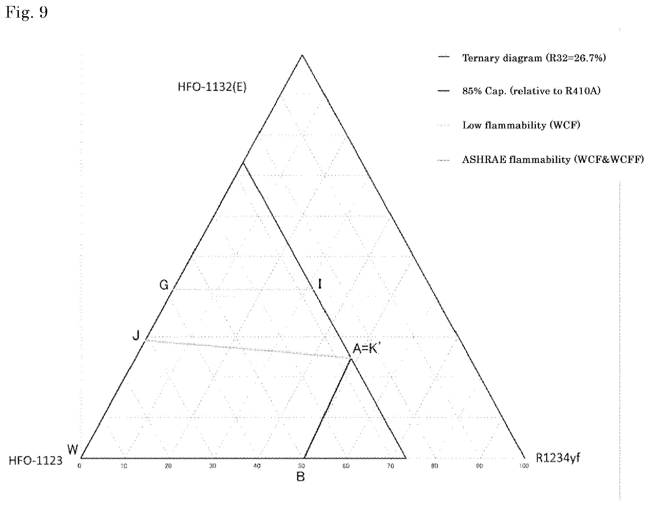

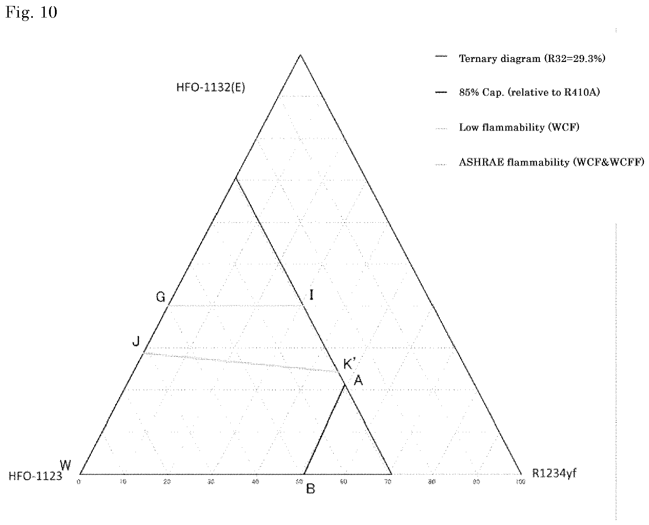

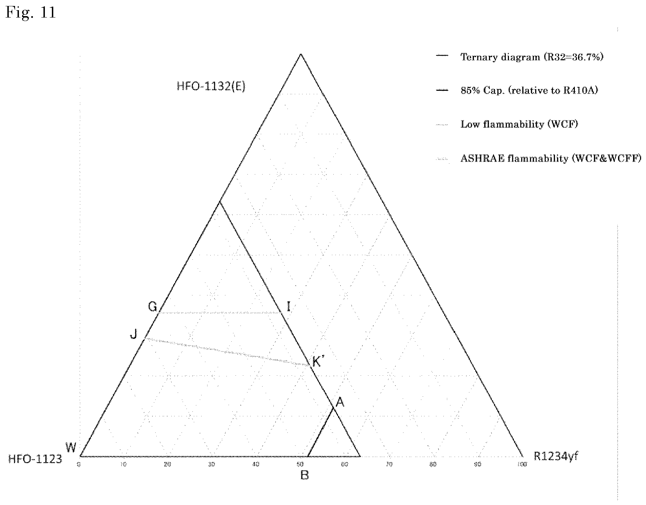

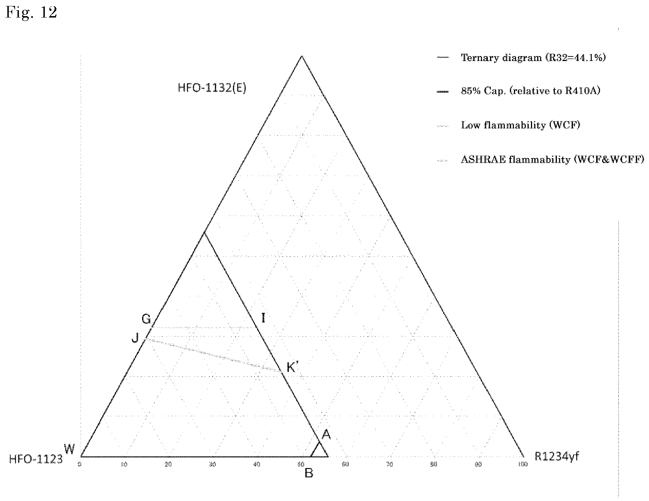

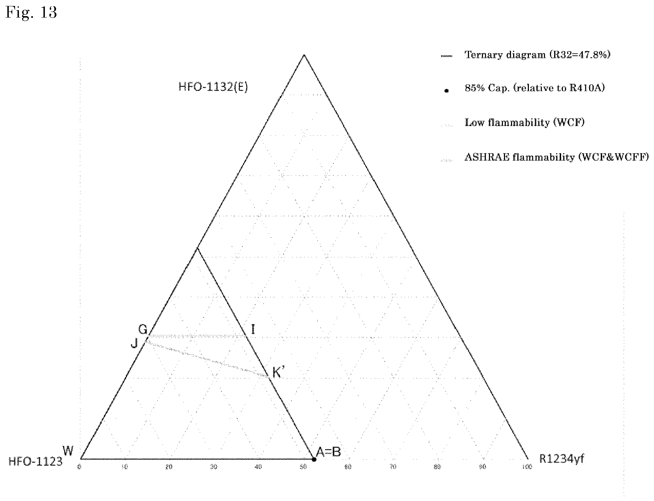

Figs. 3 to 13 show compositions whose R32 content a (mass%) is 0 mass%, 7.1 mass%, 11.1 mass%, 14.5 mass%, 18.2 mass%, 21.9 mass%, 26.7 mass%, 29.3 mass%, 36.7 mass%, 44.1 mass%, and 47.8 mass%, respectively.

Points A, B, C, and D' were obtained in the following manner according to approximate calculation.

Point A is a point where the content of HFO-1123 is 0 mass%, and a refrigerating capacity ratio of 85% relative to that of R410A is achieved. Three points corresponding to point A were obtained in each of the following five ranges by calculation, and their approximate expressions were obtained (Table 109).

Table 109

| Item | 11.1≥R32>0 | | | 18.2≥R32≥11.1 | | | 26.7≥R32≥18.2 | | |
|---|---|---|---|---|---|---|---|---|---|
| R32 | 0 | 7.1 | 11.1 | 11.1 | 14.5 | 18.2 | 18.2 | 21.9 | 26.7 |
| HFO-1132(E) | 68.6 | 55.3 | 48.4 | 48.4 | 42.8 | 37 | 37 | 31.5 | 24.8 |
| HFO-1123 | 0 | 0 | 0 | 0 | 0 | 0 | 0 | 0 | 0 |
| R1234yf | 31.4 | 37.6 | 40.5 | 40.5 | 42.7 | 44.8 | 44.8 | 46.6 | 48.5 |
| R32 | a | | | a | | | a | | |
| HFO-1132(E) Approximate expression | $0.0134a^2-1.9681a+68.6$ | | | $0.0112a^2-1.9337a+68.484$ | | | $0.0107a^2-1.9142a+68.305$ | | |
| HFO-1123 Approximate expression | 0 | | | 0 | | | 0 | | |
| R1234yf Approximate expression | $-0.0134a^2+0.9681a+31.4$ | | | $-0.0112a^2+0.M869337a+31.516$ | | | $-0.0107a^2+0.9142a+31.695$ | | |
| Item | 36.7≥R32≥26.7 | | | 46.7≥R32≥36.7 | | | | | |
| R32 | 26.7 | 29.3 | 36.7 | 36.7 | 44.1 | | 47.8 | | |
| HFO-1132(E) | 24.8 | 21.3 | 12.1 | 12.1 | 3.8 | | 0 | | |
| HFO-1123 | 0 | 0 | 0 | 0 | 0 | | 0 | | |
| R1234yf | 48.5 | 49.4 | 51.2 | 51.2 | 52.1 | | 52.2 | | |
| R32 | a | | | a | | | | | |
| HFO-1132(E) Approximate expression | $0.0103a^2-1.9225a+68.793$ | | | $0.0085a^2-1.8102a+67.1$ | | | | | |
| HFO-1123 Approximate expression | 0 | | | 0 | | | | | |
| R1234yf Approximate expression | $-0.0103a^2+0.9225a+31..207$ | | | $-0.0085a^2+0.8102a+32.9$ | | | | | |

Point B is a point where the content of HFO-1132(E) is 0 mass%, and a refrigerating capacity ratio of 85% relative to that of R410A is achieved.

Three points corresponding to point B were obtained in each of the following five ranges by calculation, and their approximate expressions were obtained (Table 110).

Table 110

| Item | 11.1≥R32>0 | | | 18.2≥R32≥11.1 | | | 26.7≥R32≥18.2 | | |
|---|---|---|---|---|---|---|---|---|---|
| R32 | 0 | 7.1 | 11.1 | 11.1 | 14.5 | 18.2 | 18.2 | 21.9 | 26.7 |
| HFO-1132 (E) | 0 | 0 | 0 | 0 | 0 | 0 | 0 | 0 | 0 |
| HFO-1123 | 58.7 | 47.8 | 42.3 | 42.3 | 37.8 | 33.1 | 33.1 | 28.5 | 22.9 |
| R1234yf | 41.3 | 45.1 | 46.6 | 46.6 | 47.7 | 48.7 | 48.7 | 49.6 | 50.4 |
| R32 | a | | | a | | | a | | |
| HFO-1132(E) Approximate expression | 0 | | | 0 | | | 0 | | |
| HFO-1123 Approximate expression | $0.0144a^2-1.6377a+58.7$ | | | $0.0075a^2-1.5156a+58.199$ | | | $0.009a^2-1.6045a+59.318$ | | |
| R1234yf Approximate expression | $-0.0144a^2+0.6377a+41.3$ | | | $-0.0075a^2+0.5156a+41.801$ | | | $-0.009a^2+0.6045a+40.682$ | | |

| Item | 36.7≥R32≥26.7 | | | 46.7≥R32≥36.7 | | |
|---|---|---|---|---|---|---|
| R32 | 26.7 | 29.3 | 36.7 | 36.7 | 44.1 | 47.8 |
| HFO-1132(E) | 0 | 0 | 0 | 0 | 0 | 0 |
| HFO-1123 | 22.9 | 19.9 | 11.7 | 11.8 | 3.9 | 0 |
| R1234yf | 50.4 | 50.8 | 51.6 | 51.5 | 52.0 | 52.2 |
| R32 | a | | | a | | |
| HFO-1132(E) Approximate expression | 0 | | | 0 | | |
| HFO-1123 Approximate expression | $0.0046a^2-1.41a+57.286$ | | | $0.0012a^2-1.1659a+52.95$ | | |
| R1234yf Approximate expression | $-0.0046a^2+0.41a+42.714$ | | | $-0.0012a^2+0.1659a+47.05$ | | |

Point D' is a point where the content of HFO-1132(E) is 0 mass%, and a COP ratio of 95.5% relative to that of R410A is achieved.

Three points corresponding to point D' were obtained in each of the following by calculation, and their approximate expressions were obtained (Table 111).

Table 111

| Item | 11.1≥R32>0 | | |
|---|---|---|---|
| R32 | 0 | 7.1 | 11.1 |
| HFO-1132(E) | 0 | 0 | 0 |
| HFO-1123 | 75.4 | 83.4 | 88.9 |
| R1234yf | 24.6 | 9.5 | 0 |
| R32 | a | | |
| HFO-1132(E) Approximate expression | 0 | | |
| HFO-1123 Approximate expression | $0.0224a^2+0.968a+75.4$ | | |
| R1234yf Approximate expression | $-0.0224a^2-1.968a+24.6$ | | |

Point C is a point where the content of R1234yf is 0 mass%, and a COP ratio of 95.5% relative to that of R410A is achieved.

Three points corresponding to point C were obtained in each of the following by calculation, and their approximate expressions were obtained (Table 112).

Table 112

| Item | 11.1≥R32>0 | | |
|---|---|---|---|
| R32 | 0 | 7.1 | 11.1 |
| HFO-1132(E) | 32.9 | 18.4 | 0 |
| HFO-1123 | 67.1 | 74.5 | 88.9 |
| R1234yf | 0 | 0 | 0 |
| R32 | a | | |

92

(continued)

| Item | 11.1≥R32>0 |
|---|---|
| HFO-1132(E) Approximate expression | $-0.2304a^2-0.4062a+32.9$ |
| HFO-1123 Approximate expression | $0.2304a^2-0.5938a+67.1$ |
| R1234yf Approximate expression | 0 |

(5-4) Refrigerant D

The refrigerant D according to the present disclosure is a mixed refrigerant comprising trans-1,2-difluoroethylene (HFO-1132(E)), difluoromethane (R32), and 2,3,3,3-tetrafluoro-1-propene (R1234yf).

The refrigerant D according to the present disclosure has various properties that are desirable as an R410A-alternative refrigerant; i.e., a refrigerating capacity equivalent to that of R410A, a sufficiently low GWP, and a lower flammability (Class 2L) according to the ASHRAE standard.

The refrigerant D according to the present disclosure is preferably a refrigerant wherein

when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by line segments IJ, JN, NE, and EI that connect the following 4 points:

point I (72.0, 0.0, 28.0),
point J (48.5, 18.3, 33.2),
point N (27.7, 18.2, 54.1), and
point E (58.3, 0.0, 41.7),
or on these line segments (excluding the points on the line segment EI);

the line segment IJ is represented by coordinates $(0.0236y^2-1.7616y+72.0, y, -0.0236y^2+0.7616y+28.0)$;
the line segment NE is represented by coordinates $(0.012y^2-1.9003y+58.3, y, -0.012y^2+0.9003y+41.7)$; and
the line segments JN and EI are straight lines. When the requirements above are satisfied, the refrigerant according to the present disclosure has a refrigerating capacity ratio of 80% or more relative to R410A, a GWP of 125 or less, and a WCF lower flammability.

The refrigerant D according to the present disclosure is preferably a refrigerant wherein

when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by line segments MM', M'N, NV, VG, and GM that connect the following 5 points:

point M (52.6, 0.0, 47.4),
point M' (39.2, 5.0, 55.8),
point N (27.7, 18.2, 54.1),
point V (11.0, 18.1, 70.9), and
point G (39.6, 0.0, 60.4),
or on these line segments (excluding the points on the line segment GM);

the line segment MM' is represented by coordinates $(0.132y^2-3.34y+52.6, y, -0.132y^2+2.34y+47.4)$;
the line segment M'N is represented by coordinates $(x, 0.0313x^2-1.4551x+43.824, -0.0313x^2+0.4551x+56.176)$;
the line segment VG is represented by coordinates $(0.0123y^2-1.8033y+39.6, y, -0.0123y^2+0.8033y+60.4)$; and
the line segments NV and GM are straight lines. When the requirements above are satisfied, the refrigerant according to the present disclosure has a refrigerating capacity ratio of 70% or more relative to R410A, a GWP of 125 or less, and an ASHRAE lower flammability.

The refrigerant D according to the present invention is a refrigerant wherein

when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by line segments ON, NU, and UO that connect the following 3 points:

point O (22.6, 36.8, 40.6),
point N (27.7, 18.2, 54.1), and
point D (3.9, 36.7, 59.4),
or on these line segments;

the line segment ON is represented by coordinates $(0.0072y^2-0.6701y+37.512, y, -0.0072y^2-0.3299y+62.488)$;
the line segment NU is represented by coordinates $(0.0083y^2-1.7403y+56.635, y, -0.0083y^2+0.7403y+43.365)$; and
the line segment UO is a straight line. When the requirements above are satisfied, the refrigerant according to the present disclosure has a refrigerating capacity ratio of 80% or more relative to R410A, a GWP of 250 or less, and an ASHRAE lower flammability.

The refrigerant D according to the present disclosure is preferably a refrigerant wherein

when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by line segments QR, RT, TL, LK, and KQ that connect the following 5 points:

point Q (44.6, 23.0, 32.4),
point R (25.5, 36.8, 37.7),
point T (8.6, 51.6, 39.8),
point L (28.9, 51.7, 19.4), and
point K (35.6, 36.8, 27.6),
or on these line segments;

the line segment QR is represented by coordinates $(0.0099y^2-1.975y+84.765, y, -0.0099y^2+0.975y+15.235)$;
the line segment RT is represented by coordinates $(0.0082y^2-1.8683y+83.126, y, -0.0082y^2+0.8683y+16.874)$;
the line segment LK is represented by coordinates $(0.0049y^2-0.8842y+61.488, y, -0.0049y^2-0.1158y+38.512)$;
the line segment KQ is represented by coordinates $(0.0095y^2-1.2222y+67.676, y, -0.0095y^2+0.2222y+32.324)$; and
the line segment TL is a straight line. When the requirements above are satisfied, the refrigerant according to the present disclosure has a refrigerating capacity ratio of 92.5% or more relative to R410A, a GWP of 350 or less, and a WCF lower flammability.

The refrigerant D according to the present disclosure is preferably a refrigerant wherein

when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by line segments PS, ST, and TP that connect the following 3 points:

point P (20.5, 51.7, 27.8),
point S (21.9, 39.7, 38.4), and
point T (8.6, 51.6, 39.8),
or on these line segments;

the line segment PS is represented by coordinates $(0.0064y^2-0.7103y+40.1, y, -0.0064y^2-0.2897y+59.9)$;
the line segment ST is represented by coordinates $(0.0082y^2-1.8683y+83.126, y, -0.0082y^2+0.8683y+16.874)$; and
the line segment TP is a straight line. When the requirements above are satisfied, the refrigerant according to the present disclosure has a refrigerating capacity ratio of 92.5% or more relative to R410A, a GWP of 350 or less, and an ASHRAE lower flammability.

The refrigerant D according to the present disclosure is preferably a refrigerant wherein

when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by line segments ac, cf, fd, and da that connect the following 4 points:

> point a (71.1, 0.0, 28.9),
> point c (36.5, 18.2, 45.3),
> point f (47.6, 18.3, 34.1), and
> point d (72.0, 0.0, 28.0),
> or on these line segments;

the line segment ac is represented by coordinates $(0.0181y^2-2.2288y+71.096, y, -0.0181y^2+1.2288y+28.904)$;
the line segment fd is represented by coordinates $(0.02y^2-1.7y+72, y, -0.02y^2+0.7y+28)$; and
the line segments cf and da are straight lines. When the requirements above are satisfied, the refrigerant according to the present disclosure has a refrigerating capacity ratio of 85% or more relative to R410A, a GWP of 125 or less, and a lower flammability (Class 2L) according to the ASHRAE standard.

The refrigerant D according to the present disclosure is preferably a refrigerant wherein

when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by line segments ab, be, ed, and da that connect the following 4 points:

> point a (71.1, 0.0, 28.9),
> point b (42.6, 14.5, 42.9),
> point e (51.4, 14.6, 34.0), and
> point d (72.0, 0.0, 28.0),
> or on these line segments;

the line segment ab is represented by coordinates $(0.0181y^2-2.2288y+71.096, y, -0.0181y^2+1.2288y+28.904)$;
the line segment ed is represented by coordinates $(0.02y^2-1.7y+72, y, -0.02y^2+0.7y+28)$; and
the line segments be and da are straight lines. When the requirements above are satisfied, the refrigerant according to the present disclosure has a refrigerating capacity ratio of 85% or more relative to R410A, a GWP of 100 or less, and a lower flammability (Class 2L) according to the ASHRAE standard.

The refrigerant D according to the present disclosure is preferably a refrigerant wherein

when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by line segments gi, ij, and jg that connect the following 3 points:

> point g (77.5, 6.9, 15.6),
> point i (55.1, 18.3, 26.6), and
> point j (77.5. 18.4, 4.1),
> or on these line segments;

the line segment gi is represented by coordinates $(0.02y^2-2.4583y+93.396, y, -0.02y^2+1.4583y+6.604)$; and
the line segments ij and jg are straight lines. When the requirements above are satisfied, the refrigerant according to the present disclosure has a refrigerating capacity ratio of 95% or more relative to R410A and a GWP of 100 or less, undergoes fewer or no changes such as polymerization or decomposition, and also has excellent stability.

The refrigerant D according to the present disclosure is preferably a refrigerant wherein

when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by line segments gh, hk, and kg that connect the following 3 points:

point g (77.5, 6.9, 15.6),
point h (61.8, 14.6, 23.6), and
point k (77.5, 14.6, 7.9),
or on these line segments;

the line segment gh is represented by coordinates $(0.02y^2-2.4583y+93.396, y, -0.02y^2+1.4583y+6.604)$; and the line segments hk and kg are straight lines. When the requirements above are satisfied, the refrigerant according to the present disclosure has a refrigerating capacity ratio of 95% or more relative to R410A and a GWP of 100 or less, undergoes fewer or no changes such as polymerization or decomposition, and also has excellent stability.

The refrigerant D according to the present disclosure may further comprise other additional refrigerants in addition to HFO-1132(E), R32, and R1234yf, as long as the above properties and effects are not impaired. In this respect, the refrigerant according to the present disclosure preferably comprises HFO-1132(E), R32, and R1234yf in a total amount of 99.5 mass% or more, more preferably 99.75 mass% or more, and still more preferably 99.9 mass% or more based on the entire refrigerant.

Such additional refrigerants are not limited, and can be selected from a wide range of refrigerants. The mixed refrigerant may comprise a single additional refrigerant, or two or more additional refrigerants.

(Examples of Refrigerant D)

The present disclosure is described in more detail below with reference to Examples of refrigerant D. However, the refrigerant D is not limited to the Examples.

The composition of each mixed refrigerant of HFO-1132(E), R32, and R1234yf was defined as WCF. A leak simulation was performed using the NIST Standard Reference Database REFLEAK Version 4.0 under the conditions of Equipment, Storage, Shipping, Leak, and Recharge according to the ASHRAE Standard 34-2013. The most flammable fraction was defined as WCFF.

A burning velocity test was performed using the apparatus shown in Fig. 1 in the following manner. First, the mixed refrigerants used had a purity of 99.5% or more, and were degassed by repeating a cycle of freezing, pumping, and thawing until no traces of air were observed on the vacuum gauge. The burning velocity was measured by the closed method. The initial temperature was ambient temperature. Ignition was performed by generating an electric spark between the electrodes in the center of a sample cell. The duration of the discharge was 1.0 to 9.9 ms, and the ignition energy was typically about 0.1 to 1.0 J. The spread of the flame was visualized using schlieren photographs. A cylindrical container (inner diameter: 155 mm, length: 198 mm) equipped with two light transmission acrylic windows was used as the sample cell, and a xenon lamp was used as the light source. Schlieren images of the flame were recorded by a high-speed digital video camera at a frame rate of 600 fps and stored on a PC. Tables 113 to 115 show the results.

Table 113

| Item | | Unit | Comparative Example 13 | Example 11 | Example 12 | Example 13 | Example 14 | Example 15 | Example 16 |
|---|---|---|---|---|---|---|---|---|---|
| | | | I | | J | | K | | L |
| WCF | HFO-1132 (E) | Mass% | 72 | 57.2 | 48.5 | 41.2 | 35.6 | 32 | 28.9 |
| | R32 | Mass% | 0 | 10 | 18.3 | 27.6 | 36.8 | 44.2 | 51.7 |
| | R1234yf | Mass% | 28 | 32.8 | 33.2 | 31.2 | 27.6 | 23.8 | 19.4 |
| Burning Velocity (WCF) | | cm/s | 10 | 10 | 10 | 10 | 10 | 10 | 10 |

Table 114

| Item | | Unit | Comparative Example 14 | Example 18 | Example 19 | Example 20 | Example 21 | Example 22 |
|---|---|---|---|---|---|---|---|---|
| | | | M | | W | | N | |
| WCF | HFO-1132 (E) | Mass% | 52.6 | 39.2 | 32.4 | 29.3 | 27.7 | 24.6 |
| | R32 | Mass% | 0.0 | 5.0 | 10.0 | 14.5 | 18.2 | 27.6 |
| | R1234yf | Mass% | 47.4 | 55.8 | 57.6 | 56.2 | 54.1 | 47.8 |
| Leak condition that results in WCFF | | | Storage, Shipping, -40°C, 0% release, on the gas phase side | Storage, Shipping, -40°C, 0% release, on the gas phase side | Storage, Shipping, -40°C, 0% release, on the gas phase side | Storage, Shipping, -40°C, 0% release, on the gas phase side | Storage, Shipping, -40°C, 0% release, on the gas phase side | Storage, Shipping, -40°C, 0% release, on the gas phase side |
| WCF | HFO-1132 (E) | Mass% | 72.0 | 57.8 | 48.7 | 43.6 | 40.6 | 34.9 |
| | R32 | Mass% | 0.0 | 9.5 | 17.9 | 24.2 | 28.7 | 38.1 |
| | R1234yf | Mass% | 28.0 | 32.7 | 33.4 | 32.2 | 30.7 | 27.0 |
| Burning Velocity (WCF) | | cm/s | 8 or less | 8 or less | 8 or less | 8 or less | 8 or less | 8 or less |
| Burning Velocity (WCFF) | | cm/s | 10 | 10 | 10 | 10 | 10 | 10 |

Table 115

| Item | | Unit | Example 23 | Example 24 | Example 25 |
|---|---|---|---|---|---|
| | | | O | | P |
| WCF | HFO-1132 (E) | Mass% | 22.6 | 21.2 | 20.5 |
| | HFO-1123 | Mass% | 36.8 | 44.2 | 51.7 |
| | R1234yf | Mass% | 40.6 | 34.6 | 27.8 |
| Leak condition that results in WCFF | | | Storage, Shipping, -40°C, 0% release, on the gas phase side | Storage, Shipping, -40°C, 0% release, on the gas phase side | Storage, Shipping, -40°C, 0% release, on the gas phase side |
| WCFF | HFO-1132 (E) | Mass% | 31.4 | 29.2 | 27.1 |
| | HFO-1123 | Mass% | 45.7 | 51.1 | 56.4 |
| | R1234yf | Mass% | 23.0 | 19.7 | 16.5 |
| Burning Velocity (WCF) | | cm/s | 8 or less | 8 or less | 8 or less |
| Burning Velocity (WCFF) | | cm/s | 10 | 10 | 10 |

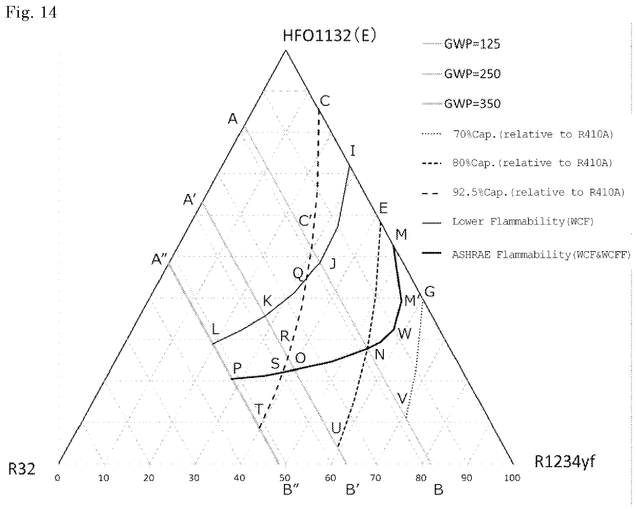

The results indicate that under the condition that the mass% of HFO-1132(E), R32, and R1234yf based on their sum is respectively represented by x, y, and z, when coordinates (x,y,z) in the ternary composition diagram shown in Fig. 14 in which the sum of HFO-1132(E), R32, and R1234yf is 100 mass% are on the line segment that connects point I, point J, point K, and point L, or below these line segments, the refrigerant has a WCF lower flammability.

The results also indicate that when coordinates (x,y,z) in the ternary composition diagram shown in Fig. 14 are on the line segments that connect point M, point M', point W, point J, point N, and point P, or below these line segments, the refrigerant has an ASHRAE lower flammability.

Mixed refrigerants were prepared by mixing HFO-1132(E), R32, and R1234yf in amounts (mass%) shown in Tables 116 to 144 based on the sum of HFO-1132(E), R32, and R1234yf. The coefficient of performance (COP) ratio and the refrigerating capacity ratio relative to R410 of the mixed refrigerants shown in Tables 116 to 144 were determined. The conditions for calculation were as described below.

Evaporating temperature: 5°C
Condensation temperature: 45°C
Degree of superheating: 5 K
Degree of subcooling: 5 K
Compressor efficiency: 70%

Tables 116 to 144 show these values together with the GWP of each mixed refrigerant.

Table 116

| Item | Unit | Comparative Example 1 | Comparative Example 2 A | Comparative Example 3 B | Comparative Example 4 A' | Comparative Example 5 B' | Comparative Example 6 A" | Comparative Example 7 B" |
|---|---|---|---|---|---|---|---|---|
| HFO-1132(E) | Mass% | | 81.6 | 0.0 | 63.1 | 0.0 | 48.2 | 0.0 |
| R32 | Mass% | R410A | 18.4 | 18.1 | 36.9 | 36.7 | 51.8 | 51.5 |
| R1234yf | Mass% | | 0.0 | 81.9 | 0.0 | 63.3 | 0.0 | 48.5 |
| GWP | - | 2088 | 125 | 125 | 250 | 250 | 350 | 350 |
| COP Ratio | % (relative to R410A) | 100 | 98.7 | 103.6 | 98.7 | 102.3 | 99.2 | 102.2 |
| Refrigerating Capacity Ratio | % (relative to R410A) | 100 | 105.3 | 62.5 | 109.9 | 77.5 | 112.1 | 87.3 |

Table 117

| Item | Unit | Comparative Example 8 | Comparative Example 9 | Comparative Example 10 | Example 1 | Example 2 | Example 3 | Example 4 |
|---|---|---|---|---|---|---|---|---|
| | | C | | C' | | R | | T |
| HFO-1132(E) | Mass% | 85.5 | 66.1 | 52.1 | 37.8 | 25.5 | 16.6 | 8.6 |
| R32 | Mass% | 0.0 | 10.0 | 18.2 | 27.6 | 36.8 | 44.2 | 51.6 |
| R1234yf | Mass% | 14.5 | 23.9 | 29.7 | 34.6 | 37.7 | 39.2 | 39.8 |
| GWP | - | 1 | 69 | 125 | 188 | 250 | 300 | 350 |
| COP Ratio | %(relative to R410A) | 99.8 | 99.3 | 99.3 | 99.6 | 100.2 | 100.8 | 101.4 |
| Refrigerating Capacity Ratio | %(relative to R410A) | 92.5 | 92.5 | 92.5 | 92.5 | 92.5 | 92.5 | 92.5 |

Table 118

| Item | Unit | Comparative Example 11 | Example 5 | Example 6 | Example 7 | Example 8 | Comparative Example 12 | Example 9 | Example 10 |
|---|---|---|---|---|---|---|---|---|---|
| | | E | | N | | U | G | | V |
| HFO-1132(E) | Mass% | 58.3 | 40.5 | 27.7 | 14.9 | 3.9 | 39.6 | 22.8 | 11.0 |
| R32 | Mass% | 0.0 | 10.0 | 18.2 | 27.6 | 36.7 | 0.0 | 10.0 | 18.1 |
| R1234yf | Mass% | 41.7 | 49.5 | 54.1 | 57.5 | 59.4 | 60.4 | 67.2 | 70.9 |
| GWP | - | 2 | 70 | 125 | 189 | 250 | 3 | 70 | 125 |
| COP Ratio | %(relative to R410A) | 100.3 | 100.3 | 100.7 | 101.2 | 101.9 | 101.4 | 101.8 | 102.3 |
| Refrigerating Capacity Ratio | % (relative to R410A) | 80.0 | 80.0 | 80.0 | 80.0 | 80.0 | 70.0 | 70.0 | 70.0 |

Table 119

| Item | Unit | Comparative Example 13 | Example 11 | Example 12 | Example 13 | Example 14 | Example 15 | Example 16 | Example 17 |
|---|---|---|---|---|---|---|---|---|---|
| | | I | | J | | K | | L | Q |
| HFO-1132(E) | Mass% | 72.0 | 57.2 | 48.5 | 41.2 | 35.6 | 32.0 | 28.9 | 44.6 |
| R32 | Mass% | 0.0 | 10.0 | 18.3 | 27.6 | 36.8 | 44.2 | 51.7 | 23.0 |
| R1234yf | Mass% | 28.0 | 32.8 | 33.2 | 31.2 | 27.6 | 23.8 | 19.4 | 32.4 |
| GWP | - | 2 | 69 | 125 | 188 | 250 | 300 | 350 | 157 |
| COP Ratio | %(relative to R410A) | 99.9 | 99.5 | 99.4 | 99.5 | 99.6 | 99.8 | 100.1 | 99.4 |
| Refrigerating Capacity Ratio | %(relative to R410A) | 86.6 | 88.4 | 90.9 | 94.2 | 97.7 | 100.5 | 103.3 | 92.5 |

Table 120

| Item | Unit | Comparative Example 14 M | Example 18 | Example 19 W | Example 20 | Example 21 N | Example 22 |
|---|---|---|---|---|---|---|---|
| HFO-1132(E) | Mass% | 52.6 | 39.2 | 32.4 | 29.3 | 27.7 | 24.5 |
| R32 | Mass% | 0.0 | 5.0 | 10.0 | 14.5 | 18.2 | 27.6 |
| R1234yf | Mass% | 47.4 | 55.8 | 57.6 | 56.2 | 54.1 | 47.9 |
| GWP | - | 2 | 36 | 70 | 100 | 125 | 188 |
| COP Ratio | %(relative to R410A) | 100.5 | 100.9 | 100.9 | 100.8 | 100.7 | 100.4 |
| Refrigerating Capacity Ratio | %(relative to R410A) | 77.1 | 74.8 | 75.6 | 77.8 | 80.0 | 85.5 |

Table 121

| Item | Unit | Example 23 O | Example 24 | Example 25 P | Example 26 S |
|---|---|---|---|---|---|
| HFO-1132(E) | Mass% | 22.6 | 21.2 | 20.5 | 21.9 |
| R32 | Mass% | 36.8 | 44.2 | 51.7 | 39.7 |
| R1234yf | Mass% | 40.6 | 34.6 | 27.8 | 38.4 |
| GWP | - | 250 | 300 | 350 | 270 |
| COP Ratio | %(relative to R410A) | 100.4 | 100.5 | 100.6 | 100.4 |
| Refrigerating Capacity Ratio | %(relative to R410A) | 91.0 | 95.0 | 99.1 | 92.5 |

Table 122

| Item | Unit | Comparative Example 15 | Comparative Example 16 | Comparative Example 17 | Comparative Example 18 | Example 27 | Example 28 | Comparative Example 19 | Comparative Example 20 |
|---|---|---|---|---|---|---|---|---|---|
| HFO-1132(E) | Mass% | 10.0 | 20.0 | 30.0 | 40.0 | 50.0 | 60.0 | 70.0 | 80.0 |
| R32 | Mass% | 5.0 | 5.0 | 5.0 | 5.0 | 5.0 | 5.0 | 5.0 | 5.0 |
| R1234yf | Mass% | 85.0 | 75.0 | 65.0 | 55.0 | 45.0 | 35.0 | 25.0 | 15.0 |
| GWP | - | 37 | 37 | 37 | 36 | 36 | 36 | 35 | 35 |
| COP Ratio | % (relative to R410A) | 103.4 | 102.6 | 101.6 | 100.8 | 100.2 | 99.8 | 99.6 | 99.4 |
| Refrigerating Capacity Ratio | % (relative to R410A) | 56.4 | 63.3 | 69.5 | 75.2 | 80.5 | 85.4 | 90.1 | 94.4 |

Table 123

| Item | Unit | Comparative Example 21 | Comparative Example 22 | Example 29 | Comparative Example 23 | Example 30 | Comparative Example 24 | Comparative Example 25 | Comparative Example 26 |
|---|---|---|---|---|---|---|---|---|---|
| HFO-1132(E) | Mass% | 10.0 | 20.0 | 30.0 | 40.0 | 50.0 | 60.0 | 70.0 | 80.0 |
| R32 | Mass% | 10.0 | 10.0 | 10.0 | 10.0 | 10.0 | 10.0 | 10.0 | 10.0 |
| R1234yf | Mass% | 80.0 | 70.0 | 60.0 | 50.0 | 40.0 | 30.0 | 20.0 | 10.0 |
| GWP | - | 71 | 71 | 70 | 70 | 70 | 69 | 69 | 69 |
| COP Ratio | % (relative to R410A) | 103.1 | 102.1 | 101.1 | 100.4 | 99.8 | 99.5 | 99.2 | 99.1 |
| Refrigerating Capacity Ratio | % (relative to R410A) | 61.8 | 68.3 | 74.3 | 79.7 | 84.9 | 89.7 | 94.2 | 98.4 |

Table 124

| Item | Unit | Comparative Example 27 | Example 31 | Comparative Example 28 | Example 32 | Example 33 | Comparative Example 29 | Comparative Example 30 | Comparative Example 31 |
|---|---|---|---|---|---|---|---|---|---|
| HFO-1132(E) | Mass% | 10.0 | 20.0 | 30.0 | 40.0 | 50.0 | 60.0 | 70.0 | 80.0 |
| R32 | Mass% | 15.0 | 15.0 | 15.0 | 15.0 | 15.0 | 15.0 | 15.0 | 15.0 |
| R1234yf | Mass% | 75.0 | 65.0 | 55.0 | 45.0 | 35.0 | 25.0 | 15.0 | 5.0 |
| GWP | - | 104 | 104 | 104 | 103 | 103 | 103 | 103 | 102 |
| COP Ratio | %(relative to R410A) | 102.7 | 101.6 | 100.7 | 100.0 | 99.5 | 99.2 | 99.0 | 98.9 |
| Refrigerating Capacity Ratio | %(relative to R410A) | 66.6 | 72.9 | 78.6 | 84.0 | 89.0 | 93.7 | 98.1 | 102.2 |

Table 125

| Item | Unit | Comparative Example 32 | Comparative Example 33 | Comparative Example 34 | Comparative Example 35 | Comparative Example 36 | Comparative Example 37 | Comparative Example 38 | Comparative Example 39 |
|---|---|---|---|---|---|---|---|---|---|
| HFO-1132(E) | Mass% | 10.0 | 20.0 | 30.0 | 40.0 | 50.0 | 60.0 | 70.0 | 10.0 |
| R32 | Mass% | 20.0 | 20.0 | 20.0 | 20.0 | 20.0 | 20.0 | 20.0 | 25.0 |
| R1234yf | Mass% | 70.0 | 60.0 | 50.0 | 40.0 | 30.0 | 20.0 | 10.0 | 65.0 |
| GWP | - | 138 | 138 | 137 | 137 | 137 | 136 | 136 | 171 |
| COP Ratio | % (relative to R410A) | 102.3 | 101.2 | 100.4 | 99.7 | 99.3 | 99.0 | 98.8 | 101.9 |
| Refrigerating Capacity Ratio | % (relative to R410A) | 71.0 | 77.1 | 82.7 | 88.0 | 92.9 | 97.5 | 101.7 | 75.0 |

Table 126

| Item | Unit | Example 34 | Comparative Example 40 | Comparative Example 41 | Comparative Example 42 | Comparative Example 43 | Comparative Example 44 | Comparative Example 45 | Example 35 |
|------|------|-----------|------------------------|------------------------|------------------------|------------------------|------------------------|------------------------|-----------|
| HFO-1132(E) | Mass% | 20.0 | 30.0 | 40.0 | 50.0 | 60.0 | 70.0 | 10.0 | 20.0 |
| R32 | Mass% | 25.0 | 25.0 | 25. 0 | 25. 0 | 25.0 | 25.0 | 30.0 | 30.0 |
| R1234yf | Mass% | 55.0 | 45.0 | 35. 0 | 25. 0 | 15.0 | 5.0 | 60.0 | 50.0 |
| GWP | - | 171 | 171 | 171 | 170 | 170 | 170 | 205 | 205 |
| COP Ratio | % (relative to R410A) | 100.9 | 100.1 | 99.6 | 99.2 | 98.9 | 98.7 | 101.6 | 100.7 |
| Refrigerating Capacity Ratio | % (relative to R410A) | 81.0 | 86.6 | 91.7 | 96.5 | 101.0 | 105.2 | 78.9 | 84.8 |

EP 3 730 570 B1

Table 127

| Item | Unit | Comparative Example 46 | Comparative Example 47 | Comparative Example 48 | Comparative Example 49 | Example 36 | Example 37 | Example 38 | Comparative Example 50 |
|---|---|---|---|---|---|---|---|---|---|
| HFO-1132(E) | Mass% | 30.0 | 40.0 | 50.0 | 60.0 | 10.0 | 20.0 | 30.0 | 40.0 |
| R32 | Mass% | 30.0 | 30.0 | 30.0 | 30.0 | 35.0 | 35.0 | 35.0 | 35.0 |
| R1234yf | Mass% | 40.0 | 30.0 | 20.0 | 10.0 | 55.0 | 45.0 | 35.0 | 25.0 |
| GWP | - | 204 | 204 | 204 | 204 | 239 | 238 | 238 | 238 |
| COP Ratio | %(relative to R410A) | 100.0 | 99.5 | 99.1 | 98.8 | 101.4 | 100.6 | 99.9 | 99.4 |
| Refrigerating Capacity Ratio | %(relative to R410A) | 90.2 | 95.3 | 100.0 | 104.4 | 82.5 | 88.3 | 93.7 | 98.6 |

Table 128

| Item | Unit | Comparative Example 51 | Comparative Example 52 | Comparative Example 53 | Comparative Example 54 | Example 39 | Comparative Example 55 | Comparative Example 56 | Comparative Example 57 |
|---|---|---|---|---|---|---|---|---|---|
| HFO-1132(E) | Mass% | 50.0 | 60.0 | 10.0 | 20.0 | 30.0 | 40.0 | 50.0 | 10.0 |
| R32 | Mass% | 35.0 | 35.0 | 40.0 | 40.0 | 40.0 | 40.0 | 40.0 | 45.0 |
| R1234yf | Mass% | 15.0 | 5.0 | 50.0 | 40.0 | 30.0 | 20.0 | 10.0 | 45.0 |
| GWP | - | 237 | 237 | 272 | 272 | 272 | 271 | 271 | 306 |
| COP Ratio | % (relative to R410A) | 99.0 | 98.8 | 101.3 | 100.6 | 99.9 | 99.4 | 99.0 | 101.3 |
| Refrigerating Capacity Ratio | % (relative to R410A) | 103.2 | 107.5 | 86.0 | 91.7 | 96.9 | 101.8 | 106.3 | 89.3 |

Table 129

| Item | Unit | Example 40 | Example 41 | Comparative Example 58 | Comparative Example 59 | Comparative Example 60 | Example 42 | Comparative Example 61 | Comparative Example 62 |
|---|---|---|---|---|---|---|---|---|---|
| HFO-1132(E) | Mass% | 20.0 | 30.0 | 40.0 | 50.0 | 10.0 | 20.0 | 30.0 | 40.0 |
| R32 | Mass% | 45.0 | 45.0 | 45.0 | 45.0 | 50.0 | 50.0 | 50.0 | 50.0 |
| R1234yf | Mass% | 35.0 | 25.0 | 15.0 | 5.0 | 40.0 | 30.0 | 20.0 | 10.0 |
| GWP | - | 305 | 305 | 305 | 304 | 339 | 339 | 339 | 338 |
| COP Ratio | %(relative to R410A) | 100.6 | 100.0 | 99.5 | 99.1 | 101.3 | 100.6 | 100.0 | 99.5 |
| Refrigerating Capacity Ratio | %(relative to R410A) | 94.9 | 100.0 | 104.7 | 109.2 | 92.4 | 97.8 | 102.9 | 107.5 |

Table 130

| Item | Unit | Comparative Example 63 | Comparative Example 64 | Comparative Example 65 | Comparative Example 66 | Example 43 | Example 44 | Example 45 | Example 46 |
|---|---|---|---|---|---|---|---|---|---|
| HFO-1132(E) | Mass% | 10.0 | 20.0 | 30.0 | 40.0 | 56.0 | 59.0 | 62.0 | 65.0 |
| R32 | Mass% | 55.0 | 55.0 | 55.0 | 55.0 | 3.0 | 3.0 | 3.0 | 3.0 |
| R1234yf | Mass% | 35.0 | 25.0 | 15.0 | 5.0 | 41.0 | 38.0 | 35.0 | 32.0 |
| GWP | - | 373 | 372 | 372 | 372 | 22 | 22 | 22 | 22 |
| COP Ratio | %(relative to R410A) | 101.4 | 100.7 | 100.1 | 99.6 | 100.1 | 100.0 | 99.9 | 99.8 |
| Refrigerating Capacity Ratio | %(relative to R410A) | 95.3 | 100.6 | 105.6 | 110.2 | 81.7 | 83.2 | 84.6 | 86.0 |

113

Table 131

| Item | Unit | Example 47 | Example 48 | Example 49 | Example 50 | Example 51 | Example 52 | Example 53 | Example 54 |
|---|---|---|---|---|---|---|---|---|---|
| HFO-1132(E) | Mass% | 49.0 | 52.0 | 55.0 | 58.0 | 61.0 | 43.0 | 46.0 | 49.0 |
| R32 | Mass% | 6.0 | 6.0 | 6.0 | 6.0 | 6.0 | 9.0 | 9.0 | 9.0 |
| R1234yf | Mass% | 45.0 | 42.0 | 39.0 | 36.0 | 33.0 | 48.0 | 45.0 | 42.0 |
| GWP | - | 43 | 43 | 43 | 43 | 42 | 63 | 63 | 63 |
| COP Ratio | %(relative to R410A) | 100.2 | 100.0 | 99.9 | 99.8 | 99.7 | 100.3 | 100.1 | 99.9 |
| Refrigerating Capacity Ratio | %(relative to R410A) | 80.9 | 82.4 | 83.9 | 85.4 | 86.8 | 80.4 | 82.0 | 83.5 |

Table 132

| Item | Unit | Example 55 | Example 56 | Example 57 | Example 58 | Example 59 | Example 60 | Example 61 | Example 62 |
|------|------|-----------|-----------|-----------|-----------|-----------|-----------|-----------|-----------|
| HFO-1132(E) | Mass% | 52.0 | 55.0 | 58.0 | 38.0 | 41.0 | 44.0 | 47.0 | 50.0 |
| R32 | Mass% | 9.0 | 9.0 | 9.0 | 12.0 | 12.0 | 12.0 | 12.0 | 12.0 |
| R1234yf | Mass% | 39.0 | 36.0 | 33.0 | 50.0 | 47.0 | 44.0 | 41.0 | 38.0 |
| GWP | - | 63 | 63 | 63 | 83 | 83 | 83 | 83 | 83 |
| COP Ratio | %(relative to R410A) | 99.8 | 99.7 | 99.6 | 100.3 | 100.1 | 100.0 | 99.8 | 99.7 |
| Refrigerating Capacity Ratio | %(relative to R410A) | 85.0 | 86.5 | 87.9 | 80.4 | 82.0 | 83.5 | 85.1 | 86.6 |

Table 133

| Item | Unit | Example 63 | Example 64 | Example 65 | Example 66 | Example 67 | Example 68 | Example 69 | Example 70 |
|---|---|---|---|---|---|---|---|---|---|
| HFO-1132(E) | Mass% | 53.0 | 33.0 | 36.0 | 39.0 | 42.0 | 45.0 | 48.0 | 51.0 |
| R32 | Mass% | 12.0 | 15.0 | 15.0 | 15.0 | 15.0 | 15.0 | 15.0 | 15.0 |
| R1234yf | Mass% | 35.0 | 52.0 | 49.0 | 46.0 | 43.0 | 40.0 | 37.0 | 34.0 |
| GWP | - | 83 | 104 | 104 | 103 | 103 | 103 | 103 | 103 |
| COP Ratio | %(relative to R410A) | 99.6 | 100.5 | 100.3 | 100.1 | 99.9 | 99.7 | 99.6 | 99.5 |
| Refrigerating Capacity Ratio | %(relative to R410A) | 88.0 | 80.3 | 81.9 | 83.5 | 85.0 | 86.5 | 88.0 | 89.5 |

Table 134

| Item | Unit | Example 71 | Example 72 | Example 73 | Example 74 | Example 75 | Example 76 | Example 77 | Example 78 |
|---|---|---|---|---|---|---|---|---|---|
| HFO-1132(E) | Mass% | 29.0 | 32.0 | 35.0 | 38.0 | 41.0 | 44.0 | 47.0 | 36.0 |
| R32 | Mass% | 18.0 | 18.0 | 18.0 | 18.0 | 18.0 | 18.0 | 18.0 | 3.0 |
| R1234yf | Mass% | 53.0 | 50.0 | 47.0 | 44.0 | 41.0 | 38.0 | 35.0 | 61.0 |
| GWP | - | 124 | 124 | 124 | 124 | 124 | 123 | 123 | 23 |
| COP Ratio | % (relative to R410A) | 100.6 | 100.3 | 100.1 | 99.9 | 99.8 | 99.6 | 99.5 | 101.3 |
| Refrigerating Capacity Ratio | % (relative to R410A) | 80.6 | 82.2 | 83.8 | 85.4 | 86.9 | 88.4 | 89.9 | 71.0 |

Table 135

| Item | Unit | Example 79 | Example 80 | Example 81 | Example 82 | Example 83 | Example 84 | Example 85 | Example 86 |
|---|---|---|---|---|---|---|---|---|---|
| HFO-1132(E) | Mass% | 39.0 | 42.0 | 30.0 | 33.0 | 36.0 | 26.0 | 29.0 | 32.0 |
| R32 | Mass% | 3.0 | 3.0 | 6.0 | 6.0 | 6.0 | 9.0 | 9.0 | 9.0 |
| R1234yf | Mass% | 58.0 | 55.0 | 64.0 | 61.0 | 58.0 | 65.0 | 62.0 | 59.0 |
| GWP | - | 23 | 23 | 43 | 43 | 43 | 64 | 64 | 63 |
| COP Ratio | %(relative to R410A) | 101.1 | 100.9 | 101.5 | 101.3 | 101.0 | 101.6 | 101.3 | 101.1 |
| Refrigerating Capacity Ratio | %(relative to R410A) | 72.7 | 74.4 | 70.5 | 72.2 | 73.9 | 71.0 | 72.8 | 74.5 |

Table 136

| Item | Unit | Example 87 | Example 88 | Example 89 | Example 90 | Example 91 | Example 92 | Example 93 | Example 94 |
|---|---|---|---|---|---|---|---|---|---|
| HFO-1132(E) | Mass% | 21.0 | 24.0 | 27.0 | 30.0 | 16.0 | 19.0 | 22.0 | 25.0 |
| R32 | Mass% | 12.0 | 12.0 | 12.0 | 12.0 | 15.0 | 15.0 | 15.0 | 15.0 |
| R1234yf | Mass% | 67.0 | 64.0 | 61.0 | 58.0 | 69.0 | 66.0 | 63.0 | 60.0 |
| GWP | - | 84 | 84 | 84 | 84 | 104 | 104 | 104 | 104 |
| COP Ratio | % (relative to R410A) | 101.8 | 101.5 | 101.2 | 101.0 | 102.1 | 101.8 | 101.4 | 101.2 |
| Refrigerating Capacity Ratio | % (relative to R410A) | 70.8 | 72.6 | 74.3 | 76.0 | 70.4 | 72.3 | 74.0 | 75.8 |

Table 137

| Item | Unit | Example 95 | Example 96 | Example 97 | Example 98 | Example 99 | Example 100 | Example 101 | Example 102 |
|---|---|---|---|---|---|---|---|---|---|
| HFO-1132(E) | Mass% | 28.0 | 12.0 | 15.0 | 18.0 | 21.0 | 24.0 | 27.0 | 25.0 |
| R32 | Mass% | 15.0 | 18.0 | 18.0 | 18.0 | 18.0 | 18.0 | 18.0 | 21.0 |
| R1234yf | Mass% | 57.0 | 70.0 | 67.0 | 64.0 | 61.0 | 58.0 | 55.0 | 54.0 |
| GWP | - | 104 | 124 | 124 | 124 | 124 | 124 | 124 | 144 |
| COP Ratio | %(relative to R410A) | 100.9 | 102.2 | 101.9 | 101.6 | 101.3 | 101.0 | 100.7 | 100.7 |
| Refrigerating Capacity Ratio | %(relative to R410A) | 77.5 | 70.5 | 72.4 | 74.2 | 76.0 | 77.7 | 79.4 | 80.7 |

Table 138

| Item | Unit | Example 103 | Example 104 | Example 105 | Example 106 | Example 107 | Example 108 | Example 109 | Example 110 |
|---|---|---|---|---|---|---|---|---|---|
| HFO-1132(E) | Mass% | 21.0 | 24.0 | 17.0 | 20.0 | 23.0 | 13.0 | 16.0 | 19.0 |
| R32 | Mass% | 24.0 | 24.0 | 27.0 | 27.0 | 27.0 | 30.0 | 30.0 | 30.0 |
| R1234yf | Mass% | 55.0 | 52.0 | 56.0 | 53.0 | 50.0 | 57.0 | 54.0 | 51.0 |
| GWP | - | 164 | 164 | 185 | 185 | 184 | 205 | 205 | 205 |
| COP Ratio | %(relative to R410A) | 100.9 | 100.6 | 101.1 | 100.8 | 100.6 | 101.3 | 101.0 | 100.8 |
| Refrigerating Capacity Ratio | %(relative to R410A) | 80.8 | 82.5 | 80.8 | 82.5 | 84.2 | 80.7 | 82.5 | 84.2 |

Table 139

| Item | Unit | Example 111 | Example 112 | Example 113 | Example 114 | Example 115 | Example 116 | Example 117 | Example 118 |
|---|---|---|---|---|---|---|---|---|---|
| HFO-1132(E) | Mass% | 22.0 | 9.0 | 12.0 | 15.0 | 18.0 | 21.0 | 8.0 | 12.0 |
| R32 | Mass% | 30.0 | 33.0 | 33.0 | 33.0 | 33.0 | 33.0 | 36.0 | 36.0 |
| R1234yf | Mass% | 48.0 | 58.0 | 55.0 | 52.0 | 49.0 | 46.0 | 56.0 | 52.0 |
| GWP | - | 205 | 225 | 225 | 225 | 225 | 225 | 245 | 245 |
| COP Ratio | %(relative to R410A) | 100.5 | 101.6 | 101.3 | 101.0 | 100.8 | 100.5 | 101.6 | 101.2 |
| Refrigerating Capacity Ratio | %(relative to R410A) | 85.9 | 80.5 | 82.3 | 84.1 | 85.8 | 87.5 | 82.0 | 84.4 |

Table 140

| Item | Unit | Example 119 | Example 120 | Example 121 | Example 122 | Example 123 | Example 124 | Example 125 | Example 126 |
|---|---|---|---|---|---|---|---|---|---|
| HFO-1132(E) | Mass% | 15.0 | 18.0 | 21.0 | 42.0 | 39.0 | 34.0 | 37.0 | 30.0 |
| R32 | Mass% | 36.0 | 36.0 | 36.0 | 25.0 | 28.0 | 31.0 | 31.0 | 34.0 |
| R1234yf | Mass% | 49.0 | 46.0 | 43.0 | 33.0 | 33.0 | 35.0 | 32.0 | 36.0 |
| GWP | - | 245 | 245 | 245 | 170 | 191 | 211 | 211 | 231 |
| COP Ratio | %(relative to R410A) | 101.0 | 100.7 | 100.5 | 99.5 | 99.5 | 99.8 | 99.6 | 99.9 |
| Refrigerating Capacity Ratio | %(relative to R410A) | 86.2 | 87.9 | 89.6 | 92.7 | 93.4 | 93.0 | 94.5 | 93.0 |

Table 141

| Item | Unit | Example 127 | Example 128 | Example 129 | Example 130 | Example 131 | Example 132 | Example 133 | Example 134 |
|---|---|---|---|---|---|---|---|---|---|
| HFO-1132(E) | Mass% | 33.0 | 36.0 | 24.0 | 27.0 | 30.0 | 33.0 | 23.0 | 26.0 |
| R32 | Mass% | 34.0 | 34.0 | 37.0 | 37.0 | 37.0 | 37.0 | 40.0 | 40.0 |
| R1234yf | Mass% | 33.0 | 30.0 | 39.0 | 36.0 | 33.0 | 30.0 | 37.0 | 34.0 |
| GWP | - | 231 | 231 | 252 | 251 | 251 | 251 | 272 | 272 |
| COP Ratio | % (relative to R410A) | 99.8 | 99.6 | 100.3 | 100.1 | 99.9 | 99.8 | 100.4 | 100.2 |
| Refrigerating Capacity Ratio | %(relative to R410A) | 94.5 | 96.0 | 91.9 | 93.4 | 95.0 | 96.5 | 93.3 | 94.9 |

124

Table 142

| Item | Unit | Example 135 | Example 136 | Example 137 | Example 138 | Example 139 | Example 140 | Example 141 | Example 142 |
|---|---|---|---|---|---|---|---|---|---|
| HFO-1132(E) | Mass% | 29.0 | 32.0 | 19.0 | 22.0 | 25.0 | 28.0 | 31.0 | 18.0 |
| R32 | Mass% | 40.0 | 40.0 | 43.0 | 43.0 | 43.0 | 43.0 | 43.0 | 46.0 |
| R1234yf | Mass% | 31.0 | 28.0 | 38.0 | 35.0 | 32.0 | 29.0 | 26.0 | 36.0 |
| GWP | - | 272 | 271 | 292 | 292 | 292 | 292 | 292 | 312 |
| COP Ratio | % (relative to R410A) | 100.0 | 99.8 | 100.6 | 100.4 | 100.2 | 100.1 | 99.9 | 100.7 |
| Refrigerating Capacity Ratio | %(relative to R410A) | 96.4 | 97.9 | 93.1 | 94.7 | 96.2 | 97.8 | 99.3 | 94.4 |

Table 143

| Item | Unit | Example 143 | Example 144 | Example 145 | Example 146 | Example 147 | Example 148 | Example 149 | Example 150 |
|---|---|---|---|---|---|---|---|---|---|
| HFO-1132(E) | Mass% | 21.0 | 23.0 | 26.0 | 29.0 | 13.0 | 16.0 | 19.0 | 22.0 |
| R32 | Mass% | 46.0 | 46.0 | 46.0 | 46.0 | 49.0 | 49.0 | 49.0 | 49.0 |
| R1234yf | Mass% | 33.0 | 31.0 | 28.0 | 25.0 | 38.0 | 35.0 | 32.0 | 29.0 |
| GWP | - | 312 | 312 | 312 | 312 | 332 | 332 | 332 | 332 |
| COP Ratio | %(relative to R410A) | 100.5 | 100.4 | 100.2 | 100.0 | 101.1 | 100.9 | 100.7 | 100.5 |
| Refrigerating Capacity Ratio | %(relative to R410A) | 96.0 | 97.0 | 98.6 | 100.1 | 93.5 | 95.1 | 96.7 | 98.3 |

Table 144

| Item | Unit | Example 151 | Example 152 |
|---|---|---|---|
| HFO-1132(E) | Mass% | 25.0 | 28.0 |
| R32 | Mass% | 49.0 | 49.0 |
| R1234yf | Mass% | 26.0 | 23.0 |
| GWP | - | 332 | 332 |
| COP Ratio | %(relative to R410A) | 100.3 | 100.1 |
| Refrigerating Capacity Ratio | %(relative to R410A) | 99.8 | 101.3 |

The results also indicate that under the condition that the mass% of HFO-1132(E), R32, and R1234yf based on their sum is respectively represented by x, y, and z, when coordinates (x,y,z) in a ternary composition diagram in which the sum of HFO-1132(E), R32, and R1234yf is 100 mass% are within the range of a figure surrounded by line segments IJ, JN, NE, and EI that connect the following 4 points:

point I (72.0, 0.0, 28.0),
point J (48.5, 18.3, 33.2),
point N (27.7, 18.2, 54.1), and
point E (58.3, 0.0, 41.7),
or on these line segments (excluding the points on the line segment EI),

the line segment IJ is represented by coordinates $(0.0236y^2-1.7616y+72.0, y, -0.0236y^2+0.7616y+28.0)$,
the line segment NE is represented by coordinates $(0.012y^2-1.9003y+58.3, y, -0.012y^2+0.9003y+41.7)$, and
the line segments JN and EI are straight lines, the refrigerant D has a refrigerating capacity ratio of 80% or more relative to R410A, a GWP of 125 or less, and a WCF lower flammability.

The results also indicate that under the condition that the mass% of HFO-1132(E), R32, and R1234yf based on their sum is respectively represented by x, y, and z, when coordinates (x,y,z) in a ternary composition diagram in which the sum of HFO-1132(E), R32, and R1234yf is 100 mass% are within the range of a figure surrounded by line segments MM', M'N, NV, VG, and GM that connect the following 5 points:

point M (52.6, 0.0, 47.4),
point M' (39.2, 5.0, 55.8),
point N (27.7, 18.2, 54.1),
point V (11.0, 18.1, 70.9), and
point G (39.6, 0.0, 60.4),
or on these line segments (excluding the points on the line segment GM),

the line segment MM' is represented by coordinates $(0.132y^2-3.34y+52.6, y, -0.132y^2+2.34y+47.4)$,
the line segment M'N is represented by coordinates $(x, 0.0313x^2-1.4551x+43.824, -0.0313x^2+0.4551x+56.176)$,
the line segment VG is represented by coordinates $(0.0123y^2-1.8033y+39.6, y, -0.0123y^2+0.8033y+60.4)$, and
the line segments NV and GM are straight lines, the refrigerant D according to the present disclosure has a refrigerating capacity ratio of 70% or more relative to R410A, a GWP of 125 or less, and an ASHRAE lower flammability.

The results also indicate that under the condition that the mass% of HFO-1132(E), R32, and R1234yf based on their sum is respectively represented by x, y, and z, when coordinates (x,y,z) in a ternary composition diagram in which the sum of HFO-1132(E), R32, and R1234yf is 100 mass% are within the range of a figure surrounded by line segments ON, NU, and UO that connect the following 3 points:

point O (22.6, 36.8, 40.6),
point N (27.7, 18.2, 54.1), and
point D (3.9, 36.7, 59.4),
or on these line segments,

the line segment ON is represented by coordinates ($0.0072y^2$-$0.6701y$+$37.512$, y, -$0.0072y^2$-$0.3299y$+$62.488$),
the line segment NU is represented by coordinates ($0.0083y^2$-$1.7403y$+$56.635$, y, -$0.0083y^2$+$0.7403y$+$43.365$), and
the line segment UO is a straight line, the refrigerant D according to the present disclosure has a refrigerating capacity ratio of 80% or more relative to R410A, a GWP of 250 or less, and an ASHRAE lower flammability.

The results also indicate that under the condition that the mass% of HFO-1132(E), R32, and R1234yf based on their sum is respectively represented by x, y, and z, when coordinates (x,y,z) in a ternary composition diagram in which the sum of HFO-1132(E), R32, and R1234yf is 100 mass% are within the range of a figure surrounded by line segments QR, RT, TL, LK, and KQ that connect the following 5 points:

point Q (44.6, 23.0, 32.4),
point R (25.5, 36.8, 37.7),
point T (8.6, 51.6, 39.8),
point L (28.9, 51.7, 19.4), and
point K (35.6, 36.8, 27.6),
or on these line segments,

the line segment QR is represented by coordinates ($0.0099y^2$-$1.975y$+$84.765$, y, -$0.0099y^2$+$0.975y$+$15.235$),
the line segment RT is represented by coordinates ($0.0082y^2$-$1.8683y$+$83.126$, y, -$0.0082y^2$+$0.8683y$+$16.874$),
the line segment LK is represented by coordinates ($0.0049y^2$-$0.8842y$+$61.488$, y, -$0.0049y^2$-$0.1158y$+$38.512$),
the line segment KQ is represented by coordinates ($0.0095y^2$-$1.2222y$+$67.676$, y, -$0.0095y^2$+$0.2222y$+$32.324$), and
the line segment TL is a straight line, the refrigerant D according to the present disclosure has a refrigerating capacity ratio of 92.5% or more relative to R410A, a GWP of 350 or less, and a WCF lower flammability.

The results further indicate that under the condition that the mass% of HFO-1132(E), R32, and R1234yf based on their sum is respectively represented by x, y, and z, when coordinates (x,y,z) in a ternary composition diagram in which the sum of HFO-1132(E), R32, and R1234yf is 100 mass% are within the range of a figure surrounded by line segments PS, ST, and TP that connect the following 3 points:

point P (20.5, 51.7, 27.8),
point S (21.9, 39.7, 38.4), and
point T (8.6, 51.6, 39.8),
or on these line segments,

the line segment PS is represented by coordinates ($0.0064y^2$-$0.7103y$+$40.1$, y, - $0.0064y^2$-$0.2897y$+$59.9$),
the line segment ST is represented by coordinates ($0.0082y^2$-$1.8683y$+$83.126$, y, -$0.0082y^2$+$0.8683y$+$16.874$), and
the line segment TP is a straight line, the refrigerant D according to the present disclosure has a refrigerating capacity ratio of 92.5% or more relative to R410A, a GWP of 350 or less, and an ASHRAE lower flammability.

(5-5) Refrigerant E

The refrigerant E according to the present disclosure is a mixed refrigerant comprising trans- 1,2-difluoroethylene (HFO-1132(E)), trifluoroethylene (HFO-1123), and difluoromethane (R32).
The refrigerant E according to the present disclosure has various properties that are desirable as an R410A-alternative refrigerant, i.e., a coefficient of performance equivalent to that of R410A and a sufficiently low GWP.
The refrigerant E according to the present disclosure is preferably a refrigerant wherein when the mass% of HFO-1132(E), HFO-1123, and R32 based on their sum is respectively represented by x, y, and z, coordinates (x,y,z) in a ternary composition diagram in which the sum of HFO-1132(E), HFO-1123, and R32 is 100 mass% are within the range of a figure surrounded by line segments IK, KB', B'H, HR, RG, and GI that connect the following 6 points:

point I (72.0, 28,0, 0.0),
point K (48.4, 33.2, 18.4),
point B' (0.0, 81.6, 18.4),
point H (0.0, 84.2, 15.8),

point R (23.1, 67.4, 9.5), and
point G (38.5, 61.5, 0.0),
or on these line segments (excluding the points on the line segments B'H and GI);

the line segment IK is represented by coordinates
$(0.025z^2-1.7429z+72.00, -0.025z^2+0.7429z+28.0, z)$,
the line segment HR is represented by coordinates
$(-0.3123z^2+4.234z+11.06, 0.3123z^2-5.234z+88.94, z)$,
the line segment RG is represented by coordinates
$(-0.0491z^2-1.1544z+38.5, 0.0491z^2+0.1544z+61.5, z)$, and
the line segments KB' and GI are straight lines. When the requirements above are satisfied, the refrigerant according to the present disclosure has WCF lower flammability, a COP ratio of 93% or more relative to that of R410A, and a GWP of 125 or less.

The refrigerant E according to the present disclosure is preferably a refrigerant wherein

when the mass% of HFO-1132(E), HFO-1123, and R32 based on their sum is respectively represented by x, y, and z, coordinates (x,y,z) in a ternary composition diagram in which the sum of HFO-1132(E), HFO-1123, and R32 is 100 mass% are within the range of a figure surrounded by line segments IJ, JR, RG, and GI that connect the following 4 points:

point I (72.0, 28,0, 0.0),
point J (57.7, 32.8, 9.5),
point R (23.1, 67.4, 9.5), and
point G (38.5, 61.5, 0.0),
or on these line segments (excluding the points on the line segment GI);

the line segment IJ is represented by coordinates
$(0.025z^2-1.7429z+72.0, -0.025z^2+0.7429z+28.0, z)$,
the line segment RG is represented by coordinates
$(-0.0491z^2-1.1544z+38.5, 0.0491z^2+0.1544z+61.5, z)$, and
the line segments JR and GI are straight lines. When the requirements above are satisfied, the refrigerant according to the present disclosure has WCF lower flammability, a COP ratio of 93% or more relative to that of R410A, and a GWP of 125 or less.

The refrigerant E according to the present disclosure is preferably a refrigerant wherein

when the mass% of HFO-1132(E), HFO-1123, and R32 based on their sum is respectively represented by x, y, and z, coordinates (x,y,z) in a ternary composition diagram in which the sum of HFO-1132(E), HFO-1123, and R32 is 100 mass% are within the range of a figure surrounded by line segments MP, PB', B'H, HR, RG, and GM that connect the following 6 points:

point M (47.1, 52.9, 0.0),
point P (31.8, 49.8, 18.4),
point B' (0.0, 81.6, 18.4),
point H (0.0, 84.2, 15.8),
point R (23.1, 67.4, 9.5), and
point G (38.5, 61.5, 0.0),
or on these line segments (excluding the points on the line segments B'H and GM);

the line segment MP is represented by coordinates
$(0.0083z^2-0.984z+47.1, -0.0083z^2-0.016z+52.9, z)$,
the line segment HR is represented by coordinates
$(-0.3123z^2+4.234z+11.06, 0.3123z^2-5.234z+88.94, z)$,
the line segment RG is represented by coordinates
$(-0.0491z^2-1.1544z+38.5, 0.0491z^2+0.1544z+61.5, z)$, and
the line segments PB' and GM are straight lines. When the requirements above are satisfied, the refrigerant according to the present disclosure has ASHRAE lower flammability, a COP ratio of 93% or more relative to that of R410A, and a GWP of 125 or less.

The refrigerant E according to the present disclosure is preferably a refrigerant wherein

when the mass% of HFO-1132(E), HFO-1123, and R32 based on their sum is respectively represented by x, y, and z, coordinates (x,y,z) in a ternary composition diagram in which the sum of HFO-1132(E), HFO-1123, and R32 is 100 mass% are within the range of a figure surrounded by line segments MN, NR, RG, and GM that connect the following 4 points:

point M (47.1, 52.9, 0.0),
point N (38.5, 52.1, 9.5),
point R (23.1, 67.4, 9.5), and
point G (38.5, 61.5, 0.0),
or on these line segments (excluding the points on the line segment GM);

the line segment MN is represented by coordinates
$(0.0083z^2-0.984z+47.1, -0.0083z^2-0.016z+52.9, z)$,
the line segment RG is represented by coordinates
$(-0.0491z^2-1.1544z+38.5, 0.0491z^2+0.1544z+61.5, z)$,
the line segments NR and GM are straight lines. When the requirements above are satisfied, the refrigerant according to the present disclosure has ASHRAE lower flammability, a COP ratio of 93% or more relative to that of R410A, and a GWP of 65 or less.

The refrigerant E according to the present disclosure is preferably a refrigerant wherein

when the mass% of HFO-1132(E), HFO-1123, and R32 based on their sum is respectively represented by x, y, and z, coordinates (x,y,z) in a ternary composition diagram in which the sum of HFO-1132(E), HFO-1123, and R32 is 100 mass% are within the range of a figure surrounded by line segments PS, ST, and TP that connect the following 3 points:

point P (31.8, 49.8, 18.4),
point S (25.4, 56.2, 18.4), and
point T (34.8, 51.0, 14.2),
or on these line segments;

the line segment ST is represented by coordinates
$(-0.0982z^2+0.9622z+40.931, 0.0982z^2-1.9622z+59.069, z)$,
the line segment TP is represented by coordinates
$(0.0083z^2-0.984z+47.1, -0.0083z^2-0.016z+52.9, z)$, and
the line segment PS is a straight line. When the requirements above are satisfied, the refrigerant according to the present disclosure has ASHRAE lower flammability, a COP ratio of 94.5% or more relative to that of R410A, and a GWP of 125 or less.

The refrigerant E according to the present disclosure is preferably a refrigerant wherein

when the mass% of HFO-1132(E), HFO-1123, and R32 based on their sum is respectively represented by x, y, and z, coordinates (x,y,z) in a ternary composition diagram in which the sum of HFO-1132(E), HFO-1123, and R32 is 100 mass% are within the range of a figure surrounded by line segments QB", B"D, DU, and UQ that connect the following 4 points:

point Q (28.6, 34.4, 37.0),
point B" (0.0, 63.0, 37.0),
point D (0.0, 67.0, 33.0), and
point U (28.7, 41.2, 30.1),
or on these line segments (excluding the points on the line segment B"D);

the line segment DU is represented by coordinates
$(-3.4962z^2+210.71z-3146.1, 3.4962z^2-211.71z+3246.1, z)$,

the line segment UQ is represented by coordinates
$(0.0135z^2-0.9181z+44.133, -0.0135z^2-0.0819z+55.867, z)$, and
the line segments QB'' and B''D are straight lines. When the requirements above are satisfied, the refrigerant according to the present disclosure has ASHRAE lower flammability, a COP raito of 96% or more relative to that of R410A, and a GWP of 250 or less.

The refrigerant E according to the present disclosure is preferably a refrigerant wherein

when the mass% of HFO-1132(E), HFO-1123, and R32 based on their sum is respectively represented by x, y, and z, coordinates (x,y,z) in a ternary composition diagram in which the sum of HFO-1132(E), HFO-1123, and R32 is 100 mass% are within the range of a figure surrounded by line segments Oc', c'd', d'e', e'a', and a'O that connect the following 5 points:

point O (100.0, 0.0, 0.0),
point c' (56.7, 43.3, 0.0),
point d' (52.2, 38.3, 9.5),
point e' (41.8, 39.8, 18.4), and
point a' (81.6, 0.0, 18.4),
or on the line segments c'd', d'e', and e'a' (excluding the points c' and a');

the line segment c'd' is represented by coordinates
$(-0.0297z^2-0.1915z+56.7, 0.0297z^2+1.1915z+43.3, z)$,
the line segment d'e' is represented by coordinates
$(-0.0535z^2+0.3229z+53.957, 0.0535z^2+0.6771z+46.043, z)$, and
the line segments Oc', e'a', and a'O are straight lines. When the requirements above are satisfied, the refrigerant according to the present disclosure has a COP raito of 92.5% or more relative to that of R410A, and a GWP of 125 or less.

The refrigerant E according to the present disclosure is preferably a refrigerant wherein

when the mass% of HFO-1132(E), HFO-1123, and R32 based on their sum is respectively represented by x, y, and z, coordinates (x,y,z) in a ternary composition diagram in which the sum of HFO-1132(E), HFO-1123, and R32 is 100 mass% are within the range of a figure surrounded by line segments Oc, cd, de, ea', and a'O that connect the following 5 points:

point O (100.0, 0.0, 0.0),
point c (77.7, 22.3, 0.0),
point d (76.3, 14.2, 9.5),
point e (72.2, 9.4, 18.4), and
point a' (81.6, 0.0, 18.4),
or on the line segments cd, de, and ea' (excluding the points c and a');

the line segment cde is represented by coordinates
$(-0.017z^2+0.0148z+77.684, 0.017z^2+0.9852z+22.316, z)$, and
the line segments Oc, ea', and a'O are straight lines. When the requirements above are satisfied, the refrigerant according to the present disclosure has a COP raito of 95% or more relative to that of R410A, and a GWP of 125 or less.

The refrigerant E according to the present disclosure is preferably a refrigerant wherein

when the mass% of HFO-1132(E), HFO-1123, and R32 based on their sum is respectively represented by x, y, and z, coordinates (x,y,z) in a ternary composition diagram in which the sum of HFO-1132(E), HFO-1123, and R32 is 100 mass% are within the range of a figure surrounded by line segments Oc', c'd', d'a, and aO that connect the following 5 points:

point O (100.0, 0.0, 0.0),
point c' (56.7, 43.3, 0.0),
point d' (52.2, 38.3, 9.5), and
point a (90.5, 0.0, 9.5),

or on the line segments c'd' and d'a (excluding the points c' and a);

the line segment c'd' is represented by coordinates
$(-0.0297z^2-0.1915z+56.7, 0.0297z^2+1.1915z+43.3, z)$, and
the line segments Oc', d'a, and aO are straight lines. When the requirements above are satisfied, the refrigerant according to the present disclosure has a COP ratio of 93.5% or more relative to that of R410A, and a GWP of 65 or less.

The refrigerant E according to the present disclosure is preferably a refrigerant wherein

when the mass% of HFO-1132(E), HFO-1123, and R32 based on their sum is respectively represented by x, y, and z, coordinates (x,y,z) in a ternary composition diagram in which the sum of HFO-1132(E), HFO-1123, and R32 is 100 mass% are within the range of a figure surrounded by line segments Oc, cd, da, and aO that connect the following 4 points:

point O (100.0, 0.0, 0.0),
point c (77.7, 22.3, 0.0),
point d (76.3, 14.2, 9.5), and
point a (90.5, 0.0, 9.5),
or on the line segments cd and da (excluding the points c and a);

the line segment cd is represented by coordinates
$(-0.017z^2+0.0148z+77.684, 0.017z^2+0.9852z+22.316, z)$, and
the line segments Oc, da, and aO are straight lines. When the requirements above are satisfied, the refrigerant according to the present disclosure has a COP ratio of 95% or more relative to that of R410A, and a GWP of 65 or less.

The refrigerant E according to the present disclosure may further comprise other additional refrigerants in addition to HFO-1132(E), HFO-1123, and R32, as long as the above properties and effects are not impaired. In this respect, the refrigerant according to the present disclosure preferably comprises HFO-1132(E), HFO-1123, and R32 in a total amount of 99.5 mass% or more, more preferably 99.75 mass% or more, and even more preferably 99.9 mass% or more, based on the entire refrigerant.
Such additional refrigerants are not limited, and can be selected from a wide range of refrigerants. The mixed refrigerant may comprise a single additional refrigerant, or two or more additional refrigerants.

(Examples of Refrigerant E)

The present disclosure is described in more detail below with reference to Examples of refrigerant E. However, the refrigerant E is not limited to the Examples.
Mixed refrigerants were prepared by mixing HFO-1132(E), HFO-1123, and R32 at mass% based on their sum shown in Tables 145 and 146.
The composition of each mixture was defined as WCF. A leak simulation was performed using National Institute of Science and Technology (NIST) Standard Reference Data Base Refleak Version 4.0 under the conditions for equipment, storage, shipping, leak, and recharge according to the ASHRAE Standard 34-2013. The most flammable fraction was defined as WCFF.
For each mixed refrigerant, the burning velocity was measured according to the ANSI/ASHRAE Standard 34-2013. When the burning velocities of the WCF composition and the WCFF composition are 10 cm/s or less, the flammability of such a refrigerant is classified as Class 2L (lower flammability) in the ASHRAE flammability classification.
A burning velocity test was performed using the apparatus shown in Fig. 1 in the following manner. First, the mixed refrigerants used had a purity of 99.5% or more, and were degassed by repeating a cycle of freezing, pumping, and thawing until no traces of air were observed on the vacuum gauge. The burning velocity was measured by the closed method. The initial temperature was ambient temperature. Ignition was performed by generating an electric spark between the electrodes in the center of a sample cell. The duration of the discharge was 1.0 to 9.9 ms, and the ignition energy was typically about 0.1 to 1.0 J. The spread of the flame was visualized using schlieren photographs. A cylindrical container (inner diameter: 155 mm, length: 198 mm) equipped with two light transmission acrylic windows was used as the sample cell, and a xenon lamp was used as the light source. Schlieren images of the flame were recorded by a high-speed digital video camera at a frame rate of 600 fps and stored on a PC.
Tables 145 and 146 show the results.

Table 145

| Item | | Unit | I | J | K | L |
|---|---|---|---|---|---|---|
| WCF | HFO-1132(E) | mass% | 72.0 | 57.7 | 48.4 | 35.5 |
| | HFO-1123 | mass% | 28.0 | 32.8 | 33.2 | 27.5 |
| | R32 | mass% | 0.0 | 9.5 | 18.4 | 37.0 |
| Burning velocity (WCF) | | cm/s | 10 | 10 | 10 | 10 |

Table 146

| Item | | Unit | M | N | T | P | U | Q |
|---|---|---|---|---|---|---|---|---|
| WCF | HFO-1132(E) | mass% | 47.1 | 38.5 | 34.8 | 31.8 | 28.7 | 28.6 |
| | HFO-1123 | mass% | 52.9 | 52.1 | 51.0 | 49.8 | 41.2 | 34.4 |
| | R32 | mass% | 0.0 | 9.5 | 14.2 | 18.4 | 30.1 | 37.0 |
| Leak condition that results in WCFF | | | Storage, Shipping, -40°C, 92%, release, on the liquid phase side | Storage, Shipping, -40°C, 92%, release, on the liquid phase side | Storage, Shipping, -40°C, 92%, release, on the liquid phase side | Storage, Shipping, -40°C, 92%, release, on the liquid phase side | Storage, Shipping, -40°C, 92%, release, on the liquid phase side | Storage, Shipping, -40°C, 92%, release, on the liquid phase side |
| WCFF | HFO-1132(E) | mass% | 72.0 | 58.9 | 51.5 | 44.6 | 31.4 | 27.1 |
| | HFO-1123 | mass% | 28.0 | 32.4 | 33.1 | 32.6 | 23.2 | 18.3 |
| | R32 | mass% | 0.0 | 8.7 | 15.4 | 22.8 | 45.4 | 54.6 |
| Burning velocity (WCF) | | cm/s | 8 or less | 8 or less | 8 or less | 8 or less | 8 or less | 8 or less |
| Burning velocity (WCFF) | | cm/s | 10 | 10 | 10 | 10 | 10 | 10 |

The results in Table 1 indicate that in a ternary composition diagram of a mixed refrigerant of HFO-1132(E), HFO-1123, and R32 in which their sum is 100 mass%, a line segment connecting a point (0.0, 100.0, 0.0) and a point (0.0, 0.0, 100.0) is the base, the point (0.0, 100.0, 0.0) is on the left side, and the point (0.0, 0.0, 100.0) is on the right side, when coordinates (x,y,z) are on or below line segments IK and KL that connect the following 3 points:

point I (72.0, 28,0, 0.0),
point K (48.4, 33.2, 18.4), and
point L (35.5, 27.5, 37.0);
the line segment IK is represented by coordinates
$(0.025z^2-1.7429z+72.00, -0.025z^2+0.7429z+28.00, z)$, and
the line segment KL is represented by coordinates
$(0.0098z^2-1.238z+67.852, -0.0098z^2+0.238z+32.148, z)$,
it can be determined that the refrigerant has WCF lower flammability.

For the points on the line segment IK, an approximate curve $(x=0.025z^2-1.7429z+72.00)$ was obtained from three points, i.e., I (72.0, 28,0, 0.0), J (57.7, 32.8, 9.5), and K (48.4, 33.2, 18.4) by using the least-square method to determine coordinates ($x=0.025z^2-1.7429z+72.00$, $y=100-z-x=-0.00922z^2+0.2114z+32.443$, z).

Likewise, for the points on the line segment KL, an approximate curve was determined from three points, i.e., K (48.4, 33.2, 18.4), Example 10 (41.1, 31.2, 27.7), and L (35.5, 27.5, 37.0) by using the least-square method to determine coordinates.

The results in Table 146 indicate that in a ternary composition diagram of a mixed refrigerant of HFO-1132(E), HFO-1123, and R32 in which their sum is 100 mass%, a line segment connecting a point (0.0, 100.0, 0.0) and a point (0.0, 0.0, 100.0) is the base, the point (0.0, 100.0, 0.0) is on the left side, and the point (0.0, 0.0, 100.0) is on the right side, when coordinates (x,y,z) are on or below line segments MP and PQ that connect the following 3 points:

point M (47.1, 52.9, 0.0),
point P (31.8, 49.8, 18.4), and
point Q (28.6, 34.4, 37.0),
it can be determined that the refrigerant has ASHRAE lower flammability.

In the above, the line segment MP is represented by coordinates ($0.0083z^2-0.984z+47.1$, $-0.0083z^2-0.016z+52.9$, z), and the line segment PQ is represented by coordinates ($0.0135z^2-0.9181z+44.133$, $-0.0135z^2-0.0819z+55.867$, z).

For the points on the line segment MP, an approximate curve was obtained from three points, i.e., points M, N, and P, by using the least-square method to determine coordinates. For the points on the line segment PQ, an approximate curve was obtained from three points, i.e., points P, U, and Q, by using the least-square method to determine coordinates.

The GWP of compositions each comprising a mixture of R410A (R32 = 50%/R125 = 50%) was evaluated based on the values stated in the Intergovernmental Panel on Climate Change (IPCC), fourth report. The GWP of HFO-1132(E), which was not stated therein, was assumed to be 1 from HFO-1132a (GWP = 1 or less) and HFO-1123 (GWP = 0.3, described in WO 2015/141678 A1). The refrigerating capacity of compositions each comprising R410A and a mixture of HFO-1132(E) and HFO-1123 was determined by performing theoretical refrigeration cycle calculations for the mixed refrigerants using the National Institute of Science and Technology (NIST) and Reference Fluid Thermodynamic and Transport Properties Database (Refprop 9.0) under the following conditions.

The COP ratio and the refrigerating capacity (which may be referred to as "cooling capacity" or "capacity") ratio relative to those of R410 of the mixed refrigerants were determined. The conditions for calculation were as described below.

Evaporating temperature: 5°C
Condensation temperature: 45°C
Degree of superheating: 5K
Degree of subcooling: 5K
Compressor efficiency: 70%

Tables 147 to 166 show these values together with the GWP of each mixed refrigerant.

Table 147

| Item | Unit | Comparative Example 1 | Comparative Example 2 | Comparative Example 3 | Comparative Example 4 | Comparative Example 5 | Comparative Example 6 | Comparative Example 7 |
|------|------|------|------|------|------|------|------|------|
| | | | A | B | A' | B' | A" | B" |
| HFO-1132(E) | mass% | R410A | 90.5 | 0.0 | 81.6 | 0.0 | 63.0 | 0.0 |
| HFO-1123 | mass% | | 0.0 | 90.5 | 0.0 | 81.6 | 0.0 | 63.0 |
| R32 | mass% | | 9.5 | 9.5 | 18.4 | 18.4 | 37.0 | 37.0 |
| GWP | - | 2088 | 65 | 65 | 125 | 125 | 250 | 250 |
| COP ratio | % (relative to R410A) | 100 | 99.1 | 92.0 | 98.7 | 93.4 | 98.7 | 96.1 |
| Refrigerating capacity ratio | % (relative to R410A) | 100 | 102.2 | 111.6 | 105.3 | 113.7 | 110.0 | 115.4 |

Table 148

| Item | Unit | Comparative Example 8 | Comparativ e Example 9 | Comparativ e Example 10 | Example 1 | Example 2 | Comparativ e Example 11 |
|---|---|---|---|---|---|---|---|
| | | O | C | | U | | D |
| HFO-1132(E) | mass% | 100.0 | 50.0 | 41.1 | 28.7 | 15.2 | 0.0 |
| HFO-1123 | mass% | 0.0 | 31.6 | 34.6 | 41.2 | 52.7 | 67.0 |
| R32 | mass% | 0.0 | 18.4 | 24.3 | 30.1 | 32.1 | 33.0 |
| GWP | - | 1 | 125 | 165 | 204 | 217 | 228 |
| COP ratio | % (relative to R410A) | 99.7 | 96.0 | 96.0 | 96.0 | 96.0 | 96.0 |
| Refrigerating capacity ratio | % (relative to R410A) | 98.3 | 109.9 | 111.7 | 113.5 | 114.8 | 115.4 |

Table 149

| Item | Unit | Comparative Example 12 | Comparative Example 13 | Example 3 | Example 4 | Comparative Example 14 |
|---|---|---|---|---|---|---|
| | | E | | T | S | F |
| HFO-1132(E) | mass% | 53.4 | 43.4 | 34.8 | 25.4 | 0.0 |
| HFO-1123 | mass% | 46.6 | 47.1 | 51.0 | 56.2 | 74.1 |
| R32 | mass% | 0.0 | 9.5 | 14.2 | 18.4 | 25.9 |
| GWP | - | 1 | 65 | 97 | 125 | 176 |
| COP ratio | % (relative to R410A) | 94.5 | 94.5 | 94.5 | 94.5 | 94.5 |
| Refrigerating capacity ratio | % (relative to R410A) | 105.6 | 109.2 | 110.8 | 112.3 | 114.8 |

Table 150

| Item | Unit | Comparative Example 15 | Example 5 | Example 6 | Example 7 | Comparative Example 16 |
|---|---|---|---|---|---|---|
| | | G | | R | | H |
| HFO-1132(E) | mass% | 38.5 | 31.5 | 23.1 | 16.9 | 0.0 |
| HFO-1123 | mass% | 61.5 | 63.5 | 67.4 | 71.1 | 84.2 |
| R32 | mass% | 0.0 | 5.0 | 9.5 | 12.0 | 15.8 |
| GWP | - | 1 | 35 | 65 | 82 | 107 |

(continued)

| Item | Unit | Comparative Example 15 | Example 5 | Example 6 | Example 7 | Comparative Example 16 |
|---|---|---|---|---|---|---|
| | | G | | R | | H |
| COP ratio | % (relative to R410A) | 93.0 | 93.0 | 93.0 | 93.0 | 93.0 |
| Refrigerating capacity ratio | % (relative to R410A) | 107.0 | 109.1 | 110.9 | 111.9 | 113.2 |

Table 151

| Item | Unit | Comparative Example 17 | Example 8 | Example 9 | Comparative Example 18 | Comparative Example 19 |
|---|---|---|---|---|---|---|
| | | I | J | K | | L |
| HFO-1132(E) | mass% | 72.0 | 57.7 | 48.4 | 41.1 | 35.5 |
| HFO-1123 | mass% | 28.0 | 32.8 | 33.2 | 31.2 | 27.5 |
| R32 | mass% | 0.0 | 9.5 | 18.4 | 27.7 | 37.0 |
| GWP | - | 1 | 65 | 125 | 188 | 250 |
| COP ratio | % (relative to R410A) | 96.6 | 95.8 | 95.9 | 96.4 | 97.1 |
| Refrigerating capacity ratio | % (relative to R410A) | 103.1 | 107.4 | 110.1 | 112.1 | 113.2 |

Table 152

| Item | Unit | Comparative Example 20 | Example 10 | Example 11 | Example 12 |
|---|---|---|---|---|---|
| | | M | N | P | Q |
| HFO-1132(E) | mass% | 47.1 | 38.5 | 31.8 | 28.6 |
| HFO-1123 | mass% | 52.9 | 52.1 | 49.8 | 34.4 |
| R32 | mass% | 0.0 | 9.5 | 18.4 | 37.0 |
| GWP | - | 1 | 65 | 125 | 250 |
| COP ratio | % (relative to R410A) | 93.9 | 94.1 | 94.7 | 96.9 |
| Refrigerating capacity ratio | % (relative to R410A) | 106.2 | 109.7 | 112.0 | 114.1 |

Table 153

| Item | Unit | Comparative Example 22 | Comparative Example 23 | Comparative Example 24 | Example 14 | Example 15 | Example 16 | Comparative Example 25 | Comparative Example 26 |
|---|---|---|---|---|---|---|---|---|---|
| HFO-1132(E) | mass% | 10.0 | 20.0 | 30.0 | 40.0 | 50.0 | 60.0 | 70.0 | 80.0 |
| HFO-1123 | mass% | 85.0 | 75.0 | 65.0 | 55.0 | 45.0 | 35.0 | 25.0 | 15.0 |
| R32 | mass% | 5.0 | 5.0 | 5.0 | 5.0 | 5.0 | 5.0 | 5.0 | 5.0 |
| GWP | - | 35 | 35 | 35 | 35 | 35 | 35 | 35 | 35 |
| COP ratio | % (relative to R410A) | 91.7 | 92.2 | 92.9 | 93.7 | 94.6 | 95.6 | 96.7 | 97.7 |
| Refrigerating capacity ratio | % (relative to R410A) | 110.1 | 109.8 | 109.2 | 108.4 | 107.4 | 106.1 | 104.7 | 103.1 |

Table 154

| Item | Unit | Comparative Example 27 | Comparative Example 28 | Comparative Example 29 | Example 17 | Example 18 | Example 19 | Comparative Example 30 | Comparative Example 31 |
|---|---|---|---|---|---|---|---|---|---|
| HFO-1132(E) | mass% | 90.0 | 10.0 | 20.0 | 30.0 | 40.0 | 50.0 | 60.0 | 70.0 |
| HFO-1123 | mass% | 5.0 | 80.0 | 70.0 | 60.0 | 50.0 | 40.0 | 30.0 | 20.0 |
| R32 | mass% | 5.0 | 10.0 | 10.0 | 10.0 | 10.0 | 10.0 | 10.0 | 10.0 |
| GWP | - | 35 | 68 | 68 | 68 | 68 | 68 | 68 | 68 |
| COP ratio | % (relative to R410A) | 98.8 | 92.4 | 92.9 | 93.5 | 94.3 | 95.1 | 96.1 | 97.0 |
| Refrigerating capacity ratio | % (relative to R410A) | 101.4 | 111.7 | 111.3 | 110.6 | 109.6 | 108.5 | 107.2 | 105.7 |

Table 155

| Item | Unit | Comparative Example 32 | Example 20 | Example 21 | Example 22 | Example 23 | Example 24 | Comparative Example 33 | Comparative Example 34 |
|---|---|---|---|---|---|---|---|---|---|
| HFO-1132(E) | mass% | 80.0 | 10.0 | 20.0 | 30.0 | 40.0 | 50.0 | 60.0 | 70.0 |
| HFO-1123 | mass% | 10.0 | 75.0 | 65.0 | 55.0 | 45.0 | 35.0 | 25.0 | 15.0 |
| R32 | mass% | 10.0 | 15.0 | 15.0 | 15.0 | 15.0 | 15.0 | 15.0 | 15.0 |
| GWP | - | 68 | 102 | 102 | 102 | 102 | 102 | 102 | 102 |
| COP ratio | % (relative to R410A) | 98.0 | 93.1 | 93.6 | 94.2 | 94.9 | 95.6 | 96.5 | 97.4 |
| Refrigerating capacity ratio | % (relative to R410A) | 104.1 | 112.9 | 112.4 | 111.6 | 110.6 | 109.4 | 108.1 | 106.6 |

Table 156

| Item | Unit | Comparative Example 35 | Comparative Example 36 | Comparative Example 37 | Comparative Example 38 | Comparative Example 39 | Comparative Example 40 | Comparative Example 41 | Comparative Example 42 |
|---|---|---|---|---|---|---|---|---|---|
| HFO-1132(E) | mass% | 80.0 | 10.0 | 20.0 | 30.0 | 40.0 | 50.0 | 60.0 | 70.0 |
| HFO-1123 | mass% | 5.0 | 70.0 | 60.0 | 50.0 | 40.0 | 30.0 | 20.0 | 10.0 |
| R32 | mass% | 15.0 | 20.0 | 20.0 | 20.0 | 20.0 | 20.0 | 20.0 | 20.0 |
| GWP | - | 102 | 136 | 136 | 136 | 136 | 136 | 136 | 136 |
| COP ratio | % (relative to R410A) | 98.3 | 93.9 | 94.3 | 94.8 | 95.4 | 96.2 | 97.0 | 97.8 |
| Refrigerating capacity ratio | % (relative to R410A) | 105.0 | 113.8 | 113.2 | 112.4 | 111.4 | 110.2 | 108.8 | 107.3 |

Table 157

| Item | Unit | Comparative Example 43 | Comparative Example 44 | Comparative Example 45 | Comparative Example 46 | Comparative Example 47 | Comparative Example 48 | Comparative Example 49 | Comparative Example 50 |
|---|---|---|---|---|---|---|---|---|---|
| HFO-1132(E) | mass% | 10.0 | 20.0 | 30.0 | 40.0 | 50.0 | 60.0 | 70.0 | 10.0 |
| HFO-1123 | mass% | 65.0 | 55.0 | 45.0 | 35.0 | 25.0 | 15.0 | 5.0 | 60.0 |
| R32 | mass% | 25.0 | 25.0 | 25.0 | 25.0 | 25.0 | 25.0 | 25.0 | 30.0 |
| GWP | - | 170 | 170 | 170 | 170 | 170 | 170 | 170 | 203 |
| COP ratio | % (relative to R410A) | 94.6 | 94.9 | 95.4 | 96.0 | 96.7 | 97.4 | 98.2 | 95.3 |
| Refrigerating capacity ratio | % (relative to R410A) | 114.4 | 113.8 | 113.0 | 111.9 | 110.7 | 109.4 | 107.9 | 114.8 |

Table 158

| Item | Unit | Comparative Example 51 | Comparative Example 52 | Comparative Example 53 | Comparative Example 54 | Comparative Example 55 | Example 25 | Example 26 | Comparative Example 56 |
|---|---|---|---|---|---|---|---|---|---|
| HFO-1132(E) | mass% | 20.0 | 30.0 | 40.0 | 50.0 | 60.0 | 10.0 | 20.0 | 30.0 |
| HFO-1123 | mass% | 50.0 | 40.0 | 30.0 | 20.0 | 10.0 | 55.0 | 45.0 | 35.0 |
| R32 | mass% | 30.0 | 30.0 | 30.0 | 30.0 | 30.0 | 35.0 | 35.0 | 35.0 |
| GWP | - | 203 | 203 | 203 | 203 | 203 | 237 | 237 | 237 |
| COP ratio | % (relative to R410A) | 95.6 | 96.0 | 96.6 | 97.2 | 97.9 | 96.0 | 96.3 | 96.6 |
| Refrigerating capacity ratio | % (relative to R410A) | 114.2 | 113.4 | 112.4 | 111.2 | 109.8 | 115.1 | 114.5 | 113.6 |

Table 150

| Item | Unit | Comparative Example 57 | Comparative Example 58 | Comparative Example 59 | Comparative Example 60 | Comparative Example 61 | Comparative Example 62 | Comparative Example 63 | Comparative Example 64 |
|---|---|---|---|---|---|---|---|---|---|
| HFO-1132(E) | mass% | 40.0 | 50.0 | 60.0 | 10.0 | 20.0 | 30.0 | 40.0 | 50.0 |
| HFO-1123 | mass% | 25.0 | 15.0 | 5.0 | 50.0 | 40.0 | 30.0 | 20.0 | 10.0 |
| R32 | mass% | 35.0 | 35.0 | 35.0 | 40.0 | 40.0 | 40.0 | 40.0 | 40.0 |
| GWP | - | 237 | 237 | 237 | 271 | 271 | 271 | 271 | 271 |
| COP ratio | % (relative to R410A) | 97.1 | 97.7 | 98.3 | 96.6 | 96.9 | 97.2 | 97.7 | 98.2 |
| Refrigerating capacity ratio | % (relative to R410A) | 112.6 | 111.5 | 110.2 | 115.1 | 114.6 | 113.8 | 112.8 | 111.7 |

Table 160

| Item | Unit | Example 27 | Example 28 | Example 29 | Example 30 | Example 31 | Example 32 | Example 33 | Example 34 |
|---|---|---|---|---|---|---|---|---|---|
| HFO-1132(E) | mass% | 38.0 | 40.0 | 42.0 | 44.0 | 35.0 | 37.0 | 39.0 | 41.0 |
| HFO-1123 | mass% | 60.0 | 58.0 | 56.0 | 54.0 | 61.0 | 59.0 | 57.0 | 55.0 |
| R32 | mass% | 2.0 | 2.0 | 2.0 | 2.0 | 4.0 | 4.0 | 4.0 | 4.0 |
| GWP | - | 14 | 14 | 14 | 14 | 28 | 28 | 28 | 28 |
| COP ratio | % (relative to R410A) | 93.2 | 93.4 | 93.6 | 93.7 | 93.2 | 93.3 | 93.5 | 93.7 |
| Refrigerating capacity ratio | % (relative to R410A) | 107.7 | 107.5 | 107.3 | 107.2 | 108.6 | 108.4 | 108.2 | 108.0 |

Table 161

| Item | Unit | Example 35 | Example 36 | Example 37 | Example 38 | Example 39 | Example 40 | Example 41 | Example 42 |
|---|---|---|---|---|---|---|---|---|---|
| HFO-1132(E) | mass% | 43.0 | 31.0 | 33.0 | 35.0 | 37.0 | 39.0 | 41.0 | 27.0 |
| HFO-1123 | mass% | 53.0 | 63.0 | 61.0 | 59.0 | 57.0 | 55.0 | 53.0 | 65.0 |
| R32 | mass% | 4.0 | 6.0 | 6.0 | 6.0 | 6.0 | 6.0 | 6.0 | 8.0 |
| GWP | - | 28 | 41 | 41 | 41 | 41 | 41 | 41 | 55 |
| COP ratio | % (relative to R410A) | 93.9 | 93.1 | 93.2 | 93.4 | 93.6 | 93.7 | 93.9 | 93.0 |
| Refrigerating capacity ratio | % (relative to R410A) | 107.8 | 109.5 | 109.3 | 109.1 | 109.0 | 108.8 | 108.6 | 110.3 |

Table 162

| Item | Unit | Example 43 | Example 44 | Example 45 | Example 46 | Example 47 | Example 48 | Example 49 | Example 50 |
|---|---|---|---|---|---|---|---|---|---|
| HFO-1132(E) | mass% | 29.0 | 31.0 | 33.0 | 35.0 | 37.0 | 39.0 | 32.0 | 32.0 |
| HFO-1123 | mass% | 63.0 | 61.0 | 59.0 | 57.0 | 55.0 | 53.0 | 51.0 | 50.0 |
| R32 | mass% | 8.0 | 8.0 | 8.0 | 8.0 | 8.0 | 8.0 | 17.0 | 18.0 |
| GWP | - | 55 | 55 | 55 | 55 | 55 | 55 | 116 | 122 |
| COP ratio | % (relative to R410A) | 93.2 | 93.3 | 93.5 | 93.6 | 93.8 | 94.0 | 94.5 | 94.7 |
| Refrigerating capacity ratio | % (relative to R410A) | 110.1 | 110.0 | 109.8 | 109.6 | 109.5 | 109.3 | 111.8 | 111.9 |

Table 163

| Item | Unit | Example 51 | Example 52 | Example 53 | Example 54 | Example 55 | Example 56 | Example 57 | Example 58 |
|---|---|---|---|---|---|---|---|---|---|
| HFO-1132(E) | mass% | 30.0 | 27.0 | 21.0 | 23.0 | 25.0 | 27.0 | 11.0 | 13.0 |
| HFO-1123 | mass% | 52.0 | 42.0 | 46.0 | 44.0 | 42.0 | 40.0 | 54.0 | 52.0 |
| R32 | mass% | 18.0 | 31.0 | 33.0 | 33.0 | 33.0 | 33.0 | 35.0 | 35.0 |
| GWP | - | 122 | 210 | 223 | 223 | 223 | 223 | 237 | 237 |
| COP ratio | % (relative to R410A) | 94.5 | 96.0 | 96.0 | 96.1 | 96.2 | 96.3 | 96.0 | 96.0 |
| Refrigerating capacity ratio | % (relative to R410A) | 112.1 | 113.7 | 114.3 | 114.2 | 114.0 | 113.8 | 115.0 | 114.9 |

Table 164

| Item | Unit | Example 59 | Example 60 | Example 61 | Example 62 | Example 63 | Example 64 | Example 65 | Example 66 |
|---|---|---|---|---|---|---|---|---|---|
| HFO-1132(E) | mass% | 15.0 | 17.0 | 19.0 | 21.0 | 23.0 | 25.0 | 27.0 | 11.0 |
| HFO-1123 | mass% | 50.0 | 48.0 | 46.0 | 44.0 | 42.0 | 40.0 | 38.0 | 52.0 |
| R32 | mass% | 35.0 | 35.0 | 35.0 | 35.0 | 35.0 | 35.0 | 35.0 | 37.0 |
| GWP | - | 237 | 237 | 237 | 237 | 237 | 237 | 237 | 250 |
| COP ratio | % (relative to R410A) | 96.1 | 96.2 | 96.2 | 96.3 | 96.4 | 96.4 | 96.5 | 96.2 |
| Refrigerating capacity ratio | % (relative to R410A) | 114.8 | 114.7 | 114.5 | 114.4 | 114.2 | 114.1 | 113.9 | 115.1 |

Table 165

| Item | Unit | Example 67 | Example 68 | Example 69 | Example 70 | Example 71 | Example 72 | Example 73 | Example 74 |
|---|---|---|---|---|---|---|---|---|---|
| HFO-1132(E) | mass% | 13.0 | 15.0 | 17.0 | 15.0 | 17.0 | 19.0 | 21.0 | 23.0 |
| HFO-1123 | mass% | 50.0 | 48.0 | 46.0 | 50.0 | 48.0 | 46.0 | 44.0 | 42.0 |
| R32 | mass% | 37.0 | 37.0 | 37.0 | 0.0 | 0.0 | 0.0 | 0.0 | 0.0 |
| GWP | - | 250 | 250 | 250 | 237 | 237 | 237 | 237 | 237 |
| COP ratio | % (relative to R410A) | 96.3 | 96.4 | 96.4 | 96.1 | 96.2 | 96.2 | 96.3 | 96.4 |
| Refrigerating capacity ratio | % (relative to R410A) | 115.0 | 114.9 | 114.7 | 114.8 | 114.7 | 114.5 | 114.4 | 114.2 |

Table 166

| Item | Unit | Example 75 | Example 76 | Example 77 | Example 78 | Example 79 | Example 80 | Example 81 | Example 82 |
|---|---|---|---|---|---|---|---|---|---|
| HFO-1132(E) | mass% | 25.0 | 27.0 | 11.0 | 19.0 | 21.0 | 23.0 | 25.0 | 27.0 |
| HFO-1123 | mass% | 40.0 | 38.0 | 52.0 | 44.0 | 42.0 | 40.0 | 38.0 | 36.0 |
| R32 | mass% | 0.0 | 0.0 | 0.0 | 37.0 | 37.0 | 37.0 | 37.0 | 37.0 |
| GWP | - | 237 | 237 | 250 | 250 | 250 | 250 | 250 | 250 |
| COP ratio | % (relative to R410A) | 96.4 | 96.5 | 96.2 | 96.5 | 96.5 | 96.6 | 96.7 | 96.8 |
| Refrigerating capacity ratio | % (relative to R410A) | 114.1 | 113.9 | 115.1 | 114.6 | 114.5 | 114.3 | 114.1 | 114.0 |

The above results indicate that under the condition that the mass% of HFO-1132(E), HFO-1123, and R32 based on their sum is respectively represented by x, y, and z, when coordinates (x,y,z) in a ternary composition diagram in which the sum of HFO-1132(E), HFO-1123, and R32 is 100 mass%, a line segment connecting a point (0.0, 100.0, 0.0) and a point (0.0, 0.0, 100.0) is the base, and the point (0.0, 100.0, 0.0) is on the left side are within the range of a figure surrounded by line segments that connect the following 4 points:

point O (100.0, 0.0, 0.0),
point A" (63.0, 0.0, 37.0),
point B" (0.0, 63.0, 37.0), and
point (0.0, 100.0, 0.0),
or on these line segments,
the refrigerant has a GWP of 250 or less.

The results also indicate that when coordinates (x,y,z) are within the range of a figure surrounded by line segments that connect the following 4 points:

point O (100.0, 0.0, 0.0),
point A' (81.6, 0.0, 18.4),
point B' (0.0, 81.6, 18.4), and
point (0.0, 100.0, 0.0),
or on these line segments,
the refrigerant has a GWP of 125 or less.

The results also indicate that when coordinates (x,y,z) are within the range of a figure surrounded by line segments that connect the following 4 points:

point O (100.0, 0.0, 0.0),
point A (90.5, 0.0, 9.5),
point B (0.0, 90.5, 9.5), and
point (0.0, 100.0, 0.0),
or on these line segments,
the refrigerant has a GWP of 65 or less.

The results also indicate that when coordinates (x,y,z) are on the left side of line segments that connect the following 3 points:

point C (50.0, 31.6, 18.4),
point U (28.7, 41.2, 30.1), and
point D(52.2, 38.3, 9.5),
or on these line segments,
the refrigerant has a COP ratio of 96% or more relative to that of R410A.

In the above, the line segment CU is represented by coordinates $(-0.0538z^2+0.7888z+53.701, 0.0538z^2-1.7888z+46.299, z)$, and the line segment UD is represented by coordinates $(-3.4962z^2+210.71z-3146.1, 3.4962z^2-211.71z+3246.1, z)$.

The points on the line segment CU are determined from three points, i.e., point C, Comparative Example 10, and point U, by using the least-square method.

The points on the line segment UD are determined from three points, i.e., point U, Example 2, and point D, by using the least-square method.

The results also indicate that when coordinates (x,y,z) are on the left side of line segments that connect the following 3 points:

point E (55.2, 44.8, 0.0),
point T (34.8, 51.0, 14.2), and
point F (0.0, 76.7, 23.3),
or on these line segments,
the refrigerant has a COP ratio of 94.5% or more relative to that of R410A.

In the above, the line segment ET is represented by coordinates ($-0.0547z^2-0.5327z+53.4$, $0.0547z^2-0.4673z+46.6$, z), and the line segment TF is represented by coordinates ($-0.0982z^2+0.9622z+40.931$, $0.0982z^2-1.9622z+59.069$, z).

The points on the line segment ET are determined from three points, i.e., point E, Example 2, and point T, by using the least-square method.

The points on the line segment TF are determined from three points, i.e., points T, S, and F, by using the least-square method.

The results also indicate that when coordinates (x,y,z) are on the left side of line segments that connect the following 3 points:

point G (0.0, 76.7, 23.3),
point R (21.0, 69.5, 9.5), and
point H (0.0, 85.9, 14.1),
or on these line segments,
the refrigerant has a COP ratio of 93% or more relative to that of R410A.

In the above, the line segment GR is represented by coordinates ($-0.0491z^2-1.1544z+38.5$, $0.0491z^2+0.1544z+61.5$, z), and the line segment RH is represented by coordinates ($-0.3123z^2+4.234z+11.06$, $0.3123z^2-5.234z+88.94$, z).

The points on the line segment GR are determined from three points, i.e., point G, Example 5, and point R, by using the least-square method.

The points on the line segment RH are determined from three points, i.e., point R, Example 7, and point H, by using the least-square method.

In contrast, as shown in, for example, Comparative Examples 8, 9, 13, 15, 17, and 18, when R32 is not contained, the concentrations of HFO-1132(E) and HFO-1123, which have a double bond, become relatively high; this undesirably leads to deterioration, such as decomposition, or polymerization in the refrigerant compound.

(6) Refrigeration Cycle Apparatus

Next, a refrigeration cycle apparatus according to an embodiment of the present disclosure will be described with reference to the drawings.

The refrigeration cycle apparatus of the following embodiment of the present disclosure has a feature in which, at least during a predetermined operation, in at least one of a heat source-side heat exchanger and a usage-side heat exchanger, a flow of a refrigerant and a flow of a heating medium that exchanges heat with the refrigerant are counter flows. Hereinafter, to simplify description, a refrigeration cycle apparatus having such a feature is sometimes referred to as a refrigeration cycle apparatus including a counter-flow-type heat exchanger. Here, counter flow means that a flow direction of a refrigerant in a heat exchanger is opposite to a flow direction of an external heating medium (a heating medium that flows outside a refrigerant circuit). In other words, counter flow means that, in a heat exchanger, a refrigerant flows from the downstream side to the upstream side in a direction in which an external heating medium flows. In the following description, when a flow direction of a refrigerant in a heat exchanger is a forward direction with respect to a flow direction of an external heating medium; in other words, when a refrigerant flows from the upstream side to the downstream side in the direction in which an external heating medium flows, the flow of the refrigerant is referred to as a parallel flow.

The counter-flow-type heat exchanger will be described with reference to specific examples.

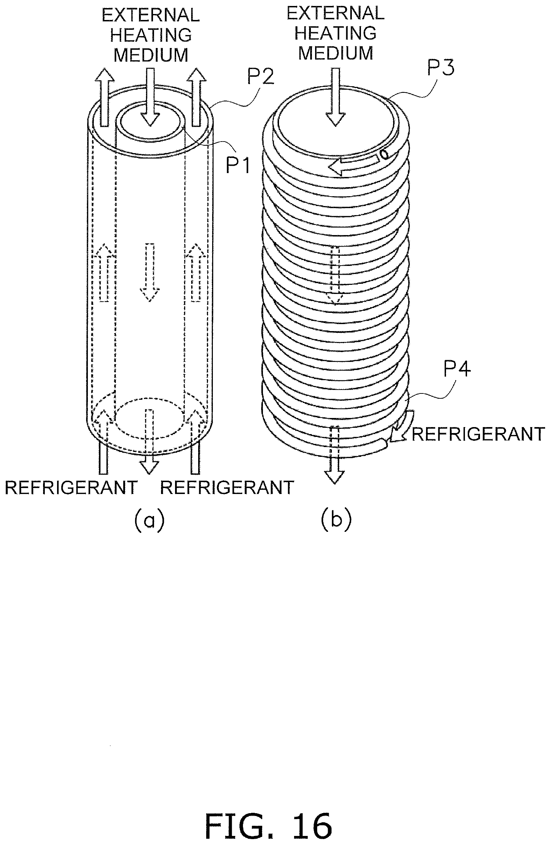

When an external heating medium is a liquid (for example, water), the heat exchanger is formed to be a double-pipe heat exchanger as illustrated in Fig. 16 (a), and a flow of a refrigerant and a flow of the external heating medium are enabled to be counter flows, for example, by causing the external heating medium to flow inside an inner pipe P1 of a double pipe from one side to the other side (in the illustration, from the upper side to the lower side) and by causing the refrigerant to flow inside an outer pipe P2 from the other side to the one side (in the illustration, from the lower side to the upper side). Alternatively, the heat exchanger is formed to be a heat exchanger in which a helical pipe P4 is coiled around the outer periphery of a cylindrical pipe P3 as illustrated in Fig. 16 (b), and a flow of a refrigerant and a flow of an external heating medium are enabled to be counter flows, for example, by causing the external heating medium to flow inside the cylindrical pipe P3 from one side to the other side (in the illustration, from the upper side to the lower side) and by causing the refrigerant to flow inside the helical pipe P4 from the other side to the one side (in the illustration, from the lower side to the upper side). Moreover, although illustration is omitted, counter flow may be realized by causing a flow direction of a refrigerant to be opposite to a flow direction of an external heating medium in another known heat exchanger such as a plate-type heat exchanger.

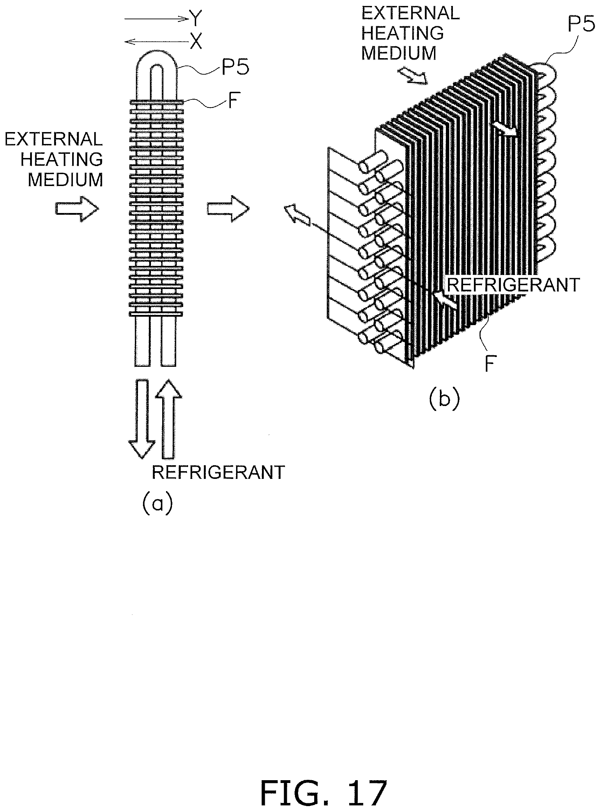

When an external heating medium is air, the heat exchanger can be formed to be, for example, a fin-and-tube heat exchanger as illustrated in Fig. 17. The fin-and-tube heat exchanger includes, for example, as in Fig. 17, a plurality of fins F that are arranged in parallel at a predetermined interval and U-shaped heat transfer tubes P5 meandering in plan view. In the fin-and-tube heat exchanger, linear portions parallel to each other that are included in the respective heat transfer tubes P5 and that are a plurality of lines (in Fig. 17, two lines) are provided so as to penetrate the plurality of fins F. In both ends of each heat transfer tube P5, one end is to be an inlet for a refrigerant and the other end is to be an outlet for the refrigerant. As indicated by arrow X in the figure, a flow of the refrigerant in the heat exchanger and a flow of the external heating medium are enabled to be counter flows by causing the refrigerant to flow from the downstream side to the upstream side in the flow direction Y of the air.

The refrigerant that is sealed in the refrigerant circuit of the refrigeration cycle apparatus according to the present disclosure is a mixed refrigerant containing 1,2-difluoroethylene, and may be any one of the above-described refrigerants A to E can be used. During evaporation and condensation of each of the above-described refrigerants A to E, the temperature of the heating medium increases or decreases.

Such a refrigeration cycle involving temperature change (temperature glide) during evaporation and condensation is called the Lorentz cycle. In the Lorentz cycle, a temperature difference between the temperature of the refrigerant during evaporation and the temperature of the refrigerant during condensation is decreased by causing an evaporator and a condenser that function as heat exchangers performing heat exchange to be counter-flow types. However, it is possible to exchange heat efficiently because the temperature difference that is large enough to effectively transfer heat between the refrigerant and the external heating medium is maintained. In addition, another advantage of the refrigeration cycle apparatus including the counter-flow-type heat exchanger is that a pressure difference is also minimized. Therefore, in the refrigeration cycle apparatus including the counter-flow-type heat exchanger, improvement in energy efficiency and performance can be obtained compared with an existing system.

(6-1) First Embodiment

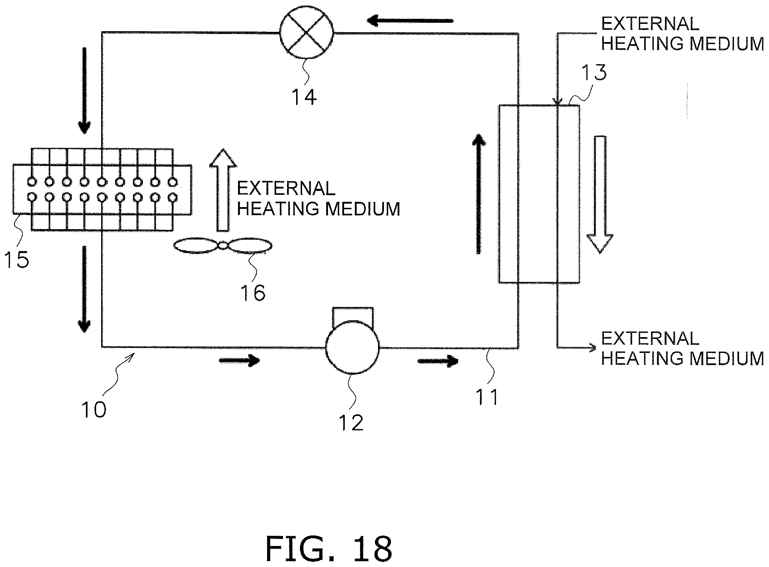

Fig. 18 is a schematic structural diagram of a refrigeration cycle apparatus 10 according to an embodiment.

Here, a case where a refrigerant and air as an external heating medium exchange heat with each other in a usage-side heat exchanger 15, which will be described below, of the refrigeration cycle apparatus 10 will be described as an example. However, the usage-side heat exchanger 15 may be a heat exchanger that performs heat exchange with a liquid (for example, water) as an external heating medium. Here, a case where a refrigerant and a liquid as an external heating medium exchange heat with each other in a heat source-side heat exchanger 13, which will be described below, of the refrigeration cycle apparatus 10 will be described as an example. However, the usage-side heat exchanger 15 may be a heat exchanger that performs heat exchange with air as an external heating medium. In other words, a combination of the external heating medium that exchanges heat with the refrigerant in the heat source-side heat exchanger 13 and the external heating medium that exchanges heat with the refrigerant in the usage-side heat exchanger 15 may be any one of the combinations: (liquid, air), (air, liquid), (liquid, liquid), and (air, air). The same applies to other embodiments.

Here, the refrigeration cycle apparatus 10 is an air conditioning apparatus. However, the refrigeration cycle apparatus 10 is not limited to an air conditioning apparatus, and may be, for example, a refrigerator, a freezer, a water cooler, an ice-making machine, a refrigerating showcase, a freezing showcase, a freezing and refrigerating unit, a refrigerating machine for a freezing and refrigerating warehouse or the like, a chiller (chilling unit), a turbo refrigerating machine, or a screw refrigerating machine.

Here, in the refrigeration cycle apparatus 10, the heat source-side heat exchanger 13 is used as a condenser for the refrigerant, the usage-side heat exchanger 15 is used as an evaporator for the refrigerant, and the external heating medium (in the present embodiment, air) is cooled in the usage-side heat exchanger 15. However, the refrigeration cycle apparatus 10 is not limited to this configuration. In the refrigeration cycle apparatus 10, the heat source-side heat exchanger 13 may be used as an evaporator for the refrigerant, the usage-side heat exchanger 15 may be used as a condenser for the refrigerant, and the external heating medium (in the present embodiment, air) may be heated in the usage-side heat exchanger 15. However, in this case, a flow direction of the refrigerant is opposite to that of Fig. 18. In this case, counter flow is realized by causing a direction in which the external heating medium flows in each of the heat exchangers 13 and 15 to be also opposite to a corresponding direction in Fig. 18. When the heat source-side heat exchanger 13 is used as an evaporator for the refrigerant and the usage-side heat exchanger 15 is used as a condenser for the refrigerant, although the use of the refrigeration cycle apparatus 10 is not limited, the refrigeration cycle apparatus 10 may be a hot water supply apparatus, a floor heating apparatus, or the like other than an air conditioning apparatus (heating apparatus).

The refrigeration cycle apparatus 10 includes a refrigerant circuit 11 in which a mixed refrigerant containing 1,2-difluoroethylene is sealed and through which the refrigerant is circulated. Any one of the above-described refrigerants A to E can be used for the mixed refrigerant containing 1,2-difluoroethylene.

The refrigerant circuit 11 includes mainly a compressor 12, the heat source-side heat exchanger 13, an expansion mechanism 14, and the usage-side heat exchanger 15 and is configured by connecting the pieces of equipment 12 to 15 one after another. In the refrigerant circuit 11, the refrigerant circulates in the direction indicated by solid-line arrows of Fig. 18.

The compressor 12 is a piece of equipment that compresses a low-pressure gas refrigerant and discharges a gas refrigerant at a high-temperature and a high-pressure in the refrigeration cycle. The high-pressure gas refrigerant that has been discharged from the compressor 12 is supplied to the heat source-side heat exchanger 13.

The heat source-side heat exchanger 13 functions as a condenser that condenses the high-temperature and high-pressure gas refrigerant that is compressed in the compressor 12. The heat source-side heat exchanger 13 is disposed, for example, in a machine chamber. In the present embodiment, a liquid (here, cooling water) is supplied to the heat source-side heat exchanger 13 as an external heating medium. The heat source-side heat exchanger 13 is, but is not limited to, a double-pipe heat exchanger, for example. In the heat source-side heat exchanger 13, the high-temperature and high-pressure gas refrigerant condenses to become a high-pressure liquid refrigerant by heat exchange between the refrigerant and the external heating medium. The high-pressure liquid refrigerant that has passed through the heat source-side heat exchanger 13 is sent to the expansion mechanism 14.

The expansion mechanism 14 is a piece of equipment to decompress the high-pressure liquid refrigerant that has dissipated heat in the heat source-side heat exchanger 13 to a low pressure in the refrigeration cycle. For example, an electronic expansion valve is used as the expansion mechanism 14.

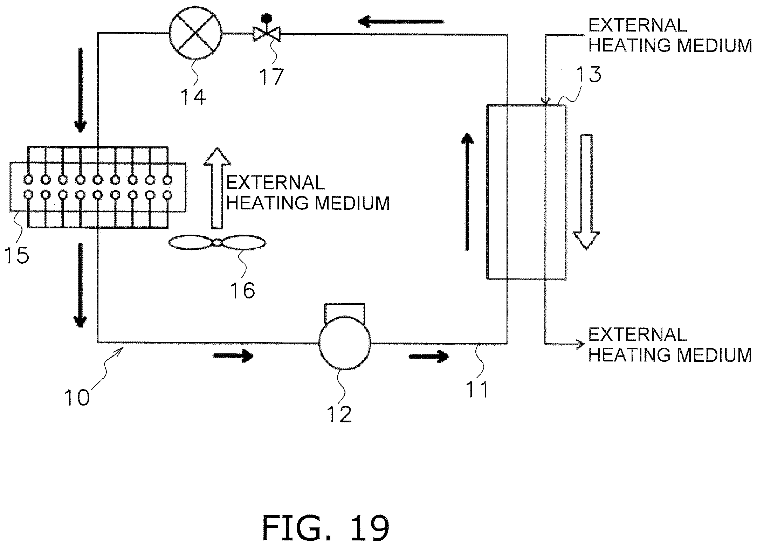

However, as illustrated in Fig. 19, a thermosensitive expansion valve may be used as the expansion mechanism 14. When a thermosensitive expansion valve is used as the expansion mechanism 14, the thermosensitive expansion valve detects the temperature of the refrigerant after the refrigerant passes through the usage-side heat exchanger 15 by a thermosensitive cylinder directly connected to the expansion valve and controls the opening degree of the expansion valve based on the detected temperature of the refrigerant. Therefore, for example, when the usage-side heat exchanger 15, the expansion valve, and the thermosensitive cylinder are provided in the usage-side unit, control of the expansion valve is completed only within the usage-side unit. As a result, low cost and construction savings can be achieved because communications relevant to the control of the expansion valve are not needed between the heat source-side unit in which the heat source-side heat exchanger 13 is provided and the usage-side unit. When a thermosensitive expansion valve is used for the expansion mechanism 14, it is preferable to dispose an electromagnetic valve 17 on the heat source-side heat exchanger 13 side of the expansion mechanism 14.

Alternatively, the expansion mechanism 14 may be a capillary tube (not shown).

A low-pressure liquid refrigerant or a gas-liquid two-phase refrigerant that has passed through the expansion mechanism 14 is supplied to the usage-side heat exchanger 15.

The usage-side heat exchanger 15 functions as an evaporator that evaporates the low-pressure liquid refrigerant. The usage-side heat exchanger 15 is disposed in a target space that is to be air-conditioned. In the present embodiment, the usage-side heat exchanger 15 is supplied with air as an external heating medium by a fan 16. The usage-side heat exchanger 15 is, but is not limited to, a fin-and-tube heat exchanger, for example. In the usage-side heat exchanger 15, by heat exchange between the refrigerant and the air, the low-pressure liquid refrigerant evaporates to become a low-pressure gas refrigerant whereas the air as an external heating medium is cooled. The low-pressure gas refrigerant that has passed through the usage-side heat exchanger 13 is supplied to the compressor 12 and circulates through the refrigerant circuit 11 again.

In the above-described refrigeration cycle apparatus 10, both heat exchangers, which are the heat source-side heat exchanger 13 and the usage-side heat exchanger 15, are counter-flow-type heat exchangers during the operation.

<Features of Refrigeration Cycle Apparatus>

The refrigeration cycle apparatus 10 includes the refrigerant circuit 11 including the compressor 12, the heat source-side heat exchanger 13, the expansion mechanism 14, and the usage-side heat exchanger 15. In the refrigerant circuit 11, the refrigerant containing at least 1,2-difluoroethylene (HFO-1132 (E)) is sealed. At least during a predetermined operation, in at least one of the heat source-side heat exchanger 13 and the usage-side heat exchanger 15, the flow of the refrigerant and the flow of the heating medium that exchanges heat with the refrigerant are counter flows.

The refrigeration cycle apparatus realizes highly efficient operation effectively utilizing the heat exchangers 13 and 15 by using the refrigerant that contains 1,2-difluoroethylene (HFO-1132 (E)) and that has a low global warming potential.

When each of the heat exchangers 13 and 15 functions as a condenser for the refrigerant, the temperature of the refrigerant that passes therethrough tends to be lower on the exit side than the temperature thereof on the entrance side. However, when each of the heat exchangers 13 and 15 that functions as a condenser is formed to be a counter-flow-type heat exchanger, a temperature difference between the air and the refrigerant is easily sufficiently ensured on both the entrance side and the exit side of the refrigerant in each of the heat exchangers 13 and 15.

When each of the heat exchangers 13 and 15 functions as an evaporator for the refrigerant, the temperature of the refrigerant that passes therethrough tends to be higher on the exit side than a temperature thereof on the entrance side. However, when each of the heat exchangers 13 and 15 that functions as an evaporator is formed to be a counter-flow-type heat exchanger, the temperature difference between the air and the refrigerant is easily sufficiently ensured on both the entrance side and the exit side of the refrigerant in each of the heat exchangers 13 and 15.

<Modifications>

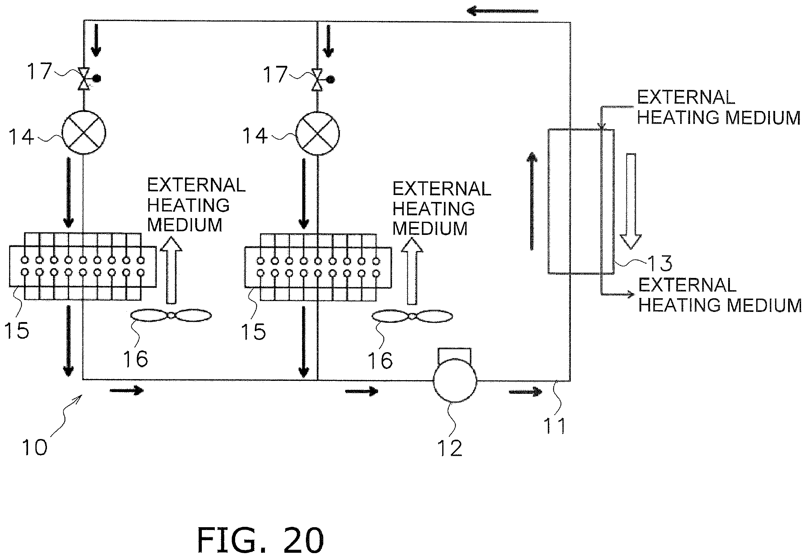

As illustrated in Fig. 20, in the refrigeration cycle apparatus 10, the refrigerant circuit 11 may include a plurality of (in the illustrated example, two) expansion mechanisms 14 parallel to each other and a plurality of (in the illustrated example, two) usage-side heat exchangers 15 parallel to each other. Although illustration is omitted, the refrigerant circuit 11 may include a plurality of heat source-side heat exchangers 13 that are arranged in parallel or may include a plurality of compressors 12.

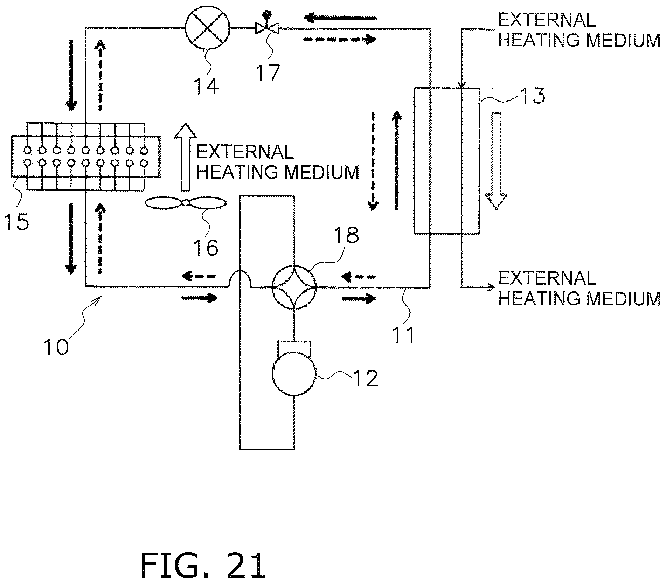

As illustrated in Fig. 21, in the refrigeration cycle apparatus 10, the refrigerant circuit 11 may further include a flow path switching mechanism 18. The flow path switching mechanism 18 is a mechanism that switches between the heat source-side heat exchanger 13 and the usage-side heat exchanger 15 as a destination to which the gas refrigerant that is discharged from the compressor 12 flows. For example, the flow path switching mechanism 18 is a four-way switching valve but is not limited to such a valve, and the flow path switching mechanism 18 may be realized by using a plurality of valves. The flow path switching mechanism 18 can switch between a cooling operation in which the heat source-side heat exchanger 13 functions as a condenser and the usage-side heat exchanger 15 functions as an evaporator and a heating operation in which the heat source-side heat exchanger 13 functions as an evaporator and the usage-side heat exchanger 15 functions as a condenser.

In an example illustrated in Fig. 21, during the cooling operation, the heat source-side heat exchanger 13 functioning as a condenser and the usage-side heat exchanger 15 functioning as an evaporator both become counter-flow-type heat exchangers (refer to solid arrows indicating the refrigerant flow). In contrast, the heat source-side heat exchanger 13 functioning as an evaporator and the usage-side heat exchanger 15 functioning as a condenser both become parallel-flow-type heat exchangers (the flow direction of the refrigerant is the forward direction with respect to the flow direction of the external heating medium) during the heating operation (refer to dashed arrows indicating the refrigerant flow).

However, the configuration is not limited to such a configuration, and the flow direction of the external heating medium that flows in the heat source-side heat exchanger 13 may be designed so that the heat source-side heat exchanger 13 functioning as a condenser becomes a parallel-flow-type heat exchanger during the cooling operation and the heat source-side heat exchanger 13 functioning as an evaporator becomes a counter-flow-type heat exchanger during the heating operation. In addition, the flow direction of the external heating medium that flows in the usage-side heat exchanger 15 may be designed so that the usage-side heat exchanger 15 functioning as an evaporator becomes a parallel-flow-type heat exchanger during the cooling operation and the usage-side heat exchanger 15 functioning as a condenser becomes a counter-flow-type heat exchanger during the heating operation.

The flow direction of the external heating medium is preferably designed so that, when each of the heat exchangers 13 and 15 functions as a condenser, the flow direction of the refrigerant is opposite to the flow direction of the external heating medium. In other words, when each of the heat exchangers 13 and 15 functions as a condenser, the heat exchangers 13 and 15 are preferably counter-flow-type heat exchangers.

(6-2) Second Embodiment

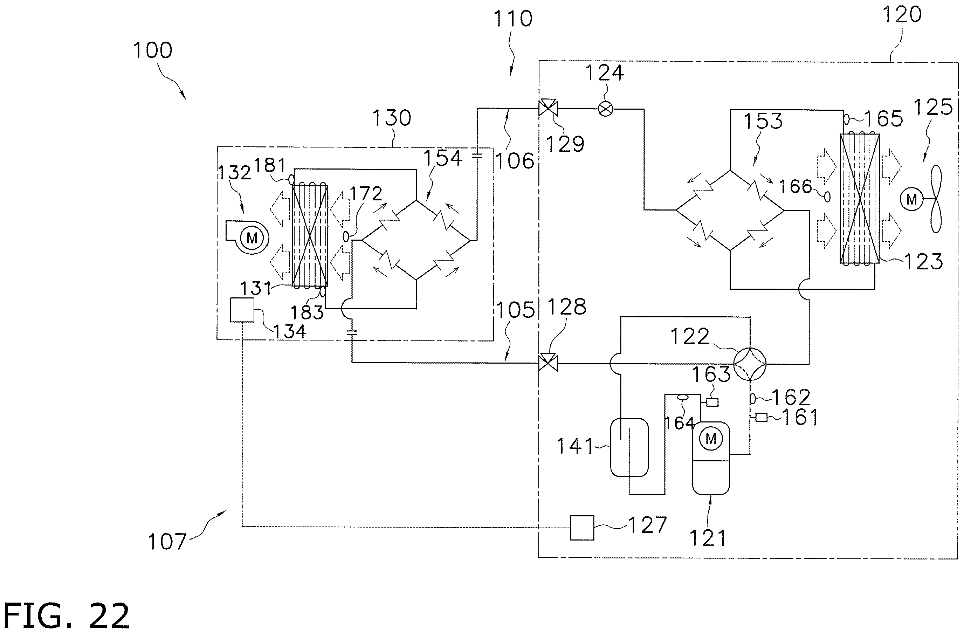

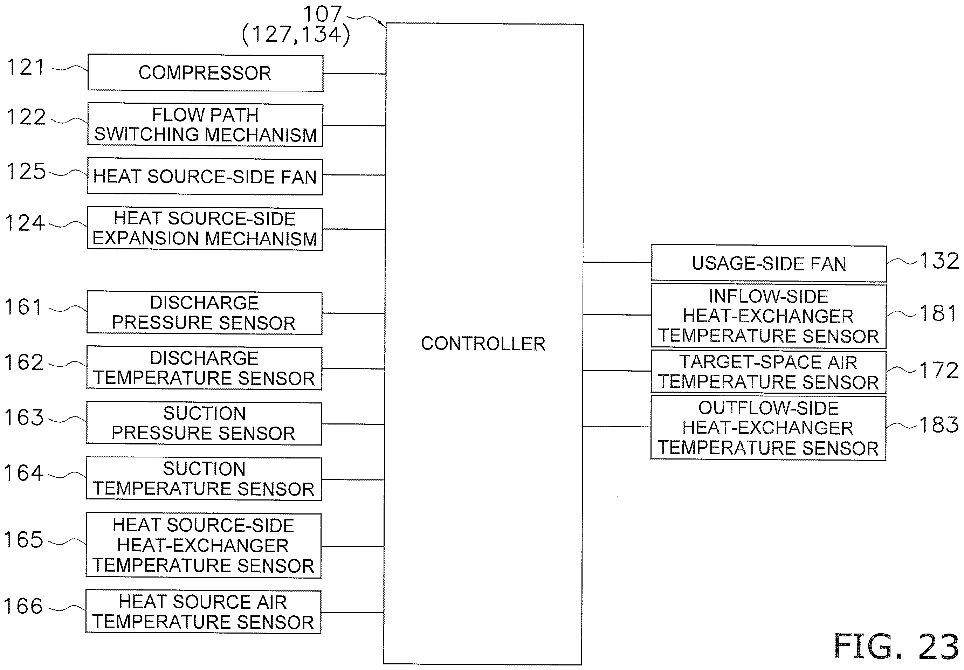

Hereinafter, an air conditioning apparatus 100 as a refrigeration cycle apparatus according to a second embodiment will be described with reference to Fig. 22, which is a schematic structural diagram of a refrigerant circuit, and Fig. 23, which is a schematic control block structural diagram.

The air conditioning apparatus 100 is an apparatus that conditions the air in a target space by performing a vapor-compression refrigeration cycle.

The air conditioning apparatus 100 includes mainly a heat source-side unit 120, a usage-side unit 130, a liquid-side connection pipe 106 and a gas-side connection pipe 105 that both connect the heat source-side unit 120 to the usage-side unit 130, a remote controller, which is not illustrated, as an input device and an output device, and a controller 107 that controls the operations of the air conditioning apparatus 100.

A refrigerant for performing a vapor-compression refrigeration cycle is sealed in the refrigerant circuit 110. The air conditioning apparatus 100 performs a refrigeration cycle in which the refrigerant sealed in the refrigerant circuit 110 is compressed, cooled or condensed, decompressed, and, after being heated or evaporated, compressed again. The refrigerant is a mixed refrigerant containing 1,2-difluoroethylene, and may be any one of the above-described refrigerants A to E can be used. In addition, the refrigerant circuit 110 is filled with refrigerating machine oil with the mixed refrigerant.

(6-2-1) Heat Source-Side Unit

The heat source-side unit 120 is connected to the usage-side unit 130 through the liquid-side connection pipe 106 and the gas-side connection pipe 105 and constitutes a portion of the refrigerant circuit 110. The heat source-side unit 120 includes mainly a compressor 121, a flow path switching mechanism 122, a heat source-side heat exchanger 123, a heat source-side expansion mechanism 124, a low-pressure receiver 141, a heat source-side fan 125, a liquid-side shutoff valve 129, a gas-side shutoff valve 128, and a heat source-side bridge circuit 153.

The compressor 121 is a piece of equipment that compresses the refrigerant at a low pressure in the refrigeration cycle to a high pressure in the refrigeration cycle. Here, a compressor that has a hermetically sealed structure and a positive-displacement compression element (not shown) such as a rotary type or a scroll type is rotatably driven by a compressor motor is used as the compressor 121. The compressor motor is for changing capacity, and it is possible to control operation frequency by using an inverter. The compressor 121 includes an accompanying accumulator, which is not illustrated, on the suction side.

The flow path switching mechanism 122 is, for example, a four-way switching valve. By switching connection states, the flow path switching mechanism 122 can switch between a cooling-operation connection state in which a discharge side of the compressor 121 is connected to the heat source-side heat exchanger 123 and a suction side of the compressor 121 is connected to the gas-side shutoff valve 128 and a heating-operation connection state in which the discharge side of the compressor 121 is connected to the gas-side shutoff valve 128 and the suction side of the compressor 121 is connected to the heat source-side heat exchanger 123.

The heat source-side heat exchanger 123 is a heat exchanger that functions as a condenser for the refrigerant at a high pressure in the refrigeration cycle during the cooling operation and that functions as an evaporator for the refrigerant at a low pressure in the refrigeration cycle during the heating operation.

After the heat source-side fan 125 causes the heat source-side unit 120 to suck air that is to be a heat source thereinto and the air exchanges heat with the refrigerant in the heat source-side heat exchanger 123, the heat source-side fan 125 generates an air flow to discharge the air to outside. The heat source-side fan 125 is rotatably driven by an outdoor fan motor.

The heat source-side expansion mechanism 124 is provided between a liquid-side end portion of the heat source-side heat exchanger 123 and the liquid-side shutoff valve 129. The heat source-side expansion mechanism 124 may be a capillary tube or a mechanical expansion valve that is used with a thermosensitive cylinder but is preferably an electrically powered expansion valve whose valve opening degree can be regulated by being controlled.

The low-pressure receiver 141 is provided between the suction side of the compressor 121 and one of the connection ports of the flow path switching mechanism 122 and is a refrigerant container capable of storing surplus refrigerant as a liquid refrigerant in the refrigerant circuit 110. In addition, the compressor 121 includes the accompanying accumulator, which is not illustrated, and the low-pressure receiver 141 is connected to the upstream side of the accompanying accumulator.

The liquid-side shutoff valve 129 is a manual valve disposed in a connection portion in the heat source-side unit 120 with the liquid-side connection pipe 106.

The gas-side shutoff valve 128 is a manual valve disposed in a connection portion in the heat source-side unit 120 with the gas-side connection pipe 105.

The heat source-side bridge circuit 153 includes four connection points and check valves provided between the respective connection points. A refrigerant pipe extending from an inflow side of the heat source-side heat exchanger 123, a refrigerant pipe extending from an outflow side of the heat source-side heat exchanger 123, a refrigerant pipe extending from the liquid-side shutoff valve 129, and a refrigerant pipe extending from one of the connection ports of the flow path switching mechanism 122 are connected to the respective connection points of the heat source-side bridge circuit 153. A corresponding check valve blocks the refrigerant flow from one of the connection ports of the flow path switching mechanism 122 to the outflow side of the heat source-side heat exchanger 123, a corresponding check valve blocks the refrigerant flow from the liquid-side shutoff valve 129 to the outflow side of the heat source-side heat exchanger 123, a corresponding check valve blocks the refrigerant flow from the inflow side of the heat source-side heat exchanger 123 to one of the connection ports of the flow path switching mechanism 122, and a corresponding check valve blocks the refrigerant flow from the inflow side of the heat source-side heat exchanger 123 to the liquid-side shutoff valve 129. The heat source-side expansion mechanism 124 is provided in the middle of the refrigerant pipe extending from the liquid-side shutoff valve 129 to one of the connection points of the heat source-side bridge circuit 153.

In Fig. 22, the air flow formed by the heat source-side fan 125 is indicated by dotted arrows. Here, in both cases in which the heat source-side heat exchanger 123 of the heat source-side unit 120 including the heat source-side bridge circuit 153 functions as an evaporator for the refrigerant and as a condenser for the refrigerant, the heat source-side heat exchanger 123 is configured so that a point (on the downstream side of the air flow) into which the refrigerant flows at the heat source-side heat exchanger 123 is the same, a point (on the upstream side of the air flow) at which the refrigerant flows out from the heat source-side heat exchanger 123 is the same, and the direction in which the refrigerant flows in the heat source-side heat exchanger 123 is the same. Therefore, in both cases in which the heat source-side heat exchanger 123 functions as an evaporator for the refrigerant and in which the heat source-side heat exchanger 123 functions as a condenser for the refrigerant, the flow direction of the refrigerant that flows in the heat source-side heat exchanger 123 is to be opposite to the direction of the air flow formed by the heat source-side fan 125 (counter flow at all the time).

The heat source-side unit 120 includes a heat source-side unit control section 127 that controls the operation of each component constituting the heat source-side unit 120. The heat source-side unit control section 127 includes a microcomputer including a CPU, memory, and the like. The heat source-side unit control section 127 is connected to a usage-side unit control section 134 of each usage-side unit 130 through a communication line and sends and receives control signals or the like.

A discharge pressure sensor 161, a discharge temperature sensor 162, a suction pressure sensor 163, a suction temperature sensor 164, a heat source-side heat-exchanger temperature sensor 165, a heat source air temperature sensor 166, and the like are provided in the heat source-side unit 120. Each sensor is electrically coupled to the heat source-side unit control section 127 and sends a detection signal to the heat source-side unit control section 127. The discharge pressure sensor 161 detects the pressure of the refrigerant that flows through a discharge pipe that connects the discharge side of the compressor 121 to one of the connection ports of the flow path switching mechanism 122. The discharge temperature sensor 162 detects the temperature of the refrigerant that flows through the discharge pipe. The suction pressure sensor 163 detects the pressure of the refrigerant that flows through a suction pipe that connects the low-pressure receiver 141 to the suction side of the compressor 121. The suction temperature sensor 164 detects the temperature of the refrigerant that flows through the suction pipe. The heat source-side heat-exchanger temperature sensor 165 detects the temperature of the refrigerant that flows through an exit on a liquid side of the heat source-side heat exchanger 123 that is opposite to a side to which the flow path switching mechanism 122 is connected. The heat source air temperature sensor 166 detects the air temperature of heat source air before the heat source air passes through the heat source-side heat exchanger 123.

(6-2-2) Usage-Side Unit

The usage-side unit 130 is installed on a wall surface, a ceiling, or the like of the target space that is to be air-conditioned. The usage-side unit 130 is connected to the heat source-side unit 120 through the liquid-side connection pipe 106 and the gas-side connection pipe 105 and constitutes a portion of the refrigerant circuit 110.

The usage-side unit 130 includes a usage-side heat exchanger 131, a usage-side fan 132, and a usage-side bridge circuit 154.

In the usage-side heat exchanger 131, the liquid side is connected to the liquid-side connection pipe 106, and a gas-side end is connected to the gas-side connection pipe 105. The usage-side heat exchanger 131 is a heat exchanger that functions as an evaporator for the refrigerant at a low pressure in the refrigeration cycle during the cooling operation and functions as a condenser for the refrigerant at a high pressure in the refrigeration cycle during the heating operation.

After the usage-side fan 132 causes the usage-side unit 130 to suck indoor air thereinto and the air exchanges heat with the refrigerant in the usage-side heat exchanger 131, the usage-side fan 132 generates an air flow to discharge the air to outside. The usage-side fan 132 is rotatably driven by an indoor fan motor.

The usage-side bridge circuit 154 includes four connection points and check valves provided between the respective connection points. A refrigerant pipe extending from an inflow side of the usage-side heat exchanger 131, a refrigerant pipe extending from an outflow side of the usage-side heat exchanger 131, a refrigerant pipe connected to an end portion on the usage-side unit 130 side of the liquid-side connection pipe 106, and a refrigerant pipe connected to an end portion on the usage-side unit 130 side of the gas-side connection pipe 105 are connected to the respective connection points of the usage-side bridge circuit 154. A corresponding check valve blocks the refrigerant flow from the inflow side of the usage-side heat exchanger 131 to the liquid-side connection pipe 106, a corresponding check valve blocks the refrigerant flow from the inflow side of the usage-side heat exchanger 131 to the gas-side connection pipe 105, a corresponding check valve blocks the refrigerant flow from the liquid-side connection pipe 106 to the outflow side of the usage-side heat exchanger 131, and a corresponding check valve blocks the refrigerant flow from the gas-side connection pipe 105 to the outflow side of the usage-side heat exchanger 131.

In Fig. 22, the air flow formed by the usage-side fan 132 is indicated by dotted arrows. Here, in both cases in which the usage-side heat exchanger 131 of the usage-side unit 130 including the usage-side bridge circuit 154 functions as an evaporator for the refrigerant and functions as a condenser for the refrigerant, the usage-side heat exchanger 131 is configured so that a point (on the downstream side of the air flow) into which the refrigerant flows at the usage-side heat exchanger 131 is the same, a point (on the upstream side of the air flow) at which the refrigerant flows out from the usage-side heat exchanger 131 is the same, and the direction in which the refrigerant flows in the usage-side heat exchanger 131 is the same. Therefore, in both cases in which the usage-side heat exchanger 131 functions as an evaporator for the refrigerant and in which the usage-side heat exchanger 131 functions as a condenser for the refrigerant, the flow direction of the refrigerant that flows in the usage-side heat exchanger 131 is to be opposite to the direction of the air flow formed by the usage-side fan 132 (counter flow at all the time).

The usage-side unit 130 includes the usage-side unit control section 134 that controls the operation of each component constituting the usage-side unit 130. The usage-side unit control section 134 includes a microcomputer including a CPU, memory, and the like. The usage-side unit control section 134 is connected to the heat source-side unit control section 127 through the communication line and sends and receives control signals or the like.

A target-space air temperature sensor 172, an inflow-side heat-exchanger temperature sensor 181, an outflow-side heat-exchanger temperature sensor 183, and the like are provided in the usage-side unit 130. Each sensor is electrically coupled to the usage-side unit control section 134 and sends a detection signal to the usage-side unit control section 134. The target-space air temperature sensor 172 detects the temperature of the air in the target space before the air passes through the usage-side heat exchanger 131. The inflow-side heat-exchanger temperature sensor 181 detects the temperature of the refrigerant before the refrigerant flows into the usage-side heat exchanger 131. The outflow-side heat-exchanger temperature sensor 183 detects the temperature of the refrigerant that flows out from the usage-side heat exchanger 131.

(6-2-3) Details of Controller

In the air conditioning apparatus 100, the controller 107 that controls the operations of the air conditioning apparatus 100 is configured by connecting the heat source-side unit control section 127 to the usage-side unit control section 134 through the communication line.

The controller 107 includes mainly a CPU (central processing unit) and memory such as ROM and RAM. Various processes and control operations performed by the controller 107 are realized by causing the components included in the heat source-side unit control section 127 and/or the usage-side unit control section 134 to function as an integral whole.

(6-2-4) Operation Modes

Hereinafter, operation modes will be described.

As operation modes, a cooling operation mode and a heating operation mode are provided.

The controller 107 determines one of the cooling operation mode and the heating operation mode to perform based on an instruction received from the remote controller or the like and performs the mode.

(A) Cooling Operation Mode

In the air conditioning apparatus 100, in the cooling operation mode, a connection state of the flow path switching mechanism 122 is to be a cooling-operation connection state in which the discharge side of the compressor 121 is connected to the heat source-side heat exchanger 123 and the suction side of the compressor 121 is connected to the gas-side shutoff valve 128, and the refrigerant filled in the refrigerant circuit 110 is circulated in mainly the order of the compressor 121, the heat source-side heat exchanger 123, the heat source-side expansion mechanism 124, and the usage-side heat exchanger 131.

Specifically, operation frequency is capacity-controlled in the compressor 121 so that, for example, the evaporation temperature of the refrigerant in the refrigerant circuit 110 becomes a target evaporation temperature that is determined in accordance with the difference between a set temperature and an indoor temperature (a temperature detected by the target-space air temperature sensor 172).

The gas refrigerant that has been discharged from the compressor 121, after passing the flow path switching mechanism 122, condenses in the heat source-side heat exchanger 123. In the heat source-side heat exchanger 123, the refrigerant flows in a direction opposite to the direction of the air flow formed by the heat source-side fan 125. In other words, during the operation of the air conditioning apparatus 100 using the heat source-side heat exchanger 123 as a condenser, in the heat source-side heat exchanger 123, the flow of the refrigerant and the flow of the heating medium that exchanges heat with the refrigerant are counter flows. The refrigerant that has flowed through the heat source-side heat exchanger 123 passes through a portion of the heat source-side bridge circuit 153 and is decompressed in the heat source-side expansion mechanism 124 to a low pressure in the refrigeration cycle.

Here, the valve opening degree is controlled in the heat source-side expansion mechanism 124 so that a predetermined condition is satisfied. Such a condition is that, for example, the degree of superheating of the refrigerant that flows on a gas side of the usage-side heat exchanger 131 or the degree of superheating of the refrigerant that is sucked by the compressor 121 becomes a target value. Here, the degree of superheating of the refrigerant that flows on the gas side of the usage-side heat exchanger 131 may be obtained by, for example, subtracting the saturation temperature of the refrigerant that corresponds to the temperature detected by the suction pressure sensor 163 from the temperature detected by the outflow-side heat-exchanger temperature sensor 183. A method for controlling the valve opening degree in the heat source-side expansion mechanism 124 is not limited, and, for example, the discharge temperature of the refrigerant that is discharged from the compressor 121 may be controlled to a predetermined temperature, or the degree of superheating of the refrigerant that is discharged from the compressor 121 may be controlled to satisfy a predetermined condition.

In the heat source-side expansion mechanism 124, the refrigerant that has been decompressed to a low pressure in the refrigeration cycle flows into the usage-side unit 130 through the liquid-side shutoff valve 129 and the liquid-side connection pipe 106 and evaporates in the usage-side heat exchanger 131. In the usage-side heat exchanger 131, the refrigerant flows in a direction opposite to the direction of the air flow formed by the usage-side fan 132. In other words, during the operation of the air conditioning apparatus 100 using the usage-side heat exchanger 131 as an evaporator, in the usage-side heat exchanger 131, the flow of the refrigerant and the flow of the heating medium that exchanges heat with the refrigerant are counter flows. The refrigerant that has flowed through the usage-side heat exchanger 131, after flowing through the gas-side connection pipe 105, passes through the gas-side shutoff valve 128, the flow path switching mechanism 122, and the low-pressure receiver 141 and is sucked by the compressor 121 again. The liquid refrigerant that cannot be evaporated in the usage-side heat exchanger 131 is stored in the low-pressure receiver 141 as surplus refrigerant.

(B) Heating Operation Mode

In the air conditioning apparatus 100, in the heating operation mode, the connection state of the flow path switching mechanism 122 is to be a heating-operation connection state in which the discharge side of the compressor 121 is connected to the gas-side shutoff valve 128 and the suction side of the compressor 121 is connected to the heat source-side heat exchanger 123, and the refrigerant filled in the refrigerant circuit 110 is circulated in mainly the order of the compressor 121, the usage-side heat exchanger 131, the heat source-side expansion mechanism 124, and the heat source-side heat exchanger 123.

More specifically, in the heating operation mode, operation frequency is capacity-controlled in the compressor 121 so that, for example, the condensation temperature of the refrigerant in the refrigerant circuit 110 is to be a target condensation temperature that is determined in accordance with the difference between a set temperature and an indoor temperature (a temperature detected by the target-space air temperature sensor 172).

The gas refrigerant that has been discharged from the compressor 121, after flowing through the flow path switching mechanism 122 and the gas-side connection pipe 105, flows into a gas-side end of the usage-side heat exchanger 131 of the usage-side unit 130 and condenses in the usage-side heat exchanger 131. In the usage-side heat exchanger 131, the refrigerant flows in a direction opposite to the direction of the air flow formed by the usage-side fan 132. In other words, during the operation of the air conditioning apparatus 100 using the usage-side heat exchanger 131 as a condenser, in the usage-side heat exchanger 131, the flow of the refrigerant and the flow of the heating medium that exchanges heat with the refrigerant are counter flows. The refrigerant that has flowed out from a liquid-side end of the usage-side heat exchanger 131 passes through the liquid-side connection pipe 106, flows into the heat source-side unit 120, passes through the liquid-side shutoff valve 129, and is decompressed in the heat source-side expansion mechanism 124 to a low pressure in the refrigeration cycle.

Here, the valve opening degree is controlled in the heat source-side expansion mechanism 124 so that a predetermined condition is satisfied. Such a condition is that, for example, the degree of superheating of the refrigerant that is sucked by the compressor 121 becomes a target value. A method for controlling the valve opening degree in the heat source-side expansion mechanism 124 is not limited, and, for example, the discharge temperature of the refrigerant that is discharged from the compressor 121 may be controlled to a predetermined temperature, or the degree of superheating of the refrigerant that is discharged from the compressor 121 may be controlled to satisfy a predetermined condition.

The refrigerant that has been decompressed in the heat source-side expansion mechanism 124 evaporates in the heat source-side heat exchanger 123. In the heat source-side heat exchanger 123, the refrigerant flows in a direction opposite to the direction of the air flow formed by the heat source-side fan 125. In other words, during the operation of the air conditioning apparatus 100 using the heat source-side heat exchanger 123 as an evaporator, in the heat source-side heat exchanger 123, the flow of the refrigerant and the flow of the heating medium that exchanges heat with the refrigerant are counter flows. The refrigerant that has been evaporated in the heat source-side heat exchanger 123 passes through the flow path switching mechanism 122 and the low-pressure receiver 141 and is sucked by the compressor 121 again. The liquid refrigerant that cannot be evaporated in the heat source-side heat exchanger 123 is stored in the low-pressure receiver 141 as surplus refrigerant.

(6-2-5) Features of Air Conditioning Apparatus 100

The air conditioning apparatus 100 can perform the refrigeration cycle using the refrigerant containing 1,2-difluoroethylene; thus, the refrigeration cycle is enabled with a refrigerant having a low GWP.

In addition, occurrence of liquid compression can be suppressed in the air conditioning apparatus 100 by providing the low-pressure receiver 141 and without performing control (control of the heat source-side expansion mechanism 124) by which the degree of superheating of the refrigerant that is sucked by the compressor 121 is ensured to be more than or equal to a predetermined value. Therefore, regarding the control of the heat source-side expansion mechanism 124, the heat source-side heat exchanger 123 that is to function as a condenser (the same applies to the usage-side heat exchanger 131 that is to function as a condenser) can be controlled to sufficiently ensure the degree of subcooling of the refrigerant that passes through the exit.

In addition, during both cooling operation and heating operation, the refrigerant flows in a direction opposite to the direction of the air flow formed by the heat source-side fan 125 (counter flow) in the heat source-side heat exchanger 123. Therefore, when the heat source-side heat exchanger 123 functions as an evaporator, the temperature of the refrigerant that passes therethrough tends to be higher on the exit side than the temperature thereof on the entrance side. Even in such a case, the air flow formed by the heat source-side fan 125 is in a direction opposite to the refrigerant flow; thus, a temperature difference between the air and the refrigerant is easily sufficiently ensured on both the entrance side and the exit side of the refrigerant in the heat source-side heat exchanger 123. In addition, when the heat source-side heat exchanger 123 functions as a condenser, the temperature of the refrigerant that passes therethrough tends to be lower on the exit side than the temperature thereof on the entrance side. Even in such a case, the air flow formed by the heat source-side fan 125 is in a direction opposite to the refrigerant flow; thus, the temperature difference between the air and the refrigerant is easily sufficiently ensured on both the entrance side and the exit side of the refrigerant in the heat source-side heat exchanger 123.

In addition, during both cooling operation and heating operation, the refrigerant flows in a direction opposite to the direction of the air flow formed by the usage-side fan 132 (counter flow) in the usage-side heat exchanger 131. Therefore, when the usage-side heat exchanger 131 functions as an evaporator for the refrigerant, the temperature of the refrigerant that passes therethrough tends to be higher on the exit side than the temperature thereof on the entrance side. Even in such a case, the air flow formed by the usage-side fan 132 is in a direction opposite to the refrigerant flow; thus, a temperature difference between the air and the refrigerant is easily sufficiently ensured on both the entrance side and the exit side of the refrigerant in the usage-side heat exchanger 131. When the usage-side heat exchanger 131 functions as a condenser, the temperature of the refrigerant that passes therethrough tends to be lower on the exit side than the temperature thereof on the entrance side. Even in such a case, the air flow formed by the usage-side fan 132 is in a direction opposite to the refrigerant flow; thus, the temperature difference between the air and the refrigerant is easily sufficiently ensured on both the entrance side and the exit side of the refrigerant in the usage-side heat exchanger 131.

Therefore, even when temperature glide occurs in the evaporator and in the condenser due to the use of a non-azeotropic refrigerant mixture as a refrigerant, in both cooling operation and heating operation, it is possible to sufficiently deliver performance in both the heat exchanger functioning as an evaporator and the heat exchanger functioning as a condenser.

(6-3) Third Embodiment

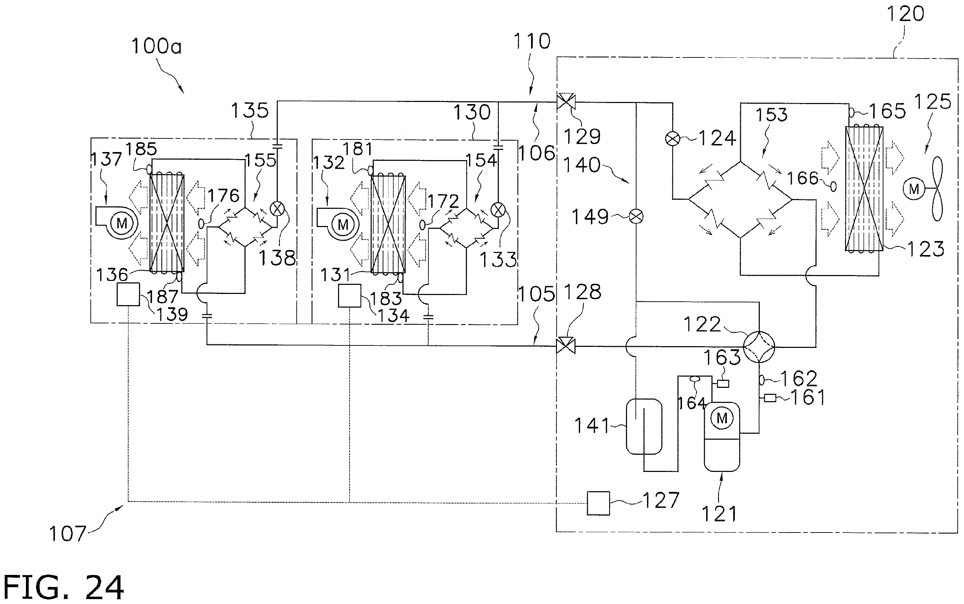

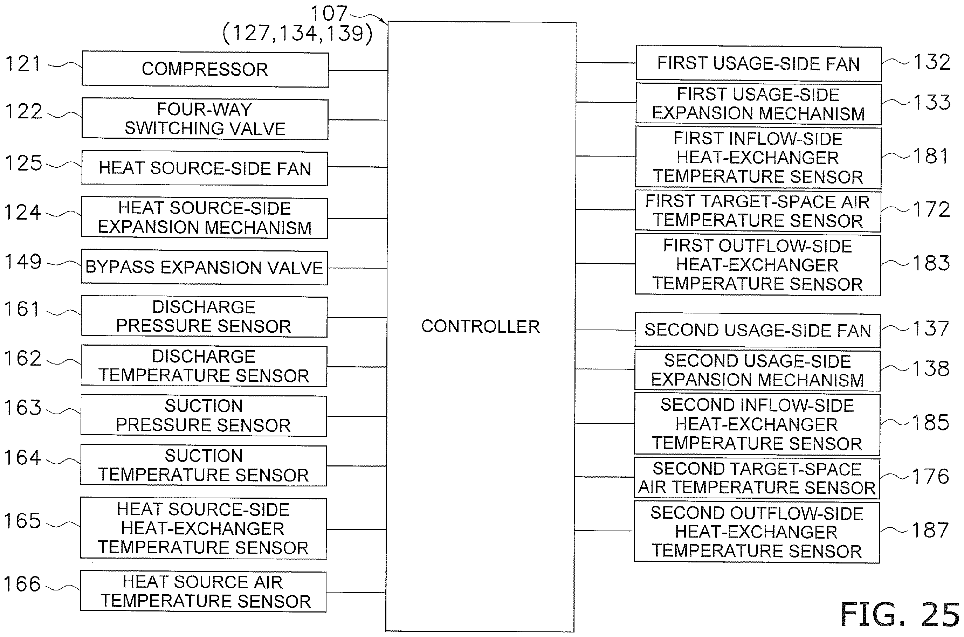

Hereinafter, an air conditioning apparatus 100a as a refrigeration cycle apparatus according to a third embodiment will be described with reference to Fig. 24, which is a schematic structural diagram of a refrigerant circuit, and Fig. 25, which is a schematic control block structural diagram. The air conditioning apparatus 100a of the third embodiment shares many common features with the air conditioning apparatus 100 of the second embodiment; thus, differences from the air conditioning apparatus 100 of the first embodiment will be mainly described hereinafter.

(6-3-1) Configuration of Air Conditioning Apparatus

The air conditioning apparatus 100a differs from the air conditioning apparatus 100 of the above-described second embodiment mainly in that a bypass pipe 140 having a bypass expansion valve 149 is provided in the heat source-side unit 120, in that a plurality of indoor units (a first usage-side unit 130 and a second usage-side unit 135) are arranged in parallel, and in that an indoor expansion valve is provided on a liquid refrigerant side of the indoor heat exchanger in each indoor unit. In the following description of the air conditioning apparatus 100a, constituents that are the same as or similar to those of the air conditioning apparatus 100 are given the same references as those given for the air conditioning apparatus 100.

The bypass pipe 140 included in the heat source-side unit 120 is a refrigerant pipe that connects a portion of the refrigerant circuit 110 between the heat source-side expansion mechanism 124 and the liquid-side shutoff valve 129 with a refrigerant pipe extending from one of the connection ports of the flow path switching mechanism 122 to the low-pressure receiver 141. The bypass expansion valve 149 is preferably, but is not limited to, an electrically powered expansion valve whose valve opening degree can be regulated.

As with the above-described embodiment, the first usage-side unit 130 includes a first usage-side heat exchanger 131, a first usage-side fan 132, and a first usage-side bridge circuit 154, and, other than the components, further includes a first usage-side expansion mechanism 133. The first usage-side bridge circuit 154 includes four connection points and check valves provided between the respective connection points. A refrigerant pipe extending from a liquid side of the first usage-side heat exchanger 131, a refrigerant pipe extending from a gas side of the first usage-side heat exchanger 131, a refrigerant pipe branching off from the liquid-side connection pipe 106 toward the first usage-side unit 130, and a refrigerant pipe branching off from the gas-side connection pipe 105 toward the first usage-side unit 130 are connected to the respective connection points of the first usage-side bridge circuit 154.

In Fig. 24, an air flow formed by the first usage-side fan 132 is indicated by dotted arrows. Here, in both cases in which the first usage-side heat exchanger 131 of the first usage-side unit 130 including the first usage-side bridge circuit 154 functions as an evaporator for the refrigerant and functions as a condenser for the refrigerant, the first usage-side heat exchanger 131 is configured so that a point (on the downstream side of the air flow) into which the refrigerant flows at the first usage-side heat exchanger 131 is the same, a point (on the upstream side of the air flow) at which the refrigerant flows out from the first usage-side heat exchanger 131 is the same, and the direction in which the refrigerant flows in the first usage-side heat exchanger 131 is the same. Therefore, in both cases in which the first usage-side heat exchanger 131 functions as an evaporator for the refrigerant and in which the first usage-side heat exchanger 131 functions as a condenser for the refrigerant, the flow direction of the refrigerant that flows in the first usage-side heat exchanger 131 is to be opposite to the direction of the air flow formed by the first usage-side fan 132 (counter flow at all the time). The first usage-side expansion mechanism 133 is provided in the middle of the refrigerant pipe that branches off from the liquid-side connection pipe 106 toward the first usage-side unit 130 (on the liquid refrigerant side of the first usage-side bridge circuit 154). The first usage-side expansion mechanism 133 is preferably an electrically powered expansion valve whose valve opening degree can be regulated. As with the above-described embodiment, a first usage-side unit control section 134 and a first inflow-side heat-exchanger temperature sensor 181, a first target-space air temperature sensor 172, a first outflow-side heat-exchanger temperature sensor 183 and the like that are electrically coupled to the first usage-side unit control section 134 are provided in the first usage-side unit 130.

As with the first usage-side unit 130, the second usage-side unit 135 includes a second usage-side heat exchanger 136, a second usage-side fan 137, a second usage-side expansion mechanism 138, and a second usage-side bridge circuit 155. The second usage-side bridge circuit 155 includes four connection points and check valves provided between the respective connection points. A refrigerant pipe extending from a liquid side of the second usage-side heat exchanger 136, a refrigerant pipe extending from a gas side of the second usage-side heat exchanger 136, a refrigerant pipe branching off from the liquid-side connection pipe 106 toward the second usage-side unit 135, and a refrigerant pipe branching off from the gas-side connection pipe 105 toward the second usage-side unit 135 are connected to the respective connection points of the second usage-side bridge circuit 155. In Fig. 24, an air flow formed by the second usage-side fan 137 is indicated by dotted arrows. Here, in both cases in which the second usage-side heat exchanger 136 of the second usage-side unit 135 including the second usage-side bridge circuit 155 functions as an evaporator for the refrigerant and functions as a condenser for the refrigerant, the second usage-side heat exchanger 136 is configured so that a point (on the downstream side of the air flow) into which the refrigerant flows at the second usage-side heat exchanger 136 is the same, a point (on the upstream side of the air flow) at which the refrigerant flows out from the second usage-side heat exchanger 136 is the same, and the direction in which the refrigerant flows in the second usage-side heat exchanger 136 is the same. Therefore, in both cases in which the second usage-side heat exchanger 136 functions as an evaporator for the refrigerant and in which the second usage-side heat exchanger 136 functions as a condenser for the refrigerant, the flow direction of the refrigerant that flows in the second usage-side heat exchanger 136 is to be opposite to the direction of the air flow formed by the second usage-side fan 137 (counter flow at all the time). The second usage-side expansion mechanism 138 is provided in the middle of the refrigerant pipe that branches off from the liquid-side connection pipe 106 toward the second usage-side unit 135 (on the liquid refrigerant side of the second usage-side bridge circuit 155). The second usage-side expansion mechanism 138 is preferably an electrically powered expansion valve whose valve opening degree can be regulated. As with the first usage-side unit 130, a second usage-side unit control section 139 and a second inflow-side heat-exchanger temperature sensor 185, a second target-space air temperature sensor 176, a second outflow-side heat-exchanger temperature sensor 187 that are electrically coupled to the second usage-side unit control section 139 are provided in the second usage-side unit 135.

(6-3-2) Operation Modes

(A) Cooling Operation Mode

In the air conditioning apparatus 100a, in a cooling operation mode, operation frequency is capacity-controlled in the compressor 121 so that, for example, the evaporation temperature of the refrigerant in the refrigerant circuit 110 becomes a target evaporation temperature. Here, the target evaporation temperature is preferably determined in accordance with one of the usage-side unit 130 and the usage-side unit 135 whose difference between a set temperature and a usage-side temperature is the largest (the usage-side unit under the heaviest load).

The gas refrigerant that has been discharged from the compressor 121, after passing through the flow path switching mechanism 122, condenses in the heat source-side heat exchanger 123. In the heat source-side heat exchanger 123, the refrigerant flows in a direction opposite to the direction of the air flow formed by the heat source-side fan 125. In other words, during the operation of the air conditioning apparatus 100a using the heat source-side heat exchanger 123 as a condenser, in the heat source-side heat exchanger 123, the flow of the refrigerant and the flow of the heating medium that exchanges heat with the refrigerant are counter flows. The refrigerant that has flowed through the heat source-side heat exchanger 123, after passing through a portion of the heat source-side bridge circuit 153, passes through the heat source-side expansion mechanism 124 that is controlled to be fully opened and then flows into each of the first usage-side unit 130 and the second usage-side unit 135 through the liquid-side shutoff valve 129 and the liquid-side connection pipe 106.

The valve opening degree of the bypass expansion valve 149 of the bypass pipe 140 is controlled in accordance with a generation state of surplus refrigerant. Specifically, the bypass expansion valve 149 is controlled, for example, based on a high pressure that is detected by the discharge pressure sensor 161 and/or the degree of subcooling of the refrigerant that flows on the liquid side of the heat source-side heat exchanger 123. In such a state, the surplus refrigerant, which is a portion of the refrigerant that has passed through the above-described heat source-side expansion mechanism 124, is sent to the low-pressure receiver 141 through the bypass pipe 140.

The refrigerant that has flowed into the first usage-side unit 130 is decompressed in the first usage-side expansion mechanism 133 to a low pressure in the refrigeration cycle. In addition, the refrigerant that has flowed into the second usage-side unit 135 is decompressed in the second usage-side expansion mechanism 138 to a low pressure in the refrigeration cycle.

Here, the valve opening degree is controlled in the first usage-side expansion mechanism 133 so that a predetermined condition is satisfied. Such a condition is that, for example, the degree of superheating of the refrigerant that flows on the gas side of the first usage-side heat exchanger 131 or the degree of superheating of the refrigerant that is sucked by the compressor 121 becomes a target value. Here, the degree of superheating of the refrigerant that flows on the gas side of the first usage-side heat exchanger 131 may be obtained, for example, by subtracting the saturation temperature of the refrigerant that corresponds to the temperature detected by the suction pressure sensor 163 from the temperature detected by the first outflow-side heat-exchanger temperature sensor 183. Similarly, the valve opening degree is controlled in the second usage-side expansion mechanism 138 so that a predetermined condition is satisfied. Such a condition is that, for example, the degree of superheating of the refrigerant that flows on the gas side of the second usage-side heat exchanger 136 or the degree of superheating of the refrigerant that is sucked by the compressor 121 becomes a target value. Here, the degree of superheating of the refrigerant that flows on the gas side of the second usage-side heat exchanger 136 may be obtained, for example, by subtracting the saturation temperature of the refrigerant that corresponds to the temperature detected by the suction pressure sensor 163 from the temperature detected by the second outflow-side heat-exchanger temperature sensor 187.

The refrigerant that has been decompressed in the first usage-side expansion mechanism 133 passes through a portion of the first usage-side bridge circuit 154, flows into the first usage-side heat exchanger 131, and evaporates in the first usage-side heat exchanger 131. In the first usage-side heat exchanger 131, the refrigerant flows in a direction opposite to the direction of the air flow formed by the first usage-side fan 132. In other words, during the operation of the air conditioning apparatus 100a using the first usage-side heat exchanger 131 as an evaporator, in the first usage-side heat exchanger 131, the flow of the refrigerant and the flow of the heating medium that exchanges heat with the refrigerant are counter flows. The refrigerant that has passed through the first usage-side heat exchanger 131 passes through a portion of the first usage-side bridge circuit 154 and flows to outside the first usage-side unit 130.

Similarly, the refrigerant that has been decompressed in the second usage-side expansion mechanism 138 passes through a portion of the second usage-side bridge circuit 155, flows into the second usage-side heat exchanger 136, and evaporates in the second usage-side heat exchanger 136. In the second usage-side heat exchanger 136, the refrigerant flows in a direction opposite to the direction of the air flow formed by the second usage-side fan 137. In other words, during the operation of the air conditioning apparatus 100a using the second usage-side heat exchanger 136 as an evaporator, in the second usage-side heat exchanger 136, the flow of the refrigerant and the flow of the heating medium that exchanges heat with the refrigerant are counter flows. The refrigerant that has passed through the second usage-side heat exchanger 136 passes through a portion of the second usage-side bridge circuit 155 and flows to outside the second usage-side unit 135. The refrigerant that has flowed out from the first usage-side unit 130 and the refrigerant that has flowed out from the second usage-side unit 135, after merging with each other, flow through the gas-side connection pipe 105, pass through the gas-side shutoff valve 128, the flow path switching mechanism 122, and the low-pressure receiver 141, and are sucked by the compressor 121 again. The liquid refrigerant that cannot be evaporated in the first usage-side heat exchanger 131 and in the second usage-side heat exchanger 136 is stored in the low-pressure receiver 141 as surplus refrigerant.

(B) Heating Operation Mode

In the air conditioning apparatus 100a, in the heating operation mode, operation frequency is capacity-controlled in the compressor 121 so that, for example, the condensation temperature of the refrigerant in the refrigerant circuit 110 becomes a target condensation temperature. Here, the target condensation temperature is preferably determined in accordance with one of the usage-side unit 130 and the usage-side unit 135 whose difference between a set temperature and a usage-side temperature is the largest (the usage-side unit under the heaviest load).

The gas refrigerant that has been discharged from the compressor 121, after flowing through the flow path switching mechanism 122 and the gas-side connection pipe 105, flows into each of the first usage-side unit 130 and the second usage-side unit 135.

The refrigerant that has flowed into the first usage-side unit 130, after passing through a portion of the first usage-side bridge circuit 154, condenses in the first usage-side heat exchanger 131. In the first usage-side heat exchanger 131, the refrigerant flows in a direction opposite to the direction of the air flow formed by the first usage-side fan 132. In other words, during the operation of the air conditioning apparatus 100a using the first usage-side heat exchanger 131 as a condenser, in the first usage-side heat exchanger 131, the flow of the refrigerant and the flow of heating medium that exchanges heat with the refrigerant are counter flows. The refrigerant that has flowed into the second usage-side unit 135, after passing through a portion of the second usage-side bridge circuit 155, condenses in the second usage-side heat exchanger 136. In the second usage-side heat exchanger 136, the refrigerant flows in a direction opposite to the direction of the air flow formed by the second usage-side fan 137. In other words, during the operation of the air conditioning apparatus 100a using the second usage-side heat exchanger 136 as a condenser, in the second usage-side heat exchanger 136, the flow of the refrigerant and the flow of the heating medium that exchanges heat with the refrigerant are counter flows.

The refrigerant that has flowed out from a liquid-side end of the first usage-side heat exchanger 131, after passing through a portion of the first usage-side bridge circuit 154, is decompressed in the first usage-side expansion mechanism 133 to an intermediate pressure in the refrigeration cycle. Similarly, the refrigerant that has flowed out from a liquid-side end of the second usage-side heat exchanger 136, after passing through a portion of the second usage-side bridge circuit 155, is decompressed in the second usage-side expansion mechanism 138 to an intermediate pressure in the refrigeration cycle.

Here, the valve opening degree is controlled in the first usage-side expansion mechanism 133 so that a predetermined condition is satisfied. Such a condition is that, for example, the degree of subcooling of the refrigerant that flows on the liquid-side exit of the first usage-side heat exchanger 131 becomes a target value. Here, the degree of subcooling of the refrigerant that flows on the liquid-side exit of the first usage-side heat exchanger 131 may be obtained, for example, by subtracting the saturation temperature of the refrigerant that corresponds to the temperature detected by the discharge pressure sensor 161 from the temperature detected by the first outflow-side heat-exchanger temperature sensor 183. Similarly, the valve opening degree is controlled in the second usage-side expansion mechanism 138 so that a predetermined condition is satisfied. Such a condition is that, for example, the degree of subcooling of the refrigerant that flows on the liquid-side exit of the second usage-side heat exchanger 136 becomes a target value. Here, the degree of subcooling of the refrigerant that flows on the liquid-side exit of the second usage-side heat exchanger 136 may be obtained, for example, by subtracting the saturation temperature of the refrigerant that corresponds to the temperature detected by the discharge pressure sensor 161 from the temperature detected by the second outflow-side heat-exchanger temperature sensor 187.

The refrigerant that has passed through the first usage-side expansion mechanism 133 passes through a portion of the first usage-side bridge circuit 154 and flows to outside the first usage-side unit 130. Similarly, the refrigerant that has passed through the second usage-side expansion mechanism 138 passes through a portion of the second usage-side bridge circuit 155 and flows to outside the second usage-side unit 135. The refrigerant that has flowed out from the first usage-side unit 130 and the refrigerant that has flowed out from the second usage-side unit 135, after merging with each other, flow into the heat source-side unit 120 through the liquid-side connection pipe 106.

The refrigerant that has flowed into the heat source-side unit 120 passes through the liquid-side shutoff valve 129 and is decompressed in the heat source-side expansion mechanism 124 to a low pressure in the refrigeration cycle.

The valve opening degree of the bypass expansion valve 149 of the bypass pipe 140 may be controlled in accordance with the generation state of the surplus refrigerant as in the cooling operation or may be controlled to be fully closed.

Here, the valve opening degree is controlled in the heat source-side expansion mechanism 124 so that a predetermined condition is satisfied. Such a condition is that, for example, the degree of superheating of the refrigerant that is sucked by the compressor 121 becomes a target value. A method for controlling the valve opening degree in the heat source-side expansion mechanism 124 is not limited, and, for example, the discharge temperature of the refrigerant that is discharged from the compressor 121 may be controlled to a predetermined temperature, or the degree of superheating of the refrigerant that is discharged from the compressor 121 may be controlled to satisfy a predetermined condition.

The refrigerant that has been decompressed in the heat source-side expansion mechanism 124 evaporates in the heat source-side heat exchanger 123. In the heat source-side heat exchanger 123, the refrigerant flows in a direction opposite to the direction of the air flow formed by the heat source-side fan 125. In other words, during the operation of the air conditioning apparatus 100a using the heat source-side heat exchanger 123 as an evaporator, in the heat source-side heat exchanger 123, the flow of the refrigerant and the flow of the heating medium that exchanges heat with the refrigerant are counter flows. The refrigerant that has passed through the heat source-side heat exchanger 123 passes through the flow path switching mechanism 122 and the low-pressure receiver 141 and is sucked by the compressor 121 again. The liquid refrigerant that cannot be evaporated in the heat source-side heat exchanger 123 is stored in the low-pressure receiver 141 as surplus refrigerant.

(6-3-3) Features of Air Conditioning Apparatus 100a

The air conditioning apparatus 100a can perform the refrigeration cycle using the refrigerant containing 1,2-difluoroethylene; thus, the refrigeration cycle is enabled with a refrigerant having a low GWP.

In addition, in the air conditioning apparatus 100a, occurrence of liquid compression can be suppressed by providing the low-pressure receiver 141 and without performing control (control of the heat source-side expansion mechanism 124) by which the degree of superheating of the refrigerant that is sucked by the compressor 121 is ensured to be more than or equal to a predetermined value. Further, during the heating operation, it is possible to easily sufficiently deliver performance of the first usage-side heat exchanger 131 and the second usage-side heat exchanger 136 by controlling the degree of subcooling of each of the first usage-side expansion mechanism 133 and the second usage-side expansion mechanism 138.

During both cooling operation and heating operation, in the heat source-side heat exchanger 123, the refrigerant flows in a direction opposite to the direction of the air flow formed by the heat source-side fan 125 (counter flow). In addition, during both cooling operation and heating operation, in the first usage-side heat exchanger 131, the refrigerant flows in a direction opposite to the direction of the air flow formed by the first usage-side fan 132 (counter flow). Similarly, during both cooling operation and heating operation, in the second usage-side heat exchanger 136, the refrigerant flows in a direction opposite to the direction of the air flow formed by the second usage-side fan 137 (counter flow).

Therefore, even when temperature glide occurs in the evaporator and in the condenser due to the use of a non-azeotropic refrigerant mixture as a refrigerant, in both cooling operation and heating operation, it is possible to sufficiently deliver performance in both the heat exchanger functioning as an evaporator and the heat exchanger functioning as a condenser.

<Additional Note>

Hereinbefore, the embodiments of the present disclosure are described, and it should be appreciated that various modifications of forms and details are possible without departing from the spirit and the scope of the present disclosure that are stated in the claims.

**REFERENCE SIGNS LIST**

10 refrigeration cycle apparatus
11, 110 refrigerant circuit
12, 122 compressor
13, 123 heat source-side heat exchanger
14 expansion mechanism
15 usage-side heat exchanger
100, 100a air conditioning apparatus (refrigeration cycle apparatus)

124 heat source-side expansion mechanism (expansion mechanism)
131 usage-side heat exchanger, first usage-side heat exchanger (usage-side heat exchanger)
133 usage-side expansion mechanism, first usage-side expansion mechanism (expansion mechanism)
136 second usage-side heat exchanger (usage-side heat exchanger)
138 second usage-side expansion mechanism (expansion mechanism)

**Claims**

1. A refrigeration cycle apparatus (10, 100, 100a) comprising:

   a refrigerant circuit (11, 110) that includes a compressor (12, 122), a heat source-side heat exchanger (13, 123), an expansion mechanism (14, 124, 133, 138), and a usage-side heat exchanger (15, 131, 136),
   wherein, in the refrigerant circuit, a refrigerant containing at least 1,2-difluoroethylene (HFO-1132 (E)) is sealed, and
   wherein, at least during a predetermined operation, in at least one of the heat source-side heat exchanger and the usage-side heat exchanger, a flow of the refrigerant and a flow of a heating medium that exchanges heat with the refrigerant are counter flows,
   **characterized in that**

   the refrigerant comprises HFO-1132(E), R32, and R1234yf,
   wherein
   when the mass% of HFO-1132(E), R32, and R1234yf based on their sum in the refrigerant is respectively represented by x, y and z, coordinates (x,y,z) in a ternary composition diagram in which the sum of HFO-1132(E), R32, and R1234yf is 100 mass% are within the range of a figure surrounded by line segments ON, NU, and UO that connect the following 3 points:

   point O (22.6, 36.8, 40.6),
   point N (27.7, 18.2, 54.1), and
   point U (3.9, 36.7, 59.4),
   or on these line segments;

   the line segment ON is represented by coordinates ($0.0072y^2$-$0.6701y$+$37.512$, y, -$0.0072y^2$-$0.3299y$+$62.488$);
   the line segment NU is represented by coordinates ($0.0083y^2$-$1.7403y$+$56.635$, y, -$0.0083y^2$+$0.7403y$+$43.365$); and
   the line segment UO is a straight line, and

   the refrigerant comprises HFO-1132(E), R32, and R1234yf in a total amount of 99.5 mass% or more based on the entire refrigerant.

2. The refrigeration cycle apparatus according to claim 1,
   wherein, during an operation of the refrigeration cycle apparatus using the heat source-side heat exchanger as an evaporator, in the heat source-side heat exchanger, a flow of the refrigerant and a flow of a heating medium that exchanges heat with the refrigerant are counter flows.

3. The refrigeration cycle apparatus according to claim 1 or claim 2,
   wherein, during an operation of the refrigeration cycle apparatus using the heat source-side heat exchanger as a condenser, in the heat source-side heat exchanger, a flow of the refrigerant and a flow of a heating medium that exchanges heat with the refrigerant are counter flows.

4. The refrigeration cycle apparatus according to any one of claims 1 to 3,
   wherein, during an operation of the refrigeration cycle apparatus using the usage-side heat exchanger as an evaporator, in the usage-side heat exchanger, a flow of the refrigerant and a flow of a heating medium that exchanges heat with the refrigerant are counter flows.

5. The refrigeration cycle apparatus according to any one of claims 1 to 4,
   wherein, during an operation of the refrigeration cycle apparatus using the usage-side heat exchanger as a condenser, in the usage-side heat exchanger, a flow of the refrigerant and a flow of a heating medium that exchanges heat with the refrigerant are counter flows.

6. The refrigeration cycle apparatus according to any one of claims 1 to 5, wherein the heating medium is air.

7. The refrigeration cycle apparatus according to any one of claims 1 to 5, wherein the heating medium is a liquid.

**Patentansprüche**

1. Kühlkreislaufvorrichtung (10, 100, 100a), umfassend:

einen Kühlmittelkreislauf (11, 110), der einen Kompressor (12, 122), einen wärmequellenseitigen Wärmetauscher (13, 123), einen Expansionsmechanismus (14, 124, 133, 138) und einen nutzungsseitigen Wärmetauscher (15, 131, 136) einschließt, wobei in dem Kühlmittelkreislauf ein Kühlmittel, das mindestens 1,2-Difluorethylen (HFO-1132 (E)) aufweist, eingeschlossen ist, und wobei mindestens während eines vorbestimmten Betriebs in mindestens einem von dem wärmequellenseitigen Wärmetauscher und dem nutzungsseitigen Wärmetauscher ein Strom des Kühlmittels und ein Strom eines Heizmediums, das Wärme mit dem Kühlmittel austauscht, Gegenströme sind, **dadurch gekennzeichnet, dass**

das Kühlmittel HFO-1132(E), R32 und R1234yf umfasst, wobei wenn die Massen-% von HFO-1132(E), R32 und R1234yf auf der Basis ihrer Summe in dem Kühlmittel jeweils durch x, y und z dargestellt sind, Koordinaten (x, y, z) in einem ternären Zusammensetzungsdiagramm, in dem die Summe von HFO-1132(E), R32 und R1234yf 100 Massen-% beträgt, innerhalb des Bereichs einer Figur liegen, die von Liniensegmenten ON, NU und UO umgeben ist, die die folgenden 3 Punkte verbinden:

Punkt O (22,6, 36,8, 40,6),
Punkt N (27,7, 18,2, 54,1), und
Punkt U (3,9, 36,7, 59,4),
oder auf diesen Liniensegmenten;

das Liniensegment ON durch die Koordinaten $(0,0072y^2-0,6701y+37,512, \; y, \; -0,0072y^2-0,3299y+62,488)$ dargestellt ist;
das Liniensegment NU durch die Koordinaten $(0,0083y^2-1,7403y+56,635, \; y, \; -0,0083y^2+0,7403y+43,365)$ dargestellt ist; und
das Liniensegment UO eine gerade Linie ist, und

das Kühlmittel HFO-1132(E), R32 und R1234yf in einer Gesamtmenge von 99,5 Massen-% oder mehr, auf der Basis des gesamten Kühlmittels, umfasst.

2. Kühlkreislaufvorrichtung nach Anspruch 1,
wobei während eines Betriebs der Kühlkreislaufvorrichtung, bei dem der wärmequellenseitige Wärmetauscher als einen Verdampfer verwendet wird, in dem wärmequellenseitigen Wärmetauscher ein Strom des Kühlmittels und ein Strom eines Heizmediums, das Wärme mit dem Kühlmittel austauscht, Gegenströme sind.

3. Kühlkreislaufvorrichtung nach Anspruch 1 oder Anspruch 2,
wobei während eines Betriebs der Kühlkreislaufvorrichtung, bei dem der wärmequellenseitige Wärmetauscher als ein Kondensator verwendet wird, in dem wärmequellenseitigen Wärmetauscher ein Strom des Kühlmittels und ein Strom eines Heizmediums, das Wärme mit dem Kühlmittel austauscht, Gegenströme sind.

4. Kühlkreislaufvorrichtung nach einem der Ansprüche 1 bis 3,
wobei während eines Betriebs der Kühlkreislaufvorrichtung, bei dem der nutzungsseitige Wärmetauscher als ein Verdampfer verwendet wird, in dem nutzungsseitigen Wärmetauscher ein Strom des Kühlmittels und ein Strom eines Heizmediums, das Wärme mit dem Kühlmittel austauscht, Gegenströme sind.

**5.** Kühlkreislaufvorrichtung nach einem der Ansprüche 1 bis 4, wobei während eines Betriebs der Kühlkreislaufvorrichtung, bei dem der nutzungsseitige Wärmetauscher als ein Kondensator verwendet wird, in dem nutzungsseitigen Wärmetauscher ein Strom des Kühlmittels und ein Strom eines Heizmediums, das Wärme mit dem Kühlmittel austauscht, Gegenströme sind.

**6.** Kühlkreislaufvorrichtung nach einem der Ansprüche 1 bis 5, wobei das Heizmedium Luft ist.

**7.** Kühlkreislaufvorrichtung nach einem der Ansprüche 1 bis 5, wobei das Heizmedium eine Flüssigkeit ist.

**Revendications**

**1.** Appareil (10, 100, 100a) de cyclage de fluide frigorigène comprenant :

un circuit (11, 110) de fluide frigorigène qui inclut un compresseur (12, 122), un échangeur de chaleur (13, 123) côté source de chaleur, un mécanisme de dilatation (14, 124, 133, 138), et un échangeur de chaleur (15, 131, 136) côté utilisation,
dans lequel, dans le circuit de fluide frigorigène, un fluide frigorigène contenant au moins du 1,2-difluoroéthylène (HFO-1132 (E)) est renfermé de manière étanche, et
dans lequel, au moins pendant une opération prédéterminée, dans au moins l'un de l'échangeur de chaleur côté source de chaleur et de l'échangeur de chaleur côté utilisation, un écoulement du fluide frigorigène et un écoulement d'un milieu chauffant qui échange de la chaleur avec le fluide frigorigène sont des contre-écoulements,
**caractérisé en ce que**

le fluide frigorigène comprend de l'HFO-1132(E), du R32 et du R1234yf, dans lequel
lorsque le % en masse de HFO-1132(E), de R32 et de R1234yf sur la base de leur somme dans le fluide frigorigène est respectivement représenté par x, y et z, les coordonnées (x,y,z) dans un diagramme de composition ternaire dans lequel la somme de HFO-1 132(E), R32 et R1234yf est de 100 % en masse sont dans la plage d'une figure entourée par les segments de droite ON, NU et UO qui relient les 3 points suivants :

point O (22,6, 36,8, 40,6),
point N (27,7, 18,2, 54,1), et
point U (3,9, 36,7, 59,4),
ou sur ces segments de droite ;

le segment de droite ON est représenté par les coordonnées $(0{,}0072y^2-0{,}6701y+37{,}512,\ y,\ -0{,}0072y^2-0{,}3299y+62{,}488)$ ;
le segment de droite NU est représenté par les coordonnées $(0{,}0083y^2-1{,}7403y+56{,}635,\ y,\ -0{,}0083y^2+0{,}7403y+43{,}365)$ ; et
le segment de droite UO est une droite, et

le fluide frigorigène comprend de l'HFO-1132(E), du R32 et du R1234yf en une quantité totale de 99,5 % en masse ou plus sur la base du fluide frigorigène entier.

**2.** Appareil de cyclage de fluide frigorigène selon la revendication 1,
dans lequel, pendant une opération de l'appareil de cyclage de fluide frigorigène en utilisant l'échangeur de chaleur côté source de chaleur comme évaporateur, dans l'échangeur de chaleur côté source de chaleur, un écoulement du fluide frigorigène et un écoulement d'un milieu chauffant qui échange de la chaleur avec le fluide frigorigène sont des contre-écoulements.

**3.** Appareil de cyclage de fluide frigorigène selon la revendication 1 ou la revendication 2,
dans lequel, pendant une opération de l'appareil de cyclage de fluide frigorigène en utilisant l'échangeur de chaleur

EP 3 730 570 B1

côté source de chaleur comme condenseur, dans l'échangeur de chaleur côté source de chaleur, un écoulement du fluide frigorigène et un écoulement d'un milieu chauffant qui échange de la chaleur avec le fluide frigorigène sont des contre-écoulements.

4. Appareil de cyclage de fluide frigorigène selon l'une quelconque des revendications 1 à 3, dans lequel, pendant une opération de l'appareil de cyclage de fluide frigorigène en utilisant l'échangeur de chaleur côté utilisation comme évaporateur, dans l'échangeur de chaleur côté utilisation, un écoulement du fluide frigorigène et un écoulement d'un milieu chauffant qui échange de la chaleur avec le fluide frigorigène sont des contre-écoulements.

5. Appareil de cyclage de fluide frigorigène selon l'une quelconque des revendications 1 à 4, dans lequel, pendant une opération de l'appareil de cyclage de fluide frigorigène en utilisant l'échangeur de chaleur côté utilisation comme condenseur, dans l'échangeur de chaleur côté utilisation, un écoulement du fluide frigorigène et un écoulement d'un milieu chauffant qui échange de la chaleur avec le fluide frigorigène sont des contre-écoulements.

6. Appareil de cyclage de fluide frigorigène selon l'une quelconque des revendications 1 à 5, dans lequel le milieu chauffant est de l'air.

7. Appareil de cyclage de fluide frigorigène selon l'une quelconque des revendications 1 à 5, dans lequel le milieu chauffant est un liquide.

Fig. 1

Fig. 2

Fig.3

Fig. 4

Fig. 5

Ternary diagram legend:
— Ternary diagram (R32=11.1%)
— 85% Cap. (relative to R410A)
⋯ Low flammability (WCF)
⋯ ASHRAE flammability (WCF&WCFF)
⋯ 92.5% COP (relative to R410A)

Fig. 6

Fig. 7

Fig. 8

Fig. 9

Fig. 10

EP 3 730 570 B1

Fig. 11

179

Fig. 12

Fig. 13

Fig. 14

Fig.15

EXTERNAL HEATING MEDIUM

P2

P1

EXTERNAL HEATING MEDIUM

P3

P4

REFRIGERANT

REFRIGERANT    REFRIGERANT

(a)                    (b)

# FIG. 16

FIG. 17

EXTERNAL
HEATING MEDIUM

13

EXTERNAL
HEATING MEDIUM

14

EXTERNAL
HEATING MEDIUM

16

15

10

12

11

FIG. 18

FIG. 19

EP 3 730 570 B1

FIG. 20

FIG. 21

EP 3 730 570 B1

FIG. 22

EP 3 730 570 B1

FIG. 23

EP 3 730 570 B1

FIG. 24

EP 3 730 570 B1

FIG. 25

EP 3 730 570 B1

**EP 3 730 570 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014129543 A
- JP 2015229767 A
- US 2017058173 A1
- US 2017058174 A1
- US 2016333243 A1
- US 2017002245 A1
- WO 2015141678 A1